(19) **Europäisches Patentamt / European Patent Office / Office européen des brevets**

(11) **EP 3 970 365 B1**

(12) **EUROPEAN PATENT SPECIFICATION**

(45) Date of publication and mention
of the grant of the patent:
**06.08.2025   Bulletin 2025/32**

(21) Application number: **20827362.3**

(22) Date of filing: **19.06.2020**

(51) International Patent Classification (IPC):
*H04N 19/11* (2014.01)      *H04N 19/593* (2014.01)
*H04N 19/159* (2014.01)      *H04N 19/42* (2014.01)
*G06F 17/00* (2019.01)

(52) Cooperative Patent Classification (CPC):
**H04N 19/176; H04N 19/11; H04N 19/159;**
**H04N 19/42; H04N 19/593;** G06N 3/045;
G06N 3/088

(86) International application number:
**PCT/RU2020/050128**

(87) International publication number:
**WO 2020/256597 (24.12.2020 Gazette 2020/52)**

(54) **MATRIX-BASED INTRA PREDICTION FOR STILL PICTURE AND VIDEO CODING**

MATRIX-BASIERTE INTRAPRÄDIKTION FÜR FESTBILD- UND VIDEOCODIERUNG

PRÉDICTION INTRA À BASE DE MATRICE POUR LE CODAGE D'IMAGE FIXE ET DE VIDÉO

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **21.06.2019   PCT/RU2019/000443**

(43) Date of publication of application:
**23.03.2022   Bulletin 2022/12**

(73) Proprietor: **Huawei Technologies Co., Ltd.**
**Longgang District**
**Shenzhen,**
**Guangdong 518129 (CN)**

(72) Inventors:
• **ESENLIK, Semih**
  **80992 Munich (DE)**
• **WANG, Biao**
  **80992 Munich (DE)**
• **RUFITSKIY, Vasily Alexeevich**
  **Shenzhen, Guangdong 518129 (CN)**
• **ALSHINA, Elena Alexandrovna**
  **80992 Munich (DE)**
• **FILIPPOV, Alexey Konstantinovich**
  **Shenzhen, Guangdong 518129 (CN)**

(74) Representative: **Grünecker Patent- und**
**Rechtsanwälte**
**PartG mbB**
**Leopoldstraße 4**
**80802 München (DE)**

(56) References cited:
**WO-A1-2017/222325      WO-A1-2018/205950**
**US-A1- 2017 214 940      US-A1- 2018 054 620**

• **JONATHAN PFAFF ET AL: "CE3: Affine linear
weighted intra prediction (CE3-4.1, CE3-4.2)",
JOINT VIDEO EXPERTS TEAM (JVET) OF ITU-T
SG 16 WP 3 AND ISO/IEC JTC 1/SC 29/WG 11,,
no. JVET-N0217; JVET-N0217, 27 March 2019
(2019-03-27), pages 1 - 17, XP030202699**
• **YONG CHING LIM ET AL: "DECOMPOSITION OF
BINARY INTEGERS INTO SIGNED POWER-OF-
TWO TERMS", IEEE TRANSACTIONS ON
CIRCUITS AND SYSTEMS, IEEE INC. NEW YORK,
US, vol. 38, no. 6, 1 June 1991 (1991-06-01),
pages 667 - 672, XP000260935, DOI: 10.1109/
31.81865**

**(Cont. next page)**

- XU ET AL: "Hamming weight pyramid - A new insight into canonical signed digit representation and its applications", COMPUTERS & ELECTRICAL ENGINEERING, PERGAMON PRESS, GB, vol. 33, no. 3, 23 March 2007 (2007-03-23), pages 195 - 207, XP005935342, ISSN: 0045-7906
- HELLE (FRAUNHOFER) P ET AL: "CE3: Non-linear weighted intra prediction (tests 2.2.1 and 2.2.2)", no. JVET-L0199, 28 September 2018 (2018-09-28), XP030193995, Retrieved from the Internet <URL:http://phenix.int-evry.fr/jvet/doc_end_user/documents/12_Macao/wg11/JVET-L0199-v2.zip JVET-L0199-v2.docx> [retrieved on 20180928]
- FILIPPOV (HUAWEI) A ET AL: "CE3-related: Simplification of Matrix-based Intra Prediction (MIP)", no. JVET-O0203 ; m48312, 25 June 2019 (2019-06-25), XP030218836, Retrieved from the Internet <URL:http://phenix.int-evry.fr/jvet/doc_end_user/documents/15_Gothenburg/wg11/JVET-O0203-v2.zip JVET-O0203_v1.docx> [retrieved on 20190625]

**Description**

TECHNICAL FIELD

Embodiments of the present application (disclosure) generally relate to the field of picture processing and more particularly to the mechanism of matrix-based intra prediction for still picture and video coding.

BACKGROUND

Video coding (video encoding and decoding) is used in a wide range of digital video applications, for example broadcast digital TV, video transmission over internet and mobile networks, real-time conversational applications such as video chat, video conferencing, DVD and Blu-ray discs, video content acquisition and editing systems, and camcorders of security applications.

The amount of video data needed to depict even a relatively short video can be substantial, which may result in difficulties when the data is to be streamed or otherwise communicated across a communications network with limited bandwidth capacity. Thus, video data is generally compressed before being communicated across modern day telecommunications networks. The size of a video could also be an issue when the video is stored on a storage device because memory resources may be limited. Video compression devices often use software and/or hardware at the source to code the video data prior to transmission or storage, thereby decreasing the quantity of data needed to represent digital video images. The compressed data is then received at the destination by a video decompression device that decodes the video data. With limited network resources and ever increasing demands of higher video quality, improved compression and decompression techniques that improve compression ratio with little to no sacrifice in picture quality are desirable.

Document "CE3: Affine linear weighted intra prediction (CE3-4.1, CE3-4.2)" by Pfaff et al. relates to generate a luma intra prediction signal out of one line of reference samples left and above a current block by a matrix vector multiplication and the addition of an offset.

SUMMARY

Embodiments of the present application provide apparatuses and methods for encoding and decoding, in particular intra-prediction, according to the independent claims.

The foregoing and other objects are achieved by the subject matter of the independent claims. Further implementation forms are apparent from the dependent claims, the description and the figures.

Enabling disclosure may be found in the passages related to equations (1), (2), (3) and (4).

According to a first aspect the invention relates to a method of intra prediction of a block. The method comprises the steps of determining a value of a matrix-based intra prediction, MIP, indication information for a current block based on the block size of the current block, obtaining two lines of reconstructed neighboring samples and a MIP intra prediction mode, deriving a set of reference samples based on the two lines of reconstructed neighboring samples, the value of MIP indication information and the MIP intra prediction mode and obtaining a set of MIP coefficients based on the value of MIP indication information and the MIP intra prediction mode. A magnitude of any MIP coefficient $C_{MIP}$ of the set of MIP coefficients is represented as the following series:

$$C_{MIP} = \sum_{i=0}^{M} a_i \cdot 2^i,$$

wherein $a_i = \{-1, 0, 1\}$ or $a_i = \{0, 1\}$, and M is a non-negative integer. The method further comprises the step of obtaining a prediction block based on the set of reference samples and the set of MIP coefficients, wherein a reconstructed picture is obtained based on the prediction block. The number of non-zero bits in the MIP coefficient $C_{MIP}$ is not greater than a

$$\sum_{i=0}^{M} abs(a_i) \leq N_{THR}$$

threshold $N_{THR}$, that is, , with $N_{THR} \leq M$.

According to a second aspect the invention relates to an apparatus for intra prediction of a block. The apparatus comprises means for determining a value of a matrix-based intra prediction, MIP, indication information for a current block based on the block size of the current block, means for obtaining two lines of reconstructed neighboring samples and a MIP intra prediction mode, means for deriving a set of reference samples based on the two lines of reconstructed neighboring samples, the value of MIP indication information and the MIP intra prediction mode, and means for obtaining a set of MIP coefficients based on the value of MIP indication information and the MIP intra prediction mode. A magnitude of any MIP coefficient $C_{MIP}$ of the set of MIP coefficients is represented as the following series:

$$C_{MIP} = \sum_{i=0}^{M} a_i \cdot 2^i$$

,

wherein $a_i$ = {-1, 0, 1} or $a_i$ = {0, 1}, and M is a non-negative integer. The apparatus further comprises means for obtaining a prediction block based on the set of reference samples and the set of MIP coefficients, wherein a reconstruct picture is obtained based on the prediction block. The number of non-zero bits in the MIP coefficient $C_{MIP}$ is not greater than a

$$\sum_{i=0}^{M} abs(a_i) \le N_{THR}$$

threshold $N_{THR}$, that is,  , with $N_{THR} \le M$.

It is the particular approach of the present invention to implement matrix-based intra-prediction (MIP) with employing MIP coefficients belonging to a restricted set of values only, which allow a binary representation (possibly including signed, i.e. negative beat values), wherein the number of non-zero bits is limited. This allows for a simplified implementation of the matrix-vector multiplication operation that has to be performed within the MIP procedure. More specifically, it is possible to reduce the number of multiplication operations and replace them by a sequence of left shifting and adding/subtracting operations. In exemplary embodiments, a completely multiplication-free MIP implementation may be achieved, wherein the multiplication operations can be completely replaced by left shifts and addition (subtraction). This may be advantageous, because multiplication is a computationally expensive operation that requires much more computational resources than operations of shifting and addition.

According to the first and second aspect, the maximum number of non-zero bits, $N_{THR}$, in the representation of each of the MIP coefficients is 2 so that the MIP coefficient is represented as $C_{MIP} = a_i \cdot 2^i + a_j \cdot 2^j$, wherein i ≠ j. This has the effect that a completely multiplication-free implementation of MIP can be achieved.

In accordance with exemplary embodiments, the MIP coefficients may be limited to the numbers explicitly shown in any of the array is 7, 8, and 9 of the detailed description. These arrays give examples of possible values of MIP coefficients fulfilling the restrictions according to the present disclosure.

According to exemplary embodiments, the magnitude of the MIP coefficients requires 9 bids for representing, $M \le$ 8. According to other embodiments, the MIP coefficients may be represented by 7 bit unsigned integers. By choosing different ranges of MIP coefficients, the relation between precision of prediction and processing complexity can be outweighed.

According to exemplary embodiments, the two lines of reconstructed neighboring samples are two top rows of reconstructed neighboring samples. in accordance with alternative embodiments, the two lines of reconstructed neighboring samples are two left columns of reconstructed neighboring samples. In accordance with still alternative embodiments, the two lines of reconstructed neighboring samples are one left column of reconstructed neighboring samples and one top row of reconstructed neighboring samples.

in accordance with exemplary embodiments, the value of the MIP indication information and/or the MIP is signaled in a bitstream. This avoids any processing for deriving the information from other sources, in particular, on the decoder side.

In accordance with exemplary embodiments, the determination of the MIP indication information includes obtaining the value of the MIP indication information from a bitstream. In particular, a decoding device may obtain the MIP indication information from a bitstream including the encoded picture data, as part of signaling information. Alternatively, the MIP indication information may be predetermined and stored in advance in the coding device.

In accordance with exemplary embodiments, the MIP intra prediction mode is obtained from a bitstream. In particular, the MIP intra prediction mode can be transmitted from an encoding to a decoding device as part of the signaling information included in the bitstream comprising the encoded picture data.

According to a third aspect, the invention relates to a method of coding implemented by a decoding device for decoding a current block of an image. The method uses intra prediction of the current block. The method comprises the steps of providing a predicted block for the encoded current block by performing all steps of a method according to the first aspect for the current block and restoring the current block on the basis of the encoded block and the predicted block.

According to a fourth aspect, the invention relates to a method of coding implemented by an encoding device for encoding a current block of an image. The method uses intra prediction of the current block. The method comprises the steps of providing a predicted block for the current block by performing all steps of a method according to the first aspect for the current block and encoding the current block on the basis of the predicted block.

According to a fifth aspect, the invention relates to an encoder comprising processing circuitry for carrying out the method according to the first or fourth aspects.

According to a sixth aspect, the invention relates to a decoder comprising processing circuitry for carrying out the method according to the first or third aspects.

According to a seventh aspect, the invention relates to a computer program product comprising program code for performing the method according to any one of the first, third, or fourth aspects.

According to an eighth aspect, the invention relates to a decoder comprising one or more processors and a non-transitory computer-readable storage medium coupled to the processors and storing programming for execution by the processors. The programming, when executed by the processors, configures the decoder to carry out the method according to the first or third aspects.

According to a ninth aspect, the invention relates to an encoder, comprising one or more processors and a non-transitory computer-readable storage medium coupled to the processors and storing programming for execution by the processors, wherein the programming, when executed by the processors, configures the encoder to carry out the method according to the first or third aspects.

It could be noticed, that MIP is using a dedicated MPM (most probable mode) signaling listintra_lwip_flag is 1.

The processing according to the present disclosure may reduce the number of checks in the parsing process by unifying the cases of signaling when intra_lwip_flag is 0 and when intra_lwip_flag is 1.

According to a further aspect, the present disclosure relates to a method of unification of MPM list construction and consequently, a new dependency between the number of signaled directional intra prediction modes and the size of the intra-predicted block.

According to a tenth aspect, the invention relates to an apparatus for decoding a video stream including a processor and a memory. The memory stores instructions that cause the processor to perform the method according to the first aspect.

According to an eleventh aspect, the invention relates to an apparatus for encoding a video stream that includes a processor and a memory. The memory stores instructions that cause the processor to perform the method according to the first aspect.

According to a twelfth aspect, a computer-readable storage medium having stored thereon instructions that when executed cause one or more processors configured to code video data is proposed. The instructions cause the one or more processors to perform a method according to the first, third or fourth aspect or any possible embodiment of the first, third or fourth aspect.

According to a still a further aspect, the present disclosure relates to a computer program comprising program code for performing the method according to the first, third or fourth aspect or any possible embodiment of the first, third or fourth aspect when executed on a computer.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

Fig. 1A    is a block diagram showing an example of a video coding system configured to implement embodiments of the invention;

Fig. 1B    is a block diagram showing another example of a video coding system configured to implement embodiments of the invention;

Fig. 2    is a block diagram showing an example of a video encoder configured to implement embodiments of the invention;

Fig. 3    is a block diagram showing an example structure of a video decoder configured to implement embodiments of the invention;

Fig. 4    is a block diagram illustrating an example of an encoding apparatus or a decoding apparatus;

Fig. 5    is a block diagram illustrating another example of an encoding apparatus or a decoding apparatus;

Fig. 6    shows directional modes and their corresponding directions;

Fig. 7    is a simplified block diagram illustrating the method of matrix-based intra prediction (MIP) also referred to as affine linear weighted intra prediction (ALWIP);

Fig. 8    is a detailed block diagram illustrating the method of matrix-based intra prediction (MIP) also referred to as affine linear weighted intra prediction (ALWIP);

Fig. 9    shows a memory footprint of an MIP coefficient;

Fig. 10    shows an exemplary multiplication-free implementation; and

Fig. 11    is a flowchart showing essential processing steps of exemplary embodiments of a method according to the present disclosure.

In the following identical reference signs refer to identical or at least functionally equivalent features if not explicitly specified otherwise.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Video coding typically refers to the processing of a sequence of pictures, which form the video or video sequence. Instead of the term "picture" the term "frame" or "image" may be used as synonyms in the field of video coding. Video coding (or coding in general) comprises two parts video encoding and video decoding. Video encoding is performed at the source side, typically comprising processing (e.g. by compression) the original video pictures to reduce the amount of data required for representing the video pictures (for more efficient storage and/or transmission). Video decoding is performed at the destination side and typically comprises the inverse processing compared to the encoder to reconstruct the video pictures. Embodiments referring to "coding" of video pictures (or pictures in general) shall be understood to relate to "encoding" or "decoding" of video pictures or respective video sequences. The combination of the encoding part and the decoding part is also referred to as CODEC (Coding and Decoding).

In case of lossless video coding, the original video pictures can be reconstructed, i.e. the reconstructed video pictures have the same quality as the original video pictures (assuming no transmission loss or other data loss during storage or transmission). In case of lossy video coding, further compression, e.g. by quantization, is performed, to reduce the amount of data representing the video pictures, which cannot be completely reconstructed at the decoder, i.e. the quality of the reconstructed video pictures is lower or worse compared to the quality of the original video pictures.

Several video coding standards belong to the group of "lossy hybrid video codecs" (i.e. combine spatial and temporal prediction in the sample domain and 2D transform coding for applying quantization in the transform domain). Each picture of a video sequence is typically partitioned into a set of non-overlapping blocks and the coding is typically performed on a block level. In other words, at the encoder the video is typically processed, i.e. encoded, on a block (video block) level, e.g. by using spatial (intra picture) prediction and/or temporal (inter picture) prediction to generate a prediction block, subtracting the prediction block from the current block (block currently processed/to be processed) to obtain a residual block, transforming the residual block and quantizing the residual block in the transform domain to reduce the amount of data to be transmitted (compression), whereas at the decoder the inverse processing compared to the encoder is applied to the encoded or compressed block to reconstruct the current block for representation. Furthermore, the encoder duplicates the decoder processing loop such that both will generate identical predictions (e.g. intra- and inter predictions) and/or re-constructions for processing, i.e. coding, the subsequent blocks.

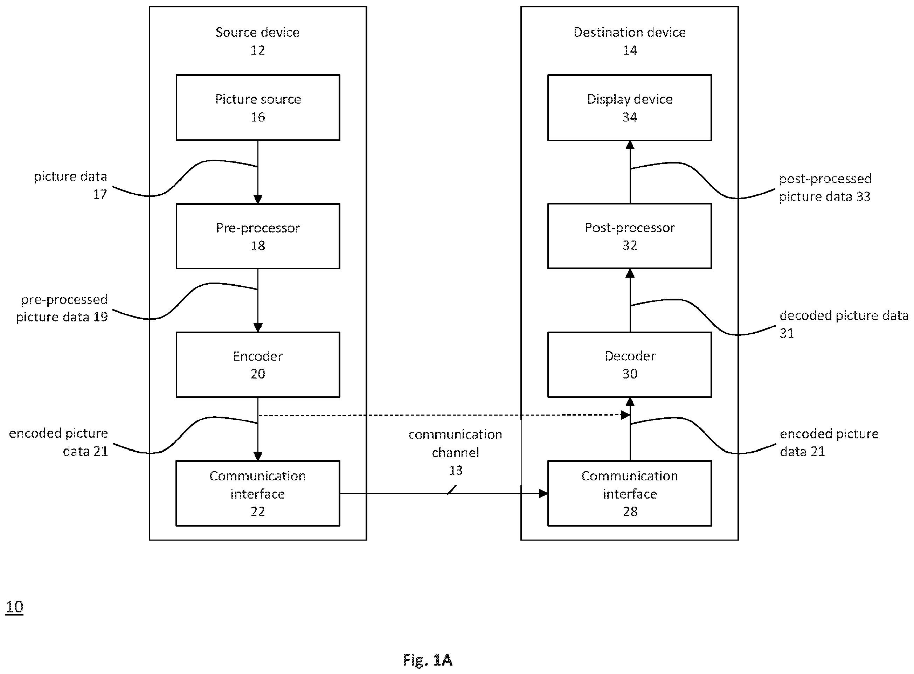

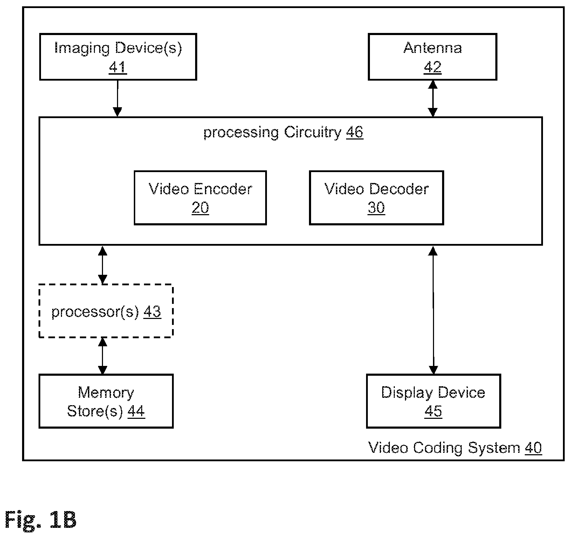

In the following embodiments of a video coding system 10, a video encoder 20 and a video decoder 30 are described based on Figs. 1 to 3.

Fig. 1A is a schematic block diagram illustrating an example coding system 10, e.g. a video coding system 10 (or short coding system 10) that may utilize techniques of this present application. Video encoder 20 (or short encoder 20) and video decoder 30 (or short decoder 30) of video coding system 10 represent examples of devices that may be configured to perform techniques in accordance with various examples described in the present application.

As shown in Fig. 1A, the coding system 10 comprises a source device 12 configured to provide encoded picture data 21 e.g. to a destination device 14 for decoding the encoded picture data 13.

The source device 12 comprises an encoder 20, and may additionally, i.e. optionally, comprise a picture source 16, a pre-processor (or pre-processing unit) 18, e.g. a picture pre-processor 18, and a communication interface or communication unit 22.

The picture source 16 may comprise or be any kind of picture capturing device, for example a camera for capturing a real-world picture, and/or any kind of a picture generating device, for example a computer-graphics processor for generating a computer animated picture, or any kind of other device for obtaining and/or providing a real-world picture, a computer generated picture (e.g. a screen content, a virtual reality (VR) picture) and/or any combination thereof (e.g. an augmented reality (AR) picture). The picture source may be any kind of memory or storage storing any of the aforementioned pictures.

In distinction to the pre-processor 18 and the processing performed by the pre-processing unit 18, the picture or picture data 17 may also be referred to as raw picture or raw picture data 17.

Pre-processor 18 is configured to receive the (raw) picture data 17 and to perform pre-processing on the picture data 17 to obtain a pre-processed picture 19 or pre-processed picture data 19. Pre-processing performed by the pre-processor 18 may, e.g., comprise trimming, color format conversion (e.g. from RGB to YCbCr), color correction, or de-noising. It can be understood that the pre-processing unit 18 may be optional component.

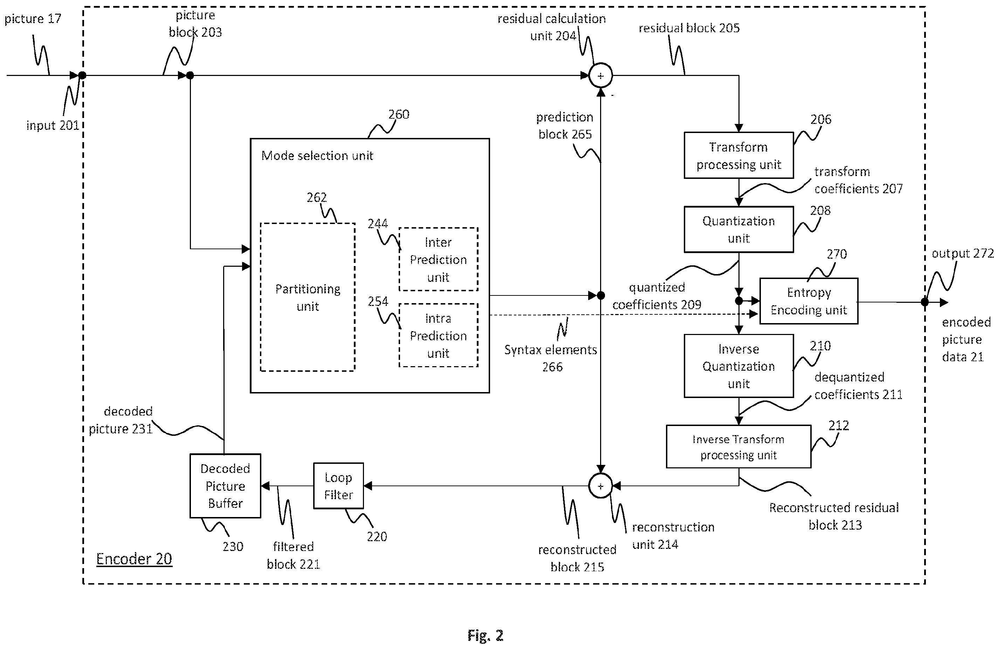

The video encoder 20 is configured to receive the pre-processed picture data 19 and provide encoded picture data 21 (further details will be described below, e.g., based on Fig. 2).

Communication interface 22 of the source device 12 may be configured to receive the encoded picture data 21 and to transmit the encoded picture data 21 (or any further processed version thereof) over communication channel 13 to another device, e.g. the destination device 14 or any other device, for storage or direct reconstruction.

The destination device 14 comprises a decoder 30 (e.g. a video decoder 30), and may additionally, i.e. optionally, comprise a communication interface or communication unit 28, a post-processor 32 (or post-processing unit 32) and a display device 34.

The communication interface 28 of the destination device 14 is configured to receive the encoded picture data 21 (or any further processed version thereof), e.g. directly from the source device 12 or from any other source, e.g. a storage device, e.g. an encoded picture data storage device, and provide the encoded picture data 21 to the decoder 30.

The communication interface 22 and the communication interface 28 may be configured to transmit or receive the encoded picture data 21 or encoded data 13 via a direct communication link between the source device 12 and the destination device 14, e.g. a direct wired or wireless connection, or via any kind of network, e.g. a wired or wireless network or any combination thereof, or any kind of private and public network, or any kind of combination thereof.

The communication interface 22 may be, e.g., configured to package the encoded picture data 21 into an appropriate format, e.g. packets, and/or process the encoded picture data using any kind of transmission encoding or processing for transmission over a communication link or communication network.

The communication interface 28, forming the counterpart of the communication interface 22, may be, e.g., configured to receive the transmitted data and process the transmission data using any kind of corresponding transmission decoding or processing and/or de-packaging to obtain the encoded picture data 21.

Both, communication interface 22 and communication interface 28 may be configured as unidirectional communication interfaces as indicated by the arrow for the communication channel 13 in Fig. 1A pointing from the source device 12 to the destination device 14, or bi-directional communication interfaces, and may be configured, e.g. to send and receive messages, e.g. to set up a connection, to acknowledge and exchange any other information related to the communication link and/or data transmission, e.g. encoded picture data transmission.

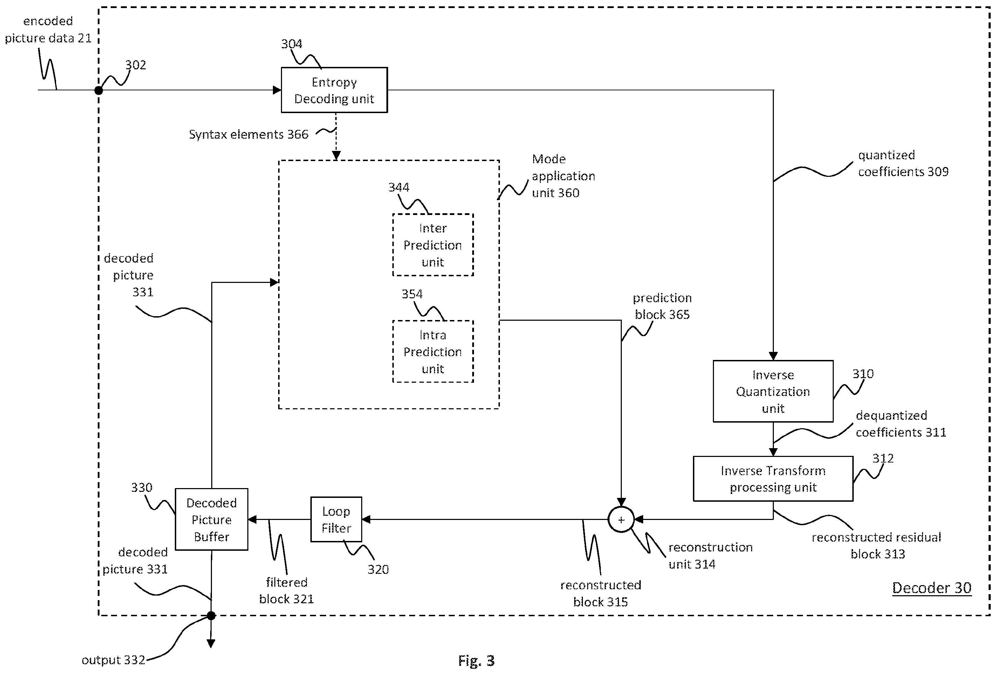

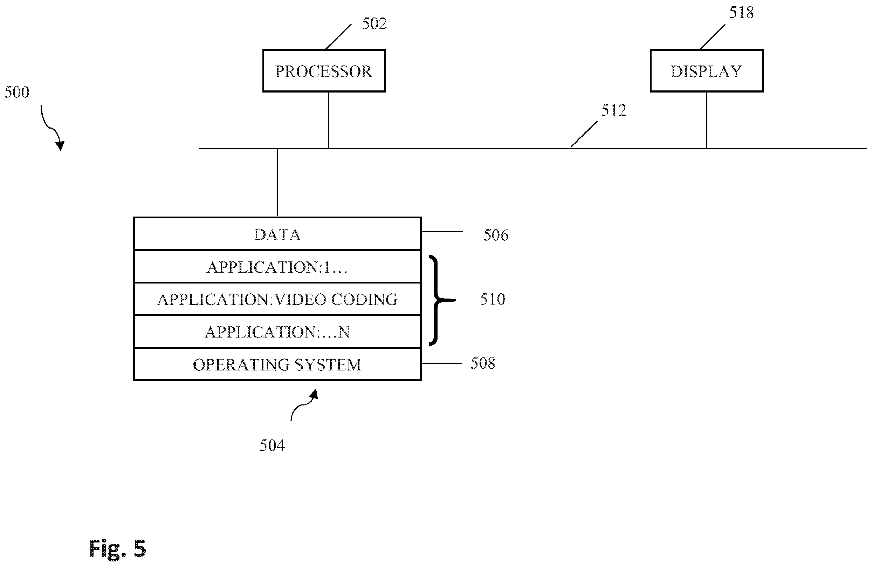

The decoder 30 is configured to receive the encoded picture data 21 and provide decoded picture data 31 or a decoded picture 31 (further details will be described below, e.g., based on Fig. 3 or Fig. 5).

The post-processor 32 of destination device 14 is configured to post-process the decoded picture data 31 (also called reconstructed picture data), e.g. the decoded picture 31, to obtain post-processed picture data 33, e.g. a post-processed picture 33. The post-processing performed by the post-processing unit 32 may comprise, e.g. color format conversion (e.g. from YCbCr to RGB), color correction, trimming, or resampling, or any other processing, e.g. for preparing the decoded picture data 31 for display, e.g. by display device 34.

The display device 34 of the destination device 14 is configured to receive the post-processed picture data 33 for displaying the picture, e.g. to a user or viewer. The display device 34 may be or comprise any kind of display for representing the reconstructed picture, e.g. an integrated or external display or monitor. The displays may, e.g. comprise liquid crystal displays (LCD), organic light emitting diodes (OLED) displays, plasma displays, projectors , micro LED displays, liquid crystal on silicon (LCoS), digital light processor (DLP) or any kind of other display.

Although Fig. 1A depicts the source device 12 and the destination device 14 as separate devices, embodiments of devices may also comprise both or both functionalities, the source device 12 or corresponding functionality and the destination device 14 or corresponding functionality. In such embodiments the source device 12 or corresponding functionality and the destination device 14 or corresponding functionality may be implemented using the same hardware and/or software or by separate hardware and/or software or any combination thereof.

As will be apparent for the skilled person based on the description, the existence and (exact) split of functionalities of the different units or functionalities within the source device 12 and/or destination device 14 as shown in Fig. 1A may vary depending on the actual device and application.

The encoder **20** (e.g. a video encoder 20) or the decoder **30** (e.g. a video decoder 30) or both encoder 20 and decoder 30 may be implemented via processing circuitry as shown in Fig. 1B, such as one or more microprocessors, digital signal processors (DSPs), application-specific integrated circuits (ASICs), field-programmable gate arrays (FPGAs), discrete logic, hardware, video coding dedicated or any combinations thereof. The encoder 20 may be implemented via processing circuitry 46 to embody the various modules as discussed with respect to encoder 20of Fig. 2 and/or any other encoder system or subsystem described herein. The decoder 30 may be implemented via processing circuitry 46 to embody the various modules as discussed with respect to decoder 30 of Fig. 3 and/or any other decoder system or subsystem described herein. The processing circuitry may be configured to perform the various operations as discussed later. As shown in fig. 5, if the techniques are implemented partially in software, a device may store instructions for the software in a suitable, non-transitory computer-readable storage medium and may execute the instructions in hardware using one or more processors to perform the techniques of this disclosure. Either of video encoder **20** and video decoder **30** may be integrated as part of a combined encoder/decoder (CODEC) in a single device, for example, as shown in Fig. 1B.

Source device 12 and destination device 14 may comprise any of a wide range of devices, including any kind of handheld or stationary devices, e.g. notebook or laptop computers, mobile phones, smart phones, tablets or tablet computers, cameras, desktop computers, set-top boxes, televisions, display devices, digital media players, video gaming consoles, video streaming devices(such as content services servers or content delivery servers), broadcast receiver device, broadcast transmitter device, or the like and may use no or any kind of operating system. In some cases, the source device 12 and the destination device 14 may be equipped for wireless communication. Thus, the source device 12 and the destination device 14 may be wireless communication devices.

In some cases, video coding system **10** illustrated in Fig. 1A is merely an example and the techniques of the present application may apply to video coding settings (e.g., video encoding or video decoding) that do not necessarily include any data communication between the encoding and decoding devices. In other examples, data is retrieved from a local memory, streamed over a network, or the like. A video encoding device may encode and store data to memory, and/or a video decoding device may retrieve and decode data from memory. In some examples, the encoding and decoding is performed by devices that do not communicate with one another, but simply encode data to memory and/or retrieve and decode data from memory.

For convenience of description, embodiments of the invention are described herein, for example, by reference to High-Efficiency Video Coding (HEVC) or to the reference software of Versatile Video coding (VVC), the next generation video coding standard developed by the Joint Collaboration Team on Video Coding (JCT-VC) of ITU-T Video Coding Experts Group (VCEG) and ISO/IEC Motion Picture Experts Group (MPEG). One of ordinary skill in the art will understand that embodiments of the invention are not limited to HEVC or VVC.

Encoder and Encoding Method

Fig. 2 shows a schematic block diagram of an example video encoder 20 that is configured to implement the techniques of the present application. In the example of Fig. 2, the video encoder 20 comprises an input 201 (or input interface 201), a residual calculation unit 204, a transform processing unit 206, a quantization unit 208, an inverse quantization unit 210, and inverse transform processing unit 212, a reconstruction unit 214, a loop filter unit 220, a decoded picture buffer (DPB) 230, a mode selection unit 260, an entropy encoding unit 270 and an output 272 (or output interface 272). The mode selection unit 260 may include an inter prediction unit 244, an intra prediction unit 254 and a partitioning unit 262. Inter prediction unit 244 may include a motion estimation unit and a motion compensation unit (not shown). A video encoder 20 as shown in Fig. 2 may also be referred to as hybrid video encoder or a video encoder according to a hybrid video codec.

The residual calculation unit 204, the transform processing unit 206, the quantization unit 208, the mode selection unit 260 may be referred to as forming a forward signal path of the encoder 20, whereas the inverse quantization unit 210, the inverse transform processing unit 212, the reconstruction unit 214, the buffer 216, the loop filter 220, the decoded picture buffer (DPB) 230, the inter prediction unit 244 and the intra-prediction unit 254 may be referred to as forming a backward signal path of the video encoder 20, wherein the backward signal path of the video encoder 20 corresponds to the signal path of the decoder (see video decoder 30 in Fig. 3). The inverse quantization unit 210, the inverse transform processing unit 212, the reconstruction unit 214, the loop filter 220, the decoded picture buffer (DPB) 230, the inter prediction unit 244 and the intra-prediction unit 254 are also referred to forming the "built-in decoder" of video encoder 20.

Pictures & Picture Partitioning (Pictures & Blocks)

The encoder 20 may be configured to receive, e.g. via input 201, a picture 17 (or picture data 17), e.g. picture of a sequence of pictures forming a video or video sequence. The received picture or picture data may also be a pre-processed picture 19 (or pre-processed picture data 19). For sake of simplicity the following description refers to the picture 17. The picture 17 may also be referred to as current picture or picture to be coded (in particular in video coding to distinguish the current picture from other pictures, e.g. previously encoded and/or decoded pictures of the same video sequence, i.e. the video sequence which also comprises the current picture).

A (digital) picture is or can be regarded as a two-dimensional array or matrix of samples with intensity values. A sample in the array may also be referred to as pixel (short form of picture element) or a pel. The number of samples in horizontal and vertical direction (or axis) of the array or picture define the size and/or resolution of the picture. For representation of color, typically three color components are employed, i.e. the picture may be represented or include three sample arrays. In RBG format or color space a picture comprises a corresponding red, green and blue sample array. However, in video coding each pixel is typically represented in a luminance and chrominance format or color space, e.g. YCbCr, which comprises a luminance component indicated by Y (sometimes also L is used instead) and two chrominance components indicated by Cb and Cr. The luminance (or short luma) component Y represents the brightness or grey level intensity (e.g. like in a grey-scale picture), while the two chrominance (or short chroma) components Cb and Cr represent the chromaticity or color information components. Accordingly, a picture in YCbCr format comprises a luminance sample array of luminance sample values (Y), and two chrominance sample arrays of chrominance values (Cb and Cr). Pictures in RGB format may be converted or transformed into YCbCr format and vice versa, the process is also known as color transformation or conversion. If a picture is monochrome, the picture may comprise only a luminance sample array. Accordingly, a picture may be, for example, an array of luma samples in monochrome format or an array of luma samples and two corresponding arrays of chroma samples in 4:2:0, 4:2:2, and 4:4:4 colour format.

Embodiments of the video encoder 20 may comprise a picture partitioning unit (not depicted in Fig. 2) configured to partition the picture 17 into a plurality of (typically non-overlapping) picture blocks 203. These blocks may also be referred to as root blocks, macro blocks (H.264/AVC) or coding tree blocks (CTB) or coding tree units (CTU) (H.265/HEVC and VVC). The picture partitioning unit may be configured to use the same block size for all pictures of a video sequence and the corresponding grid defining the block size, or to change the block size between pictures or subsets or groups of pictures, and partition each picture into the corresponding blocks.

In further embodiments, the video encoder may be configured to receive directly a block 203 of the picture 17, e.g. one, several or all blocks forming the picture 17. The picture block 203 may also be referred to as current picture block or picture block to be coded.

Like the picture 17, the picture block 203 again is or can be regarded as a two-dimensional array or matrix of samples with intensity values (sample values), although of smaller dimension than the picture 17. In other words, the block 203 may comprise, e.g., one sample array (e.g. a luma array in case of a monochrome picture 17, or a luma or chroma array in case of a color picture) or three sample arrays (e.g. a luma and two chroma arrays in case of a color picture 17) or any other number and/or kind of arrays depending on the color format applied. The number of samples in horizontal and vertical direction (or axis) of the block 203 define the size of block 203. Accordingly, a block may, for example, an MxN (M-column by N-row) array of samples, or an MxN array of transform coefficients.

Embodiments of the video encoder 20 as shown in Fig. 2 may be configured to encode the picture 17 block by block, e.g. the encoding and prediction is performed per block 203.

Embodiments of the video encoder 20 as shown in Fig. 2 may be further configured to partition and/or encode the picture by using slices (also referred to as video slices), wherein a picture may be partitioned into or encoded using one or more slices (typically non-overlapping), and each slice may comprise one or more blocks (e.g. CTUs).

Embodiments of the video encoder 20 as shown in Fig. 2 may be further configured to partition and/or encode the picture by using tile groups (also referred to as video tile groups) and/or tiles (also referred to as video tiles), wherein a picture may be partitioned into or encoded using one or more tile groups (typically non-overlapping), and each tile group may comprise, e.g. one or more blocks (e.g. CTUs) or one or more tiles, wherein each tile, e.g. may be of rectangular shape and may comprise one or more blocks (e.g. CTUs), e.g. complete or fractional blocks.

Residual Calculation

The residual calculation unit 204 may be configured to calculate a residual block 205 (also referred to as residual 205) based on the picture block 203 and a prediction block 265 (further details about the prediction block 265 are provided later), e.g. by subtracting sample values of the prediction block 265 from sample values of the picture block 203, sample by sample (pixel by pixel) to obtain the residual block 205 in the sample domain.

Transform

The transform processing unit 206 may be configured to apply a transform, e.g. a discrete cosine transform (DCT) or discrete sine transform (DST), on the sample values of the residual block 205 to obtain transform coefficients 207 in a transform domain. The transform coefficients 207 may also be referred to as transform residual coefficients and represent the residual block 205 in the transform domain.

The transform processing unit 206 may be configured to apply integer approximations of DCT/DST, such as the transforms specified for H.265/HEVC. Compared to an orthogonal DCT transform, such integer approximations are typically scaled by a certain factor. In order to preserve the norm of the residual block which is processed by forward and inverse transforms, additional scaling factors are applied as part of the transform process. The scaling factors are typically chosen based on certain constraints like scaling factors being a power of two for shift operations, bit depth of the transform coefficients, tradeoff between accuracy and implementation costs, etc. Specific scaling factors are, for example, specified for the inverse transform, e.g. by inverse transform processing unit 212 (and the corresponding inverse transform, e.g. by inverse transform processing unit 312 at video decoder 30) and corresponding scaling factors for the forward transform, e.g. by transform processing unit 206, at an encoder 20 may be specified accordingly.

Embodiments of the video encoder 20 (respectively transform processing unit 206) may be configured to output transform parameters, e.g. a type of transform or transforms, e.g. directly or encoded or compressed via the entropy encoding unit 270, so that, e.g., the video decoder 30 may receive and use the transform parameters for decoding.

Quantization

The quantization unit 208 may be configured to quantize the transform coefficients 207 to obtain quantized coefficients 209, e.g. by applying scalar quantization or vector quantization. The quantized coefficients 209 may also be referred to as quantized transform coefficients 209 or quantized residual coefficients 209.

The quantization process may reduce the bit depth associated with some or all of the transform coefficients 207. For example, an n-bit transform coefficient may be rounded down to an m-bit Transform coefficient during quantization, where n is greater than m. The degree of quantization may be modified by adjusting a quantization parameter (QP). For example for scalar quantization, different scaling may be applied to achieve finer or coarser quantization. Smaller quantization step sizes correspond to finer quantization, whereas larger quantization step sizes correspond to coarser quantization. The applicable quantization step size may be indicated by a quantization parameter (QP). The quantization parameter may for example be an index to a predefined set of applicable quantization step sizes. For example, small quantization parameters may correspond to fine quantization (small quantization step sizes) and large quantization parameters may correspond to coarse quantization (large quantization step sizes) or vice versa. The quantization may include division by a quantization step size and a corresponding and/or the inverse dequantization, e.g. by inverse quantization unit 210, may include multiplication by the quantization step size. Embodiments according to some standards, e.g. HEVC, may be configured to use a quantization parameter to determine the quantization step size. Generally, the quantization step size may be calculated based on a quantization parameter using a fixed point approximation of an equation including division. Additional scaling factors may be introduced for quantization and dequantization to restore the norm of the residual block, which might get modified because of the scaling used in the fixed point approximation of the equation for quantization step size and quantization parameter. In one example implementation, the scaling of the inverse transform and dequantization might be combined.

Alternatively, customized quantization tables may be used and signaled from an encoder to a decoder, e.g. in a bitstream. The quantization is a lossy operation, wherein the loss increases with increasing quantization step sizes.

Embodiments of the video encoder 20 (respectively quantization unit 208) may be configured to output quantization parameters (QP), e.g. directly or encoded via the entropy encoding unit 270, so that, e.g., the video decoder 30 may receive and apply the quantization parameters for decoding.

Inverse Quantization

The inverse quantization unit 210 is configured to apply the inverse quantization of the quantization unit 208 on the quantized coefficients to obtain dequantized coefficients 211, e.g. by applying the inverse of the quantization scheme applied by the quantization unit 208 based on or using the same quantization step size as the quantization unit 208. The dequantized coefficients 211 may also be referred to as dequantized residual coefficients 211 and correspond - although typically not identical to the transform coefficients due to the loss by quantization - to the transform coefficients 207.

Inverse Transform

The inverse transform processing unit 212 is configured to apply the inverse transform of the transform applied by the transform processing unit 206, e.g. an inverse discrete cosine transform (DCT) or inverse discrete sine transform (DST) or other inverse transforms, to obtain a reconstructed residual block 213 (or corresponding dequantized coefficients 213) in the sample domain. The reconstructed residual block 213 may also be referred to as transform block 213.

Reconstruction

The reconstruction unit 214 (e.g. adder or summer 214) is configured to add the transform block 213 (i.e. reconstructed residual block 213) to the prediction block 265 to obtain a reconstructed block 215 in the sample domain, e.g.

by adding - sample by sample - the sample values of the reconstructed residual block 213 and the sample values of the prediction block 265.

Filtering

The loop filter unit 220 (or short "loop filter" 220), is configured to filter the reconstructed block 215 to obtain a filtered block 221, or in general, to filter reconstructed samples to obtain filtered samples. The loop filter unit is, e.g., configured to smooth pixel transitions, or otherwise improve the video quality. The loop filter unit 220 may comprise one or more loop filters such as a de-blocking filter, a sample-adaptive offset (SAO) filter or one or more other filters, e.g. a bilateral filter, an adaptive loop filter (ALF), a sharpening, a smoothing filters or a collaborative filters, or any combination thereof. Although the loop filter unit 220 is shown in Fig. 2 as being an in loop filter, in other configurations, the loop filter unit 220 may be implemented as a post loop filter. The filtered block 221 may also be referred to as filtered reconstructed block 221.
Embodiments of the video encoder 20 (respectively loop filter unit 220) may be configured to output loop filter parameters (such as sample adaptive offset information), e.g. directly or encoded via the entropy encoding unit 270, so that, e.g., a decoder 30 may receive and apply the same loop filter parameters or respective loop filters for decoding.

Decoded Picture Buffer

The decoded picture buffer (DPB) 230 may be a memory that stores reference pictures, or in general reference picture data, for encoding video data by video encoder 20. The DPB 230 may be formed by any of a variety of memory devices, such as dynamic random access memory (DRAM), including synchronous DRAM (SDRAM), magnetoresistive RAM (MRAM), resistive RAM (RRAM), or other types of memory devices. The decoded picture buffer (DPB) 230 may be configured to store one or more filtered blocks 221. The decoded picture buffer 230 may be further configured to store other previously filtered blocks, e.g. previously reconstructed and filtered blocks 221, of the same current picture or of different pictures, e.g. previously reconstructed pictures, and may provide complete previously reconstructed, i.e. decoded, pictures (and corresponding reference blocks and samples) and/or a partially reconstructed current picture (and corresponding reference blocks and samples), for example for inter prediction. The decoded picture buffer (DPB) 230 may be also configured to store one or more unfiltered reconstructed blocks 215, or in general unfiltered reconstructed samples, e.g. if the reconstructed block 215 is not filtered by loop filter unit 220, or any other further processed version of the reconstructed blocks or samples.

Mode Selection (Partitioning & Prediction)

The mode selection unit 260 comprises partitioning unit 262, inter-prediction unit 244 and intra-prediction unit 254, and is configured to receive or obtain original picture data, e.g. an original block 203 (current block 203 of the current picture 17), and reconstructed picture data, e.g. filtered and/or unfiltered reconstructed samples or blocks of the same (current) picture and/or from one or a plurality of previously decoded pictures, e.g. from decoded picture buffer 230 or other buffers (e.g. line buffer, not shown).. The reconstructed picture data is used as reference picture data for prediction, e.g. inter-prediction or intra-prediction, to obtain a prediction block 265 or predictor 265.
Mode selection unit 260 may be configured to determine or select a partitioning for a current block prediction mode (including no partitioning) and a prediction mode (e.g. an intra or inter prediction mode) and generate a corresponding prediction block 265, which is used for the calculation of the residual block 205 and for the reconstruction of the reconstructed block 215.
Embodiments of the mode selection unit 260 may be configured to select the partitioning and the prediction mode (e.g. from those supported by or available for mode selection unit 260), which provide the best match or in other words the minimum residual (minimum residual means better compression for transmission or storage), or a minimum signaling overhead (minimum signaling overhead means better compression for transmission or storage), or which considers or balances both. The mode selection unit 260 may be configured to determine the partitioning and prediction mode based on rate distortion optimization (RDO), i.e. select the prediction mode which provides a minimum rate distortion. Terms like "best", "minimum", "optimum" etc. in this context do not necessarily refer to an overall "best", "minimum", "optimum", etc. but may also refer to the fulfillment of a termination or selection criterion like a value exceeding or falling below a threshold or other constraints leading potentially to a "sub-optimum selection" but reducing complexity and processing time.
In other words, the partitioning unit 262 may be configured to partition the block 203 into smaller block partitions or sub-blocks (which form again blocks), e.g. iteratively using quad-tree-partitioning (QT), binary partitioning (BT) or triple-tree-partitioning (TT) or any combination thereof, and to perform, e.g., the prediction for each of the block partitions or sub-blocks, wherein the mode selection comprises the selection of the tree-structure of the partitioned block 203 and the prediction modes are applied to each of the block partitions or sub-blocks.
In the following the partitioning (e.g. by partitioning unit 260) and prediction processing (by inter-prediction unit 244 and intra-prediction unit 254) performed by an example video encoder 20 will be explained in more detail.

Partitioning

The partitioning unit 262 may partition (or split) a current block 203 into smaller partitions, e.g. smaller blocks of square or rectangular size. These smaller blocks (which may also be referred to as sub-blocks) may be further partitioned into even smaller partitions. This is also referred to tree-partitioning or hierarchical tree-partitioning, wherein a root block, e.g. at root tree-level 0 (hierarchy-level 0, depth 0), may be recursively partitioned, e.g. partitioned into two or more blocks of a next lower tree-level, e.g. nodes at tree-level 1 (hierarchy-level 1, depth 1), wherein these blocks may be again partitioned into two or more blocks of a next lower level, e.g. tree-level 2 (hierarchy-level 2, depth 2), etc. until the partitioning is terminated, e.g. because a termination criterion is fulfilled, e.g. a maximum tree depth or minimum block size is reached. Blocks which are not further partitioned are also referred to as leaf-blocks or leaf nodes of the tree. A tree using partitioning into two partitions is referred to as binary-tree (BT), a tree using partitioning into three partitions is referred to as ternary-tree (TT), and a tree using partitioning into four partitions is referred to as quad-tree (QT).

As mentioned before, the term "block" as used herein may be a portion, in particular a square or rectangular portion, of a picture. With reference, for example, to HEVC and VVC, the block may be or correspond to a coding tree unit (CTU), a coding unit (CU), prediction unit (PU), and transform unit (TU) and/or to the corresponding blocks, e.g. a coding tree block (CTB), a coding block (CB), a transform block (TB) or prediction block (PB).

For example, a coding tree unit (CTU) may be or comprise a CTB of luma samples, two corresponding CTBs of chroma samples of a picture that has three sample arrays, or a CTB of samples of a monochrome picture or a picture that is coded using three separate colour planes and syntax structures used to code the samples. Correspondingly, a coding tree block (CTB) may be an NxN block of samples for some value of N such that the division of a component into CTBs is a partitioning. A coding unit (CU) may be or comprise a coding block of luma samples, two corresponding coding blocks of chroma samples of a picture that has three sample arrays, or a coding block of samples of a monochrome picture or a picture that is coded using three separate colour planes and syntax structures used to code the samples. Correspondingly a coding block (CB) may be an MxN block of samples for some values of M and N such that the division of a CTB into coding blocks is a partitioning.

In embodiments, e.g., according to HEVC, a coding tree unit (CTU) may be split into CUs by using a quad-tree structure denoted as coding tree. The decision whether to code a picture area using inter-picture (temporal) or intra-picture (spatial) prediction is made at the CU level. Each CU can be further split into one, two or four PUs according to the PU splitting type. Inside one PU, the same prediction process is applied and the relevant information is transmitted to the decoder on a PU basis. After obtaining the residual block by applying the prediction process based on the PU splitting type, a CU can be partitioned into transform units (TUs) according to another quadtree structure similar to the coding tree for the CU.

In embodiments, e.g., according to the latest video coding standard currently in development, which is referred to as Versatile Video Coding (VVC), a combined Quad-tree and binary tree (QTBT) partitioning is for example used to partition a coding block. In the QTBT block structure, a CU can have either a square or rectangular shape. For example, a coding tree unit (CTU) is first partitioned by a quadtree structure. The quadtree leaf nodes are further partitioned by a binary tree or ternary (or triple) tree structure. The partitioning tree leaf nodes are called coding units (CUs), and that segmentation is used for prediction and transform processing without any further partitioning. This means that the CU, PU and TU have the same block size in the QTBT coding block structure. In parallel, multiple partition, for example, triple tree partition may be used together with the QTBT block structure.

In one example, the mode selection unit 260 of video encoder 20 may be configured to perform any combination of the partitioning techniques described herein.

As described above, the video encoder 20 is configured to determine or select the best or an optimum prediction mode from a set of (e.g. pre-determined) prediction modes. The set of prediction modes may comprise, e.g., intra-prediction modes and/or inter-prediction modes.

Intra-Prediction

The set of intra-prediction modes may comprise 35 different intra-prediction modes, e.g. non-directional modes like DC (or mean) mode and planar mode, or directional modes, e.g. as defined in HEVC, or may comprise 67 different intra-prediction modes, e.g. non-directional modes like DC (or mean) mode and planar mode, or directional modes, e.g. as defined for VVC.

The intra-prediction unit 254 is configured to use reconstructed samples of neighboring blocks of the same current picture to generate an intra-prediction block 265 according to an intra-prediction mode of the set of intra-prediction modes.

The intra prediction unit 254 (or in general the mode selection unit 260) is further configured to output intra-prediction parameters (or in general information indicative of the selected intra prediction mode for the block) to the entropy encoding unit 270 in form of syntax elements 266 for inclusion into the encoded picture data 21, so that, e.g., the video decoder 30 may receive and use the prediction parameters for decoding.

The present disclosure relates to proposals that may be suitable to improve intra prediction and enhance the efficiency thereof.

Inter-Prediction

The set of (or possible) inter-prediction modes depends on the available reference pictures (i.e. previous at least partially decoded pictures, e.g. stored in DBP 230) and other inter-prediction parameters, e.g. whether the whole reference picture or only a part, e.g. a search window area around the area of the current block, of the reference picture is used for searching for a best matching reference block, and/or e.g. whether pixel interpolation is applied, e.g. half/semi-pel and/or quarter-pel interpolation, or not.

Additional to the above prediction modes, skip mode and/or direct mode may be applied.

The inter prediction unit 244 may include a motion estimation (ME) unit and a motion compensation (MC) unit (both not shown in Fig.2). The motion estimation unit may be configured to receive or obtain the picture block 203 (current picture block 203 of the current picture 17) and a decoded picture 231, or at least one or a plurality of previously reconstructed blocks, e.g. reconstructed blocks of one or a plurality of other/different previously decoded pictures 231, for motion estimation. E.g. a video sequence may comprise the current picture and the previously decoded pictures 231, or in other words, the current picture and the previously decoded pictures 231 may be part of or form a sequence of pictures forming a video sequence.

The encoder 20 may, e.g., be configured to select a reference block from a plurality of reference blocks of the same or different pictures of the plurality of other pictures and provide a reference picture (or reference picture index) and/or an offset (spatial offset) between the position (x, y coordinates) of the reference block and the position of the current block as inter prediction parameters to the motion estimation unit. This offset is also called motion vector (MV).

The motion compensation unit is configured to obtain, e.g. receive, an inter prediction parameter and to perform inter prediction based on or using the inter prediction parameter to obtain an inter prediction block 265. Motion compensation, performed by the motion compensation unit, may involve fetching or generating the prediction block based on the motion/block vector determined by motion estimation, possibly performing interpolations to sub-pixel precision. Interpolation filtering may generate additional pixel samples from known pixel samples, thus potentially increasing the number of candidate prediction blocks that may be used to code a picture block. Upon receiving the motion vector for the PU of the current picture block, the motion compensation unit may locate the prediction block to which the motion vector points in one of the reference picture lists.

The motion compensation unit may also generate syntax elements associated with the blocks and video slices for use by video decoder 30 in decoding the picture blocks of the video slice. In addition or as an alternative to slices and respective syntax elements, tile groups and/or tiles and respective syntax elements may be generated or used.

Entropy Coding

The entropy encoding unit 270 is configured to apply, for example, an entropy encoding algorithm or scheme (e.g. a variable length coding (VLC) scheme, an context adaptive VLC scheme (CAVLC), an arithmetic coding scheme, a binarization, a context adaptive binary arithmetic coding (CABAC), syntax-based context-adaptive binary arithmetic coding (SBAC), probability interval partitioning entropy (PIPE) coding or another entropy encoding methodology or technique) or bypass (no compression) on the quantized coefficients 209, inter prediction parameters, intra prediction parameters, loop filter parameters and/or other syntax elements to obtain encoded picture data 21 which can be output via the output 272, e.g. in the form of an encoded bitstream 21, so that, e.g., the video decoder 30 may receive and use the parameters for decoding, . The encoded bitstream 21 may be transmitted to video decoder 30, or stored in a memory for later transmission or retrieval by video decoder 30.

Other structural variations of the video encoder 20 can be used to encode the video stream. For example, a non-transform based encoder 20 can quantize the residual signal directly without the transform processing unit 206 for certain blocks or frames. In another implementation, an encoder 20 can have the quantization unit 208 and the inverse quantization unit 210 combined into a single unit.

Decoder and Decoding Method

Fig. 3 shows an exemple of a video decoder 30 that is configured to implement the techniques of this present application. The video decoder 30 is configured to receive encoded picture data 21 (e.g. encoded bitstream 21), e.g. encoded by encoder 20, to obtain a decoded picture 331. The encoded picture data or bitstream comprises information for decoding the encoded picture data, e.g. data that represents picture blocks of an encoded video slice (and/or tile groups or tiles) and associated syntax elements.

In the example of Fig. 3, the decoder 30 comprises an entropy decoding unit 304, an inverse quantization unit 310, an inverse transform processing unit 312, a reconstruction unit 314 (e.g. a summer 314), a loop filter 320, a decoded picture buffer (DBP) 330, a mode application unit 360, an inter prediction unit 344 and an intra prediction unit 354. Inter prediction unit 344 may be or include a motion compensation unit. Video decoder 30 may, in some examples, perform a decoding pass generally reciprocal to the encoding pass described with respect to video encoder 100 from Fig. 2.

As explained with regard to the encoder 20, the inverse quantization unit 210, the inverse transform processing unit 212, the reconstruction unit 214 the loop filter 220, the decoded picture buffer (DPB) 230, the inter prediction unit 344 and the intra prediction unit 354 are also referred to as forming the "built-in decoder" of video encoder 20. Accordingly, the inverse quantization unit 310 may be identical in function to the inverse quantization unit 110, the inverse transform processing unit 312 may be identical in function to the inverse transform processing unit 212, the reconstruction unit 314 may be identical in function to reconstruction unit 214, the loop filter 320 may be identical in function to the loop filter 220, and the decoded picture buffer 330 may be identical in function to the decoded picture buffer 230. Therefore, the explanations provided for the respective units and functions of the video 20 encoder apply correspondingly to the respective units and functions of the video decoder 30.

Entropy Decoding

The entropy decoding unit 304 is configured to parse the bitstream 21 (or in general encoded picture data 21) and perform, for example, entropy decoding to the encoded picture data 21 to obtain, e.g., quantized coefficients 309 and/or decoded coding parameters (not shown in Fig. 3), e.g. any or all of inter prediction parameters (e.g. reference picture index and motion vector), intra prediction parameter (e.g. intra prediction mode or index), transform parameters, quantization parameters, loop filter parameters, and/or other syntax elements. Entropy decoding unit 304 maybe configured to apply the decoding algorithms or schemes corresponding to the encoding schemes as described with regard to the entropy encoding unit 270 of the encoder 20. Entropy decoding unit 304 may be further configured to provide inter prediction parameters, intra prediction parameter and/or other syntax elements to the mode application unit 360 and other parameters to other units of the decoder 30. Video decoder 30 may receive the syntax elements at the video slice level and/or the video block level. In addition or as an alternative to slices and respective syntax elements, tile groups and/or tiles and respective syntax elements may be received and/or used.

Inverse Quantization

The inverse quantization unit 310 may be configured to receive quantization parameters (QP) (or in general information related to the inverse quantization) and quantized coefficients from the encoded picture data 21 (e.g. by parsing and/or decoding, e.g. by entropy decoding unit 304) and to apply based on the quantization parameters an inverse quantization on the decoded quantized coefficients 309 to obtain dequantized coefficients 311, which may also be referred to as transform coefficients 311. The inverse quantization process may include use of a quantization parameter determined by video encoder 20 for each video block in the video slice (or tile or tile group) to determine a degree of quantization and, likewise, a degree of inverse quantization that should be applied.

Inverse Transform

Inverse transform processing unit 312 may be configured to receive dequantized coefficients 311, also referred to as transform coefficients 311, and to apply a transform to the dequantized coefficients 311 in order to obtain reconstructed residual blocks 213 in the sample domain. The reconstructed residual blocks 213 may also be referred to as transform blocks 313. The transform may be an inverse transform, e.g., an inverse DCT, an inverse DST, an inverse integer transform, or a conceptually similar inverse transform process. The inverse transform processing unit 312 may be further configured to receive transform parameters or corresponding information from the encoded picture data 21 (e.g. by parsing and/or decoding, e.g. by entropy decoding unit 304) to determine the transform to be applied to the dequantized coefficients 311.

Reconstruction

The reconstruction unit 314 (e.g. adder or summer 314) may be configured to add the reconstructed residual block 313, to the prediction block 365 to obtain a reconstructed block 315 in the sample domain, e.g. by adding the sample values of the reconstructed residual block 313 and the sample values of the prediction block 365.

Filtering

The loop filter unit 320 (either in the coding loop or after the coding loop) is configured to filter the reconstructed block 315 to obtain a filtered block 321, e.g. to smooth pixel transitions, or otherwise improve the video quality. The loop filter unit 320 may comprise one or more loop filters such as a de-blocking filter, a sample-adaptive offset (SAO) filter or one or more other filters, e.g. a bilateral filter, an adaptive loop filter (ALF), a sharpening, a smoothing filters or a collaborative filters, or any combination thereof. Although the loop filter unit 320 is shown in Fig. 3 as being an in loop filter, in other configurations, the loop filter unit 320 may be implemented as a post loop filter.

Decoded Picture Buffer

The decoded video blocks 321 of a picture are then stored in decoded picture buffer 330, which stores the decoded pictures 331 as reference pictures for subsequent motion compensation for other pictures and/or for output respectively display.

The decoder 30 is configured to output the decoded picture 311, e.g. via output 312, for presentation or viewing to a user.

Prediction

The inter prediction unit 344 may be identical to the inter prediction unit 244 (in particular to the motion compensation unit) and the intra prediction unit 354 may be identical to the inter prediction unit 254 in function, and performs split or partitioning decisions and prediction based on the partitioning and/or prediction parameters or respective information received from the encoded picture data 21 (e.g. by parsing and/or decoding, e.g. by entropy decoding unit 304). Mode application unit 360 may be configured to perform the prediction (intra or inter prediction) per block based on reconstructed pictures, blocks or respective samples (filtered or unfiltered) to obtain the prediction block 365.

When the video slice is coded as an intra coded (I) slice, intra prediction unit 354 of mode application unit 360 is configured to generate prediction block 365 for a picture block of the current video slice based on a signaled intra prediction mode and data from previously decoded blocks of the current picture. When the video picture is coded as an inter coded (i.e., B, or P) slice, inter prediction unit 344 (e.g. motion compensation unit) of mode application unit 360 is configured to produce prediction blocks 365 for a video block of the current video slice based on the motion vectors and other syntax elements received from entropy decoding unit 304. For inter prediction, the prediction blocks may be produced from one of the reference pictures within one of the reference picture lists. Video decoder 30 may construct the reference frame lists, List 0 and List 1, using default construction techniques based on reference pictures stored in DPB 330. The same or similar may be applied for or by embodiments using tile groups (e.g. video tile groups) and/or tiles (e.g. video tiles) in addition or alternatively to slices (e.g. video slices), e.g. a video may be coded using I, P or B tile groups and /or tiles.

Mode application unit 360 is configured to determine the prediction information for a video block of the current video slice by parsing the motion vectors or related information and other syntax elements, and uses the prediction information to produce the prediction blocks for the current video block being decoded. For example, the mode application unit 360 uses some of the received syntax elements to determine a prediction mode (e.g., intra or inter prediction) used to code the video blocks of the video slice, an inter prediction slice type (e.g., B slice, P slice, or GPB slice), construction information for one or more of the reference picture lists for the slice, motion vectors for each inter encoded video block of the slice, inter prediction status for each inter coded video block of the slice, and other information to decode the video blocks in the current video slice. The same or similar may be applied for or by embodiments using tile groups (e.g. video tile groups) and/or tiles (e.g. video tiles) in addition or alternatively to slices (e.g. video slices), e.g. a video may be coded using I, P or B tile groups and/or tiles.

Embodiments of the video decoder 30 as shown in Fig. 3 may be configured to partition and/or decode the picture by using slices (also referred to as video slices), wherein a picture may be partitioned into or decoded using one or more slices (typically non-overlapping), and each slice may comprise one or more blocks (e.g. CTUs).

Embodiments of the video decoder 30 as shown in Fig. 3 may be configured to partition and/or decode the picture by using tile groups (also referred to as video tile groups) and/or tiles (also referred to as video tiles), wherein a picture may be partitioned into or decoded using one or more tile groups (typically non-overlapping), and each tile group may comprise, e.g. one or more blocks (e.g. CTUs) or one or more tiles, wherein each tile, e.g. may be of rectangular shape and may comprise one or more blocks (e.g. CTUs), e.g. complete or fractional blocks.

Other variations of the video decoder 30 can be used to decode the encoded picture data 21. For example, the decoder 30 can produce the output video stream without the loop filtering unit 320. For example, a non-transform based decoder 30 can inverse-quantize the residual signal directly without the inverse-transform processing unit 312 for certain blocks or frames. In another implementation, the video decoder 30 can have the inverse-quantization unit 310 and the inverse-transform processing unit 312 combined into a single unit.

It should be understood that, in the encoder 20 and the decoder 30, a processing result of a current step may be further processed and then output to the next step. For example, after interpolation filtering, motion vector derivation or loop filtering, a further operation, such as Clip or shift, may be performed on the processing result of the interpolation filtering, motion vector derivation or loop filtering.

It should be noted that further operations may be applied to the derived motion vectors of current block (including but not limit to control point motion vectors of affine mode, sub-block motion vectors in affine, planar, ATMVP modes, temporal motion vectors, and so on). For example, the value of motion vector is constrained to a predefined range according to its representing bit. If the representing bit of motion vector is bitDepth, then the range is -2^(bitDepth-1) ~ 2^(bitDepth-1)-1, where "^" means exponentiation. For example, if bitDepth is set equal to 16, the range is -32768 ~ 32767; if bitDepth is set equal to 18, the range is -131072-131071. For example, the value of the derived motion vector (e.g. the MVs of four 4x4 sub-blocks within one 8x8 block) is constrained such that the max difference between integer parts of the four 4x4 sub-block MVs is no more than N pixels, such as no more than 1 pixel. Here provides two methods for constraining the motion vector according to the bitDepth.

Method 1: remove the overflow MSB (most significant bit) by flowing operations

$$ux = ( mvx + 2^{bitDepth} ) \% 2^{bitDepth} \qquad (1)$$

$$mvx = ( ux >= 2^{bitDepth-1} ) ? (ux - 2^{bitDepth}) : ux \qquad (2)$$

$$uy = ( mvy + 2^{bitDepth} ) \% 2^{bitDepth} \qquad (3)$$

$$mvy = ( uy >= 2^{bitDepth-1} ) ? (uy - 2^{bitDepth}) : uy \qquad (4)$$

where mvx is a horizontal component of a motion vector of an image block or a sub-block, mvy is a vertical component of a motion vector of an image block or a sub-block, and ux and uy indicates an intermediate value;

For example, if the value of mvx is -32769, after applying formula (1) and (2), the resulting value is 32767. In computer system, decimal numbers are stored as two's complement. The two's complement of -32769 is 1,0111,1111,1111,1111 (17 bits), then the MSB is discarded, so the resulting two's complement is 0111,1111,1111,1111 (decimal number is 32767), which is same as the output by applying formula (1) and (2).

$$ux = ( mvpx + mvdx + 2^{bitDepth} ) \% 2^{bitDepth} \qquad (5)$$

$$mvx = ( ux >= 2^{bitDepth-1} ) ? (ux - 2^{bitDepth}) : ux \qquad (6)$$

$$uy = ( mvpy + mvdy + 2^{bitDepth} ) \% 2^{bitDepth} \qquad (7)$$

$$mvy = ( uy >= 2^{bitDepth-1} ) ? (uy - 2^{bitDepth}) : uy \qquad (8)$$

The operations may be applied during the sum of mvp and mvd, as shown in formula (5) to (8).

Method 2: remove the overflow MSB by clipping the value

$$vx = Clip3(-2^{bitDepth-1}, 2^{bitDepth-1} -1, vx)$$

$$vy = Clip3(-2^{bitDepth-1}, 2^{bitDepth-1} -1, vy)$$

where vx is a horizontal component of a motion vector of an image block or a sub-block, vy is a vertical component of a motion vector of an image block or a sub-block; x, y and z respectively correspond to three input value of the MV clipping process, and the definition of function Clip3 is as follow:

$$Clip3( x, y, z ) = \begin{cases} x & ; & z < x \\ y & ; & z > y \\ z & ; & \text{otherwise} \end{cases}$$

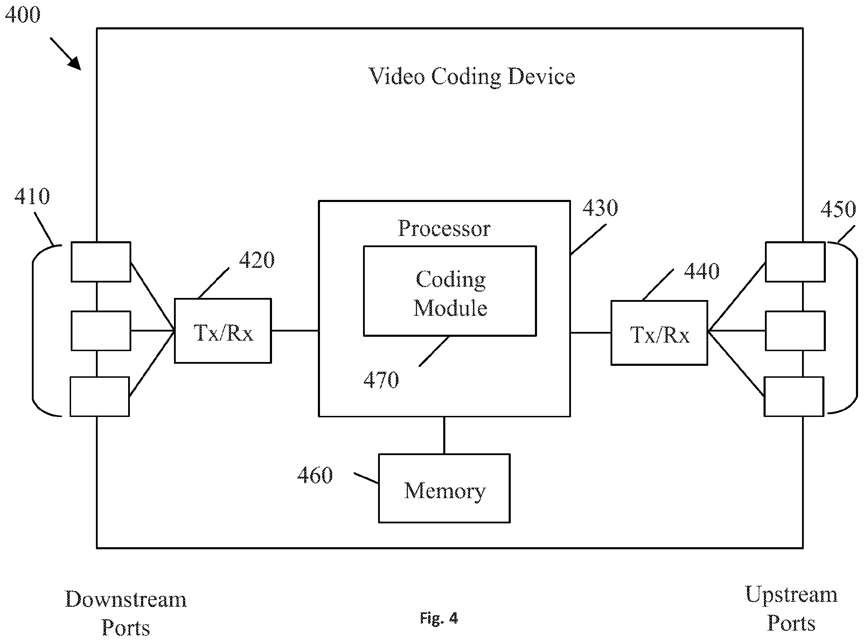

Fig. 4 is a schematic diagram of a video coding device 400 according to an embodiment of the disclosure. The video coding device 400 is suitable for implementing the disclosed embodiments as described herein. In an embodiment, the video coding device 400 may be a decoder such as video decoder 30 of Fig. 1A or an encoder such as video encoder 20 of Fig. 1A.

The video coding device 400 comprises ingress ports 410 (or input ports 410) and receiver units (Rx) 420 for receiving data; a processor, logic unit, or central processing unit (CPU) 430 to process the data; transmitter units (Tx) 440 and egress ports 450 (or output ports 450) for transmitting the data; and a memory 460 for storing the data. The video coding device 400 may also comprise optical-to-electrical (OE) components and electrical-to-optical (EO) components coupled to the ingress ports 410, the receiver units 420, the transmitter units 440, and the egress ports 450 for egress or ingress of optical or electrical signals.

The processor 430 is implemented by hardware and software. The processor 430 may be implemented as one or more CPU chips, cores (e.g., as a multi-core processor), FPGAs, ASICs, and DSPs. The processor 430 is in communication with the ingress ports 410, receiver units 420, transmitter units 440, egress ports 450, and memory 460. The processor 430 comprises a coding module 470. The coding module 470 implements the disclosed embodiments described above. For instance, the coding module 470 implements, processes, prepares, or provides the various coding operations. The inclusion of the coding module 470 therefore provides a substantial improvement to the functionality of the video coding device 400 and effects a transformation of the video coding device 400 to a different state. Alternatively, the coding module 470 is implemented as instructions stored in the memory 460 and executed by the processor 430.

The memory 460 may comprise one or more disks, tape drives, and solid-state drives and may be used as an over-flow data storage device, to store programs when such programs are selected for execution, and to store instructions and data that are read during program execution. The memory 460 may be, for example, volatile and/or non-volatile and may be a read-only memory (ROM), random access memory (RAM), ternary content-addressable memory (TCAM), and/or static random-access memory (SRAM).

Fig. 5 is a simplified block diagram of an apparatus **500** that may be used as either or both of the source device 12 and the destination device 14 from Fig. 1 according to an exemplary embodiment.

A processor 502 in the apparatus 500 can be a central processing unit. Alternatively, the processor 502 can be any other type of device, or multiple devices, capable of manipulating or processing information now-existing or hereafter developed. Although the disclosed implementations can be practiced with a single processor as shown, e.g., the processor 502, advantages in speed and efficiency can be achieved using more than one processor.

A memory 504 in the apparatus 500 can be a read only memory (ROM) device or a random access memory (RAM) device in an implementation. Any other suitable type of storage device can be used as the memory 504. The memory 504 can include code and data 506 that is accessed by the processor 502 using a bus 512. The memory 504 can further include an operating system 508 and application programs 510, the application programs 510 including at least one program that permits the processor 502 to perform the methods described here. For example, the application programs 510 can include applications 1 through N, which further include a video coding application that performs the methods described here.

The apparatus 500 can also include one or more output devices, such as a display 518. The display 518 may be, in one example, a touch sensitive display that combines a display with a touch sensitive element that is operable to sense touch inputs. The display 518 can be coupled to the processor 502 via the bus 512.

Although depicted here as a single bus, the bus 512 of the apparatus 500 can be composed of multiple buses. Further, the secondary storage 514 can be directly coupled to the other components of the apparatus 500 or can be accessed via a network and can comprise a single integrated unit such as a memory card or multiple units such as multiple memory cards. The apparatus 500 can thus be implemented in a wide variety of configurations.

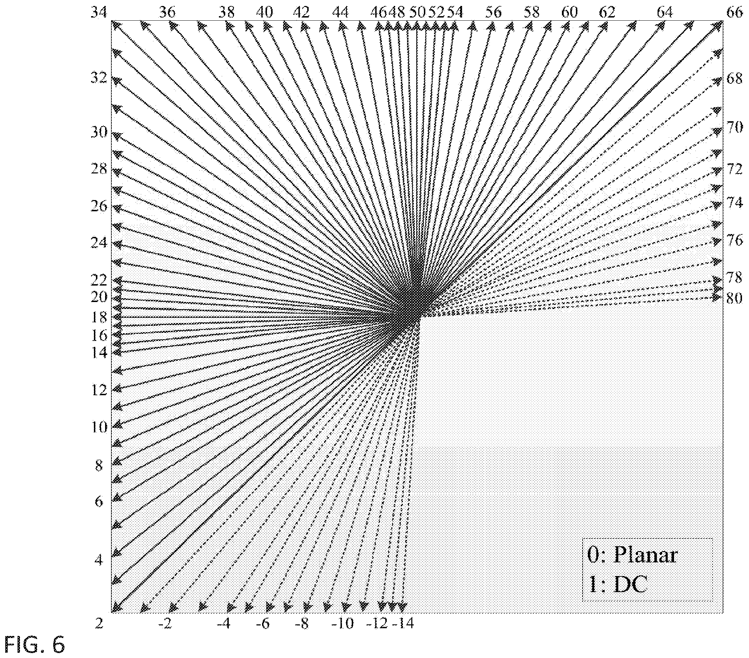

Directional intra prediction is a well-known technique that consists in propagating the values of the neighboring samples into the predicted block as specified by the prediction direction. Fig. 6 illustrates the 93 prediction directions, where the dashed directions are associated with the wide-angle modes that are only applied to non-square blocks.

Direction could be specified by the increase of an offset between position of predicted and reference sample. The larger magnitude of this increase corresponds to a greater skew of the prediction direction. Table A specifies the mapping table between predModeIntra and the angle parameter intraPredAngle. This parameter is in fact the increase of this offset per row (or per column) specified in the 1/32 sample resolutoin.

**Table A - Specification of intraPredAngle**

| predModeIntra | -14 | -13 | -12 | -11 | -10 | -9 | -8 | -7 | -6 | -5 | -4 | -3 | -2 | -1 | 2 | 3 | 4 |
|---|---|---|---|---|---|---|---|---|---|---|---|---|---|---|---|---|---|
| intraPredAngle | 512 | 341 | 256 | 171 | 128 | 102 | 86 | 73 | 64 | 57 | 51 | 45 | 39 | 35 | 32 | 29 | 26 |
| predModeIntra | 5 | 6 | 7 | 8 | 9 | 10 | 11 | 12 | 13 | 14 | 15 | 16 | 17 | 18 | 19 | 20 | 21 |
| intraPredAngle | 23 | 20 | 18 | 16 | 14 | 12 | 10 | 8 | 6 | 4 | 3 | 2 | 1 | 0 | -1 | -2 | -3 |
| predModeIntra | 22 | 23 | 24 | 25 | 26 | 27 | 28 | 29 | 30 | 31 | 32 | 33 | 34 | 35 | 36 | 37 | 38 |
| intraPredAngle | -4 | -6 | -8 | -10 | -12 | -14 | -16 | -18 | -20 | -23 | -26 | -29 | -32 | -29 | -26 | -23 | -20 |
| predModeIntra | 39 | 40 | 41 | 42 | 43 | 44 | 45 | 46 | 47 | 48 | 49 | 50 | 51 | 52 | 53 | 54 | 55 |
| intraPredAngle | -18 | -16 | -14 | -12 | -10 | -8 | -6 | -4 | -3 | -2 | -1 | 0 | 1 | 2 | 3 | 4 | 6 |
| predModeIntra | 56 | 57 | 58 | 59 | 60 | 61 | 62 | 63 | 64 | 65 | 66 | 67 | 68 | 69 | 70 | 71 | 72 |
| intraPredAngle | 8 | 10 | 12 | 14 | 16 | 18 | 20 | 23 | 26 | 29 | 32 | 35 | 39 | 45 | 51 | 57 | 64 |
| predModeIntra | 73 | 74 | 75 | 76 | 77 | 78 | 79 | 80 | | | | | | | | | |
| intraPredAngle | 73 | 86 | 102 | 128 | 171 | 256 | 341 | 512 | | | | | | | | | |

EP 3 970 365 B1

Wide-angle modes could be identified by the absolute value of intraPredAngle greater than 32 (1 sample), that corresponds to the slope of prediction direction greater than 45 degrees.

Predicted samples ("predSamples") could be obtained from the neighbouring samples "p" as described below: The values of the prediction samples predSamples[ x ][ y ], with x = 0..nTbW - 1, y = 0..nTbH - 1 are derived as follows:

- If predModeIntra is greater than or equal to 34, the following ordered steps apply:

  1. The reference sample array ref[ x ] is specified as follows:

  - The following applies:

  $$ref[ x ] = p[ -1 - refIdx + x ][ -1 - refIdx ], \text{ with } x = 0..nTbW + refIdx$$

  - If intraPredAngle is less than 0, the main reference sample array is extended as follows:

    - When ( nTbH * intraPredAngle ) >> 5 is less than -1,

    $$ref[ x ] = p[ -1 - refIdx ][ -1 - refIdx + ( ( x * invAngle + 128 ) >> 8 ) ],$$

    with x = -1..( nTbH * intraPredAngle ) >> 5

    $$ref[ ( ( nTbH * intraPredAngle ) >> 5 ) - 1 ] = ref[ ( nTbH * intraPredAngle ) >> 5 ]$$

    $$ref[ nTbW + 1 + refIdx ] = ref[ nTbW + refIdx ]$$

  - Otherwise,

    $$ref[ x ] = p[ -1 - refIdx + x ][ -1 - refIdx ], \text{ with } x = nTbW + 1 + refIdx..refW + refIdx$$

    $$ref[ -1 ] = ref[ 0 ]$$

    - The additional samples ref[ refW + refIdx +x ] with x = 1..( Max( 1, nTbW/nTbH) * refIdx + 1) are derived as follows:

    $$ref[ refW + refIdx +x ] = p[ -1 + refW ][ -1 - refIdx ]$$

  2. The values of the prediction samples predSamples[ x ][ y ], with x = 0..nTbW - 1, y = 0..nTbH - 1 are derived as follows:

  - The index variable iIdx and the multiplication factor iFact are derived as follows:

    $$iIdx = ( ( y + 1 + refIdx ) * intraPredAngle ) >> 5 + refIdx$$

    $$iFact = ( ( y + 1 + refIdx ) * intraPredAngle ) \& 31$$

  - If cIdx is equal to 0, the following applies:

    - The interpolation filter coefficients fT[ j ] with j = 0..3 are derived as follows:

    $$fT[ j ] = filterFlag \ ? \ fG[ iFact ][ j ] \ : \ fC[ iFact ][ j ]$$

    - The value of the prediction samples predSamples[ x ][ y ] is derived as follows:

    $$predSamples[ x ][ y ] = Clip1Y( ( ( \textstyle\sum_{i=0}^{3} fT[ i ] * ref[ x + iIdx + i ] ) + 32 ) >> 6 )$$

- Otherwise (cldx is not equal to 0), depending on the value of iFact, the following applies:

  - If iFact is not equal to 0, the value of the prediction samples predSamples[ x ][ y ] is derived as follows:

$$predSamples[\ x\ ][\ y\ ] =$$
$$(\ (\ 32 - iFact\ ) * ref[\ x + iIdx + 1\ ] + iFact * ref[\ x + iIdx + 2\ ] + 16\ )\ >>\ 5$$

  - Otherwise, the value of the prediction samples predSamples[ x ][ y ] is derived as follows:

$$predSamples[\ x\ ][\ y\ ] = ref[\ x + iIdx + 1\ ]$$

- Otherwise (predModeIntra is less than 34), the following ordered steps apply:

  1. The reference sample array ref[ x ] is specified as follows:

  - The following applies:

$$ref[\ x\ ] = p[\ -1 - refIdx\ ][\ -1 - refIdx + x\ ],\ \text{with}\ x = 0..nTbH + refIdx$$

  - If intraPredAngle is less than 0, the main reference sample array is extended as follows:

    - When ( nTbW * intraPredAngle ) >> 5 is less than -1,

$$ref[\ x\ ] = p[\ -1 - refIdx + (\ (\ x * invAngle + 128\ )\ >>\ 8\ )\ ][\ -1 - refIdx\ ],$$

    with x = -1..( nTbW * intraPredAngle ) >> 5

$$ref[\ (\ (\ nTbW * intraPredAngle\ )\ >>\ 5\ ) - 1\ ] =$$
$$ref[\ (\ nTbW * intraPredAngle\ )\ >>\ 5\ ] \quad (8\text{-}145)$$

$$ref[\ nTbG + 1 + refIdx\ ] = ref[\ nTbH + refIdx\ ]$$

  - Otherwise,

$$ref[\ x\ ] = p[\ -1 - refIdx\ ][\ -1 - refIdx + x\ ],\ \text{with}\ x = nTbH + 1 + refIdx..refH + refIdx$$

$$ref[\ -1\ ] = ref[\ 0\ ]$$

    - The additional samples ref[ refH + refIdx +x ] with x = 1..( Max( 1, nTbW / nTbH ) * refIdx + 1) are derived as follows:

$$ref[\ refH + refIdx + x\ ] = p[\ -1 + refH\ ][\ -1 - refIdx\ ]$$

  2. The values of the prediction samples predSamples[ x ][ y ], with x = 0..nTbW - 1, y = 0..nTbH - 1 are derived as follows:

  - The index variable iIdx and the multiplication factor iFact are derived as follows:

$$iIdx = (\ (\ x + 1 + refIdx\ ) * intraPredAngle\ )\ >>\ 5$$

$$iFact = (\ (\ x + 1 + refIdx\ ) * intraPredAngle\ )\ \&\ 31$$

  - If cldx is equal to 0, the following applies:

- The interpolation filter coefficients fT[ j ] with j = 0..3 are derived as follows:

$$fT[\, j\, ] = filterFlag \ ? \ fG[\, iFact\, ][\, j\, ] \ : \ fC[\, iFact\, ][\, j\, ]$$

- The value of the prediction samples predSamples[ x ][ y ] is derived as follows:

$$predSamples[\, x\, ][\, y\, ] = Clip1Y(\, (\, (\, \textstyle\sum_{i=0}^{3} fT[\, i\, ] * ref[\, y + iIdx + i\, ]\, ) + 32\, ) \ >> \ 6\, )$$

- Otherwise (cldx is not equal to 0), depending on the value of iFact, the following applies:

  - If iFact is not equal to 0, the value of the prediction samples predSamples[ x ][ y ] is derived as follows:

$$predSamples[\, x\, ][\, y\, ] =$$
$$(\, (\, 32 - iFact\, ) * ref[\, y + iIdx + 1\, ] + iFact * ref[\, y + iIdx + 2\, ] + 16\, ) \ >> \ 5$$

  - Otherwise, the value of the prediction samples predSamples[ x ][ y ] is derived as follows:

$$predSamples[\, x\, ][\, y\, ] = ref[\, y + iIdx + 1\, ]$$

In the above, parameter refldx (called multi-reference line index or MRL index) is an index of reference line being used as a line of reference samples. In HEVC and prior standards it is always 0.

The interpolation filter coefficients fC[ phase ][ j ] and fG[ phase ][ j ] with phase = 0..31 and j 0..3 used in directional prediction are specified in Table B. Table B - Specification of interpolation filter coefficients fC and fG

| Fractional sample position p | fC interpolation filter coefficients | | | | fG interpolation filter coefficients | | | |
|---|---|---|---|---|---|---|---|---|
| | $f_C[\, p\, ][\, 0\, ]$ | $f_C[\, p\, ][\, 1\, ]$ | $f_C[\, p\, ][\, 2\, ]$ | $f_C[\, p\, ][\, 3\, ]$ | fG[ p ][ 0 ] | fG[ p ][ 1 ] | fG[ p ][ 2 ] | fG[ p ][ 3 ] |
| 0 | 0 | 64 | 0 | 0 | 16 | 32 | 16 | 0 |
| 1 | -1 | 63 | 2 | 0 | 15 | 29 | 17 | 3 |
| 2 | -2 | 62 | 4 | 0 | 15 | 29 | 17 | 3 |
| 3 | -2 | 60 | 7 | -1 | 14 | 29 | 18 | 3 |
| 4 | -2 | 58 | 10 | -2 | 13 | 29 | 18 | 4 |
| 5 | -3 | 57 | 12 | -2 | 13 | 28 | 19 | 4 |
| 6 | -4 | 56 | 14 | -2 | 13 | 28 | 19 | 4 |
| 7 | -4 | 55 | 15 | -2 | 12 | 28 | 20 | 4 |
| 8 | -4 | 54 | 16 | -2 | 11 | 28 | 20 | 5 |
| 9 | -5 | 53 | 18 | -2 | 11 | 27 | 21 | 5 |
| 10 | -6 | 52 | 20 | -2 | 10 | 27 | 22 | 5 |
| 11 | -6 | 49 | 24 | -3 | 9 | 27 | 22 | 6 |
| 12 | -6 | 46 | 28 | -4 | 9 | 26 | 23 | 6 |
| 13 | -5 | 44 | 29 | -4 | 9 | 26 | 23 | 6 |
| 14 | -4 | 42 | 30 | -4 | 8 | 25 | 24 | 7 |
| 15 | -4 | 39 | 33 | -4 | 8 | 25 | 24 | 7 |
| 16 | -4 | 36 | 36 | -4 | 8 | 24 | 24 | 8 |
| 17 | -4 | 33 | 39 | -4 | 7 | 24 | 25 | 8 |
| 18 | -4 | 30 | 42 | -4 | 7 | 24 | 25 | 8 |
| 19 | -4 | 29 | 44 | -5 | 6 | 23 | 26 | 9 |

(continued)

| Fractional sample position p | fC interpolation filter coefficients | | | | fG interpolation filter coefficients | | | |
|---|---|---|---|---|---|---|---|---|
| | $f_C[\,p\,][\,0\,]$ | $f_C[\,p\,][\,1\,]$ | $f_C[\,p\,][\,2\,]$ | $f_C[\,p\,][\,3\,]$ | fG[ p ][ 0 ] | fG[ p ][ 1 ] | fG[ p ][ 2 ] | fG[ p ][ 3 ] |
| 20 | -4 | 28 | 46 | -6 | 6 | 23 | 26 | 9 |
| 21 | -3 | 24 | 49 | -6 | 6 | 22 | 27 | 9 |
| 22 | -2 | 20 | 52 | -6 | 5 | 22 | 27 | 10 |
| 23 | -2 | 18 | 53 | -5 | 5 | 21 | 27 | 11 |
| 24 | -2 | 16 | 54 | -4 | 5 | 20 | 28 | 11 |
| 25 | -2 | 15 | 55 | -4 | 4 | 20 | 28 | 12 |
| 26 | -2 | 14 | 56 | -4 | 4 | 19 | 28 | 13 |
| 27 | -2 | 12 | 57 | -3 | 4 | 19 | 28 | 13 |
| 28 | -2 | 10 | 58 | -2 | 4 | 18 | 29 | 13 |
| 29 | -1 | 7 | 60 | -2 | 3 | 18 | 29 | 14 |
| 30 | 0 | 4 | 62 | -2 | 3 | 17 | 29 | 15 |
| 31 | 0 | 2 | 63 | -1 | 3 | 17 | 29 | 15 |

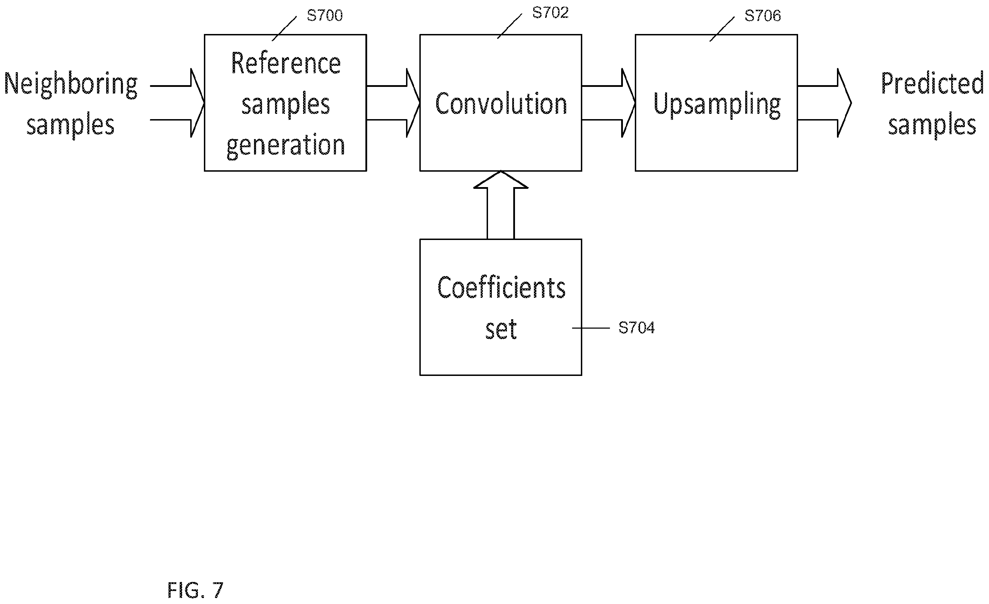

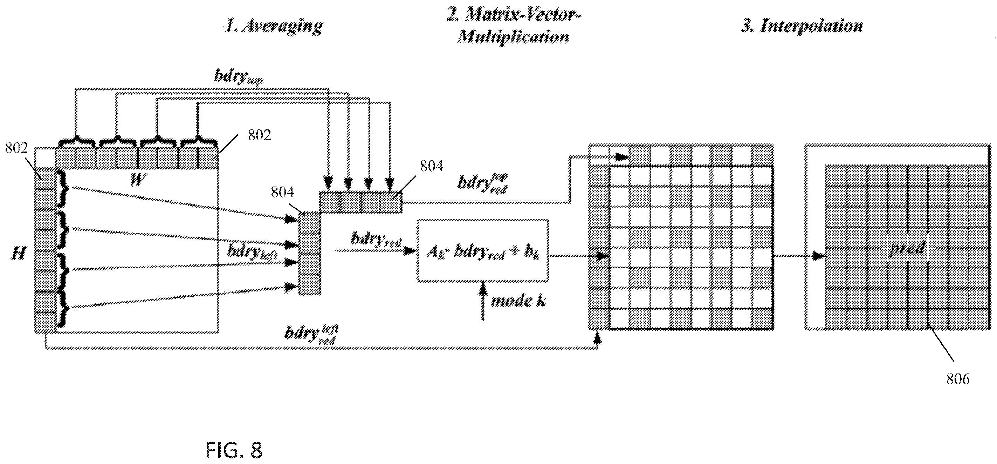

As shown in Fig. 7 and Fig. 8, a method known as Affine linear weighted prediction uses reference samples to derive values of predicted samples. For predicting the samples of a rectangular block of width *W* and height *H,* affine linear weighted intra prediction (ALWIP) takes one line of H reconstructed neighbouring boundary samples left of the block and one line of *W* reconstructed neighbouring boundary samples above the block as input. If the reconstructed samples are unavailable, they are generated as it is done in the conventional intra prediction.

The generation of the prediction signal is based on the following three steps illustrated in Fig. 7:

1. Out of the boundary samples, four samples in the case of *W* = *H* = 4 and eight samples in all other cases are extracted by averaging (S700).
2. A matrix vector multiplication, followed by addition of an offset, is carried out with the averaged samples as an input (S702). The result is a reduced prediction signal on a subsampled set of samples in the original block. A set of coefficients for the matrix multiplication is provided as will be explained in more detail below (S704).
3. The prediction signal at the remaining positions is generated from the prediction signal on the subsampled set by linear interpolation which is a single step linear interpolation in each direction (S706).

The matrices and offset vectors needed to generate the prediction signal are taken from three sets $S_0$, $S_1$, $S_2$ of matrices. The set $S_0$ consists of 18 matrices $A_0^i, i \in \{0, \dots, 17\}$ each of which has 16 rows and 4 columns and 18 offset vectors $b_0^i, i \in \{0, \dots, 17\}$ each of size 16. Matrices and offset vectors of that set are used for blocks of size $4 \times 4$. The set $S_1$ consists of 10 matrices $A_1^i, i \in \{0, \dots, 9\}$, each of which has 16 rows and 8 columns and 10 offset vectors $b_1^i, i \in \{0, \dots, 9\}$ each of size 16. Matrices and offset vectors of that set are used for blocks of sizes $4 \times 8$, $8 \times 4$ and $8 \times 8$. Finally, the set $S_2$ consists of 6 matrices $A_2^i, i \in \{0, \dots, 5\}$, each of which has 64 rows and 8 columns and of 6 offset vectors $b_2^i, i \in \{0, \dots, 5\}$ of size 64. Matrices and offset vectors of that set or parts of these matrices and offset vectors are used for all other block-shapes. The matrices in the three sets are predefined (predetermined). This may, for example, be done with the help of known training processes using neural networks.

The total number of multiplications needed in the computation of the matrix vector product is always smaller than or equal to 4 · *W* · *H.* In other words, at most four multiplications per sample are required for the ALWIP modes.

Averaging of the boundary

In a first step (cf. left hand side of Fig. 8, corresponding to step S700 of Fig. 7), the input boundaries 802 $bdry^{top}$ and $bdry^{left}$ are reduced to smaller boundaries 804 $bdry_{red}^{top}$ and $bdry_{red}^{left}$. Here, $bdry_{red}^{top}$ and $bdry_{red}^{left}$ both consists of 2 samples in the case of a 4 × 4-block and both consist of 4 samples in all other cases.

In the case of a 4 × 4-block, for $0 \le i < 2$, one defines

$$bdry_{red}^{top}[i] = \left( \left( \sum_{j=0}^{1} bdry^{top}[i \cdot 2 + j] \right) + 1 \right) \gg 1$$

and defines $bdry_{red}^{left}$ analogously.

Otherwise, if the block-width $W$ is given as $W = 4 \cdot 2^k$, for $0 \le i < 4$, one defines

$$bdry_{red}^{top}[i] = \left( \left( \sum_{j=0}^{2^k-1} bdry^{top}[i \cdot 2^k + j] \right) + (1 \ll (k-1)) \right) \gg k$$

and defines $bdry_{red}^{left}$ analogously.

The two reduced boundaries $bdry_{red}^{top}$ and $bdry_{red}^{left}$ are concatenated to a reduced boundary vector $bdry_{red}$ which is thus of size four for blocks of shape 4 × 4 and of size eight for blocks of all other shapes. If *mode* refers to the ALWIP-mode, this concatenation is defined as follows:

$$bdry_{red} = \begin{cases} \left[ bdry_{red}^{top}, bdry_{red}^{left} \right] & \text{for } W = H = 4 \text{ and } mode < 18 \\ \left[ bdry_{red}^{left}, bdry_{red}^{top} \right] & \text{for } W = H = 4 \text{ and } mode \ge 18 \\ \left[ bdry_{red}^{top}, bdry_{red}^{left} \right] & \text{for } \max(W,H) = 8 \text{ and } mode < 10 \\ \left[ bdry_{red}^{left}, bdry_{red}^{top} \right] & \text{for } \max(W,H) = 8 \text{ and } mode \ge 10 \\ \left[ bdry_{red}^{top}, bdry_{red}^{left} \right] & \text{for } \max(W,H) > 8 \text{ and } mode < 6 \\ \left[ bdry_{red}^{left}, bdry_{red}^{top} \right] & \text{for } \max(W,H) > 8 \text{ and } mode \ge 6. \end{cases}$$

Finally, for the interpolation of the subsampled prediction signal, on large blocks a second version of the averaged boundary is needed. Namely, if $\min(W, H) > 8$ and $W \ge H$, one writes W= 8 = $2^l$, and, for $0 \le i < 8$, defines

$$bdry_{redII}^{top}[i] = \left( \left( \sum_{j=0}^{2^l-1} bdry^{top}[i \cdot 2^l + j] \right) + (1 \ll (l-1)) \right) \gg l.$$

If min(W,H) > 8 and $H > W$, one defines $bdry_{redII}^{left}$ analogously.

Generation of the reduced prediction signal by matrix vector multiplication

In a second step (illustrated in the middle portion of Fig. 8 and corresponding to step S702 of Fig. 7), out of the reduced input vector $bdry_{red}$ one generates a reduced prediction signal $pred_{red}$. The latter signal is a signal on the downsampled block of width $W_{red}$ and height $H_{red}$. Here, $W_{red}$ and $H_{red}$ are defined as:

$$W_{red} = \begin{cases} 4 & \text{for } \max(W,H) \leq 8 \\ \min(W,8) & \text{for } \max(W,H) > 8 \end{cases}$$

$$H_{red} = \begin{cases} 4 & \text{for } \max(W,H) \leq 8 \\ \min(H,8) & \text{for } \max(W,H) > 8 \end{cases}$$

The reduced prediction signal $pred_{red}$ is computed by calculating a matrix vector product and adding an offset:

$$pred_{red} = A \cdot bdry_{red} + b.$$

Here, A is a matrix that has $W_{red} \cdot H_{red}$ rows and 4 columns if $W = H = 4$ and 8 columns in all other cases. $b$ is a vector of size $W_{red} \cdot H_{red}$.

The matrix A and the vector b are taken from one of the sets $S_0$, $S_1$, $S_2$ as follows. One defines an index (further referred to as block size type) $idx = idx(W, H)$ as follows:

$$idx(W,H) = \begin{cases} 0 & \text{for } W = H = 4 \\ 1 & \text{for } \max(W,H) = 8 \\ 2 & \text{for } \max(W,H) > 8. \end{cases}$$

Moreover, one puts m as follows:

$$m = \begin{cases} mode & \text{for } W = H = 4 \text{ and } mode < 18 \\ mode - 17 & \text{for } W = H = 4 \text{ and } mode \geq 18 \\ mode & \text{for } \max(W,H) = 8 \text{ and } mode < 10 \\ mode - 9 & \text{for } \max(W,H) = 8 \text{ and } mode \geq 10 \\ mode & \text{for } \max(W,H) > 8 \text{ and } mode < 6 \\ mode - 5 & \text{for } \max(W,H) > 8 \text{ and } mode \geq 6. \end{cases}$$

Then, if $idx \leq 1$ or $idx = 2$ and min(W,H) > 4, one puts $A = A_{idx}^m$ and $b = b_{idx}^m$. In the case that $idx = 2$ and min(W, H) = 4, one lets A be the matrix that arises by leaving out every row of $A_{idx}^m$ that, in the case $W = 4$, corresponds to an odd x-coordinate in the downsampled block, or, in the case $H = 4$, corresponds to an odd y-coordinate in the downsampled block, wherein the values $A_{idx}^m$ are matrix elements of the matrices of a respective one of the above introduced sets S.

Finally, the reduced prediction signal is replaced by its transpose in the following cases:

- $W = H = 4$ and $mode \geq 18$
- max($W,H$) = 8 and $mode \geq 10$
- $max(W, H) > 8$ and $mode \geq 6$

In a concrete example, a set of matrices of coefficients for 4x4 block MIP prediction (i.e. an example of set $S_0$) is defined as follows:

24

```
ALIGN_DATA( MEMORY_ALIGN_DEF_SIZE, const short mipMatrix4x4[18][16][4] )=
{
  {
    { 132,   -13,   142,   -13 },
    { 169,    66,     4,    19 },
    { -32,   273,    -9,    29 },
    { -66,   250,     8,     9 },
    {  -3,    20,   180,    63 },
    {   2,   123,    10,   124 },
    { -57,   193,   -40,    89 },
    { -17,   105,   -34,    67 },
    { -12,    28,   -28,   273 },
    { -39,    87,   -59,   193 },
    { -28,    85,   -30,    82 },
    { -12,    71,   -24,    71 },
    {   2,    10,   -58,   243 },
    { -33,    67,   -13,    98 },
    { -24,    74,   -10,    66 },
    { -19,    73,   -17,    66 }
  },
  {
    {  32,   -10,   224,     6 },
    { 137,   -37,   145,     6 },
    {  93,   123,    36,     0 },
    {  -9,   273,   -10,    -5 },
    {  -9,     3,   265,    -8 },
    { -17,    -7,   283,   -16 },
    {  -5,   -10,   267,   -16 },
    {-119,   184,   167,    -5 },
    {   6,    -4,    86,   165 },
    {   4,   -10,    45,   194 },
    {   8,   -35,    13,   221 },
    { -35,   -15,    -4,   241 },
```

```
        {   -1,  -15, -125,  369 },
        {   -1,  -22, -125,  361 },
        {   -1,  -25, -124,  352 },
        {   14,  -41, -117,  337 }
    },
    {
        {  164,   12,  115,  -44 },
        {  244,   -5,   34,  -33 },
        {  213,   41,   19,  -24 },
        {  -86,  336,    3,  -27 },
        {  -56,    2,  262,   39 },
        {   -5,   14,  190,   24 },
        {   90,    7,   78,   17 },
        {  -51,  215,  -21,   13 },
        {   -6,   -4,    0,  262 },
        {  -22,    0,   11,  257 },
        {  -16,   -8,   15,  243 },
        {  -40,   47,  -20,  214 },
        {   -2,    3,    6,  248 },
        {   -4,    4,    7,  247 },
        {   -5,    2,   11,  249 },
        {   -1,  -12,   18,  247 }
    },
    {
        {   44,   -8,  248,  -29 },
        {  232,  -20,   46,   -4 },
        {   97,  187,  -35,    4 },
        {  -34,  279,    2,    6 },
        {  -12,    7,  200,   62 },
        {   40,  -22,  174,   62 },
        {   97,  107,   -8,   56 },
        {   -6,  271,  -47,   22 },
        {    2,    4,   24,  227 },
        {    3,   -9,   38,  223 },
        {  -20,   36,   67,  170 },
        {  -68,  209,   27,   -6 },
        {   -3,    0,    5,  251 },
        {    6,    0,    1,  249 },
        {  -11,   -7,   44,  212 },
        { -179,   87,  176,  -35 }
    },
    {
```

```
{    89,  -18,  246,  -68 },
{    43,   62,  167,  -25 },
{   -52,  192,   40,   51 },
{   -18,  179,  -69,  125 },
{   -48,    3,  156,  140 },
{   -38,    3,   66,  210 },
{   -26,    1,   13,  247 },
{   -13,    1,   -6,  253 },
{     2,    0,  -18,  267 },
{     0,    1,  -12,  260 },
{    -5,    4,    1,  250 },
{    -9,    5,    8,  246 },
{    -6,    1,    8,  248 },
{    -7,    2,    8,  247 },
{   -10,    5,    5,  249 },
{   -10,    5,    4,  248 }
},
{
{    69,    2,  189,   -2 },
{   196,  -17,   74,    1 },
{   276,  -23,   -1,    0 },
{   167,   92,   -4,    1 },
{   -11,    0,  280,  -15 },
{     2,    4,  262,  -14 },
{    96,   -5,  168,   -5 },
{   227,  -30,   56,   -1 },
{     1,   -1,  147,  111 },
{    -1,   -5,  238,   22 },
{   -14,    0,  284,  -17 },
{    21,    2,  246,  -17 },
{     4,   -2,  -35,  288 },
{     5,   -5,   21,  234 },
{     6,   -7,  116,  140 },
{    -1,   -5,  206,   51 }
},
{
{   149,  -11,  134,  -12 },
{   113,   82,   79,  -17 },
{    -5,  237,   41,  -19 },
{   -20,  266,    8,   -1 },
{   -74,    9,  296,   22 },
{  -100,   63,  228,   60 },
```

```
        { -129,   159,    91,   132 },
        {  -71,   177,   -46,   172 },
        {  -15,    -5,    35,   242 },
        {  -20,    21,   -42,   284 },
        {  -31,    47,   -62,   242 },
        {  -35,    59,   -44,   169 },
        {   23,    22,  -102,   288 },
        {    3,    46,   -57,   180 },
        {   -7,    55,   -19,   106 },
        {  -13,    60,   -10,   101 }
    },
    {
        {  183,    12,    81,   -17 },
        {  274,   -11,   -12,     0 },
        {  223,    29,     2,     5 },
        {  -22,   274,    -2,     0 },
        {    0,     1,   255,    -1 },
        {  149,     6,   115,   -19 },
        {  280,   -25,    12,   -19 },
        {  161,    91,    11,   -17 },
        {  -15,    -2,    48,   224 },
        {  -11,    -3,    84,   179 },
        {  116,    -9,     8,   129 },
        {  257,   -29,   -72,    74 },
        {    4,     1,   -17,   267 },
        {   -3,     1,   -16,   271 },
        {   -8,    -2,   -14,   272 },
        {   93,   -30,   -93,   258 }
    },
    {
        {  205,   -44,   129,   -41 },
        {  280,   -48,    41,   -32 },
        {   71,   188,    10,   -27 },
        {  -16,   266,    19,   -24 },
        {  -53,     8,   253,    40 },
        {   50,   -35,   184,    29 },
        {   69,    41,    64,    19 },
        {  -46,   232,   -35,    17 },
        {  -11,     1,     0,   260 },
        {  -21,    -1,     8,   257 },
        {  -11,   -17,     8,   245 },
        { -119,   135,   -50,   224 },
```

EP 3 970 365 B1

```
    {   -3,     2,      6,    250 },
    {   -5,     5,      7,    249 },
    {    0,    -2,     10,    251 },
    {  -36,    26,     15,    248 }
},
{
    {  -41,    96,    265,    -58 },
    {  -99,   156,    141,     57 },
    {  -61,    95,     49,    170 },
    {  -15,    28,     13,    230 },
    {  -49,    19,     71,    212 },
    {   -4,   -16,      7,    268 },
    {    6,   -21,     12,    263 },
    {   -2,    -6,     20,    251 },
    {    7,    -2,     -5,    259 },
    {   -1,     4,     14,    246 },
    {   -6,     9,     15,    245 },
    {   -5,     7,     15,    247 },
    {   -4,     3,     16,    247 },
    {   -4,     3,     14,    251 },
    {   -3,     3,     13,    251 },
    {   -2,     3,     15,    249 }
},
{
    {  145,   -30,    241,   -108 },
    {  234,  -111,    222,   -105 },
    {  305,  -175,    207,   -101 },
    {  315,  -178,    192,    -95 },
    {  -39,   -71,    254,    109 },
    {  -15,   -99,    257,    106 },
    {   36,  -151,    258,    101 },
    {  112,  -222,    250,     99 },
    {   14,   -11,    -15,    269 },
    {   12,    -9,    -12,    268 },
    {    2,    -1,     -5,    266 },
    {    1,    -6,      8,    261 },
    {   -5,    -1,     25,    242 },
    {    1,    -7,     28,    242 },
    {    6,   -12,     28,    242 },
    {   11,   -16,     29,    243 }
},
{
```

```
        {   38,   -15,   237,     4 },
        {   95,    22,   148,    -3 },
        {   39,   212,    21,   -20 },
        {   -2,   267,     2,   -15 },
        {  -10,     2,   258,     2 },
        {  -26,     1,   252,    26 },
        {  -70,   112,   132,    81 },
        {  -45,   242,   -78,   115 },
        {   -1,    -8,    52,   213 },
        {   -2,    -4,   -26,   273 },
        {  -30,    16,   -46,   253 },
        {  -50,    84,   -75,   169 },
        {    3,    15,  -116,   321 },
        {    3,    24,   -75,   204 },
        {   15,    27,   -35,   101 },
        {   13,    30,   -16,    78 }
    },
    {
        {   21,     0,   232,     5 },
        {    3,    31,   220,     3 },
        {  -22,    75,   203,    -1 },
        {  -35,   109,   182,    -3 },
        {  -27,    20,   263,    -1 },
        {  -34,    26,   261,     2 },
        {  -36,    27,   262,     4 },
        {  -39,    33,   259,     6 },
        {  -14,    16,   235,    26 },
        {  -20,    24,   246,    11 },
        {  -29,    33,   246,     6 },
        {  -37,    41,   240,   -10 },
        {   12,   -17,  -200,   435 },
        {    8,   -19,  -170,   376 },
        {   -6,   -15,  -120,   280 },
        {  -19,    -8,   -74,   200 }
    },
    {
        {   24,   -11,   235,    11 },
        {   84,   -32,   196,    12 },
        {   35,    74,   142,     8 },
        {  -93,   255,    92,     2 },
        {   -7,     6,   263,    -7 },
        {  -16,     6,   271,    -7 },
```

```
        {    -2,   -14,   275,    -3 },
        {   -47,    40,   262,     2 },
        {     8,    14,   158,   112 },
        {    11,    10,   184,    77 },
        {     7,    10,   205,    49 },
        {    18,    -8,   223,    29 },
        {    -5,   -34,  -115,   340 },
        {    -1,   -46,  -101,   313 },
        {     0,   -52,   -85,   289 },
        {    -5,   -49,   -62,   260 }
    },
    {
        {    79,    11,   177,   -16 },
        {   -33,   202,   102,    -9 },
        {   -65,   266,   -22,    92 },
        {    47,   148,  -156,   202 },
        {  -115,   120,   200,    68 },
        {   -34,   139,   -45,   199 },
        {    83,    29,  -186,   273 },
        {   103,   -19,  -204,   264 },
        {    15,    24,   -85,   295 },
        {    61,   -38,  -154,   281 },
        {    46,   -48,  -143,   238 },
        {    39,   -33,  -143,   228 },
        {    32,   -43,  -110,   275 },
        {    19,   -50,  -108,   230 },
        {    17,   -43,  -118,   228 },
        {    22,   -37,  -128,   228 }
    },
    {
        {    21,     1,   231,     6 },
        {     4,    30,   219,     4 },
        {   -19,    72,   203,     0 },
        {   -25,   100,   182,    -2 },
        {   -23,    17,   263,    -2 },
        {   -30,    24,   260,     1 },
        {   -31,    23,   260,     3 },
        {   -32,    27,   258,     5 },
        {   -10,    14,   231,    32 },
        {   -17,    23,   246,    12 },
        {   -26,    31,   248,     4 },
        {   -32,    38,   242,   -10 },
```

```
        {     4,  -12, -193,   420 },
        {    -3,  -12, -162,   360 },
        {   -14,  -10, -113,   267 },
        {   -24,   -4,  -65,   180 }
    },
    {
        {    10,   -9,  304,   -55 },
        {    12,  -15,  305,   -56 },
        {   -14,   14,  293,   -45 },
        { -182,  186,  260,   -19 },
        {   -17,    9,  175,    89 },
        {   -14,    7,  126,   134 },
        {     3,  -11,   82,   176 },
        {    11,  -20,   50,   205 },
        {     3,   -2,  -11,   264 },
        {     3,   -2,  -15,   267 },
        {    -4,    4,  -12,   264 },
        {     3,   -2,   -4,   256 },
        {    -3,   -1,    6,   250 },
        {    -3,   -2,    9,   247 },
        {    -4,   -1,    8,   247 },
        {    -7,    2,    8,   246 }
    },
    {
        {   -23,   -3,  283,    -2 },
        {   -18,  -11,  287,    -2 },
        {    -2,  -26,  287,    -3 },
        {    -1,  -21,  282,    -4 },
        {    18,    2,  234,     3 },
        {    16,    5,  233,     3 },
        {    13,    7,  231,     5 },
        {    17,    0,  229,    10 },
        {     2,   -1,    9,   246 },
        {     2,   -1,    6,   249 },
        {     1,    1,    3,   251 },
        {    -1,    3,    3,   251 },
        {     0,    0,  -11,   267 },
        {     0,    1,  -11,   266 },
        {     1,    1,  -10,   264 },
        {     1,    1,   -9,   263 }
    }
};
```

Here, in total 18 matrices are defined. Each matrix has 16 rows of coefficients, and each row has 4 coefficients.

In total 35 MIP intra modes are defined for 4x4 blocks.

For each mode, a matrix selection index m is defined as follows:

$$m = \begin{cases} mode & \text{for } W = H = 4 \text{ and } mode < 18 \\ mode - 17 & \text{for } W = H = 4 \text{ and } mode \geq 18 \\ mode & \text{for } \max(W,H) = 8 \text{ and } mode < 10 \\ mode - 9 & \text{for } \max(W,H) = 8 \text{ and } mode \geq 10 \\ mode & \text{for } \max(W,H) > 8 \text{ and } mode < 6 \\ mode - 5 & \text{for } \max(W,H) > 8 \text{ and } mode \geq 6. \end{cases}$$

For 4x4 blocks, when a mode is between 0 to 17, inclusive, the mode is equal to matrix selection index; when a mode is between 18 to 34, the matrix selection index m is between 1 to 17, corresponding.

That is to say, when a mode 18 is obtained from a bitstream, the second matrix in above defined matrix set is selected, as follows

```
{ 32, -10, 224, 6},
{ 137, -37, 145, 6},
{ 93, 123, 36, 0 },
{ -9, 273, -10, -5 },
{ -9, 3, 265, -8 },
{ -17, -7, 283, -16},
{ -5, -10, 267, -16},
{-119, 184, 167, -5},
{ 6, -4, 86, 165},
{ 4, -10, 45, 194},
{ 8, -35, 13, 221 },
{ -35, -15, -4, 241 },
{ -1, -15, -125, 369},
{ -1, -22, -125, 361},
{ -1, -25, -124, 352},
{ 14, -41, -117, 337}
```

The same matrix will be selected when a mode 1 is obtained from a bitstream.

It is worth noting that although mode 1 and mode 18 would select the same matrix, the reference sample vector (as the input for MIP intra prediction) obtained from left and above are different in these two cases, as defined before

$$bdry_{red} = \begin{cases} \left[ bdry_{red}^{top}, bdry_{red}^{left} \right] & \text{for } W = H = 4 \text{ and } mode < 18 \\ \left[ bdry_{red}^{left}, bdry_{red}^{top} \right] & \text{for } W = H = 4 \text{ and } mode \geq 18 \\ \left[ bdry_{red}^{top}, bdry_{red}^{left} \right] & \text{for } \max(W,H) = 8 \text{ and } mode < 10 \\ \left[ bdry_{red}^{left}, bdry_{red}^{top} \right] & \text{for } \max(W,H) = 8 \text{ and } mode \geq 10 \\ \left[ bdry_{red}^{top}, bdry_{red}^{left} \right] & \text{for } \max(W,H) > 8 \text{ and } mode < 6 \\ \left[ bdry_{red}^{left}, bdry_{red}^{top} \right] & \text{for } \max(W,H) > 8 \text{ and } mode \geq 6. \end{cases}$$

And a transpose of predicted signal is required if mode 18 is used, as defined before

Finally, the reduced prediction signal is replaced by its transpose in the following cases:

- $W = H = 4$ and $mode \geq 18$

- $max(W,H) = 8$ and $mode \geq 10$

$max(W,H) > 8$ and $mode \geq 6$

Generation of the final prediction signal by upsampling by interpolation

Finally, in a third step (illustrated on the right-hand side of Fig. 8 and corresponding to step S706 in Fig. 7), the reduced prediction signal obtained as a result of the previous step is upsampled by interpolation (in particular examples: a linear interpolation in each direction).

ALWIP method could be also referred to as matrix-based intra prediction (MIP). Signaling of an intra prediction mode in presence of MIP could be formulated as it is shown in Table 1.

Table 1. Signaling of intra prediction modes if MIP is enabled.

| | |
|---|---|
| ... | |
| if( treeType = = SINGLE_TREE \| \| treeType = = DUAL_TREE_LUMA) { | |
| ... | |
|     if( sps_mip_enabled_flag &&<br>      ( Abs( Log2( cbWidth ) - Log2( cbHeight ) ) <= 2 ) &&<br>        cbWidth <= MaxTbSizeY && cbHeight <= MaxTbSizeY ) | |
|       intra_mip_flag[ x0 ][ y0 ] | ae(v) |
|       intra_mip_flag[ x0 ][ y0 ] | ae(v) |
|     if( intra_mip_flag[ x0 ][ y0 ] ) { | |
|       intra_mip_mpm_flag[ x0 ][ y0 ] | ae(v) |
|       if( intra_mip_mpm_flag[ x0 ][ y0 ] ) | |
|         intra_mip_mpm_idx[ x0 ][ y0 ] | ae(v) |
|       Else | |
|         intra_mip_mpm_remainder[ x0 ][ y0 ] | ae(v) |
|     } else { | |
|       if( sps_mrl_enabled_flag && ( ( y0 % CtbSizeY ) > 0 ) ) | |
|         intra_luma_ref_idx[ x0 ][ y0 ] | ae(v) |
|       if ( sps_isp_enabled_flag && intra_luma_ref_idx[ x0 ][ y0 ] = = 0 &&<br>        ( cbWidth <= MaxTbSizeY && cbHeight <= MaxTbSizeY ) &&<br>        ( cbWidth * cbHeight > MinTbSizeY * MinTbSizeY ) ) | |
|         intra_subpartitions_mode_flag[ x0 ][ y0 ] | ae(v) |
|       if( intra_subpartitions_mode_flag[ x0 ][ y0 ] = = 1 &&<br>        cbWidth <= MaxTbSizeY && cbHeight <= MaxTbSizeY ) | |
|         intra_subpartitions_split_flag[ x0 ][ y0 ] | ae(v) |
|       if( intra_luma_ref_idx[ x0 ][ y0 ] = = 0 &&<br>        intra_subpartitions_mode_flag[ x0 ][ y0 ] = = 0 ) | |
|         intra_luma_mpm_flag[ x0 ][ y0 ] | ae(v) |
|       if( intra_luma_mpm_flag[ x0 ][ y0 ] ) { | |
|         if( intra_luma_ref_idx[ x0 ][ y0 ] = = 0 ) | |
|           intra_luma_not_planar_flag[ x0 ][ y0 ] | ae(v) |
|         if( intra_luma_not_planar_flag[ x0 ][ y0 ] ) | |
|           intra_luma_mpm_idx[ x0 ][ y0 ] | ae(v) |
|       } else | |
|         intra_luma_mpm_remainder[ x0 ][ y0 ] | ae(v) |
|     } | |
| ... | |
| } | |

Syntax element **"sps_mip_enabled_flag"** equal to 1 specifies that matrix-based intra prediction is enabled. **"sps_mip_enabled_flag"** equal to 0 specifies that matrix-based intra prediction is disabled.

In case MIP is enabled, the following syntax elements specify whether or not MIP is applied for a particular sample. **intra_mip_flag[** x0 ][ y0 ] equal to 1 specifies that the intra prediction type for luma samples is matrix-based intra prediction. intra_mip_flag[ x0 ][ y0 ] equal to 0 specifies that the intra prediction type for luma samples is not matrix-based intra prediction.

When intra_mip_flag[ x0 ][ y0 ] is not present, it is inferred to be equal to 0.

The syntax elements **intra_mip_mpm_flag[** x0 ][ y0 ], **intra_mip_mpm_idx[** x0 ][ y0 ] and **intra_mip_mpm_remainder** [ x0 ][ y0 ] specify the matrix-based intra prediction mode for luma samples. The array indices x0, y0 specify the location ( x0 , y0 ) of the top-left luma sample of the considered coding block relative to the top-left luma sample of the picture. When **intra_mip_mpm_flag[** x0 ][ y0 ] is equal to 1, the matrix-based intra prediction mode is inferred from a neighbouring intra-predicted coding unit.

When **intra_mip_mpm_flag[** x0 ][ y0 ] is not present, it is inferred to be equal to 1.

A variable "treeType" specifies whether a single tree (SINGLE_TREE) or a dual tree is used to partition the CTUs and, when a dual tree is used, whether the luma (DUAL_TREE_LUMA) or chroma components (DUAL_TREE_CHROMA) are currently processed.

In addition, the following variables' semantics is used in Table 1:

- a coding block width "cbWidth" in luma samples,
- a coding block height "cbHeight" in luma samples,
- MinTbLog2SizeY = 2, MaxTbLog2SizeY = 6
- Minimum and maximum transform block sizes:

$$MinTbSizeY = 1 \ << \ MinTbLog2SizeY,$$

$$MaxTbSizeY = 1 \ << \ MaxTbLog2SizeY.$$

The process of MPM list derivation requires intra prediction modes of the neighboring blocks. However, even if MIP is not used for the current block, neighboring blocks may be predicted using MIP and thus would have an intra prediction mode that is inconsistent with conventional non-MIP intra prediction modes. For this purpose a lookup table is introduced (Tables 2-4), that maps input MIP mode indexes to conventional intra prediction modes.

Table 2. A mode mapping lookup table for blocks 4x4

| MIP index | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| intraPredMode | 0 | 18 | 18 | 0 | 18 | 0 | 12 | 0 | 18 | 2 | 18 | 12 | 18 | 18 | 1 | 18 | 18 | 0 |

| MIP index | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|
| intraPredMode | 0 | 50 | 0 | 50 | 0 | 56 | 0 | 50 | 66 | 50 | 56 | 50 | 50 | 1 | 50 | 50 | 50 |

Table 3. A mode mapping lookup table for blocks 8x8

| MIP index | 0 | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|---|
| intraPredMode | 0 | 1 | 0 | 1 | 0 | 22 | 18 | 18 | 1 | 0 | 1 | 0 | 1 | 0 | 44 | 0 | 50 | 1 | 0 |

Table 4. A mode mapping lookup table for blocks 16x16

| MIP index | 0 | 1 | 2 | 3 | 4 | 5 | 6 | 7 | 8 | 9 | 10 |
|---|---|---|---|---|---|---|---|---|---|---|---|
| intraPredMode | 1 | 1 | 1 | 1 | 18 | 0 | 1 | 0 | 1 | 50 | 0 |

When a current block is to be predicted using MIP, its MPM list is being constructed with consideration of the neighboring non-MIP modes. These modes are mapped to the MIP ones using two steps:

- At the first step, directional intra prediction mode is mapped to a reduced set of directional modes (see "intraPredMode33" in Table 5)
- The second step is to determine MIP mode based on the determined directional mode of the reduced set of directional modes.

For simplicity, a respective look-up table is explicitly given by way of example only for the case of 4x4 blocks.

Table 5. Mapping of the directional intra prediction modes to the reduced set of directional modes

| intraPredMode | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| intraPredMode33 | 0 | 1 | 2 | 2 | 3 | 3 | 4 | 4 | 5 | 5 | 6 | 6 | 7 | 7 | 8 | 8 | 9 | 9 |

| intraPredMode | 18 | 19 | 20 | 21 | 22 | 23 | 24 | 25 | 26 | 27 | 28 | 29 | 30 | 31 | 32 | 33 | 34 | 35 |
|---|---|---|---|---|---|---|---|---|---|---|---|---|---|---|---|---|---|---|
| intraPredMode33 | 10 | 10 | 11 | 11 | 12 | 12 | 13 | 13 | 14 | 14 | 15 | 15 | 16 | 16 | 17 | 17 | 18 | 18 |
| intraPredMode | 36 | 37 | 38 | 39 | 40 | 41 | 42 | 43 | 44 | 45 | 46 | 47 | 48 | 49 | 50 | 51 | 52 | 53 |
| intraPredMode33 | 19 | 19 | 20 | 20 | 21 | 21 | 22 | 22 | 23 | 23 | 24 | 24 | 25 | 25 | 26 | 26 | 27 | 27 |

| intraPredMode | 54 | 55 | 56 | 57 | 58 | 59 | 60 | 61 | 62 | 63 | 64 | 65 | 66 | |
|---|---|---|---|---|---|---|---|---|---|---|---|---|---|---|
| intraPredMode33 | 28 | 28 | 29 | 29 | 30 | 30 | 31 | 31 | 32 | 32 | 33 | 33 | 34 | |

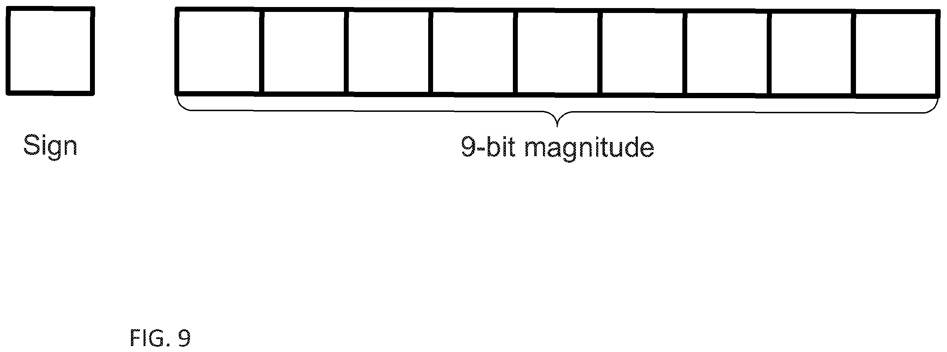

As shown in Fig. 9, MIP coefficients (elements of matrices $A_0^i$, $A_1^i$ and $A_2^i$) has the length of 10 bits including 9-bit magnitude and a sign (1 bit). Values of MIP coefficients used in the reference software VTM-5.0 and the H.266/VVC spec draft, have the statistics presented in Table 6.

Table 6. Statistics of MIP coefficients

| Block size | Values | Ranges |
|---|---|---|
| 4x4 | -222 ... 435 | 657 |
| 8x8 | -207 ... 476 | 683 |
| 16x16 | -170 ... 314 | 484 |

Conventionally, matrix-based intra prediction, in particular the step of obtaining a reduced prediction sample according to the operation $pred_{red} = A \cdot bdry_{red} + b$. described in more detail above with reference to Figs. 7 and 8, requires a considerable amount of computationally expensive multiplication operations.

The present invention aims to reduce the number of multiplication operations. In embodiments, even a multiplication-free implementation of matrix-based inter prediction, MIP, may be achieved.

For this purpose, modified sets of MIP coefficients having only a restricted amount of possible values are constructed and used. Employing MIP coefficients from a restricted set of values according to the present disclosure may enable replacing multiplication by computationally less expensive addition (subtraction) and shift operations.

In one or more embodiments, a magnitude of any MIP coefficient $C_{MIP}$ can be represented as the following series:

$$C_{MIP} = \sum_{i=0}^{M} a_i \cdot 2^i \quad , \tag{1}$$

where $a_i = \{-1, 0, 1\}$, $M$ is a non-negative integer ($M \leq 8$ if magnitudes of MIP coefficients require 9 bits for representing

$$\sum_{i=0}^{M} abs(a_i) \leq N_{THR}$$

them). In this representation, with a preset integer threshold value $N_{THR}$ to keep the number of non-zero $a_i$ sufficiently small that allows us to replace multiplication operations by a combination of add and left shift operations as follows from formula (1). In particular, $N_{THR}$ can be equal to 2 that is tantamount to the following representation:

$$C_{MIP} = a_i \cdot 2^i + a_j \cdot 2^j , \tag{2}$$

where $i \neq j$. This representation can be used to reduce the computational complexity of matrix multiplication used in MIP.

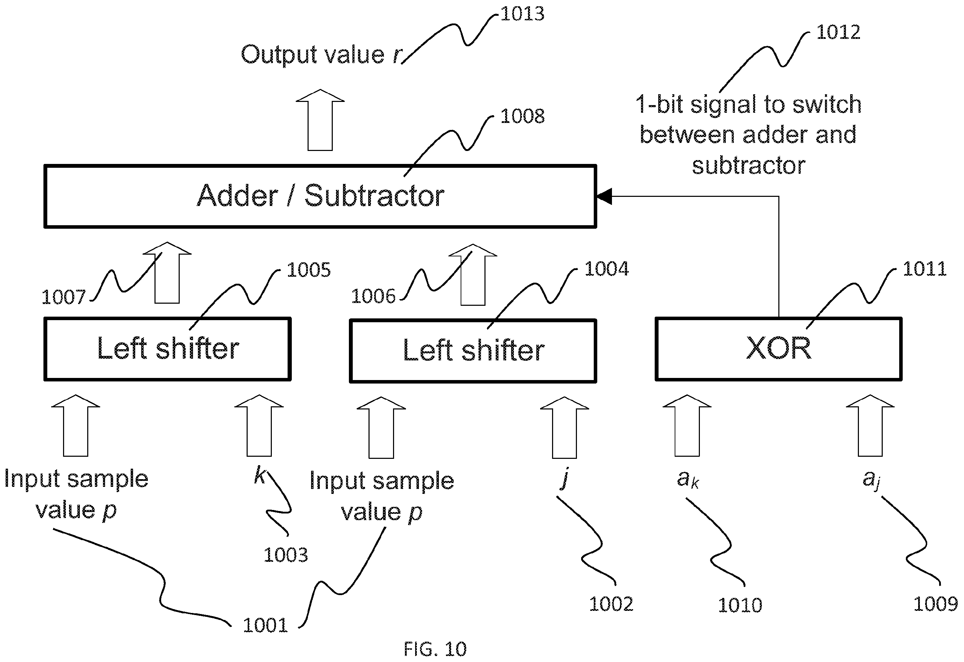

Exemplary values of such MIP coefficients are shown in arrays 7, 8, and 9. An exemplary multiplication-free implementation using this invention is presented in Fig. 10. Sample value $p$ 1001 and shift value $j$ 1002 as well as sample value $p$ 1001 and shift value $k$ 1003 are input values for left shifters 1004 and 1005, respectively. Then, intermediate results 1006 and 1007 obtained after left shift are passed in to adder / subtractor 1008 that calculates output value 1013. To switch between addition and subtraction operations in adder / subtractor 1008, 1-bit signal 1012 is passed in. Signal 1012 is a result of performing XOR operation over input values $a_k$ 1010 and $a_j$ 1009. If signal 1012 equals "0", then addition should be carried out in adder / subtractor 1008. If signal 1012 equals "1", then subtraction should be carried out in adder / subtractor 1008. It is noted that index k in Fig. 10 has the same meaning as index i in (1) and (2) above.

As a concrete example, $C_{MIP}$ is equal to 132. In this case

$$C_{MIP} = 1 \cdot 128 + 1 \cdot 4$$

In hardware, a value X is multiplied with 128 can be replaced with left shift by 7 as $2^7 = 128$, namely,

$$X \cdot 128 = X \ll 7$$

Similarly, a value $X$ is multiplied with 4 can be replaced with left shift by 2 as $2^2 = 4$.

Therefore, if a reference signal $X$ is selected to multiply with $C_{MIP} = 132$, then,

$$X \cdot C_{MIP} = X \cdot (1 \cdot 128 + 1 \cdot 4) = (X \ll 7) + (X \ll 2)$$

After 132 is decomposed to two number of power of 2, a multiplication operation can be replaced with two shifts and an addition operation.

In this way, if we redefine the coefficients of $C_{MIP}$ as equation (2), the expensive multiplication operation in hardware can be replaced by cheap operations of two shift and one addition or subtraction,

In another example, i.e. different from that of Fig. 9, the MIP coefficients have the length of 8 bit, and its representation range is from 0 to 255, inclusive. Namely, the MIP coefficients are non-negative., a magnitude of any MIP coefficient $C_{MIP}$ is represented as the following series:

$$C_{MIP} = \sum_{i=0}^{M} a_i \cdot 2^i \quad , \tag{3}$$

$$\sum_{i=0}^{M} abs(a_i) \le N_{THR}$$

where $a_i$ is either equal to 0 or 1, M is a non-negative integer. In this representation, to keep the number of non-zero $a_i$ sufficiently small that allows us to replace multiplication operations by a combination of add and left shift operations as follows from formula (1). In particular, $N_{THR}$ can be equal to 2 that is tantamount to the following representation:

$$C_{MIP} = a_i \cdot 2^i + a_j \cdot 2^j , \tag{4}$$

Exemplary values of MIP coefficients (with $M \le 8$ if the magnitude of MIP coefficients require 9 bits for representing) are shown in Array 7, 8, and 9 for block size idx 0, 1, 2, respectively.

The idx indicating the block size introduced before (also known as "matrix-based intra prediction indication information") is defined in the following equations.

$$idx(W,H) = \begin{cases} 0 & \text{for } W = H = 4 \\ 1 & \text{for } \max(W,H) = 8 \\ 2 & \text{for } \max(W,H) > 8. \end{cases}$$

To predict the samples of a rectangular block, MIP takes two lines of reconstructed neighbouring samples as depicted in Fig 8 as an input. To these samples, the prediction process applies a matrix $A_k$ and an offset-vector $b_k$, leading to a predicted block. Matrix $A_k$ comprises the values of MIP coefficients for a selected intra predicted mode.

Array 7. Exemplary values of MIP coefficients selected according to the proposed method for block size type idx 0, defined in C/C++ programming language.

```
const short mipMatrix4x4round_const[18][16][4] =
{
  {
    { 132  ,   -14 ,    144 ,    -14 },
    { 160  ,    68 ,    5   ,    24 },
    { -32,   272 ,   -9   ,    30 },
    { -66,   248 ,   9     ,    10 },
    { -5  ,   17  ,   192 ,    60 },
    { 2   ,   124 ,   9     ,    124 },
    { -60,   192 ,   -40 ,    96 },
    { -18,   112 ,   -36 ,    64 },
    { -12,   28  ,   -28 ,    272 },
    { -36,   80  ,   -56 ,    192 },
    { -24,   80  ,   -28 ,    80 },
    { -14,   72  ,   -24 ,    72 },
    { 3   ,   10  ,   -56 ,    240 },
    { -33,   68  ,   -12 ,    96 },
    { -24,   72  ,   -9   ,    66 },
    { -18,   72  ,   -17 ,    66 }
  },
  {
    { 32  ,   -10 ,   224 ,    6 },
    { 136  ,   -36 ,    144 ,    7 },
    { 96  ,   124 ,   34  ,    -1 },
    { -9  ,   272 ,   -10 ,    -4 },
    { -9  ,   3   ,   264 ,    -7 },
    { -18,   -8  ,   288 ,    -18 },
    { -4  ,   -9  ,   264 ,    -15 },
    { -120  ,    192 ,    160 ,    -5 },
```

**EP 3 970 365 B1**

```
{ 4  ,    -6  ,    96  ,    160 },
{ 3  ,    -10 ,    48  ,    192 },
{ 7  ,    -36 ,    12  ,    224 },
{ -34,    -15 ,    -4  ,    240 },
{ 0  ,    -15 ,    -126,    384 },
{ 0  ,    -24 ,    -126,    384 },
{ 0  ,    -24 ,    -124,    320 },
{ 16 ,    -34 ,    -112,    320 }
},
{
{ 160  ,    14  ,    112  ,    -40 },
{ 248  ,    -6  ,    33   ,    -34 },
{ 224  ,    40  ,    16   ,    -28 },
{ -80,    320 ,    5    ,    -20 },
{ -56,    3   ,    264  ,    40 },
{ -6 ,    14  ,    192  ,    24 },
{ 96 ,    7   ,    72   ,    17 },
{ -56,    224 ,    -24  ,    12 },
{ -6 ,    -3  ,    1    ,    264 },
{ -24,    0   ,    12   ,    256 },
{ -15,    -7  ,    16   ,    240 },
{ -40,    40  ,    -20  ,    224 },
{ -2 ,    3   ,    6    ,    248 },
{ -4 ,    4   ,    6    ,    248 },
{ -5 ,    2   ,    12   ,    248 },
{ -1 ,    -12 ,    17   ,    248 }
},
{
{ 40 ,    -6  ,    248  ,    -28 },
{ 224  ,    -17 ,    48   ,    -2 },
{ 96 ,    192 ,    -36  ,    2 },
{ -32,    272 ,    4    ,    8 },
{ -9 ,    9   ,    192  ,    64 },
{ 48 ,    -20 ,    160  ,    64 },
{ 96 ,    112 ,    -10  ,    56 },
{ -5 ,    272 ,    -48  ,    20 },
{ 3  ,    5   ,    24   ,    224 },
{ 3  ,    -8  ,    36   ,    224 },
{ -17,    40  ,    68   ,    160 },
{ -72,    224 ,    20   ,    -8 },
{ -3 ,    0   ,    4    ,    252 },
{ 6  ,    0   ,    2    ,    248 },
```

39

```
     { -15,     -9  ,    40  ,     224 },
     { -192    ,    80  ,   192 ,    -33 }
   },
   {
     { 96 ,     -18 ,    240 ,     -68 },
     { 48 ,     63  ,    160 ,     -24 },
     { -48,     192 ,    40  ,     48 },
     { -20,     192 ,    -72 ,     120 },
     { -48,     3   ,    160 ,     136 },
     { -48,     2   ,    64  ,     224 },
     { -28,     1   ,    14  ,     248 },
     { -14,     1   ,    -6  ,     256 },
     { 3  ,     1   ,    -17 ,     264 },
     { 0  ,     1   ,    -12 ,     264 },
     { -5 ,     5   ,    2   ,     248 },
     { -9 ,     4   ,    7   ,     248 },
     { -6 ,     1   ,    8   ,     248 },
     { -7 ,     2   ,    7   ,     248 },
     { -10,     5   ,    6   ,     248 },
     { -10,     5   ,    4   ,     248 }
   },
   {
     { 68 ,     1   ,    192 ,     -3 },
     { 192    ,    -15 ,    72  ,     3 },
     { 272    ,    -20 ,    -1  ,     1 },
     { 160    ,    96  ,    -3  ,     2 },
     { -14,     -2  ,    288 ,     -17 },
     { 2  ,     3   ,    264 ,     -15 },
     { 96 ,     -3  ,    160 ,     -3 },
     { 224    ,    -28 ,    56  ,     0 },
     { 2  ,     0   ,    144 ,     112 },
     { -1 ,     -5  ,    240 ,     20 },
     { -15,     -1  ,    288 ,     -18 },
     { 20 ,     2   ,    248 ,     -18 },
     { 4  ,     -1  ,    -36 ,     288 },
     { 3  ,     -7  ,    20  ,     240 },
     { 6  ,     -7  ,    112 ,     144 },
     { 1  ,     -3  ,    192 ,     56 }
   },
   {
     { 144    ,    -10 ,    136 ,     -10 },
     { 112    ,    80  ,    80  ,     -16 },
```

```
      { -6 ,     240 ,     40 ,     -20 },
      { -20,     264 ,     9 ,      0 },
      { -72,     12 ,     288 ,     24 },
      { -96,     63 ,     224 ,     60 },
      { -132    ,   160 ,     96 ,      132 },
      { -72,     192 ,     -48 ,     160 },
      { -15,     -4 ,     36 ,      240 },
      { -24,     20 ,     -40 ,     288 },
      { -30,     48 ,     -62 ,     240 },
      { -34,     62 ,     -40 ,     160 },
      { 20 ,     20 ,     -96 ,     288 },
      { 1 ,     40 ,     -60 ,     192 },
      { -8 ,     56 ,     -24 ,     112 },
      { -12,     62 ,     -9 ,      96 }
   },
   {
      { 192    ,   9 ,     80 ,      -20 },
      { 272    ,   -10 ,     -12 ,     1 },
      { 224    ,   28 ,     2 ,      5 },
      { -20,     272 ,     -2 ,      0 },
      { 0 ,     1 ,     256 ,     -1 },
      { 144    ,   7 ,     120 ,     -20 },
      { 288    ,   -28 ,     9 ,      -20 },
      { 160    ,   96 ,     9 ,      -18 },
      { -15,     -2 ,     48 ,      224 },
      { -15,     -5 ,     80 ,      192 },
      { 112    ,   -8 ,     9 ,      132 },
      { 256    ,   -28 ,     -72 ,     72 },
      { 5 ,     2 ,     -16 ,     264 },
      { -3 ,     1 ,     -17 ,     272 },
      { -8 ,     -2 ,     -14 ,     272 },
      { 96 ,     -30 ,     -96 ,     256 }
   },
   {
      { 192    ,   -40 ,     132 ,     -36 },
      { 288    ,   -48 ,     36 ,      -34 },
      { 68 ,     192 ,     10 ,      -28 },
      { -15,     264 ,     20 ,      -24 },
      { -56,     9 ,     256 ,     40 },
      { 48 ,     -36 ,     192 ,     24 },
      { 68 ,     40 ,     66 ,      20 },
      { -48,     240 ,     -36 ,     15 },
```

```
            {-12,    1   ,    1   ,     264 },
            {-20,    -1  ,    8   ,     256 },
            {-12,    -18 ,    7   ,     248 },
            {-120   ,    136 ,    -48 ,     224 },
            {-3 ,    3   ,    7   ,     248 },
            {-5 ,    5   ,    8   ,     248 },
            {0  ,    -2  ,    9   ,     252 },
            {-36,    24  ,    16  ,     248 }
        },
        {
            {-40,    96  ,    264 ,     -60 },
            {-96,    160 ,    136 ,     56 },
            {-60,    96  ,    56  ,     160 },
            {-14,    30  ,    15  ,     224 },
            {-56,    18  ,    68  ,     224 },
            {-3 ,    -15 ,    8   ,     264 },
            {5  ,    -20 ,    12  ,     264 },
            {-2 ,    -7  ,    20  ,     252 },
            {7  ,    -2  ,    -4  ,     256 },
            {-2 ,    3   ,    14  ,     248 },
            {-7 ,    8   ,    14  ,     248 },
            {-5 ,    7   ,    14  ,     248 },
            {-4 ,    3   ,    15  ,     248 },
            {-4 ,    2   ,    14  ,     252 },
            {-3 ,    3   ,    12  ,     252 },
            {-2 ,    3   ,    16  ,     248 }
        },
        {
            {144    ,    -28 ,    240 ,     -112 },
            {240    ,    -112,    224 ,     -112 },
            {320    ,    -160,    192 ,     -112 },
            {320    ,    -160,    192 ,     -120 },
            {-40,    -72 ,    256 ,     112 },
            {-17,    -96 ,    256 ,     112 },
            {36 ,    -144,    256 ,     96 },
            {112    ,    -224,    256 ,     96 },
            {14 ,    -12 ,    -16 ,     272 },
            {12 ,    -8  ,    -10 ,     264 },
            {2  ,    0   ,    -4  ,     264 },
            {1  ,    -6  ,    9   ,     264 },
            {-4 ,    0   ,    24  ,     240 },
            {2  ,    -6  ,    28  ,     240 },
```

```
        { 7  ,    -12 ,    28  ,     240 },
        { 12 ,    -15 ,    30  ,     240 }
},
{
        { 36 ,    -15 ,    240 ,     3 },
        { 96 ,    24  ,    144 ,     -2 },
        { 36 ,    224 ,    18  ,     -24 },
        { -1 ,    264 ,    3   ,     -14 },
        { -10,    2   ,    256 ,     2 },
        { -28,    1   ,    252 ,     28 },
        { -68,    112 ,    132 ,     80 },
        { -48,    240 ,    -80 ,     120 },
        { -3 ,    -10 ,    48  ,     224 },
        { -2 ,    -5  ,    -24 ,     272 },
        { -30,    17  ,    -48 ,     256 },
        { -48,    80  ,    -68 ,     160 },
        { 2  ,    14  ,    -112,     320 },
        { 5  ,    28  ,    -72 ,     192 },
        { 16 ,    28  ,    -33 ,     96 },
        { 12 ,    30  ,    -17 ,     80 }
},
{
        { 24 ,    2   ,    224 ,     7 },
        { 2  ,    30  ,    224 ,     2 },
        { -20,    80  ,    192 ,     1 },
        { -34,    96  ,    192 ,     -2 },
        { -28,    20  ,    264 ,     -1 },
        { -34,    28  ,    264 ,     1 },
        { -36,    28  ,    264 ,     5 },
        { -40,    33  ,    264 ,     6 },
        { -15,    15  ,    240 ,     24 },
        { -20,    24  ,    248 ,     10 },
        { -30,    33  ,    248 ,     5 },
        { -36,    40  ,    240 ,     -10 },
        { 9  ,    -18 ,    -240,     480 },
        { 6  ,    -24 ,    -224,     448 },
        { -7 ,    -17 ,    -124,     288 },
        { -17,    -6  ,    -72 ,     192 }
},
{
        { 24 ,    -12 ,    240 ,     8 },
        { 80 ,    -30 ,    192 ,     15 },
```

```
        { 34 ,      72 ,      144 ,      9 },
        { -96,      256 ,     96 ,      1 },
        { -7 ,      6 ,       264 ,     -8 },
        { -16,      6 ,       272 ,     -8 },
        { -1 ,      -14 ,     272 ,     -2 },
        { -48,      40 ,      264 ,     1 },
        { 7 ,       14 ,      160 ,     112 },
        { 10 ,      9 ,       192 ,     72 },
        { 9 ,       12 ,      192 ,     56 },
        { 18 ,      -8 ,      224 ,     28 },
        { -5 ,      -33 ,     -96 ,     320 },
        { -2 ,      -56 ,     -96 ,     320 },
        { 0 ,       -56 ,     -80 ,     288 },
        { -5 ,      -48 ,     -63 ,     264 }
},
{
        { 72 ,      8 ,       192 ,     -18 },
        { -33,      192 ,     112 ,     -9 },
        { -66,      264 ,     -24 ,     96 },
        { 48 ,      144 ,     -144,     192 },
        { -112      ,  120 ,    192 ,     72 },
        { -36,      144 ,     -40 ,     192 },
        { 96 ,      24 ,      -192,     272 },
        { 96 ,      -20 ,     -192,     264 },
        { 16 ,      24 ,      -80 ,     288 },
        { 62 ,      -40 ,     -160,     288 },
        { 48 ,      -48 ,     -144,     240 },
        { 40 ,      -31 ,     -144,     224 },
        { 33 ,      -40 ,     -112,     272 },
        { 24 ,      -48 ,     -112,     224 },
        { 18 ,      -40 ,     -120,     224 },
        { 24 ,      -36 ,     -128,     224 }
},
{
        { 24 ,      2 ,       224 ,     8 },
        { 3 ,       28 ,      224 ,     3 },
        { -18,      80 ,      192 ,     1 },
        { -28,      96 ,      192 ,     -4 },
        { -24,      17 ,      264 ,     -2 },
        { -30,      24 ,      264 ,     1 },
        { -31,      24 ,      264 ,     2 },
        { -32,      28 ,      256 ,     4 },
```

```
    { -8 ,    16 ,     224 ,     34 },
    { -18,    24 ,     248 ,     10 },
    { -28,    32 ,     248 ,     5 },
    { -32,    40 ,     240 ,     -10 },
    { 5 ,     -10 ,    -224 ,    448 },
    { -1 ,    -9 ,     -192,     384 },
    { -14,    -9 ,     -112,     264 },
    { -28,    -6 ,     -68 ,     192 }
},
{
    { 14 ,    -7 ,     288 ,     -48 },
    { 9  ,    -17 ,    320 ,     -62 },
    { -14,    14 ,     288 ,     -40 },
    { -192    ,    192 ,    264 ,    -17 },
    { -15,    12 ,     160 ,     96 },
    { -14,    8  ,     128 ,     132 },
    { 1  ,    -14 ,    72 ,      192 },
    { 14 ,    -17 ,    56 ,      192 },
    { 3  ,    -1 ,     -12 ,     264 },
    { 4  ,    -1 ,     -14 ,     264 },
    { -4 ,    4  ,     -12 ,     264 },
    { 3  ,    -2 ,     -4 ,      256 },
    { -3 ,    0  ,     7 ,       248 },
    { -3 ,    -2 ,     8 ,       248 },
    { -4 ,    -1 ,     7 ,       248 },
    { -7 ,    1  ,     7 ,       248 }
},
{
    { -24,    -4 ,     288 ,     -4 },
    { -18,    -12 ,    288 ,     -2 },
    { -2 ,    -28 ,    288 ,     -2 },
    { -2 ,    -24 ,    288 ,     -5 },
    { 17 ,    0  ,     240 ,     1 },
    { 14 ,    3  ,     240 ,     1 },
    { 15 ,    9  ,     224 ,     7 },
    { 18 ,    1  ,     224 ,     12 },
    { 2  ,    -2 ,     8 ,       248 },
    { 2  ,    -1 ,     7 ,       248 },
    { 1  ,    1  ,     2 ,       252 },
    { -1 ,    3  ,     2 ,       252 },
    { 1  ,    1  ,     -10 ,     264 },
    { 0  ,    2  ,     -10 ,     264 },
```

```
                    { 1  ,    1  ,    -10 ,    264 },
                    { 1  ,    1  ,    -10 ,    264 }


                             }
                          };
```

As can be seen from a comparison between the coefficients in Array 7 with the conventional example set of matrices of coefficients for 4x4 block MIP prediction given before, the coefficient values in Array 7 have been slightly modified so that they can be represented in accordance with equation (2).

Array 8. Exemplary values of MIP coefficients selected according to the proposed method for block size idx 1, defined in C/C++ programming language.

```
      const short mipMatrix8x8round_const[10][16][8] =
      {
        {
          { 40 ,   -28 ,   8   ,   -1  ,   272 ,   -40 ,   7   ,   -2 },
          { 192 ,  -32 ,   -4  ,   1   ,   132 ,   -40 ,   12  ,   -4 },
          { 128 ,  144 ,   -20 ,   -3  ,   10  ,   -5  ,   2   ,   -1 },
          { 14 ,   136 ,   112 ,   0   ,   -9  ,   7   ,   -3  ,   -1 },
          { -12,   2   ,   -2  ,   1   ,   36  ,   264 ,   -40 ,   6 },
          { -34,   0   ,   2   ,   1   ,   192 ,   128 ,   -40 ,   7 },
          { 48 ,   -40 ,   8   ,   1   ,   256 ,   -14 ,   -2  ,   0 },
          { 132 ,  14  ,   -18 ,   4   ,   160 ,   -40 ,   10  ,   -5 },
          { 3  ,   -1  ,   0   ,   1   ,   -16 ,   32  ,   272 ,   -36 },
          { 10 ,   -1  ,   0   ,   2   ,   -48 ,   192 ,   132 ,   -30 },
          { -14,   5   ,   -4  ,   2   ,   12  ,   272 ,   -12 ,   -4 },
          { -14,   -5  ,   4   ,   4   ,   136 ,   160 ,   -34 ,   5 },
          { -4 ,   -1  ,   -2  ,   1   ,   4   ,   -15 ,   24  ,   248 },
          { -3 ,   2   ,   -1  ,   4   ,   17  ,   -56 ,   192 ,   96 },
          { 1  ,   -1  ,   -3  ,   2   ,   -7  ,   7   ,   264 ,   -8 },
          { 4  ,   -1  ,   -4  ,   3   ,   -30 ,   144 ,   160 ,   -20 },
        },
        {
          { 5  ,   192 ,   -40 ,   5   ,   -48 ,   80  ,   72  ,   -8 },
          { -9 ,   8   ,   240 ,   -14 ,   9   ,   -36 ,   18  ,   40 },
          { 3  ,   -4  ,   7   ,   248 ,   0   ,   1   ,   -18 ,   20 },
          { 2  ,   3   ,   -34 ,   288 ,   3   ,   -3  ,   -1  ,   0 },
          { -24,   56  ,   96  ,   -20 ,   14  ,   -66 ,   126 ,   72 },
          { 6  ,   -24 ,   80  ,   160 ,   1   ,   9   ,   -40 ,   63 },
          { 3  ,   7   ,   -48 ,   288 ,   3   ,   -2  ,   -1  ,   6 },
          { 2  ,   4   ,   -33 ,   288 ,   3   ,   -4  ,   0   ,   0 },
          { -12,   -20 ,   80  ,   72  ,   3   ,   7   ,   -66 ,   192 },
```

```
{ -1 ,   -7 ,   -28 ,   272 ,   3   ,   4   ,   -5  ,   17 },
{ 2  ,   2  ,   -36 ,   288 ,   3   ,   -3  ,   3   ,   -1 },
{ 1  ,   4  ,   -32 ,   288 ,   4   ,   -4  ,   1   ,   -1 },
{ -7 ,   -31 ,  8  ,   192 ,   7   ,   20  ,   -16 ,   80 },
{ -4 ,   -3 ,   -40 ,   288 ,   4   ,   3   ,   -2  ,   10 },
{ 2  ,   2  ,   -34 ,   288 ,   4   ,   -3  ,   4   ,   -4 },
{ 3  ,   7  ,   -28 ,   272 ,   7   ,   -2  ,   2   ,   1 },
},
{
{ 144 ,   36  ,   -5  ,   1   ,   8   ,   72  ,   -2  ,   3 },
{ -63,    272 ,   15  ,   -4  ,   -17 ,   40  ,   6   ,   5 },
{ -4 ,    -48 ,   288 ,   4   ,   -24 ,   24  ,   8   ,   8 },
{ 0  ,    10  ,   -80 ,   320 ,   -14 ,   7   ,   2   ,   -1 },
{ 96 ,    16  ,   0   ,   -2  ,   -96 ,   192 ,   56  ,   -4 },
{ -66,    272 ,   -8  ,   0   ,   -96 ,   96  ,   48  ,   9 },
{ -18,    -24 ,   288 ,   -12 ,   -60 ,   31  ,   32  ,   14 },
{ -4 ,    2   ,   -80 ,   320 ,   -24 ,   -2  ,   10  ,   6 },
{ 72 ,    6   ,   4   ,   -1  ,   -72 ,   8   ,   192 ,   48 },
{ -80,    264 ,   -20 ,   1   ,   -112,   31  ,   112 ,   60 },
{ -34,    -1  ,   272 ,   -24 ,   -80 ,   24  ,   31  ,   56 },
{ -7 ,    -5  ,   -68 ,   288 ,   -36 ,   4   ,   -16 ,   40 },
{ 56 ,    3   ,   7   ,   -1  ,   -48 ,   5   ,   -31 ,   264 },
{ -80,    240 ,   -24 ,   0   ,   -96 ,   7   ,   -16 ,   224 },
{ -48,    24  ,   240 ,   -28 ,   -80 ,   5   ,   -24 ,   144 },
{ -15,    -14 ,   -48 ,   264 ,   -40 ,   -5  ,   -40 ,   80 },
},
{
{ 224 ,   -48 ,   10  ,   -1  ,   384 ,   -72 ,   15  ,   -2 },
{ 448 ,   96  ,   -48 ,   6   ,   24  ,   -15 ,   2   ,   -3 },
{ -2 ,    480 ,   80  ,   -36 ,   -6  ,   -3  ,   0   ,   -4 },
{ -1 ,    -18 ,   480 ,   60  ,   3   ,   -6  ,   -1  ,   -5 },
{ -48,    0   ,   -5  ,   -2  ,   256 ,   384 ,   -80 ,   6 },
{ 124 ,   -36 ,   3   ,   1   ,   448 ,   -24 ,   -9  ,   0 },
{ 384 ,   56  ,   -36 ,   7   ,   124 ,   -31 ,   4   ,   -4 },
{ 112 ,   384 ,   18  ,   -10 ,   5   ,   -2  ,   3   ,   -4 },
{ 3  ,    -2  ,   -2  ,   -1  ,   -63 ,   264 ,   384 ,   -72 },
{ -28,    1   ,   -6  ,   -3  ,   112 ,   480 ,   -31 ,   -15 },
{ 48 ,    -30 ,   -5  ,   -3  ,   448 ,   96  ,   -40 ,   -5 },
{ 288 ,   20  ,   -12 ,   7   ,   224 ,   -17 ,   -2  ,   -5 },
{ 1  ,    -1  ,   0   ,   0   ,   28  ,   -96 ,   288 ,   288 },
{ 1  ,    -1  ,   -6  ,   -3  ,   -31 ,   96  ,   480 ,   -30 },
{ -18,    -2  ,   -8  ,   -2  ,   36  ,   448 ,   68  ,   -16 },
```

```
      { 30 ,    -3 ,    0 ,     3 ,    288 ,   192 ,   -10 ,    1 },
},
{
      { -48,    36 ,    6 ,     24 ,   120 ,   144 ,   -33 ,    7 },
      { -28,    24 ,    31 ,    56 ,   -16 ,   224 ,   -36 ,    0 },
      { -4 ,    8 ,     3 ,     132 ,  -112,   224 ,   12 ,    -10 },
      { 8 ,     4 ,    -28 ,    192 ,  -144,   160 ,   64 ,    -7 },
      { 6 ,     3 ,     0 ,     24 ,   -68 ,   160 ,   160 ,   -31 },
      { -4 ,    8 ,    -2 ,     60 ,   -68 ,   40 ,    240 ,   -24 },
      { -7 ,    16 ,   -24 ,    96 ,   -72 ,   -36 ,   240 ,   33 },
      { -6 ,    18 ,   -20 ,    120 ,  -80 ,   -62 ,   160 ,   112 },
      { -2 ,    4 ,    -1 ,     20 ,   -18 ,   -40 ,   160 ,   128 },
      { -8 ,    9 ,    -8 ,     48 ,   -40 ,   -17 ,   36 ,    224 },
      { -10,    12 ,   -20 ,    80 ,   -64 ,   -2 ,    -48 ,   288 },
      { -10,    14 ,   -16 ,    96 ,   -80 ,   3 ,     -68 ,   288 },
      { -5 ,    1 ,    -5 ,     20 ,   -17 ,   8 ,     -80 ,   320 },
      { -15,    5 ,    -12 ,    48 ,   -33 ,   -6 ,    -80 ,   320 },
      { -20,    4 ,    -14 ,    63 ,   -48 ,   -18 ,   -68 ,   320 },
      { -20,    7 ,    -12 ,    80 ,   -56 ,   -20 ,   -56 ,   288 },
},
{
      { -12,    -16 ,   6 ,     0 ,    288 ,   -10 ,   0 ,     -1 },
      { 80 ,    -28 ,   -9 ,    3 ,    240 ,   -40 ,   14 ,    -4 },
      { 96 ,    64 ,    -28 ,   -7 ,    160 ,   -40 ,   15 ,    -5 },
      { 96 ,    72 ,    72 ,    -40 ,   80 ,    -28 ,   9 ,     -7 },
      { 2 ,     2 ,     1 ,     0 ,    -24 ,   288 ,   -12 ,   -2 },
      { -24,    4 ,     1 ,     -1 ,   60 ,    256 ,   -48 ,   5 },
      { -34,    -12 ,   1 ,     -2 ,   160 ,   192 ,   -48 ,   3 },
      { -24,    -2 ,    -12 ,   1 ,    224 ,   96 ,    -30 ,   -1 },
      { -4 ,    -1 ,    1 ,     1 ,    5 ,     -24 ,   288 ,   -12 },
      { 2 ,     -2 ,    1 ,     -2 ,   -20 ,   56 ,    252 ,   -36 },
      { 5 ,     -1 ,    1 ,     -1 ,   -40 ,   160 ,   160 ,   -33 },
      { 2 ,     0 ,     4 ,     -4 ,   -36 ,   224 ,   80 ,    -18 },
      { 2 ,     -4 ,    0 ,     -1 ,   -3 ,    0 ,     -28 ,   288 },
      { -1 ,    -3 ,    -1 ,    -2 ,   5 ,     -30 ,   62 ,    224 },
      { -1 ,    0 ,     2 ,     -1 ,   15 ,    -56 ,   160 ,   132 },
      { -3 ,    1 ,     1 ,     -2 ,   14 ,    -56 ,   240 ,   56 },
},
{
      { -80,    48 ,    -6 ,    0 ,    256 ,   63 ,    -40 ,   12 },
      { -192 ,  160 ,   28 ,    -10 ,  224 ,   80 ,    -48 ,   12 },
      { -192 ,  -10 ,   224 ,   -5 ,   160 ,   112 ,   -48 ,   10 },
```

```
{ -144   ,   14   ,   -60 ,   252 ,   96   ,   124   ,   -40 ,    9 },
{ 10 ,   1   ,   3   ,   -1   ,   -80 ,   248 ,   112 ,   -40 },
{ 3   ,   6   ,   4   ,   1   ,   -68 ,   192 ,   160 ,   -48 },
{ -9 ,   3   ,   18 ,   -5   ,   -62 ,   160 ,   192 ,   -48 },
{ -20,   -4   ,   -15 ,   36 ,   -60 ,   132 ,   224 ,   -48 },
{ -3 ,   2   ,   1   ,   1   ,   20   ,   -72 ,   224 ,   80 },
{ -3 ,   3   ,   -2 ,   -1   ,   18   ,   -66 ,   192 ,   112 },
{ -4 ,   1   ,   -3 ,   -2   ,   16   ,   -60 ,   160 ,   144 },
{ -3 ,   2   ,   1   ,   3   ,   15   ,   -48 ,   120 ,   160 },
{ 0   ,   -3   ,   -1 ,   -2   ,   -12 ,   24   ,   -72 ,   320 },
{ -3 ,   1   ,   -3 ,   -2   ,   -14 ,   20   ,   -68 ,   320 },
{ 2   ,   2   ,   4   ,   2   ,   -12 ,   28   ,   -64 ,   288 },
{ 1   ,   0   ,   2   ,   5   ,   -14 ,   24   ,   -56 ,   288 },
},
{
{ -72,   -7   ,   -2 ,   8   ,   320 ,   17   ,   -12 ,    3 },
{ -40,   -36 ,   -2 ,   12 ,   320 ,   9   ,   -9 ,    2 },
{ -48,   -7   ,   -28 ,   17 ,   320 ,   5   ,   -6 ,    2 },
{ -56,   -10 ,   -2 ,   7   ,   320 ,   3   ,   -7 ,    1 },
{ 20 ,   -2   ,   -2 ,   3   ,   -96 ,   320 ,   31 ,   -17 },
{ 10 ,   1   ,   -4 ,   5   ,   -80 ,   320 ,   20 ,   -15 },
{ 14 ,   -9   ,   0   ,   8   ,   -80 ,   320 ,   20 ,   -16 },
{ 15 ,   -5   ,   -4 ,   18 ,   -68 ,   288 ,   20 ,   -10 },
{ -8 ,   1   ,   1   ,   5   ,   31   ,   -96 ,   288 ,   31 },
{ -10,   -1   ,   -1 ,   7   ,   28   ,   -80 ,   288 ,   24 },
{ -9 ,   -4   ,   0   ,   12 ,   28   ,   -80 ,   288 ,   20 },
{ -10,   -7   ,   -4 ,   15 ,   24   ,   -72 ,   288 ,   20 },
{ 1   ,   0   ,   -2 ,   2   ,   -14 ,   28   ,   -80 ,   320 },
{ -3 ,   0   ,   -2 ,   7   ,   -10 ,   24   ,   -80 ,   320 },
{ -4 ,   -4   ,   -2 ,   12 ,   -10 ,   24   ,   -80 ,   320 },
{ -6 ,   -6   ,   -7 ,   17 ,   -10 ,   20   ,   -72 ,   320 },
},
{
{ -96,   20   ,   10 ,   6   ,   224 ,   264 ,   72 ,   24 },
{ -28,   -24 ,   14 ,   12 ,   80   ,   320 ,   112 ,   36 },
{ -15,   18   ,   -15 ,   6   ,   32   ,   320 ,   136 ,   40 },
{ -10,   12   ,   30 ,   -18 ,   4   ,   320 ,   144 ,   40 },
{ 12 ,   -4   ,   2   ,   2   ,   -14 ,   272 ,   224 ,   28 },
{ 4   ,   10   ,   -2 ,   -4   ,   7   ,   224 ,   252 ,   34 },
{ -1 ,   7   ,   4   ,   -10 ,   9   ,   224 ,   264 ,   36 },
{ -3 ,   9   ,   2   ,   -9   ,   14   ,   224 ,   256 ,   36 },
{ 7   ,   2   ,   6   ,   -2   ,   8   ,   96   ,   320 ,   80 },
```

```
    { 5 ,      7 ,      2 ,     -4 ,      7 ,    112 ,    320 ,     80 },
    { 2 ,     14 ,      2 ,     -8 ,      6 ,    124 ,    320 ,     72 },
    { 2 ,     15 ,      8 ,     -8 ,     10 ,    136 ,    288 ,     80 },
    { 5 ,      0 ,      3 ,     -6 ,      7 ,     36 ,    224 ,    252 },
    { 2 ,      8 ,      0 ,     -8 ,      8 ,     56 ,    320 ,    144 },
    { 4 ,     14 ,      5 ,     -7 ,     12 ,     72 ,    320 ,    112 },
    { 1 ,     12 ,      3 ,     -8 ,     14 ,     80 ,    320 ,    112 },
  },
  {
    { 96 ,     80 ,    -12 ,      1 ,     12 ,     80 ,     -2 ,      2 },
    { -28,    224 ,     40 ,     -5 ,    -24 ,     34 ,      9 ,      5 },
    { -3 ,    -30 ,    272 ,     12 ,    -24 ,     14 ,      9 ,      8 },
    { -7 ,     12 ,    -72 ,    320 ,    -12 ,      0 ,      3 ,      2 },
    { 36 ,     62 ,     -9 ,     -2 ,    -80 ,    192 ,     62 ,     -4 },
    { -32,    192 ,     30 ,     -1 ,    -80 ,     80 ,     48 ,     18 },
    { -10,    -10 ,    256 ,      1 ,    -48 ,     18 ,     17 ,     28 },
    { -7 ,     12 ,    -66 ,    288 ,    -12 ,     -5 ,     -1 ,     20 },
    { 14 ,     56 ,     -4 ,      1 ,    -48 ,      3 ,    160 ,     72 },
    { -48,    160 ,     28 ,     -2 ,    -80 ,     28 ,     72 ,     96 },
    { -24,      3 ,    240 ,     -4 ,    -72 ,     20 ,      3 ,     80 },
    { -16,      6 ,    -60 ,    288 ,    -30 ,      4 ,    -28 ,     40 },
    { 5 ,     48 ,     -2 ,      0 ,    -36 ,      2 ,    -18 ,    256 },
    { -56,    132 ,     24 ,     -3 ,    -64 ,      3 ,     -7 ,    224 },
    { -40,     14 ,    192 ,      0 ,    -72 ,      6 ,    -12 ,    144 },
    { -24,      2 ,    -48 ,    252 ,    -40 ,     -2 ,    -20 ,     64 }

  }
};
```

Array 9. Exemplary values of MIP coefficients selected according to the proposed method for block size idx 2, defined in C/C++ programming language.

```
const short mipMatrix16x16round_const[6][64][8] =
{
  {
    { -48,   32 ,   28 ,   9  ,   248 ,   -20 ,   9  ,   -2 },
    { -56,   10 ,   40 ,   33 ,   224 ,   2   ,   6  ,   -3 },
    { -28,   -28 ,  48 ,   66 ,   160 ,   36  ,   3  ,   -1 },
    { -9 ,   -33 ,  34 ,   96 ,   96  ,   72  ,   -1 ,   1 },
    { -8 ,   -6 ,   -9 ,   128 ,  48  ,   112 ,   -9 ,   0 },
    { -6 ,   15 ,   -24 ,  144 ,  3   ,   132 ,   -10 ,  2 },
    {  0 ,   17 ,   -5 ,   128 ,  -36 ,   160 ,   -12 ,  2 },
    { 8  ,   16 ,   12 ,   120 ,  -60 ,   160 ,   -7 ,   5 },
```

{ -14, -17 , -1 , 24 , 112 , 160 , -12 , 2 },
{ -6 , -16 , -12 , 36 , 72 , 192 , -12 , 3 },
{ -7 , -8 , -24 , 40 , 40 , 224 , -12 , 2 },
{ -6 , -4 , -24 , 40 , 17 , 240 , -10 , 2 },
{ -2 , -4 , -17 , 40 , 0 , 240 , -4 , 2 },
{ -1 , -3 , -12 , 40 , -16 , 240 , 4 , 2 },
{ 0 , 2 , -12 , 48 , -28 , 224 , 16 , 3 },
{ -3 , 3 , -15 , 48 , -36 , 224 , 28 , 4 },
{ 1 , 0 , -12 , 14 , -5 , 252 , 2 , 5 },
{ 2 , 0 , -14 , 17 , -12 , 248 , 10 , 4 },
{ 1 , -2 , -15 , 17 , -14 , 240 , 28 , 1 },
{ 0 , -3 , -14 , 17 , -15 , 224 , 48 , -2 },
{ -1 , -2 , -14 , 17 , -14 , 192 , 80 , -5 },
{ -3 , 0 , -12 , 18 , -14 , 160 , 112 , -7 },
{ -3 , 0 , -12 , 18 , -12 , 136 , 132 , -6 },
{ -2 , 0 , -10 , 20 , -12 , 112 , 144 , 1 },
{ 3 , 2 , -5 , 9 , -15 , 144 , 120 , -4 },
{ -1 , 0 , -7 , 7 , -14 , 120 , 160 , -9 },
{ -1 , 0 , -8 , 8 , -9 , 80 , 192 , -7 },
{ 0 , 1 , -7 , 10 , -5 , 66 , 192 , -4 },
{ -3 , -2 , -9 , 8 , -5 , 40 , 224 , 0 },
{ -3 , -1 , -10 , 9 , -4 , 28 , 224 , 10 },
{ -4 , -2 , -10 , 10 , -5 , 16 , 224 , 24 },
{ -1 , 1 , -8 , 15 , -3 , 16 , 192 , 40 },
{ -1 , 0 , -4 , 4 , -3 , 10 , 240 , 9 },
{ -1 , 0 , -5 , 3 , -2 , -1 , 240 , 20 },
{ -1 , -1 , -6 , 5 , -3 , -4 , 224 , 40 },
{ -1 , 0 , -6 , 8 , -3 , -4 , 192 , 66 },
{ 0 , 0 , -6 , 9 , -3 , -2 , 160 , 96 },
{ -1 , 0 , -7 , 10 , -5 , -2 , 144 , 112 },
{ -1 , 0 , -8 , 14 , -5 , 1 , 120 , 132 },
{ 0 , 1 , -8 , 16 , -5 , 7 , 96 , 144 },
{ -1 , 1 , -2 , 3 , -1 , -12 , 144 , 124 },
{ -3 , 0 , -4 , 3 , -3 , -10 , 112 , 160 },
{ -3 , -1 , -6 , 5 , -6 , -6 , 80 , 192 },
{ -1 , 0 , -4 , 8 , -4 , -2 , 64 , 192 },
{ -2 , -1 , -7 , 9 , -7 , -3 , 40 , 224 },
{ -2 , 0 , -7 , 14 , -7 , 0 , 30 , 224 },
{ -3 , -1 , -9 , 14 , -9 , 0 , 20 , 240 },
{ -3 , -1 , -9 , 15 , -10 , 2 , 17 , 240 },
{ -1 , 0 , -2 , 3 , -1 , -2 , 5 , 252 },
{ -2 , 0 , -3 , 5 , -2 , -2 , -6 , 264 },

```
            { -3 ,    -1 ,    -5 ,    7 ,    -3 ,    -3 ,    -10 ,    272 },
            { -2 ,     0 ,    -5 ,   10 ,    -4 ,    -4 ,    -14 ,    272 },
            { -3 ,     0 ,    -7 ,   14 ,    -4 ,    -4 ,    -16 ,    272 },
            { -3 ,     1 ,    -8 ,   17 ,    -5 ,    -5 ,    -17 ,    272 },
            { -3 ,     1 ,    -8 ,   18 ,    -7 ,    -5 ,    -17 ,    272 },
            { -3 ,     0 ,    -9 ,   18 ,    -8 ,    -4 ,    -15 ,    272 },
            { -1 ,     0 ,    -2 ,    6 ,     1 ,    -5 ,    -34 ,    288 },
            { -1 ,    -1 ,    -2 ,    7 ,    -1 ,    -5 ,    -32 ,    288 },
            { -2 ,     0 ,    -4 ,   10 ,    -2 ,    -7 ,    -31 ,    288 },
            {  0 ,    -1 ,    -5 ,   12 ,    -3 ,    -8 ,    -31 ,    288 },
            { -2 ,     0 ,    -6 ,   15 ,    -4 ,    -9 ,    -30 ,    288 },
            { -3 ,     0 ,    -8 ,   18 ,    -5 ,   -10 ,    -30 ,    288 },
            { -3 ,     1 ,    -9 ,   18 ,    -7 ,   -10 ,    -28 ,    288 },
            { -4 ,     1 ,   -10 ,   18 ,    -8 ,   -12 ,    -24 ,    288 }
        }, //merge5
        {
            { 80,   15,    0,   -1, 160,    6,   -1,   -3 },
            { 120,  34,    2,   -1,  96,    9,   -1,   -3 },
            { 112,  72,    9,   -1,  56,    7,    2,   -1 },
            { 72,  120,   24,   -1,  36,    4,    3,   -1 },
            { 40,  120,   72,    0,  24,    1,    2,   -3 },
            { 28,   62,  136,   12,  14,    1,    4,    0 },
            { 20,   14,  144,   68,   8,    1,    3,   -3 },
            { 16,   10,   34,  192,   6,    1,    0,   -2 },
            { 20,    6,    2,    1, 160,   66,    1,    0 },
            { 48,   12,    2,    0, 160,   36,    1,   -2 },
            { 80,   28,    1,    0, 124,   24,    1,   -3 },
            { 96,   48,    5,    0,  96,   14,    2,   -4 },
            { 96,   80,   18,   -1,  62,    6,    1,   -5 },
            { 68,   96,   48,    2,  40,    4,    2,   -4 },
            { 48,   80,   80,   12,  30,    4,    4,   -1 },
            { 40,   48,   96,   48,  20,    3,    3,   -2 },
            {  5,    2,    2,    1,  80,  160,    6,   -1 },
            { 16,    2,    1,    1, 124,  112,    4,   -4 },
            { 36,    8,    1,    1, 136,   72,    4,   -2 },
            { 60,   20,    1,    1, 128,   48,    3,   -4 },
            { 80,   36,    3,   -1, 112,   31,    1,   -5 },
            { 80,   62,   12,    2,  80,   20,    3,   -3 },
            { 72,   72,   30,    2,  64,   15,    3,   -3 },
            { 60,   72,   56,   10,  48,   12,    3,   -5 },
            {  1,   -3,   -2,   -1,  17,  192,   60,   -7 },
            {  5,    0,    1,    2,  56,  160,   34,   -3 },
```

```
    { 12,    1,   -2,    0,   96, 132,   20,   -5 },
    { 28,    4,   -3,   -1, 112, 112,    9,   -6 },
    { 48,   15,    0,    0, 112,  80,    6,   -5 },
    { 60,   30,    1,    0, 112,  56,    3,   -6 },
    { 64,   48,    9,    1,   96,  40,    3,   -5 },
    { 62,   60,   24,    5,   72,  34,    3,   -5 },
    {  1,   -2,    1,    0,    6,  96, 160,   -7 },
    {  1,   -2,    0,    1,   24, 128, 112,   -6 },
    {  3,   -2,    0,    1,   48, 144,  68,   -5 },
    { 10,    0,   -1,    1,   68, 136,  48,   -6 },
    { 20,    5,    1,    3,   80, 124,  28,   -4 },
    { 34,   14,    1,    2,   96,  96,  17,   -5 },
    { 40,   28,    3,    3,   96,  80,  12,   -5 },
    { 48,   40,   10,    5,   80,  68,  10,   -5 },
    {  2,    1,    3,    2,    7,  14, 192,   36 },
    { -3,   -2,   -2,   -2,    7,  56, 192,    9 },
    { -3,   -1,    0,    0,   18,  96, 144,    2 },
    {  1,   -1,    1,    1,   36, 126,  96,   -3 },
    {  6,   -2,    0,    1,   48, 136,  72,   -5 },
    { 15,    2,    0,    2,   68, 128,  48,   -7 },
    { 24,   10,    0,    3,   72, 120,  34,   -6 },
    { 32,   20,    4,    3,   80,  96,  28,   -7 },
    {  0,   -1,   -1,   -1,    0,    3,  96, 160 },
    { -2,   -1,   -1,   -1,    2,  17, 144,   96 },
    { -4,   -2,   -1,    0,    7,  48, 160,   48 },
    { -6,   -3,    1,    2,   18,  80, 144,   18 },
    { -3,   -3,    2,    2,   30,  96, 126,    5 },
    {  3,   -3,    0,    3,   40, 120,  96,   -3 },
    { 10,    2,   -1,    3,   56, 120,  72,   -5 },
    { 16,   10,    2,    4,   60, 112,  56,   -3 },
    {  0,   -2,   -1,    0,    0,  14, -28, 272 },
    {  0,    0,    1,    2,    3,  20,  36, 192 },
    { -4,   -2,   -1,    1,    2,  28,  96, 136 },
    { -5,   -3,    0,    1,    8,  48, 128,  80 },
    { -5,   -4,    1,    2,   15,  64, 136,  48 },
    { -2,   -4,    1,    4,   24,  80, 126,  28 },
    {  8,    5,    4,    8,   40,  96,  80,  14 },
    {  8,    5,    4,    8,   40,  96,  80,  14 }
}, //merge10
{
    { 72 ,   16 ,   6 ,   4 ,   136 ,   10 ,   8 ,   4 },
    { 48 ,   80 ,   4 ,   9 ,    68 ,   33 ,  10 ,   4 },
```

```
{ -14,  144 ,  15 ,   16 ,   36 ,   40 ,   14 ,    5 },
{ -28,   96 ,  80 ,   17 ,   18 ,   48 ,   18 ,    7 },
{ -17,   24 , 144 ,   34 ,    2 ,   40 ,   20 ,    8 },
{ -10,   -5 ,  96 ,  112 ,   -7 ,   36 ,   28 ,    9 },
{ -10,   -3 ,  20 ,  192 ,  -14 ,   28 ,   33 ,   10 },
{ -6 ,   -2 ,  -9 ,  224 ,  -18 ,   12 ,   40 ,   18 },
{ -10,   18 ,   8 ,    5 ,  112 ,  120 ,   -4 ,    8 },
{ -12,   40 ,  16 ,   17 ,   56 ,  120 ,    9 ,   12 },
{ -24,   60 ,  24 ,   28 ,   14 ,  120 ,   20 ,   14 },
{ -24,   40 ,  48 ,   40 ,  -10 ,  112 ,   34 ,   17 },
{ -18,   12 ,  64 ,   64 ,  -28 ,   96 ,   48 ,   18 },
{ -14,   -5 ,  48 ,  112 ,  -33 ,   63 ,   63 ,   24 },
{ -7 ,   -5 ,  12 ,  144 ,  -33 ,   40 ,   72 ,   33 },
{ -3 ,   -5 ,  -2 ,  160 ,  -32 ,   18 ,   72 ,   48 },
{ -8 ,    9 ,  10 ,   12 ,   12 ,  192 ,   10 ,   18 },
{ -10,   15 ,  15 ,   24 ,   -4 ,  160 ,   36 ,   20 },
{ -14,   14 ,  16 ,   40 ,  -20 ,  136 ,   62 ,   24 },
{ -14,    8 ,  18 ,   56 ,  -31 ,   96 ,   96 ,   28 },
{ -12,    1 ,  18 ,   72 ,  -36 ,   66 ,  112 ,   36 },
{ -9 ,   -3 ,  12 ,   96 ,  -40 ,   40 ,  112 ,   48 },
{ -5 ,   -4 ,   3 ,  112 ,  -36 ,   18 ,   96 ,   72 },
{ -3 ,   -5 ,   1 ,  120 ,  -36 ,    3 ,   80 ,   96 },
{ -4 ,   -1 ,   6 ,   14 ,  -16 ,  136 ,  112 ,   10 },
{ -5 ,   -2 ,   6 ,   24 ,  -16 ,   96 ,  128 ,   24 },
{ -8 ,   -1 ,   4 ,   36 ,  -20 ,   60 ,  144 ,   40 },
{ -8 ,   -1 ,   2 ,   48 ,  -24 ,   36 ,  144 ,   60 },
{ -5 ,   -2 ,   4 ,   60 ,  -28 ,   20 ,  128 ,   80 },
{ -5 ,   -3 ,  -2 ,   68 ,  -31 ,    6 ,  112 ,  112 },
{ -3 ,   -3 ,  -1 ,   80 ,  -30 ,   -4 ,   80 ,  136 },
{ -3 ,   -5 ,  -2 ,   80 ,  -31 ,  -10 ,   66 ,  160 },
{  0 ,   -2 ,   2 ,   16 ,   -7 ,   24 ,  192 ,   30 },
{  0 ,   -3 ,   1 ,   28 ,  -10 ,   16 ,  160 ,   63 },
{ -4 ,   -2 ,  -5 ,   34 ,  -15 ,    7 ,  144 ,   96 },
{ -3 ,   -1 ,  -6 ,   40 ,  -18 ,    2 ,  112 ,  128 },
{ -2 ,   -2 ,  -4 ,   48 ,  -20 ,   -4 ,   80 ,  160 },
{ -3 ,   -3 ,  -6 ,   48 ,  -24 ,  -10 ,   63 ,  192 },
{  0 ,   -1 ,  -4 ,   56 ,  -24 ,  -12 ,   48 ,  192 },
{  2 ,    0 ,  -1 ,   60 ,  -24 ,  -12 ,   36 ,  192 },
{  0 ,   -5 ,  -4 ,   12 ,   -6 ,   -5 ,  144 ,  120 },
{ -1 ,   -5 ,  -9 ,   20 ,  -12 ,   -8 ,  112 ,  160 },
{ -2 ,   -1 , -12 ,   28 ,  -14 ,   -9 ,   72 ,  192 },
{  0 ,    1 ,  -8 ,   34 ,  -12 ,   -9 ,   56 ,  192 },
```

```
{ -1 ,  -1 ,  -6 ,  34 ,  -17 ,  -14 ,  34 ,  224 },
{ -1 ,  -2 ,  -6 ,  36 ,  -20 ,  -15 ,  20 ,  240 },
{  1 ,  -1 ,  -4 ,  40 ,  -20 ,  -17 ,  14 ,  240 },
{  1 ,  -2 ,  -2 ,  40 ,  -20 ,  -18 ,   7 ,  248 },
{  1 ,  -3 ,  -6 ,  10 ,   -4 ,   -6 ,  40 ,  224 },
{  1 ,  -1 , -12 ,  18 ,   -7 ,   -9 ,  24 ,  240 },
{ -1 ,   2 , -14 ,  24 ,   -8 ,  -12 ,  12 ,  252 },
{ -2 ,   2 , -12 ,  24 ,  -10 ,  -16 ,   4 ,  264 },
{  0 ,   0 ,  -5 ,  24 ,  -12 ,  -16 ,  -2 ,  264 },
{  0 ,  -1 ,  -3 ,  24 ,  -14 ,  -18 ,  -9 ,  272 },
{  1 ,  -1 ,  -2 ,  28 ,  -15 ,  -20 , -12 ,  272 },
{  1 ,  -1 ,  -2 ,  31 ,  -18 ,  -20 , -14 ,  272 },
{  2 ,  -1 ,  -8 ,   9 ,   -2 ,   -6 , -12 ,  272 },
{  3 ,   1 , -10 ,  15 ,   -3 ,  -10 , -14 ,  272 },
{ -1 ,   2 , -12 ,  15 ,   -7 ,  -15 , -18 ,  288 },
{ -3 ,   3 , -10 ,  17 ,   -7 ,  -16 , -20 ,  288 },
{ -1 ,   1 ,  -5 ,  17 ,   -8 ,  -17 , -24 ,  288 },
{ -1 ,   0 ,  -3 ,  18 ,   -9 ,  -20 , -24 ,  288 },
{ -1 ,   0 ,  -2 ,  20 ,  -12 ,  -20 , -24 ,  288 },
{  0 ,  -2 ,  -3 ,  24 ,  -14 ,  -20 , -24 ,  288 }
}, //merge5
{
{ -20 ,   96 ,  -14 ,   -4 ,  192 ,   14 ,   -6 ,   -1 },
{ -40 ,  160 ,   12 ,   -5 ,   68 ,   80 ,  -20 ,    2 },
{ -17 ,   80 ,   96 ,   -4 ,    5 ,  112 ,  -14 ,   -2 },
{   2 ,   -3 ,  160 ,   24 ,  -15 ,   80 ,   18 ,  -10 },
{   6 ,  -12 ,   96 ,   96 ,  -10 ,   40 ,   48 ,   -7 },
{   4 ,   -2 ,   24 ,  160 ,   -9 ,   12 ,   62 ,    5 },
{   1 ,    0 ,   -1 ,  192 ,   -7 ,  -12 ,   56 ,   28 },
{   5 ,    4 ,    2 ,  160 ,   -5 ,  -20 ,   48 ,   60 },
{ -30 ,   48 ,   24 ,   -3 ,   56 ,  192 ,  -40 ,    8 },
{  -4 ,    8 ,   72 ,    4 ,   -7 ,  192 ,   -6 ,   -3 },
{   5 ,  -17 ,   80 ,   40 ,  -20 ,  120 ,   56 ,   -7 },
{   5 ,  -14 ,   40 ,   96 ,  -16 ,   48 ,   96 ,    3 },
{   5 ,   -6 ,   10 ,  124 ,  -10 ,    6 ,   96 ,   32 },
{   5 ,    0 ,   -6 ,  136 ,   -9 ,  -15 ,   80 ,   64 },
{   3 ,    5 ,  -10 ,  132 ,   -9 ,  -24 ,   64 ,   96 },
{   6 ,    6 ,   -5 ,  120 ,  -10 ,  -28 ,   40 ,  126 },
{   7 ,  -10 ,   33 ,    5 ,  -24 ,  224 ,   24 ,   -3 },
{   8 ,  -20 ,   34 ,   34 ,  -18 ,  112 ,  112 ,   -6 },
{   6 ,  -14 ,   10 ,   68 ,  -10 ,   34 ,  144 ,   18 },
{   4 ,   -5 ,   -9 ,   96 ,   -9 ,   -4 ,  124 ,   60 },
```

```
{ 3  ,  1   ,  -12 ,  96 ,  -7  ,  -17 ,  96  ,  96 },
{ 3  ,  4   ,  -12 ,  96 ,  -8  ,  -24 ,  66  ,  132 },
{ 5  ,  6   ,  -6  ,  80 ,  -8  ,  -24 ,  40  ,  160 },
{ 5  ,  8   ,  0   ,  80 ,  -8  ,  -20 ,  28  ,  160 },
{ 7  ,  -15 ,  10  ,  20 ,  -14 ,  68  ,  192 ,  -12 },
{ 2  ,  -12 ,  -6  ,  48 ,  -6  ,  9   ,  192 ,  30 },
{ 4  ,  -2  ,  -12 ,  63 ,  -1  ,  -7  ,  132 ,  80 },
{ 4  ,  1   ,  -15 ,  66 ,  -3  ,  -14 ,  80  ,  136 },
{ 4  ,  4   ,  -12 ,  64 ,  -4  ,  -16 ,  56  ,  160 },
{ 1  ,  4   ,  -8  ,  60 ,  -7  ,  -18 ,  30  ,  192 },
{ 3  ,  7   ,  -2  ,  56 ,  -6  ,  -17 ,  18  ,  192 },
{ 4  ,  6   ,  2   ,  56 ,  -6  ,  -16 ,  14  ,  192 },
{ 3  ,  -5  ,  -8  ,  28 ,  0   ,  -3  ,  192 ,  48 },
{ 2  ,  -2  ,  -16 ,  40 ,  -2  ,  -10 ,  124 ,  120 },
{ 1  ,  2   ,  -17 ,  48 ,  -1  ,  -10 ,  72  ,  160 },
{ 3  ,  3   ,  -14 ,  48 ,  -3  ,  -12 ,  36  ,  192 },
{ 1  ,  1   ,  -10 ,  40 ,  -7  ,  -12 ,  17  ,  224 },
{ 3  ,  3   ,  -6  ,  40 ,  -8  ,  -12 ,  9   ,  224 },
{ 2  ,  5   ,  -2  ,  40 ,  -9  ,  -12 ,  4   ,  224 },
{ 2  ,  4   ,  -1  ,  40 ,  -9  ,  -12 ,  3   ,  224 },
{ 1  ,  0   ,  -14 ,  20 ,  -1  ,  -5  ,  96  ,  160 },
{ 3  ,  2   ,  -15 ,  30 ,  -2  ,  -3  ,  48  ,  192 },
{ 1  ,  2   ,  -16 ,  31 ,  -3  ,  -5  ,  20  ,  224 },
{ 0  ,  1   ,  -12 ,  30 ,  -6  ,  -8  ,  7   ,  240 },
{ 1  ,  2   ,  -7  ,  30 ,  -7  ,  -8  ,  2   ,  240 },
{ 1  ,  2   ,  -4  ,  28 ,  -8  ,  -8  ,  -1  ,  240 },
{ 1  ,  3   ,  -2  ,  28 ,  -9  ,  -9  ,  -2  ,  240 },
{ 1  ,  3   ,  0   ,  28 ,  -10 ,  -9  ,  -3  ,  240 },
{ -1 ,  1   ,  -14 ,  14 ,  -3  ,  -2  ,  20  ,  240 },
{ 0  ,  3   ,  -14 ,  18 ,  -3  ,  -2  ,  4   ,  248 },
{ 0  ,  3   ,  -12 ,  20 ,  -5  ,  -3  ,  -1  ,  252 },
{ 0  ,  1   ,  -8  ,  20 ,  -6  ,  -5  ,  -3  ,  252 },
{ 1  ,  1   ,  -4  ,  18 ,  -8  ,  -6  ,  -3  ,  252 },
{ 1  ,  1   ,  -2  ,  18 ,  -10 ,  -6  ,  -4  ,  252 },
{ 0  ,  2   ,  0   ,  20 ,  -10 ,  -7  ,  -5  ,  248 },
{ 1  ,  2   ,  1   ,  20 ,  -10 ,  -7  ,  -1  ,  240 },
{ 0  ,  3   ,  -12 ,  8  ,  -1  ,  -1  ,  -1  ,  256 },
{ 0  ,  3   ,  -12 ,  12 ,  -4  ,  -1  ,  -3  ,  256 },
{ 0  ,  3   ,  -9  ,  12 ,  -5  ,  -2  ,  0   ,  252 },
{ 0  ,  2   ,  -5  ,  12 ,  -6  ,  -4  ,  -1  ,  252 },
{ 0  ,  1   ,  -3  ,  12 ,  -7  ,  -5  ,  -1  ,  252 },
{ 0  ,  2   ,  -1  ,  14 ,  -9  ,  -5  ,  -1  ,  248 },
```

```
    { -1   ,    2   ,    0   ,   15  ,   -9  ,   -5  ,   -3  ,   248 },
    { 1    ,    1   ,    1   ,   17  ,   -9  ,   -5  ,   -2  ,   240 }
}, //merge5
{
    { -36,  15,   1,    0, 320, -48,   6,   -1 },
    { -34,  17,   6,    6, 288, -40,  10,    2 },
    { -33,  15,   8,    6, 288, -40,  10,    2 },
    { -36,  15,  10,    6, 288, -40,   9,    2 },
    { -40,  20,   7,    9, 288, -40,   9,    2 },
    { -48,  20,  12,   10, 288, -36,   8,    1 },
    { -56,  14,  31,    7, 288, -36,   7,    1 },
    { -60,   9,  28,   28, 272, -31,   7,    2 },
    { -40,   1,  -1,   -1, 224,  96, -24,    2 },
    { -40,   1,  -2,   -1, 224,  96, -24,    2 },
    { -48,   7,  -2,    1, 224,  96, -24,    3 },
    { -48,   6,  -1,    1, 224,  96, -24,    2 },
    { -40,  -1,   2,   -2, 224,  96, -24,    1 },
    { -40,  -2,   1,    0, 224,  96, -24,    0 },
    { -40,   3,   1,    8, 192, 112, -24,    4 },
    { -40,   3,   1,    7, 192, 112, -24,    4 },
    { -1,  -2,  -1,  -2,    7, 288, -36,    2 },
    { -1,  -2,  -1,  -1,    7, 288, -36,    3 },
    { -2,  -1,   0,  -1,    6, 288, -36,    2 },
    { -2,  -2,   1,   0,    6, 288, -36,    2 },
    { -2,  -3,   1,   0,    6, 288, -36,    2 },
    { -3,  -3,   0,   0,    6, 288, -34,    2 },
    { -4,  -5,   0,   1,    7, 288, -33,    1 },
    { -5,  -3,   2,   4,   10, 272, -28,    3 },
    { 12,  -2,   1,   1, -40, 192, 112, -20 },
    { 10,  -1,   2,   2, -40, 192, 112, -20 },
    { 9,   0,   1,   1, -40, 192, 112, -20 },
    { 9,   0,   2,   2, -40, 192, 112, -20 },
    { 7,  -3,   3,   1, -36, 192, 112, -20 },
    { 7,  -3,   2,   2, -40, 192, 120, -24 },
    { 7,  -3,   0,   0, -36, 192, 120, -24 },
    { 6,  -4,   1,   1, -36, 192, 120, -24 },
    { 3,   0,   1,   1,  -3,   9, 272, -28 },
    { 2,   1,   1,   1,  -3,   9, 272, -28 },
    { 0,   1,   1,   1,  -3,   7, 272, -24 },
    { 0,   1,   2,   1,  -2,   7, 272, -24 },
    { -1,   1,   2,   2,  -3,   7, 272, -24 },
    { -1,   0,   2,   2,  -3,   7, 272, -24 },
```

```
{ -1,   -1,    1,    2,   -4,    7, 272, -20 },
{ -1,   -1,    2,    3,   -3,   10, 264, -17 },
{ 2,     1,    3,    3,    9, -36, 192,  80 },
{ 1,     3,    3,    3,   10, -36, 192,  80 },
{ 0,     3,    3,    3,    9, -34, 192,  80 },
{ 0,     3,    3,    3,    9, -34, 192,  80 },
{ 0,     2,    4,    3,    9, -33, 192,  80 },
{ -2,    0,    2,    0,    5, -36, 192,  96 },
{ -3,    0,    1,    2,    5, -36, 192,  96 },
{ -3,   -1,    1,    1,    4, -34, 192,  96 },
{ 0,     0,    0,    1,    2,   -3,  16, 240 },
{ 0,     0,    0,   -1,    0,   -4,  14, 248 },
{ -1,    1,    0,   -1,    1,   -5,  12, 248 },
{ -2,    1,    1,   -1,    1,   -5,  12, 248 },
{ -2,    0,    2,   -1,    1,   -5,  12, 248 },
{ -2,    0,    2,    0,    0,   -5,  12, 248 },
{ -2,    0,    2,    1,    1,   -6,  12, 248 },
{ -3,    0,    2,    2,    2,   -3,  16, 240 },
{ 1,    -1,   -2,   -1,   -3,    9, -68, 320 },
{ -2,    0,   -1,   -1,   -4,    7, -64, 320 },
{ -2,    1,   -1,   -1,   -3,    8, -66, 320 },
{ -3,    1,    0,   -1,   -3,    8, -66, 320 },
{ -3,    0,    1,   -1,   -4,    8, -66, 320 },
{ -3,   -1,    1,   -1,   -4,    7, -64, 320 },
{ -5,   -2,    0,    1,   -4,    7, -62, 320 },
{ -5,   -2,    0,    1,   -4,    7, -62, 320 }
}, // merge10
{
{ 60,    20,    8,    2, 160,    1,    3,    2 },
{ 16,    96,    5,    3, 126,    7,    2,    1 },
{ -60,  192,   15,    4,  96,    9,    0,   -1 },
{ -80,  160,   96,   -4,  80,    9,   -3,   -3 },
{ -72,   60,  192,    6,  62,   10,   -1,   -1 },
{ -56,    9,  160,   80,  48,   12,    0,    2 },
{ -48,   10,   48,  192,  40,   12,    0,    1 },
{ -48,   15,  -24,  264,  32,   14,    0,    2 },
{ -36,   36,    6,    2, 160,   96,  -10,    1 },
{ -80,   96,   12,    4, 160,   72,   -6,   -3 },
{ -136, 144,   28,    8, 144,   72,   -2,   -1 },
{ -160, 144,   80,    8, 128,   62,   -4,   -3 },
{ -160,  72,  144,   24, 112,   60,    1,    1 },
{ -136,  32,  132,   80,  96,   56,   -2,   -2 },
```

{ -126, 20, 48, 192, 80, 48, -2, -4 },
{ -112, 20, -4, 240, 64, 48, 0, 0 },
{ -32, 28, 8, 4, 34, 224, -12, 2 },
{ -80, 63, 14, 4, 48, 224, -14, -4 },
{ -124, 96, 32, 12, 56, 192, -7, -1 },
{ -160, 96, 72, 24, 64, 160, -2, 2 },
{ -160, 62, 112, 32, 62, 160, -8, -5 },
{ -160, 36, 96, 80, 66, 144, -2, -3 },
{ -160, 28, 48, 160, 66, 120, 0, -4 },
{ -160, 28, 9, 192, 63, 112, 9, 2 },
{ -24, 20, 10, 6, -20, 192, 80, -7 },
{ -63, 40, 15, 8, -20, 224, 60, -9 },
{ -96, 64, 28, 14, -18, 224, 48, -9 },
{ -128, 63, 56, 24, -14, 224, 40, -8 },
{ -144, 40, 80, 40, -9, 224, 34, -10 },
{ -160, 32, 80, 80, 1, 192, 33, -2 },
{ -160, 24, 36, 136, 3, 192, 28, -3 },
{ -160, 20, 10, 192, 6, 160, 28, -2 },
{ -24, 15, 8, 4, -5, 48, 224, -14 },
{ -48, 33, 16, 12, -6, 72, 192, -14 },
{ -80, 40, 24, 16, -15, 96, 192, -17 },
{ -96, 40, 40, 28, -16, 112, 160, -12 },
{ -120, 28, 60, 48, -20, 128, 144, -12 },
{ -128, 20, 48, 80, -20, 136, 128, -9 },
{ -136, 17, 28, 120, -24, 144, 112, -6 },
{ -144, 16, 9, 160, -24, 144, 96, -1 },
{ -20, 10, 7, 4, 3, -28, 224, 56 },
{ -48, 20, 10, 12, 2, -20, 240, 40 },
{ -66, 28, 18, 20, -2, -10, 240, 28 },
{ -80, 24, 32, 31, -4, 4, 224, 24 },
{ -96, 15, 40, 48, -9, 17, 224, 17 },
{ -112, 10, 33, 72, -14, 30, 224, 12 },
{ -112, 8, 15, 112, -18, 48, 192, 10 },
{ -124, 7, 3, 132, -24, 56, 192, 12 },
{ -12, 9, 7, 5, -1, -6, 62, 192 },
{ -32, 14, 6, 10, -5, -10, 80, 192 },
{ -48, 18, 15, 24, -3, -8, 96, 160 },
{ -60, 10, 24, 31, -5, -7, 120, 144 },
{ -72, 4, 28, 48, -9, -7, 136, 128 },
{ -80, 3, 18, 72, -12, -3, 144, 112 },
{ -96, 3, 7, 96, -12, 0, 160, 96 },
{ -96, 2, -4, 112, -18, 4, 160, 96 },

$$\{ -14, \quad 4, \quad 2, \quad 4, \quad -7, \quad 14, -68, 320 \},$$
$$\{ -24, \quad 12, \quad 6, \quad 16, \quad -3, \quad 17, -56, 288 \},$$
$$\{ -36, \quad 9, \quad 8, \quad 20, \quad -6, \quad 12, -40, 288 \},$$
$$\{ -48, \quad 4, \quad 14, \quad 34, \quad -8, \quad 12, -24, 272 \},$$
$$\{ -56, \quad -2, \quad 14, \quad 48, -12, \quad 10, -12, 264 \},$$
$$\{ -66, \quad -2, \quad 7, \quad 66, -12, \quad 9, \quad 5, 248 \},$$
$$\{ -80, \quad -3, \quad -8, \quad 96, -16, \quad 9, \quad 32, 224 \},$$
$$\{ -80, \quad -3, \quad -8, \quad 96, -16, \quad 9, \quad 32, 224 \}$$

```
        } //merge10
    };
```

The modified (as compared to Table 1) signaling is represented in Table 7

Table 7. Unified signaling for directional and MIP modes

| | |
|---|---|
| ... | |
| if( treeType = = SINGLE_TREE \|\| treeType = = DUAL_TREE_LUMA) { | |
| if( Abs( Log2( cbWidth ) - Log2( cbHeight ) ) <= 2 ) | |
| **intra_lwip_flag**[ x0 ][ y0 ] | ae(v) |
| if( !intra_lwip_flag[ x0 ][ y0 ] ) { | *!* |
| if( ( y0 % CtbSizeY ) > 0) | |
| **intra_luma_ref_idx**[ x0 ][ y0 ] | ae(v) |
| if (intra_luma_ref_idx[ x0 ][ y0 ] = = 0 && ( cbWidth <= MaxTbSizeY \|\| cbHeight <= MaxTbSizeY )&& ( cbWidth * cbHeight > MinTbSizeY * MinTbSizeY )) | |
| **intra_subpartitions_mode_flag**[ x0 ][ y0 ] | ae(v) |
| if( intra_subpartitions_mode_flag[ x0 ][ y0 ] = = 1 && cbWidth <= MaxTbSizeY && cbHeight <= MaxTbSizeY ) | |
| **intra_subpartitions_split_flag**[ x0 ][ y0 ] | ae(v) |
| } | *!* |
| if( intra_luma_ref_idx[ x0 ][ y0 ] = = 0 && intra_subpartitions_mode_flag[ x0 ][ y0 ] = = 0 ) | |
| **intra_luma_mpm_flag**[ x0 ][ y0 ] | ae(v) |
| if( intra_luma_mpm_flag[ x0 ][ y0 ] ) { | |
| if( intra_lwip_flag[ x0 ][ y0 ] ) | |
| **intra_lwip_mpm_idx**[ x0 ][ y0 ] | |
| else | |
| **intra_luma_mpm_idx**[ x0 ][ y0 ] | ae(v) |
| } | |
| else { | |
| if( intra_lwip_flag[ x0 ][ y0 ] ) | |
| **intra_lwip_mpm_remainder**[ x0 ][ y0 ] | ae(v) |
| else | |

(continued)

| intra_luma_mpm_remainder[ x0 ][ y0 ] | |
|---|---|
| } | |
| ... | |

In the above Table 7, an exclamation mark (*!*) in the right-hand column indicates a line including a modification compared to Table 1.

If **intra_lwip_flag** is not signaled, it is inferred to 0.

Derivation of the MPM list in the case of joint signaling (i.e the unified signaling of conventional and MIP modes of Fig. 7) is represented as follows:

MPM coding **(intra_luma_mpm_idx)** is not modified, i.e. the process for directional intra prediction mode is invoked.

Non-MPM coding **(intra_luma_mpm_remainder)** is invoked. For the case when **intra_lwip_flag** is 1, this symbol is encoded using a truncated unary code, or a fixed-length code, depending on the value of **intra_lwip_mpm_flag.** When this flag is set equal to 0, the number of the modes coded by this fixed-length code is set as follows:

$$cMax = (cbWidth == 4 \quad \&\& \quad cbHeight == 4) ?$$

$$31 : ( (cbWidth <= 8 \quad \&\& \quad cbHeight <= 8) ? 15 : 7)$$

When **intra_lwip_mpm_flag** is equal to 1 the number of the modes that could be encoded using truncated unary code is fixed and does not depend on the dimensions of the current block.

Another embodiment of the invention (cf. Table 8 below) facilitates the usage of a special flag for MPM coding. This flag may be implemented as an **intra_luma_planar_flag** or an **intra_luma_not_planar_flag,** indicating intra prediction mode being or not being planar, respectively. When **mpm_flag** is equal to zero, **intra_luma_planar_flag** is not signaled. In accordance with the embodiment, the unified signaling mechanism could be defined as follows (see Table 8). In this embodiment MIP MPM signaling is enabled only for the case when **intra_luma_not_planar_flag** is set equal to 0 thus indicating that intra prediction mode is non-planar. Otherwise, when **intra_luma_not_planar_flag** is set equal to 1, it is indicated that intra prediction mode is planar. In this case no additional MIP-related signaling is required since is known that planar mode does not belong to the set of MIP modes.

Table 8. Unified signaling for directional and MIP modes facilitating intra_luma_non_planar_flag

| ... |
|---|
| if(treeType == SINGLE_TREE \|\| treeType == DUAL_TREE_LUMA) { |
| if( ( y0 % CtbSizeY ) > 0 ) |
| **intra_luma_ref_idx**[ x0 ][ y0 ] |
| if (intra_luma_ref idx[ x0 ][ y0 ] == 0 && <br> ( cbWidth <= MaxTbSizeY \|\| cbHeight <= MaxTbSizeY ) && <br> ( cbWidth * cbHeight > MinTbSizeY * MinTbSizeY )) |
| **intra_subpartitions_mode_flag**[ x0 ][ y0 ] |
| if( intra_subpartitions_mode_flag[ x0 ][ y0 ] == 1 && <br> cbWidth <= MaxTbSizeY && cbHeight <= MaxTbSizeY ) |
| **intra_subpartitions_split_flag**[ x0 ][ y0 ] |
| if( intra_luma_ref idx[ x0 ][ y0 ] == 0 && <br> intra_subpartitions_mode_flag[ x0 ][ y0 ] == 0 ) |
| **intra_luma_mpm_flag**[ x0 ][ y0 ] |
| if( intra_luma_mpm_flag[ x0 ][ y0 ] ) { |
| if( intra_luma_ref_idx[ x0 ][ y0 ] == 0 ) |
| **intra_luma_not_planar_flag**[ x0 ][ y0 ] |
| if( intra_luma_not_planar_flag[ x0 ][ y0 ] ) { |

(continued)

| |
|---|
| if (intra_luma_ref_idx[ x0 ][ y0 ] = = 0 && intra_subpartitions_mode_flag[ x0 ][ y0 ] = = 0 ) { |
| **intra_lwip_flag**[ x0 ][ y0 ] |
| } |
| if( intra_lwip_flag[ x0 ][ y0 ] ) { |
| **intra_lwip_mpm_idx**[ x0 ][ y0 ] |
| } else |
| **intra_luma_mpm_idx**[ x0 ][ y0 ] |
| } |
| } else |
| { |
| **intra_lwip_flag**[ x0 ][ y0 ] |
| if(intra_lwip_flag[ x0 ][ y0 ] ) |
| **intra_lwip_mpm_remainder**[ x0 ][ y0 ] |
| } |

In still another embodiment (cf. Table 9 below) a more general intra_luma_head_mpm_flag is used instead of intra_luma_non_planar_flag. As in the previous embodiment, it is assumed that among the set of casual intra prediction modes the most probable one is the planar mode. Therefore, when **intra_lwip_flag** is set to zero, intra_luma_head_mpm_flag being set to 1 indicates that intra prediction mode is planar. When **intra_lwip_flag** is set to 1, intra_luma_head_mpm_flag being set to 1 indicates that intra prediction mode is the most probable MIP mode. Table 9 gives the syntax of MIP, the MPM list part of which is based on intra_luma_head_mpm_flag signaling.

Table 9. Unified signaling for directional and MIP modes facilitating intra_luma_head_mpm_flag

| |
|---|
| ... |
| if(treeType = = SINGLE_TREE \|\| treeType = = DUAL_TREE_LUMA) { |
| if( ( y0 % CtbSizeY ) > 0) |
| **intra_luma_ref_idx**[ x0 ][ y0 ] |
| if (intra_luma_ref_idx[ x0 ][ y0 ] = = 0 && ( cbWidth <= MaxTbSizeY \|\| cbHeight <= MaxTbSizeY )&& ( cbWidth * cbHeight > MinTbSizeY * MinTbSizeY )) |
| **intra_subpartitions_mode_flag**[ x0 ][ y0 ] |
| if( intra_subpartitions_mode_flag[ x0 ][ y0 ] = = 1 && cbWidth <= MaxTbSizeY && cbHeight <= MaxTbSizeY ) |
| **intra_subpartitions_split_flag**[ x0 ][ y0 ] |
| if( intra_luma_ref_idx[ x0 ][ y0 ] = = 0 && intra_subpartitions_mode_flag[ x0 ][ y0 ] = = 0 ) |
| **intra_luma_mpm_flag**[ x0 ][ y0 ] |
| if( intra_luma_mpm_flag[ x0 ][ y0 ] ) { |
| if( intra_luma_ref_idx[ x0 ][ y0 ] = = 0 ) |
| **intra_luma_head_mpm_flag** [ x0 ][ y0 ] |
| if (intra_luma_ref_idx[ x0 ][ y0 ] = = 0 && intra_subpartitions_mode_flag[ x0 ][ y0 ] = = 0 ) { |
| **intra_lwip_flag**[ x0 ][ y0 ] |

(continued)

| |
|---|
| } |
| if( intra_luma_head_mpm_flag [ x0 ][ y0 ] = = 0) { |
| if( intra_lwip_flag[ x0 ][ y0 ] ) { |
| **intra_lwip_mpm_idx**[ x0 ][ y0 ] |
| } else |
| **intra_luma_mpm_idx**[ x0 ][ y0 ] |
| } |
| } else |
| { |
| **intra_lwip_flag**[ x0 ][ y0 ] |
| if(intra_lwip_flag[ x0 ][ y0 ] ) |
| **intra_lwip_mpm_remainder**[ x0 ][ y0 ] |
| } |

The most probable MIP modes' numbers are 17, 0 and 1 for the values of MIP block size types 0, 1 and 2 respectively.

The MIP modes are defined by the multiplication matrices A and offset matrices b that are used in obtaining reduced predicted samples $pred_{red}$ from the reduced boundary $bdry_{red}$:

$$pred_{red} = A \cdot bdry_{red} + b.$$

Multiplication matrix A and offset values b for the most probable mode 17 of the MIP block size type 0 are given in Table 10. Offset values b for MIP block size types 1 and 2 are equal to 0. Multiplication matrix A for the best mode 0 and MIP block size type 1 is given in Table 11. Multiplication matrix A for the best mode 1 and MIP block size type 2 is given in Table 12.

Table 10. Multiplication matrix A and offset values b for the most probable MIP mode 17 of block size type 0. (In Table 10 Multiplication matrix A is given in 8-bit precision, i.e. the multiplication result $A \cdot bdry_{red}$ should be right-shifted by 8. Precision of multiplication matrices A in Table 11 and Table 12 is 9 bits.)

Table 10

| block size type 0 | | | | |
|---|---|---|---|---|
| matrix A | | | | bias |
| -23 | -3 | 283 | -2 | 1 |
| -18 | -11 | 287 | -2 | 1 |
| -2 | -26 | 287 | -3 | 1 |
| -1 | -21 | 282 | -4 | 1 |
| 18 | 2 | 234 | 3 | -1 |
| 16 | 5 | 233 | 3 | -1 |
| 13 | 7 | 231 | 5 | -1 |
| 17 | 0 | 229 | 10 | -1 |
| 2 | -1 | 9 | 246 | 0 |
| 2 | -1 | 6 | 249 | 0 |
| 1 | 1 | 3 | 251 | 0 |
| -1 | 3 | 3 | 251 | 0 |
| 0 | 0 | -11 | 267 | 0 |

(continued)

| block size type 0 | | | | |
| --- | --- | --- | --- | --- |
| matrix A | | | | bias |
| 0 | 1 | -11 | 266 | 0 |
| 1 | 1 | -10 | 264 | 0 |
| 1 | 1 | -9 | 263 | 0 |

Table 11. Multiplication matrix A for the most probable MIP mode 0 of block size type 1.

| block size type 1 | | | | | | | |
| --- | --- | --- | --- | --- | --- | --- | --- |
| matrix A | | | | | | | |
| 42 | -26 | 8 | -1 | 270 | -41 | 7 | -3 |
| 192 | -31 | -4 | 1 | 131 | -41 | 12 | -4 |
| 128 | 146 | -21 | -3 | 10 | -5 | 2 | -2 |
| 14 | 136 | 111 | 1 | -9 | 7 | -3 | -1 |
| -11 | 2 | -2 | 1 | 35 | 267 | -42 | 5 |
| -34 | 0 | 2 | 1 | 197 | 126 | -42 | 6 |
| 52 | -41 | 8 | 1 | 257 | -15 | -3 | -1 |
| 132 | 15 | -18 | 5 | 156 | -40 | 11 | -4 |
| 3 | -1 | 0 | 1 | -16 | 32 | 272 | -36 |
| 9 | -2 | -1 | 1 | -47 | 199 | 129 | -32 |
| -13 | 6 | -3 | 2 | 12 | 268 | -11 | -4 |
| -15 | -6 | 3 | 3 | 137 | 167 | -35 | 3 |
| -3 | 0 | -2 | 1 | 4 | -15 | 24 | 246 |
| -5 | 0 | -3 | 2 | 15 | -56 | 202 | 101 |
| 1 | -1 | -3 | 2 | -8 | 6 | 267 | -9 |
| 5 | 0 | -3 | 4 | -29 | 145 | 152 | -18 |

Table 12. Multiplication matrix A for the most probable MIP mode 1 of block size type 2.

| block size type 2 | | | | | | | |
| --- | --- | --- | --- | --- | --- | --- | --- |
| matrix A | | | | | | | |
| 78 | 15 | 0 | 0 | 158 | 7 | 0 | -2 |
| 117 | 35 | 2 | -1 | 96 | 9 | 0 | -2 |
| 115 | 72 | 9 | -1 | 55 | 7 | 1 | -2 |
| 75 | 116 | 26 | -1 | 36 | 4 | 3 | -2 |
| 41 | 117 | 71 | 0 | 24 | 2 | 3 | -2 |
| 28 | 62 | 138 | 12 | 14 | 1 | 3 | -1 |
| 22 | 14 | 140 | 69 | 8 | 1 | 3 | -2 |
| 16 | 10 | 34 | 188 | 7 | 2 | 1 | -1 |
| 18 | 5 | 1 | 0 | 171 | 64 | -1 | -2 |
| 51 | 11 | 2 | 0 | 158 | 37 | 1 | -3 |
| 81 | 28 | 1 | 0 | 123 | 24 | 1 | -3 |
| 96 | 51 | 5 | 1 | 89 | 15 | 3 | -3 |

(continued)

| block size type 2 | | | | | | | |
|---|---|---|---|---|---|---|---|
| matrix A | | | | | | | |
| 89 | 78 | 19 | 0 | 63 | 8 | 3 | -3 |
| 69 | 94 | 44 | 2 | 43 | 4 | 3 | -3 |
| 51 | 78 | 86 | 10 | 29 | 3 | 3 | -3 |
| 38 | 49 | 98 | 47 | 21 | 3 | 3 | -3 |
| 5 | 1 | 1 | 0 | 83 | 162 | 5 | -2 |
| 16 | 2 | 1 | 1 | 123 | 112 | 4 | -3 |
| 37 | 8 | 1 | 1 | 135 | 74 | 3 | -3 |
| 60 | 19 | 1 | 1 | 127 | 49 | 3 | -4 |
| 77 | 38 | 4 | 0 | 107 | 32 | 2 | -3 |
| 80 | 61 | 11 | 1 | 84 | 21 | 2 | -4 |
| 72 | 76 | 30 | 2 | 63 | 14 | 2 | -4 |
| 59 | 72 | 55 | 11 | 48 | 12 | 3 | -4 |
| 3 | -1 | 0 | 1 | 19 | 178 | 61 | -4 |
| 5 | -1 | 0 | 1 | 55 | 166 | 33 | -4 |
| 13 | 1 | -1 | 1 | 90 | 134 | 20 | -4 |
| 28 | 6 | -1 | 1 | 109 | 105 | 11 | -4 |
| 45 | 15 | 0 | 1 | 114 | 78 | 7 | -4 |
| 59 | 31 | 2 | 1 | 107 | 57 | 4 | -5 |
| 64 | 49 | 9 | 1 | 92 | 43 | 3 | -5 |
| 62 | 59 | 23 | 5 | 74 | 34 | 3 | -5 |
| 1 | -2 | 1 | 0 | 7 | 87 | 167 | -6 |
| 1 | -2 | 0 | 1 | 22 | 129 | 112 | -6 |
| 3 | -2 | 0 | 1 | 45 | 145 | 70 | -5 |
| 10 | 0 | -1 | 1 | 68 | 140 | 44 | -6 |
| 21 | 4 | 0 | 1 | 87 | 123 | 27 | -6 |
| 33 | 13 | 0 | 1 | 96 | 103 | 16 | -7 |
| 44 | 27 | 2 | 2 | 94 | 83 | 11 | -6 |
| 48 | 38 | 10 | 4 | 85 | 67 | 10 | -6 |
| 0 | -1 | 1 | 0 | 5 | 11 | 205 | 36 |
| -2 | -1 | 0 | 0 | 9 | 55 | 183 | 11 |
| -3 | -1 | 0 | 0 | 19 | 98 | 142 | 1 |
| 0 | -2 | 0 | 0 | 35 | 125 | 103 | -4 |
| 6 | -2 | 0 | 1 | 51 | 134 | 72 | -6 |
| 15 | 2 | 0 | 2 | 66 | 129 | 49 | -7 |
| 25 | 11 | 0 | 3 | 75 | 116 | 34 | -7 |
| 32 | 21 | 4 | 4 | 76 | 98 | 27 | -6 |
| 0 | -1 | 0 | 0 | 1 | 4 | 91 | 161 |
| -2 | -1 | -1 | 0 | 3 | 18 | 146 | 91 |

(continued)

| block size type 2 | | | | | | | |
|---|---|---|---|---|---|---|---|
| matrix A | | | | | | | |
| -4 | -2 | -1 | 1 | 8 | 46 | 164 | 44 |
| -6 | -3 | 0 | 1 | 17 | 77 | 151 | 17 |
| -3 | -4 | 1 | 1 | 29 | 102 | 125 | 4 |
| 3 | -3 | 0 | 3 | 41 | 116 | 98 | -2 |
| 10 | 2 | 0 | 4 | 52 | 119 | 74 | -4 |
| 16 | 10 | 3 | 5 | 59 | 109 | 57 | -2 |
| 0 | -2 | -1 | 0 | 1 | 14 | -26 | 269 |
| -2 | -2 | -1 | 0 | 1 | 17 | 33 | 208 |
| -4 | -2 | -1 | 1 | 3 | 27 | 93 | 139 |
| -5 | -3 | 0 | 1 | 9 | 44 | 129 | 82 |
| -5 | -4 | 1 | 2 | 16 | 65 | 135 | 47 |
| -2 | -4 | 1 | 3 | 25 | 83 | 125 | 26 |
| 2 | -2 | 1 | 4 | 35 | 94 | 106 | 15 |
| 7 | 3 | 2 | 6 | 42 | 96 | 87 | 12 |

When **intra_luma_head_mpm_flag** is signaled for MIP modes, the most probable MIP mode is indicated. This requires, that MPM list for MIP should be constructed in such a manner that the first element of the MPM list is always assigned to the same most probable MIP mode (e.g. 17, 0 or 1 for the MIP block size type 0, 1 and 2, respectively).

The order of signaling MRLP index **(intra_luma_ref_idx),** ISP flag **(intra_subpartitions_split_flag)** and MIP flag **(intra_lwip_flag)** may be different. Table 13 shows the embodiment of Table 8 wherein MRLP index **(intra_luma_ref_idx)** and ISP flag **(intra_subpartitions_split_flag)** follows MIP flag **(intra_lwip_flag).**

Table 13. Unified signaling for directional and MIP modes facilitating intra_luma_non_planar_flag with alternative flag coding order.

| ... |
|---|
| if(treeType = = SINGLE_TREE \| \| treeType = = DUAL_TREE_LUMA) { |
| **intra_luma_mpm_flag[** x0 ][ y0 ] |
| if( intra_luma_mpm_flag[ x0 ][ y0 ] ) { |
| **intra_luma_not_planar_flag**[ x0 ][ y0 ] |
| if( intra_luma_not_planar_flag[ x0 ][ y0 ] ) { |
| **intra_lwip_flag[** x0 ][ y0 ] |
| if( intra_lwip_flag[ x0 ][ y0 ] ) { |
| **intra_lwip_mpm_idx**[ x0 ][ y0 ] |
| } else |
| **intra_luma_mpm_idx[** x0 ][ y0 ] |
| } |
| } else |
| { |
| **intra_lwip_flag[** x0 ][ y0 ] |
| if(intra_lwip_flag[ x0 ][ y0 ] ) |
| **intra_lwip_mpm_remainder[** x0 ][ y0 ] |

(continued)

| |
|---|
| } |
| if( **intra_luma_mpm_flag** == 1 && **intra_luma_not_planar_flag** == 1 && (y0 % CtbSizeY ) > 0 ) |
| **intra_luma_ref_idx[** x0 ][ y0 ] |
| if (intra_luma_ref_idx[ x0 ][ y0 ] = = 0 && <br> ( cbWidth <= MaxTbSizeY ‖ cbHeight <= MaxTbSizeY) && <br> ( cbWidth * cbHeight > MinTbSizeY * MinTbSizeY ) && <br> intra_lwip_flag == 0 && intra_luma_mpm_flag == 1 ) |
| **intra_subpartitions_mode_flag[** x0 ][ y0 ] |
| if( intra_subpartitions_mode_flag[ x0 ][ y0 ] = = 1 && <br> cbWidth <= MaxTbSizeY && cbHeight <= MaxTbSizeY ) |
| **intra_subpartitions_split_flag[** x0 ][ y0 ] |

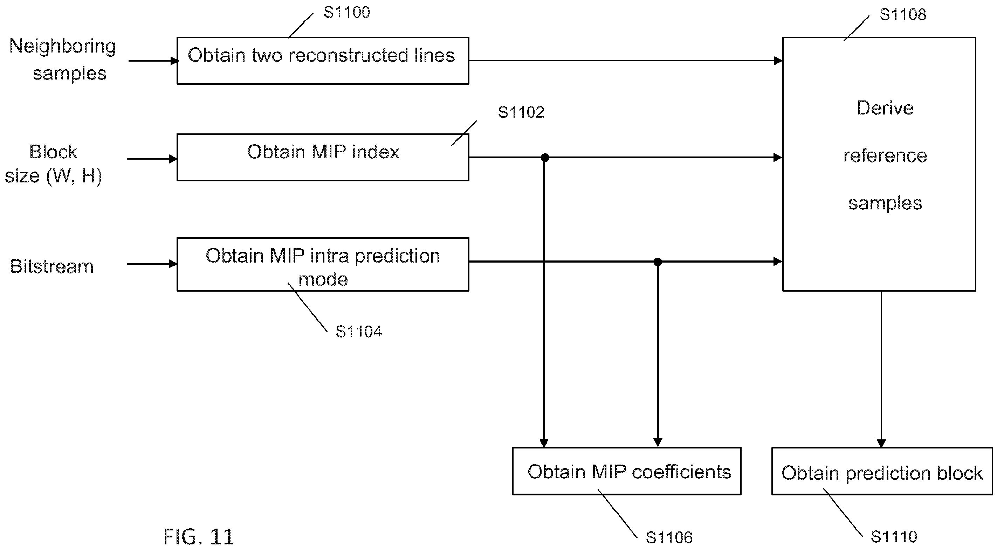

In the following, with reference to Fig. 11, an overall overview of processing in accordance with exemplary embodiments of the present disclosure will be given.

The processing is based on information from neighboring block samples that have already been reconstructed, block size information and further information, in particular, regarding an MIP intra prediction mode that may, for instance, be obtained from a bitstream form signaling information, or may be internally stored in a processing apparatus according to the present invention.

In particular, in step S1100, two reconstructed lines of neighboring samples are obtained.

In step S1102, on the basis of the block size information (width and height), MIP indication information is obtained (for example, the above discussed value *idx(W, H).* In step S1104, information about the MIP intra-prediction mode for usage for the current block is obtained.

The obtained information is then used for deriving further parameters for the prediction. On the one hand, the MIP coefficients to be used in the matrix vector multiplication for the prediction are obtained in step S1106 on the basis of the MIP indication information and the MIP intra prediction mode. On the other hand, in step S1108, reference samples are obtained based on the samples from the two reconstructed lines, the MIP indication information and the MIP intra-prediction mode. Finally, in step S1110, the prediction block is obtained from the reference samples derived in step S1108 and the MIP coefficients derived in step S1106. This includes obtaining a reduced prediction signal as the direct result of the matrix multiplication with the MIP coefficients (possibly including an offset addition) as well as obtaining the final prediction signal after performing the interpolation.

Mathematical Operators

The mathematical operators used in this application are similar to those used in the C programming language. However, the results of integer division and arithmetic shift operations are defined more precisely, and additional operations are defined, such as exponentiation and real-valued division.

Numbering and counting conventions generally begin from 0, e.g., "the first" is equivalent to the 0-th, "the second" is equivalent to the 1-th, etc.

Arithmetic operators

The following arithmetic operators are defined as follows:

+     Addition

-     Subtraction (as a two-argument operator) or negation (as a unary prefix operator)

*     Multiplication, including matrix multiplication

$x^y$     Exponentiation. Specifies x to the power of y. In other contexts, such notation is used for superscripting not intended for interpretation as exponentiation.

/     Integer division with truncation of the result toward zero. For example, 7 / 4 and -7 / -4 are truncated to 1 and -7 / 4 and 7 / -4 are truncated to -1.

÷     Used to denote division in mathematical equations where no truncation or rounding is intended.

$$\frac{x}{y}$$ Used to denote division in mathematical equations where no truncation or rounding is intended.

$$\sum_{i=x}^{y} f(i)$$ The summation of $f(i)$ with $i$ taking all integer values from x up to and including y.

x%y  Modulus. Remainder of x divided by y, defined only for integers x and y with x >= 0 and y > 0.

Logical operators

The following logical operators are defined as follows:

x && y  Boolean logical "and" of x and y
x | | y  Boolean logical "or" of x and y
!  Boolean logical "not"
x ? y : z  If x is TRUE or not equal to 0, evaluates to the value of y; otherwise, evaluates to the value of z.

Relational operators

The following relational operators are defined as follows:

>  Greater than
>=  Greater than or equal to
<  Less than
<=  Less than or equal to
= =  Equal to
!=  Not equal to

When a relational operator is applied to a syntax element or variable that has been assigned the value "na" (not applicable), the value "na" is treated as a distinct value for the syntax element or variable. The value "na" is considered not to be equal to any other value.

Bit-wise operators

The following bit-wise operators are defined as follows:

&  Bit-wise "and". When operating on integer arguments, operates on a two's complement representation of the integer value. When operating on a binary argument that contains fewer bits than another argument, the shorter argument is extended by adding more significant bits equal to 0.

|  Bit-wise "or". When operating on integer arguments, operates on a two's complement representation of the integer value. When operating on a binary argument that contains fewer bits than another argument, the shorter argument is extended by adding more significant bits equal to 0.

^  Bit-wise "exclusive or". When operating on integer arguments, operates on a two's complement representation of the integer value. When operating on a binary argument that contains fewer bits than another argument, the shorter argument is extended by adding more significant bits equal to 0.

x >> y  Arithmetic right shift of a two's complement integer representation of x by y binary digits. This function is defined only for non-negative integer values of y. Bits shifted into the most significant bits (MSBs) as a result of the right shift have a value equal to the MSB of x prior to the shift operation.

x << y  Arithmetic left shift of a two's complement integer representation of x by y binary digits. This function is defined only for non-negative integer values of y. Bits shifted into the least significant bits (LSBs) as a result of the left shift have a value equal to 0.

Assignment operators

The following arithmetic operators are defined as follows:

=      Assignment operator

+ +      Increment, i.e., x+ + is equivalent to x = x + 1; when used in an array index, evaluates to the value of the variable prior to the increment operation.

- -      Decrement, i.e., x- - is equivalent to x = x - 1; when used in an array index, evaluates to the value of the variable prior to the decrement operation.

+=      Increment by amount specified, i.e., x += 3 is equivalent to x = x + 3, and x += (-3) is equivalent to x = x + (-3).

-=      Decrement by amount specified, i.e., x -= 3 is equivalent to x = x - 3, and x -= (-3) is equivalent to x = x - (-3).

Range notation

The following notation is used to specify a range of values:

x = y..z x takes on integer values starting from y to z, inclusive, with x, y, and z being integer numbers and z being greater than y.

Mathematical functions

The following mathematical functions are defined:

$$\text{Abs}(\,x\,) = \begin{cases} x & ; & x >= 0 \\ -x & ; & x < 0 \end{cases}$$

Asin( x )      the trigonometric inverse sine function, operating on an argument x that is in the range of -1.0 to 1.0, inclusive, with an output value in the range of $-\pi \div 2$ to $\pi \div 2$, inclusive, in units of radians

Atan( x )      the trigonometric inverse tangent function, operating on an argument x, with an output value in the range of $-\pi \div 2$ to $\pi \div 2$, inclusive, in units of radians

$$\text{Atan2}(\,y,\,x\,) = \begin{cases} \text{Atan}\left(\frac{y}{x}\right) & ; & x > 0 \\ \text{Atan}\left(\frac{y}{x}\right) + \pi & ; & x < 0 \ \&\& \ y >= 0 \\ \text{Atan}\left(\frac{y}{x}\right) - \pi & ; & x < 0 \ \&\& \ y < 0 \\ +\frac{\pi}{2} & ; & x == 0 \ \&\& \ y >= 0 \\ -\frac{\pi}{2} & ; & \text{otherwise} \end{cases}$$

Ceil( x ) the smallest integer greater than or equal to x.

$$\text{Clip1}_Y(\,x\,) = \text{Clip3}(\,0,\,(\,1 \ << \ \text{BitDepth}_Y\,) - 1,\,x\,)$$

$$\text{Clip1}_C(\,x\,) = \text{Clip3}(\,0,\,(\,1 \ << \ \text{BitDepth}_C\,) - 1,\,x\,)$$

$$\text{Clip3}(\,x,\,y,\,z\,) = \begin{cases} x & ; & z < x \\ y & ; & z > y \\ z & ; & \text{otherwise} \end{cases}$$

Cos( x ) the trigonometric cosine function operating on an argument x in units of radians.

Floor( x ) the largest integer less than or equal to x.

$$GetCurrMsb(\ a, b, c, d\ ) = \begin{cases} c + d & ; & b - a >= d/2 \\ c - d & ; & a - b > d/2 \\ c & ; & \text{otherwise} \end{cases}$$

Ln( x ) the natural logarithm of x (the base-e logarithm, where e is the natural logarithm base constant 2.718 281 828...).

Log2( x ) the base-2 logarithm of x.

Log10( x ) the base-10 logarithm of x.

$$Min(\ x, y\ ) = \begin{cases} x & ; & x <= y \\ y & ; & x > y \end{cases}$$

$$Max(\ x, y\ ) = \begin{cases} x & ; & x >= y \\ y & ; & x < y \end{cases}$$

$$Round(\ x\ ) = Sign(\ x\ ) * Floor(\ Abs(\ x\ ) + 0.5\ )$$

$$Sign(\ x\ ) = \begin{cases} 1 & ; & x > 0 \\ 0 & ; & x == 0 \\ -1 & ; & x < 0 \end{cases}$$

Sin( x ) the trigonometric sine function operating on an argument x in units of radians

$$Sqrt(\ x\ ) = \sqrt{x}$$

$$Swap(\ x, y\ ) = (\ y, x\ )$$

Tan( x ) the trigonometric tangent function operating on an argument x in units of radians

Order of operation precedence

When an order of precedence in an expression is not indicated explicitly by use of parentheses, the following rules apply:

- Operations of a higher precedence are evaluated before any operation of a lower precedence.

- Operations of the same precedence are evaluated sequentially from left to right.

The table below specifies the precedence of operations from highest to lowest; a higher position in the table indicates a higher precedence.

For those operators that are also used in the C programming language, the order of precedence used in this Specification is the same as used in the C programming language.

Table: Operation precedence from highest (at top of table) to lowest (at bottom of table)

| operations (with operands x, y, and z) |
|---|
| **"x++"**, "x- -" |
| "!x", "-x" (as a unary prefix operator) |
| $x^y$ |

(continued)

| operations (with operands x, y, and z) |
|---|
| "x * y", "x / y", "x ÷ y", " $\dfrac{x}{y}$ "x % y" |
| "x + y", "x - y" (as a two-argument operator), " $\displaystyle\sum_{i=x}^{y} f(i)$ " |
| "x << y", "x >> y" |
| "x < y", "x <= y", "x > y", "x >= y" |
| "x = = y", "x != y" |
| "x & y" |
| "x \| y" |
| "x && y" |
| "x ‖ y" |
| "x ? y : z" |
| "x..y" |
| "x = y", "x += y", "x -= y" |

Text description of logical operations

In the text, a statement of logical operations as would be described mathematically in the following form:

```
if( condition 0 )
        statement 0
     else if( condition 1 )
        statement 1
     ..
     else /* informative remark on remaining condition */
        statement n
```

may be described in the following manner:
 ... as follows / ... the following applies:

- If condition 0, statement 0
- Otherwise, if condition 1, statement 1
- ...
- Otherwise (informative remark on remaining condition), statement n

Each "If ... Otherwise, if ... Otherwise, ..." statement in the text is introduced with "... as follows" or "... the following applies" immediately followed by "If ... ". The last condition of the "If ... Otherwise, if ... Otherwise, ..." is always an "Otherwise, ...". Interleaved "If ... Otherwise, if ... Otherwise, ..." statements can be identified by matching "... as follows" or "... the following applies" with the ending "Otherwise, ...".

In the text, a statement of logical operations as would be described mathematically in the following form:

```
if( condition 0a   &&   condition 0b )
   statement 0
else if( condition 1a   ||   condition 1b )
   statement 1
...
else
      statement n
```

may be described in the following manner:
... as follows / ... the following applies:

- If all of the following conditions are true, statement 0:

  - condition 0a

  - condition 0b

- Otherwise, if one or more of the following conditions are true, statement 1:

  - condition 1a

  - condition 1b

- ...

- Otherwise, statement n

In the text, a statement of logical operations as would be described mathematically in the following form:

```
if( condition 0 )
   statement 0
if( condition 1 )
   statement 1
```

may be described in the following manner:

When condition 0, statement 0

When condition 1, statement 1

According to a further particular aspect of the present disclosure, a method of intra prediction of a block is provided. The method comprises:

- determining a value of a matrix-based intra prediction, MIP, indication information (e.g. idx(W, H)) for a current block based on the block size of the current block;
- obtaining two lines of reconstructed neighboring samples;
- deriving a set of reference samples based on the two lines of reconstructed neighboring samples, the value of MIP indication information and a MIP intra prediction mode obtained from a bitstream;
- obtaining a set of MIP coefficients based on the value of MIP indication information and the MIP intra prediction mode;

  wherein a magnitude of any of MIP coefficient $C_{MIP}$ of the set of MIP coefficients is represented as the following series:

$$C_{MIP} = \sum_{i=0}^{M} a_i \cdot 2^i$$

,

wherein $a_i$ = {-1, 0, 1} or $a_i$ = {0,1}, and M is a non-negative integer;

- obtaining a prediction block based on the set of reference samples and the set of MIP coefficients, wherein a reconstruct picture is obtained based on the prediction block.

In accordance with one or more embodiments of the further particular aspect, the number of non-zero bits in the MIP coefficient $C_{MIP}$ is not greater than a threshold $N_{THR}$,

$$\sum_{i=0}^{M} abs(a_i) \leq N_{THR}$$

That is, .

Further, in accordance with embodiments, when $N_{THR}$ is equal to 2, the MIP coefficient $C_{MIP}$ is represented as the following series:

$$C_{MIP} = a_i \cdot 2^i + a_j \cdot 2^j ,$$

wherein i ≠ j.

In accordance with one or more embodiments of the above further particular aspect, the MIP coefficient is any one of array 7 given above.

In accordance with one or more embodiments of the above further particular aspect, the MIP coefficient is any one of array 8 given above.

In accordance with one or more embodiments of the above further particular aspect, the MIP coefficient is any one of array 9 given above.

In accordance with one or more embodiments of the above further particular aspect, if the magnitude of the MIP coefficient require 9 bits for representing, M ≤ 8.

In accordance with one or more embodiments of the above further particular aspect, the two lines of reconstructed neighboring samples are two top rows of reconstructed neighboring samples, or the two lines of reconstructed neighboring samples are two left columns of reconstructed neighboring samples, or the two lines of reconstructed neighboring samples are one left column of reconstructed neighboring samples and one top row of reconstructed neighboring samples.

In accordance with still a further particular aspect, an encoder comprising processing circuitry for carrying out the method according to the further particular aspect or any of its embodiments is provided.

In accordance with another particular aspect, a decoder comprising processing circuitry for carrying out the method according to the further particular aspect or any of its embodiments is provided.

In accordance with still another particular aspect, a computer program product comprising a program code for performing the method according to the further particular aspect or any of its embodiments is provided.

In accordance with another aspect of the present disclosure, a decoder is provided, comprising one or more processors and a non-transitory computer-readable storage medium coupled to the processors and storing programming for execution by the processors, wherein the programming, when executed by the processors, configures the decoder to carry out the method according to the further particular aspect or any of its embodiments.

In accordance with still another aspect of the present disclosure, an encoder is provided, comprising one or more processors and a non-transitory computer-readable storage medium coupled to the processors and storing programming for execution by the processors, wherein the programming, when executed by the processors, configures the encoder to carry out the method according to the further particular aspect or any of its embodiments.

Although embodiments of the invention have been primarily described based on video coding, it should be noted that embodiments of the coding system 10, encoder 20 and decoder 30 (and correspondingly the system 10) and the other embodiments described herein may also be configured for still picture processing or coding, i.e. the processing or coding of an individual picture independent of any preceding or consecutive picture as in video coding. In general only inter-prediction units 244 (encoder) and 344 (decoder) may not be available in case the picture processing coding is limited to a single picture 17. All other functionalities (also referred to as tools or technologies) of the video encoder 20 and video decoder 30 may equally be used for still picture processing, e.g. residual calculation 204/304, transform 206, quantization 208, inverse quantization 210/310, (inverse) transform 212/312, partitioning 262/362, intra-prediction 254/354, and/or loop filtering 220, 320, and entropy coding 270 and entropy decoding 304.

Embodiments, e.g. of the encoder 20 and the decoder 30, and functions described herein, e.g. with reference to the encoder 20 and the decoder 30, may be implemented in hardware, software, firmware, or any combination thereof. If implemented in software, the functions may be stored on a computer-readable medium or transmitted over communication media as one or more instructions or code and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

In summary, the present invention relates to a method and apparatus for intra prediction of a block using a matrix-based intra prediction, MIP. In accordance with the present invention, possible values of MIP coefficients are restricted to those which can be represented by a binary representation with a limited number of non-zero bits. This may enable reducing the number of computationally expensive multiplication operations for MIP.

**Claims**

1.   A method of intra prediction of a block, comprising the steps of:

- determining (S1102) a value of a matrix-based intra prediction, MIP, indication information for a current block (203) based on the block size (W, H) of the current block (203), wherein the MIP indication information is defined as

$$idx(W,H) = \begin{cases} 0 & \text{for } W = H = 4 \\ 1 & \text{for } \max(W,H) = 8 \\ 2 & \text{for } \max(W,H) > 8. \end{cases}$$

for a rectangular block of width W and height H;
- obtaining (S1100, S1104) two lines (802) of reconstructed neighboring samples and a MIP intra prediction mode;
- deriving (S700, S1108) a set of reference samples (804) based on the two lines (802) of reconstructed neighboring samples, the value of MIP indication information and the MIP intra prediction mode ;
- obtaining (S704, S1106) a set of MIP coefficients based on the value of MIP indication information and the MIP intra prediction mode;

wherein a magnitude of any MIP coefficient $C_{MIP}$ of the set of MIP coefficients is represented as the following series:

$$C_{MIP} = \sum_{i=0}^{M} a_i \cdot 2^i$$

wherein $a_i$ = {-1, 0, 1} or $a_i$ = {0, 1} , and M is a non-negative integer; and

- obtaining (S702, S706, S1110) a prediction block (265, 365, 806) based on the set of reference samples (804) and the set of MIP coefficients, wherein obtaining a prediction block comprises i) obtaining a reduced prediction block by calculating a matrix vector multiplication based on the set of reference samples and the set of MIP coefficients and ii) upsampling the reduced prediction block by interpolation, wherein the matrix vector multiplication is replaced by addition/subtraction and shift operations, wherein a reconstructed picture is obtained based on the prediction block (265, 365, 806),
wherein the number of non-zero bits in the MIP coefficient $C_{MIP}$ is not greater than a threshold NTHR, that is,

$$\sum_{i=0}^{M} abs(a_i) \leq N_{THR}$$

,

with $N_{THR} \leq M$, and
wherein $N_{THR}$ is equal to 2, and the MIP coefficient $C_{MIP}$ is represented as the following series:

$$C_{MIP} = a_i \cdot 2^i + a_j \cdot 2^j ,$$

wherein i ≠ j.

2. The method of any of the previous claims, wherein the MIP coefficients are any one of the following array:

```
const short mipMatrix4x4round_const[18][16][4] =
{
  {
    { 132 ,    -14 ,     144 ,     -14 },
    { 160 ,    68 ,     5 ,      24 },
    { -32 ,    272 ,    -9 ,      30 },
    { -66 ,    248 ,    9 ,       10 },
    { -5,  17 ,     192 ,    60 },
    { 2 ,  124 ,    9 ,      124 },
    { -60 ,    192 ,    -40 ,     96 },
    { -18 ,    112 ,    -36 ,     64 },
    { -12 ,    28 ,     -28 ,     272 },
    { -36 ,    80 ,     -56 ,     192 },
    { -24 ,    80 ,     -28 ,     80 },
    { -14 ,    72 ,     -24 ,     72 },
    { 3 ,  10 ,     -56 ,     240 },
    { -33 ,    68 ,     -12 ,     96 },
    { -24 ,    72 ,     -9 ,      66 },
    { -18 ,    72 ,     -17 ,     66 }
  },
  {
    { 32 ,     -10 ,     224 ,     6 },
```

```
              { 136 ,     -36 ,      144 ,      7 },
              { 96  ,     124 ,      34  ,     -1 },
              { -9,  272 ,      -10 ,      -4 },
              { -9,  3    ,      264 ,      -7 },
              { -18 ,     -8  ,      288 ,      -18 },
              { -4, -9   ,      264 ,      -15 },
              { -120 ,    192 ,      160 ,      -5 },
              { 4 ,  -6   ,      96  ,      160 },
              { 3 ,  -10  ,      48  ,      192 },
              { 7 ,  -36  ,      12  ,      224 },
              { -34 ,     -15 ,      -4  ,      240 },
              { 0 ,  -15  ,      -126,      384 },
              { 0 ,  -24  ,      -126,      384 },
              { 0 ,  -24  ,      -124,      320 },
              { 16  ,     -34 ,      -112,      320 }
            },
            {
              { 160 ,     14  ,      112 ,      -40 },
              { 248 ,     -6  ,      33  ,      -34 },
              { 224 ,     40  ,      16  ,      -28 },
              { -80 ,     320 ,      5   ,      -20 },
              { -56 ,     3   ,      264 ,      40 },
              { -6,  14   ,      192 ,      24 },
              { 96  ,     7   ,      72  ,      17 },
              { -56 ,     224 ,      -24 ,      12 },
              { -6, -3   ,      1   ,      264 },
              { -24 ,     0   ,      12  ,      256 },
              { -15 ,     -7  ,      16  ,      240 },
              { -40 ,     40  ,      -20 ,      224 },
              { -2, 3    ,      6   ,      248 },
              { -4, 4    ,      6   ,      248 },
              { -5, 2    ,      12  ,      248 },
              { -1, -12  ,      17  ,      248 }
            },
            {
              { 40  ,     -6  ,      248 ,      -28 },
              { 224 ,     -17 ,      48  ,      -2 },
              { 96  ,     192 ,      -36 ,      2 },
              { -32 ,     272 ,      4   ,      8 },
              { -9, 9    ,      192 ,      64 },
              { 48  ,     -20 ,      160 ,      64 },
              { 96  ,     112 ,      -10 ,      56 },
```

```
{ -5,   272 ,    -48 ,      20 },
{ 3 ,   5   ,    24  ,      224 },
{ 3 ,   -8  ,    36  ,      224 },
{ -17 ,   40 ,    68  ,      160 },
{ -72 ,   224 ,    20  ,      -8 },
{ -3,   0   ,    4   ,      252 },
{ 6 ,   0   ,    2   ,      248 },
{ -15 ,   -9 ,    40  ,      224 },
{ -192 ,   80 ,    192 ,      -33 }
},
{
{ 96  ,    -18 ,    240 ,      -68 },
{ 48  ,    63  ,    160 ,      -24 },
{ -48 ,    192 ,    40  ,      48 },
{ -20 ,    192 ,    -72 ,      120 },
{ -48 ,    3   ,    160 ,      136 },
{ -48 ,    2   ,    64  ,      224 },
{ -28 ,    1   ,    14  ,      248 },
{ -14 ,    1   ,    -6  ,      256 },
{ 3 ,   1   ,    -17 ,      264 },
{ 0 ,   1   ,    -12 ,      264 },
{ -5,   5   ,    2   ,      248 },
{ -9,   4   ,    7   ,      248 },
{ -6,   1   ,    8   ,      248 },
{ -7,   2   ,    7   ,      248 },
{ -10 ,    5   ,    6   ,      248 },
{ -10 ,    5   ,    4   ,      248 }
},
{
{ 68  ,    1   ,    192 ,      -3 },
{ 192 ,    -15 ,    72  ,      3 },
{ 272 ,    -20 ,    -1  ,      1 },
{ 160 ,    96  ,    -3  ,      2 },
{ -14 ,    -2  ,    288 ,      -17 },
{ 2 ,   3   ,    264 ,      -15 },
{ 96  ,    -3  ,    160 ,      -3 },
{ 224 ,    -28 ,    56  ,      0 },
{ 2 ,   0   ,    144 ,      112 },
{ -1,   -5  ,    240 ,      20 },
{ -15 ,    -1  ,    288 ,      -18 },
{ 20  ,    2   ,    248 ,      -18 },
{ 4 ,   -1  ,    -36 ,      288 },
```

```
    { 3 ,  -7  ,    20  ,    240 },
    { 6 ,  -7  ,    112 ,    144 },
    { 1 ,  -3  ,    192 ,    56 }
},
{
    { 144 ,   -10 ,    136 ,    -10 },
    { 112 ,   80  ,    80  ,    -16 },
    { -6,  240 ,    40  ,    -20 },
    { -20 ,   264 ,    9   ,    0 },
    { -72 ,   12  ,    288 ,    24 },
    { -96 ,   63  ,    224 ,    60 },
    { -132 ,   160 ,    96  ,    132 },
    { -72 ,   192 ,    -48 ,    160 },
    { -15 ,   -4  ,    36  ,    240 },
    { -24 ,   20  ,    -40 ,    288 },
    { -30 ,   48  ,    -62 ,    240 },
    { -34 ,   62  ,    -40 ,    160 },
    { 20  ,   20  ,    -96 ,    288 },
    { 1 ,  40  ,    -60 ,    192 },
    { -8,  56  ,    -24 ,    112 },
    { -12 ,   62  ,    -9  ,    96 }
},
{
    { 192 ,   9   ,    80  ,    -20 },
    { 272 ,   -10 ,    -12 ,    1 },
    { 224 ,   28  ,    2   ,    5 },
    { -20 ,   272 ,    -2  ,    0 },
    { 0 ,  1   ,    256 ,    -1 },
    { 144 ,   7   ,    120 ,    -20 },
    { 288 ,   -28 ,    9   ,    -20 },
    { 160 ,   96  ,    9   ,    -18 },
    { -15 ,   -2  ,    48  ,    224 },
    { -15 ,   -5  ,    80  ,    192 },
    { 112 ,   -8  ,    9   ,    132 },
    { 256 ,   -28 ,    -72 ,    72 },
    { 5 ,  2   ,    -16 ,    264 },
    { -3, 1   ,    -17 ,    272 },
    { -8, -2  ,    -14 ,    272 },
    { 96  ,   -30 ,    -96 ,    256 }
},
{
    { 192 ,   -40 ,    132 ,    -36 },
```

```
{ 288 ,    -48 ,     36 ,     -34 },
{ 68  ,    192 ,     10 ,     -28 },
{ -15 ,    264 ,     20 ,     -24 },
{ -56 ,    9   ,     256 ,     40 },
{ 48  ,    -36 ,     192 ,     24 },
{ 68  ,    40  ,     66 ,      20 },
{ -48 ,    240 ,     -36 ,     15 },
{ -12 ,    1   ,     1  ,     264 },
{ -20 ,    -1  ,     8  ,     256 },
{ -12 ,    -18 ,     7  ,     248 },
{ -120 ,   136 ,     -48 ,    224 },
{ -3, 3    ,     7  ,      248 },
{ -5, 5    ,     8  ,      248 },
{ 0 ,  -2  ,     9  ,      252 },
{ -36 ,    24  ,     16 ,      248 }
},
{
{ -40 ,    96  ,     264 ,     -60 },
{ -96 ,    160 ,     136 ,     56 },
{ -60 ,    96  ,     56 ,      160 },
{ -14 ,    30  ,     15 ,      224 },
{ -56 ,    18  ,     68 ,      224 },
{ -3, -15  ,     8  ,      264 },
{ 5 , -20  ,     12 ,      264 },
{ -2, -7   ,     20 ,      252 },
{ 7 , -2   ,     -4 ,      256 },
{ -2, 3    ,     14 ,      248 },
{ -7, 8    ,     14 ,      248 },
{ -5, 7    ,     14 ,      248 },
{ -4, 3    ,     15 ,      248 },
{ -4, 2    ,     14 ,      252 },
{ -3, 3    ,     12 ,      252 },
{ -2, 3    ,     16 ,      248 }
},
{
{ 144 ,    -28 ,     240 ,     -112 },
{ 240 ,    -112,     224 ,     -112 },
{ 320 ,    -160,     192 ,     -112 },
{ 320 ,    -160,     192 ,     -120 },
{ -40 ,    -72 ,     256 ,     112 },
{ -17 ,    -96 ,     256 ,     112 },
{ 36  ,    -144,     256 ,     96 },
```

```
                { 112 ,    -224,     256 ,     96 },
                { 14 ,     -12 ,     -16 ,    272 },
                { 12 ,     -8 ,      -10 ,    264 },
                { 2 ,      0 ,       -4 ,     264 },
                { 1 ,      -6 ,      9 ,      264 },
                { -4,      0 ,       24 ,     240 },
                { 2 ,      -6 ,      28 ,     240 },
                { 7 ,      -12 ,     28 ,     240 },
                { 12 ,     -15 ,     30 ,     240 }
        },
        {
                { 36 ,     -15 ,     240 ,     3 },
                { 96 ,     24 ,      144 ,     -2 },
                { 36 ,     224 ,     18 ,      -24 },
                { -1,      264 ,     3 ,       -14 },
                { -10 ,    2 ,       256 ,     2 },
                { -28 ,    1 ,       252 ,     28 },
                { -68 ,    112 ,     132 ,     80 },
                { -48 ,    240 ,     -80 ,     120 },
                { -3, -10 ,    48 ,      224 },
                { -2, -5 ,     -24 ,     272 },
                { -30 ,    17 ,      -48 ,     256 },
                { -48 ,    80 ,      -68 ,     160 },
                { 2 ,      14 ,      -112,     320 },
                { 5 ,      28 ,      -72 ,     192 },
                { 16 ,     28 ,      -33 ,     96 },
                { 12 ,     30 ,      -17 ,     80 }
        },
        {
                { 24 ,     2 ,       224 ,     7 },
                { 2 ,      30 ,      224 ,     2 },
                { -20 ,    80 ,      192 ,     1 },
                { -34 ,    96 ,      192 ,     -2 },
                { -28 ,    20 ,      264 ,     -1 },
                { -34 ,    28 ,      264 ,     1 },
                { -36 ,    28 ,      264 ,     5 },
                { -40 ,    33 ,      264 ,     6 },
                { -15 ,    15 ,      240 ,     24 },
                { -20 ,    24 ,      248 ,     10 },
                { -30 ,    33 ,      248 ,     5 },
                { -36 ,    40 ,      240 ,     -10 },
                { 9 , -18 ,    -240,     480 },
```

```
    { 6 ,   -24 ,     -224,     448 },
    { -7,  -17 ,     -124,     288 },
    { -17 ,   -6 ,     -72 ,     192 }
},
{
    { 24 ,   -12 ,     240 ,     8 },
    { 80 ,   -30 ,     192 ,     15 },
    { 34 ,    72 ,     144 ,     9 },
    { -96 ,   256 ,     96 ,     1 },
    { -7,    6 ,      264 ,     -8 },
    { -16 ,    6 ,      272 ,     -8 },
    { -1,   -14 ,     272 ,     -2 },
    { -48 ,    40 ,     264 ,     1 },
    { 7 ,    14 ,     160 ,     112 },
    { 10 ,     9 ,     192 ,     72 },
    { 9 ,    12 ,     192 ,     56 },
    { 18 ,    -8 ,     224 ,     28 },
    { -5,  -33 ,     -96 ,     320 },
    { -2,  -56 ,     -96 ,     320 },
    { 0 ,   -56 ,     -80 ,     288 },
    { -5,  -48 ,     -63 ,     264 }
},
{
    { 72 ,     8 ,     192 ,     -18 },
    { -33 ,    192 ,     112 ,     -9 },
    { -66 ,    264 ,     -24 ,     96 },
    { 48 ,    144 ,     -144,     192 },
    { -112,    120 ,     192 ,     72 },
    { -36 ,    144 ,     -40 ,     192 },
    { 96 ,     24 ,     -192,     272 },
    { 96 ,    -20 ,     -192,     264 },
    { 16 ,     24 ,     -80 ,     288 },
    { 62 ,    -40 ,     -160,     288 },
    { 48 ,    -48 ,     -144,     240 },
    { 40 ,    -31 ,     -144,     224 },
    { 33 ,    -40 ,     -112,     272 },
    { 24 ,    -48 ,     -112,     224 },
    { 18 ,    -40 ,     -120,     224 },
    { 24 ,    -36 ,     -128,     224 }
},
{
    { 24 ,     2 ,     224 ,     8 },
```

```
        { 3 ,    28  ,      224 ,      3 },
        { -18 ,    80  ,      192 ,      1 },
        { -28 ,    96  ,      192 ,     -4 },
        { -24 ,    17  ,      264 ,     -2 },
        { -30 ,    24  ,      264 ,      1 },
        { -31 ,    24  ,      264 ,      2 },
        { -32 ,    28  ,      256 ,      4 },
        { -8,  16  ,      224 ,     34 },
        { -18 ,    24  ,      248 ,     10 },
        { -28 ,    32  ,      248 ,      5 },
        { -32 ,    40  ,      240 ,    -10 },
        { 5 ,   -10 ,     -224 ,    448 },
        { -1,  -9  ,     -192 ,    384 },
        { -14 ,    -9  ,     -112 ,    264 },
        { -28 ,    -6  ,      -68 ,    192 }
    },
    {
        { 14 ,    -7  ,      288 ,    -48 },
        { 9 ,   -17 ,      320 ,    -62 },
        { -14 ,    14  ,      288 ,    -40 },
        { -192 ,   192 ,      264 ,    -17 },
        { -15 ,    12  ,      160 ,     96 },
        { -14 ,    8   ,      128 ,    132 },
        { 1 ,   -14 ,       72 ,    192 },
        { 14 ,    -17 ,       56 ,    192 },
        { 3 ,   -1  ,      -12 ,    264 },
        { 4 ,   -1  ,      -14 ,    264 },
        { -4,  4   ,      -12 ,    264 },
        { 3 ,   -2  ,       -4 ,    256 },
        { -3,  0   ,        7 ,    248 },
        { -3,  -2  ,        8 ,    248 },
        { -4,  -1  ,        7 ,    248 },
        { -7,  1   ,        7 ,    248 }
    },
    {
        { -24 ,    -4  ,      288 ,     -4 },
        { -18 ,    -12 ,      288 ,     -2 },
        { -2,  -28 ,      288 ,     -2 },
        { -2,  -24 ,      288 ,     -5 },
        { 17 ,    0   ,      240 ,      1 },
        { 14 ,    3   ,      240 ,      1 },
        { 15 ,    9   ,      224 ,      7 },
```

```
{ 18  ,    1   ,    224 ,    12 },
{ 2 ,  -2   ,    8    ,    248 },
{ 2 ,  -1   ,    7    ,    248 },
{ 1 ,   1   ,    2    ,    252 },
{ -1,   3   ,    2    ,    252 },
{ 1 ,   1   ,    -10  ,    264 },
{ 0 ,   2   ,    -10  ,    264 },
{ 1 ,   1   ,    -10  ,    264 },
{ 1 ,   1   ,    -10  ,    264 }

    }
};
```

or

wherein the MIP coefficients are any one of the following array:

```
const short mipMatrix8x8round_const[10][16][8] =
{
  {
    { 40  ,  -28 ,  8   ,  -1  ,  272 ,  -40 ,  7   ,  -2 },
    { 192 ,  -32 ,  -4  ,  1   ,  132 ,  -40 ,  12  ,  -4 },
    { 128 ,  144 ,  -20 ,  -3  ,  10  ,  -5  ,  2   ,  -1 },
    { 14  ,  136 ,  112 ,  0   ,  -9  ,  7   ,  -3  ,  -1 },
    { -12 ,  2   ,  -2  ,  1   ,  36  ,  264 ,  -40 ,  6 },
    { -34 ,  0   ,  2   ,  1   ,  192 ,  128 ,  -40 ,  7 },
    { 48  ,  -40 ,  8   ,  1   ,  256 ,  -14 ,  -2  ,  0 },
    { 132 ,  14  ,  -18 ,  4   ,  160 ,  -40 ,  10  ,  -5 },
    { 3   ,  -1  ,  0   ,  1   ,  -16 ,  32  ,  272 ,  -36 },
    { 10  ,  -1  ,  0   ,  2   ,  -48 ,  192 ,  132 ,  -30 },
    { -14 ,  5   ,  -4  ,  2   ,  12  ,  272 ,  -12 ,  -4 },
    { -14 ,  -5  ,  4   ,  4   ,  136 ,  160 ,  -34 ,  5 },
    { -4  ,  -1  ,  -2  ,  1   ,  4   ,  -15 ,  24  ,  248 },
    { -3  ,  2   ,  -1  ,  4   ,  17  ,  -56 ,  192 ,  96 },
    { 1   ,  -1  ,  -3  ,  2   ,  -7  ,  7   ,  264 ,  -8 },
    { 4   ,  -1  ,  -4  ,  3   ,  -30 ,  144 ,  160 ,  -20 },
  },
  {
    { 5   ,  192 ,  -40 ,  5   ,  -48 ,  80  ,  72  ,  -8 },
    { -9  ,  8   ,  240 ,  -14 ,  9   ,  -36 ,  18  ,  40 },
    { 3   ,  -4  ,  7   ,  248 ,  0   ,  1   ,  -18 ,  20 },
    { 2   ,  3   ,  -34 ,  288 ,  3   ,  -3  ,  -1  ,  0 },
    { -24 ,  56  ,  96  ,  -20 ,  14  ,  -66 ,  126 ,  72 },
    { 6   ,  -24 ,  80  ,  160 ,  1   ,  9   ,  -40 ,  63 },
```

```
{ 3   ,   7   ,   -48 ,   288 ,   3   ,   -2  ,   -1  ,   6 },
{ 2   ,   4   ,   -33 ,   288 ,   3   ,   -4  ,   0   ,   0 },
{ -12 ,   -20 ,   80  ,   72  ,   3   ,   7   ,   -66 ,   192 },
{ -1  ,   -7  ,   -28 ,   272 ,   3   ,   4   ,   -5  ,   17 },
{ 2   ,   2   ,   -36 ,   288 ,   3   ,   -3  ,   3   ,   -1 },
{ 1   ,   4   ,   -32 ,   288 ,   4   ,   -4  ,   1   ,   -1 },
{ -7  ,   -31 ,   8   ,   192 ,   7   ,   20  ,   -16 ,   80 },
{ -4  ,   -3  ,   -40 ,   288 ,   4   ,   3   ,   -2  ,   10 },
{ 2   ,   2   ,   -34 ,   288 ,   4   ,   -3  ,   4   ,   -4 },
{ 3   ,   7   ,   -28 ,   272 ,   7   ,   -2  ,   2   ,   1 },
},
{
{ 144 ,   36  ,   -5  ,   1   ,   8   ,   72  ,   -2  ,   3 },
{ -63 ,   272 ,   15  ,   -4  ,   -17 ,   40  ,   6   ,   5 },
{ -4  ,   -48 ,   288 ,   4   ,   -24 ,   24  ,   8   ,   8 },
{ 0   ,   10  ,   -80 ,   320 ,   -14 ,   7   ,   2   ,   -1 },
{ 96  ,   16  ,   0   ,   -2  ,   -96 ,   192 ,   56  ,   -4 },
{ -66 ,   272 ,   -8  ,   0   ,   -96 ,   96  ,   48  ,   9 },
{ -18 ,   -24 ,   288 ,   -12 ,   -60 ,   31  ,   32  ,   14 },
{ -4  ,   2   ,   -80 ,   320 ,   -24 ,   -2  ,   10  ,   6 },
{ 72  ,   6   ,   4   ,   -1  ,   -72 ,   8   ,   192 ,   48 },
{ -80 ,   264 ,   -20 ,   1   ,   -112,   31  ,   112 ,   60 },
{ -34 ,   -1  ,   272 ,   -24 ,   -80 ,   24  ,   31  ,   56 },
{ -7  ,   -5  ,   -68 ,   288 ,   -36 ,   4   ,   -16 ,   40 },
{ 56  ,   3   ,   7   ,   -1  ,   -48 ,   5   ,   -31 ,   264 },
{ -80 ,   240 ,   -24 ,   0   ,   -96 ,   7   ,   -16 ,   224 },
{ -48 ,   24  ,   240 ,   -28 ,   -80 ,   5   ,   -24 ,   144 },
{ -15 ,   -14 ,   -48 ,   264 ,   -40 ,   -5  ,   -40 ,   80 },
},
{
{ 224 ,   -48 ,   10  ,   -1  ,   384 ,   -72 ,   15  ,   -2 },
{ 448 ,   96  ,   -48 ,   6   ,   24  ,   -15 ,   2   ,   -3 },
{ -2  ,   480 ,   80  ,   -36 ,   -6  ,   -3  ,   0   ,   -4 },
{ -1  ,   -18 ,   480 ,   60  ,   3   ,   -6  ,   -1  ,   -5 },
{ -48 ,   0   ,   -5  ,   -2  ,   256 ,   384 ,   -80 ,   6 },
{ 124 ,   -36 ,   3   ,   1   ,   448 ,   -24 ,   -9  ,   0 },
{ 384 ,   56  ,   -36 ,   7   ,   124 ,   -31 ,   4   ,   -4 },
{ 112 ,   384 ,   18  ,   -10 ,   5   ,   -2  ,   3   ,   -4 },
{ 3   ,   -2  ,   -2  ,   -1  ,   -63 ,   264 ,   384 ,   -72 },
{ -28 ,   1   ,   -6  ,   -3  ,   112 ,   480 ,   -31 ,   -15 },
{ 48  ,   -30 ,   -5  ,   -3  ,   448 ,   96  ,   -40 ,   -5 },
{ 288 ,   20  ,   -12 ,   7   ,   224 ,   -17 ,   -2  ,   -5 },
```

```
{ 1    ,  -1  ,  0   ,  0   ,  28  ,  -96 ,  288 ,  288 },
{ 1    ,  -1  ,  -6  ,  -3  ,  -31 ,  96  ,  480 ,  -30 },
{ -18  ,  -2  ,  -8  ,  -2  ,  36  ,  448 ,  68  ,  -16 },
{ 30   ,  -3  ,  0   ,  3   ,  288 ,  192 ,  -10 ,  1 },
},
{
{ -48  ,  36  ,  6   ,  24  ,  120 ,  144 ,  -33 ,  7 },
{ -28  ,  24  ,  31  ,  56  ,  -16 ,  224 ,  -36 ,  0 },
{ -4   ,  8   ,  3   ,  132 ,  -112,  224 ,  12  ,  -10 },
{ 8    ,  4   ,  -28 ,  192 ,  -144,  160 ,  64  ,  -7 },
{ 6    ,  3   ,  0   ,  24  ,  -68 ,  160 ,  160 ,  -31 },
{ -4   ,  8   ,  -2  ,  60  ,  -68 ,  40  ,  240 ,  -24 },
{ -7   ,  16  ,  -24 ,  96  ,  -72 ,  -36 ,  240 ,  33 },
{ -6   ,  18  ,  -20 ,  120 ,  -80 ,  -62 ,  160 ,  112 },
{ -2   ,  4   ,  -1  ,  20  ,  -18 ,  -40 ,  160 ,  128 },
{ -8   ,  9   ,  -8  ,  48  ,  -40 ,  -17 ,  36  ,  224 },
{ -10  ,  12  ,  -20 ,  80  ,  -64 ,  -2  ,  -48 ,  288 },
{ -10  ,  14  ,  -16 ,  96  ,  -80 ,  3   ,  -68 ,  288 },
{ -5   ,  1   ,  -5  ,  20  ,  -17 ,  8   ,  -80 ,  320 },
{ -15  ,  5   ,  -12 ,  48  ,  -33 ,  -6  ,  -80 ,  320 },
{ -20  ,  4   ,  -14 ,  63  ,  -48 ,  -18 ,  -68 ,  320 },
{ -20  ,  7   ,  -12 ,  80  ,  -56 ,  -20 ,  -56 ,  288 },
},
{
{ -12  ,  -16 ,  6   ,  0   ,  288 ,  -10 ,  0   ,  -1 },
{ 80   ,  -28 ,  -9  ,  3   ,  240 ,  -40 ,  14  ,  -4 },
{ 96   ,  64  ,  -28 ,  -7  ,  160 ,  -40 ,  15  ,  -5 },
{ 96   ,  72  ,  72  ,  -40 ,  80  ,  -28 ,  9   ,  -7 },
{ 2    ,  2   ,  1   ,  0   ,  -24 ,  288 ,  -12 ,  -2 },
{ -24  ,  4   ,  1   ,  -1  ,  60  ,  256 ,  -48 ,  5 },
{ -34  ,  -12 ,  1   ,  -2  ,  160 ,  192 ,  -48 ,  3 },
{ -24  ,  -2  ,  -12 ,  1   ,  224 ,  96  ,  -30 ,  -1 },
{ -4   ,  -1  ,  1   ,  1   ,  5   ,  -24 ,  288 ,  -12 },
{ 2    ,  -2  ,  1   ,  -2  ,  -20 ,  56  ,  252 ,  -36 },
{ 5    ,  -1  ,  1   ,  -1  ,  -40 ,  160 ,  160 ,  -33 },
{ 2    ,  0   ,  4   ,  -4  ,  -36 ,  224 ,  80  ,  -18 },
{ 2    ,  -4  ,  0   ,  -1  ,  -3  ,  0   ,  -28 ,  288 },
{ -1   ,  -3  ,  -1  ,  -2  ,  5   ,  -30 ,  62  ,  224 },
{ -1   ,  0   ,  2   ,  -1  ,  15  ,  -56 ,  160 ,  132 },
{ -3   ,  1   ,  1   ,  -2  ,  14  ,  -56 ,  240 ,  56 },
},
{
```

```
{ -80 ,    48 ,    -6 ,    0  ,    256 ,    63 ,    -40 ,    12 },
{ -192,    160 ,   28 ,   -10 ,   224 ,    80 ,    -48 ,    12 },
{ -192,    -10 ,   224 ,  -5  ,   160 ,    112 ,   -48 ,    10 },
{ -144,    14 ,    -60 ,  252 ,   96 ,     124 ,   -40 ,    9 },
{ 10  ,    1  ,    3  ,   -1  ,   -80 ,    248 ,   112 ,   -40 },
{ 3   ,    6  ,    4  ,   1   ,   -68 ,    192 ,   160 ,   -48 },
{ -9  ,    3  ,    18 ,   -5  ,   -62 ,    160 ,   192 ,   -48 },
{ -20 ,    -4 ,    -15 ,  36  ,   -60 ,    132 ,   224 ,   -48 },
{ -3  ,    2  ,    1  ,   1   ,   20 ,     -72 ,   224 ,   80 },
{ -3  ,    3  ,    -2 ,   -1  ,   18 ,     -66 ,   192 ,   112 },
{ -4  ,    1  ,    -3 ,   -2  ,   16 ,     -60 ,   160 ,   144 },
{ -3  ,    2  ,    1  ,   3   ,   15 ,     -48 ,   120 ,   160 },
{ 0   ,    -3 ,    -1 ,   -2  ,   -12 ,    24 ,    -72 ,   320 },
{ -3  ,    1  ,    -3 ,   -2  ,   -14 ,    20 ,    -68 ,   320 },
{ 2   ,    2  ,    4  ,   2   ,   -12 ,    28 ,    -64 ,   288 },
{ 1   ,    0  ,    2  ,   5   ,   -14 ,    24 ,    -56 ,   288 },
},
{
{ -72 ,    -7 ,    -2 ,   8   ,   320 ,    17 ,    -12 ,   3 },
{ -40 ,    -36 ,   -2 ,   12  ,   320 ,    9  ,    -9  ,   2 },
{ -48 ,    -7 ,    -28 ,  17  ,   320 ,    5  ,    -6  ,   2 },
{ -56 ,    -10 ,   -2 ,   7   ,   320 ,    3  ,    -7  ,   1 },
{ 20  ,    -2 ,    -2 ,   3   ,   -96 ,    320 ,   31 ,    -17 },
{ 10  ,    1  ,    -4 ,   5   ,   -80 ,    320 ,   20 ,    -15 },
{ 14  ,    -9 ,    0  ,   8   ,   -80 ,    320 ,   20 ,    -16 },
{ 15  ,    -5 ,    -4 ,   18  ,   -68 ,    288 ,   20 ,    -10 },
{ -8  ,    1  ,    1  ,   5   ,   31 ,     -96 ,   288 ,   31 },
{ -10 ,    -1 ,    -1 ,   7   ,   28 ,     -80 ,   288 ,   24 },
{ -9  ,    -4 ,    0  ,   12  ,   28 ,     -80 ,   288 ,   20 },
{ -10 ,    -7 ,    -4 ,   15  ,   24 ,     -72 ,   288 ,   20 },
{ 1   ,    0  ,    -2 ,   2   ,   -14 ,    28 ,    -80 ,   320 },
{ -3  ,    0  ,    -2 ,   7   ,   -10 ,    24 ,    -80 ,   320 },
{ -4  ,    -4 ,    -2 ,   12  ,   -10 ,    24 ,    -80 ,   320 },
{ -6  ,    -6 ,    -7 ,   17  ,   -10 ,    20 ,    -72 ,   320 },
},
{
{ -96 ,    20 ,    10 ,   6   ,   224 ,    264 ,   72 ,    24 },
{ -28 ,    -24 ,   14 ,   12  ,   80 ,     320 ,   112 ,   36 },
{ -15 ,    18 ,    -15 ,  6   ,   32 ,     320 ,   136 ,   40 },
{ -10 ,    12 ,    30 ,   -18 ,   4  ,     320 ,   144 ,   40 },
{ 12  ,    -4 ,    2  ,   2   ,   -14 ,    272 ,   224 ,   28 },
{ 4   ,    10 ,    -2 ,   -4  ,   7  ,     224 ,   252 ,   34 },
```

```
            { -1  ,   7   ,   4   ,  -10 ,   9   ,  224 ,   264 ,   36 },
            { -3  ,   9   ,   2   ,  -9  ,   14  ,  224 ,   256 ,   36 },
            { 7   ,   2   ,   6   ,  -2  ,   8   ,  96  ,   320 ,   80 },
            { 5   ,   7   ,   2   ,  -4  ,   7   ,  112 ,   320 ,   80 },
            { 2   ,   14  ,   2   ,  -8  ,   6   ,  124 ,   320 ,   72 },
            { 2   ,   15  ,   8   ,  -8  ,   10  ,  136 ,   288 ,   80 },
            { 5   ,   0   ,   3   ,  -6  ,   7   ,  36  ,   224 ,   252 },
            { 2   ,   8   ,   0   ,  -8  ,   8   ,  56  ,   320 ,   144 },
            { 4   ,   14  ,   5   ,  -7  ,   12  ,  72  ,   320 ,   112 },
            { 1   ,   12  ,   3   ,  -8  ,   14  ,  80  ,   320 ,   112 },
        },
        {
            { 96  ,   80  ,  -12 ,   1   ,   12  ,  80  ,   -2  ,   2 },
            { -28 ,   224 ,   40  ,  -5  ,  -24  ,  34  ,   9   ,   5 },
            { -3  ,  -30  ,   272 ,   12  ,  -24  ,  14  ,   9   ,   8 },
            { -7  ,   12  ,  -72 ,   320 ,  -12  ,  0   ,   3   ,   2 },
            { 36  ,   62  ,  -9  ,  -2  ,  -80  ,  192 ,   62  ,   -4 },
            { -32 ,   192 ,   30  ,  -1  ,  -80  ,  80  ,   48  ,   18 },
            { -10 ,  -10  ,   256 ,   1   ,  -48  ,  18  ,   17  ,   28 },
            { -7  ,   12  ,  -66 ,   288 ,  -12  ,  -5  ,   -1  ,   20 },
            { 14  ,   56  ,  -4  ,   1   ,  -48  ,  3   ,   160 ,   72 },
            { -48 ,   160 ,   28  ,  -2  ,  -80  ,  28  ,   72  ,   96 },
            { -24 ,   3   ,   240 ,  -4  ,  -72  ,  20  ,   3   ,   80 },
            { -16 ,   6   ,  -60 ,   288 ,  -30  ,  4   ,   -28 ,   40 },
            { 5   ,   48  ,  -2  ,   0   ,  -36  ,  2   ,   -18 ,   256 },
            { -56 ,   132 ,   24  ,  -3  ,  -64  ,  3   ,   -7  ,   224 },
            { -40 ,   14  ,   192 ,   0   ,  -72  ,  6   ,   -12 ,   144 },
            { -24 ,   2   ,  -48 ,   252 ,  -40  ,  -2  ,   -20 ,   64 }

        }
    };
```

or
wherein the MIP coefficients are any one of the following array:

```
const short mipMatrix16x16round_const[6][64][8] =
{
  {
    { -48 ,    32 ,    28 ,    9  ,    248 ,    -20 ,    9  ,    -2 },
    { -56 ,    10 ,    40 ,    33 ,    224 ,    2   ,    6  ,    -3 },
    { -28 ,    -28 ,   48 ,    66 ,    160 ,    36  ,    3  ,    -1 },
    { -9  ,    -33 ,   34 ,    96 ,    96  ,    72  ,    -1 ,    1  },
    { -8  ,    -6 ,    -9 ,    128 ,    48 ,    112 ,    -9 ,    0  },
```

```
{ -6  ,  15  ,  -24 ,  144 ,  3   ,  132 ,  -10 ,  2 },
{  0  ,  17  ,  -5  ,  128 ,  -36 ,  160 ,  -12 ,  2 },
{  8  ,  16  ,  12  ,  120 ,  -60 ,  160 ,  -7  ,  5 },
{ -14 ,  -17 ,  -1  ,  24  ,  112 ,  160 ,  -12 ,  2 },
{ -6  ,  -16 ,  -12 ,  36  ,  72  ,  192 ,  -12 ,  3 },
{ -7  ,  -8  ,  -24 ,  40  ,  40  ,  224 ,  -12 ,  2 },
{ -6  ,  -4  ,  -24 ,  40  ,  17  ,  240 ,  -10 ,  2 },
{ -2  ,  -4  ,  -17 ,  40  ,  0   ,  240 ,  -4  ,  2 },
{ -1  ,  -3  ,  -12 ,  40  ,  -16 ,  240 ,  4   ,  2 },
{  0  ,  2   ,  -12 ,  48  ,  -28 ,  224 ,  16  ,  3 },
{ -3  ,  3   ,  -15 ,  48  ,  -36 ,  224 ,  28  ,  4 },
{  1  ,  0   ,  -12 ,  14  ,  -5  ,  252 ,  2   ,  5 },
{  2  ,  0   ,  -14 ,  17  ,  -12 ,  248 ,  10  ,  4 },
{  1  ,  -2  ,  -15 ,  17  ,  -14 ,  240 ,  28  ,  1 },
{  0  ,  -3  ,  -14 ,  17  ,  -15 ,  224 ,  48  ,  -2 },
{ -1  ,  -2  ,  -14 ,  17  ,  -14 ,  192 ,  80  ,  -5 },
{ -3  ,  0   ,  -12 ,  18  ,  -14 ,  160 ,  112 ,  -7 },
{ -3  ,  0   ,  -12 ,  18  ,  -12 ,  136 ,  132 ,  -6 },
{ -2  ,  0   ,  -10 ,  20  ,  -12 ,  112 ,  144 ,  1 },
{  3  ,  2   ,  -5  ,  9   ,  -15 ,  144 ,  120 ,  -4 },
{ -1  ,  0   ,  -7  ,  7   ,  -14 ,  120 ,  160 ,  -9 },
{ -1  ,  0   ,  -8  ,  8   ,  -9  ,  80  ,  192 ,  -7 },
{  0  ,  1   ,  -7  ,  10  ,  -5  ,  66  ,  192 ,  -4 },
{ -3  ,  -2  ,  -9  ,  8   ,  -5  ,  40  ,  224 ,  0 },
{ -3  ,  -1  ,  -10 ,  9   ,  -4  ,  28  ,  224 ,  10 },
{ -4  ,  -2  ,  -10 ,  10  ,  -5  ,  16  ,  224 ,  24 },
{ -1  ,  1   ,  -8  ,  15  ,  -3  ,  16  ,  192 ,  40 },
{ -1  ,  0   ,  -4  ,  4   ,  -3  ,  10  ,  240 ,  9 },
{ -1  ,  0   ,  -5  ,  3   ,  -2  ,  -1  ,  240 ,  20 },
{ -1  ,  -1  ,  -6  ,  5   ,  -3  ,  -4  ,  224 ,  40 },
{ -1  ,  0   ,  -6  ,  8   ,  -3  ,  -4  ,  192 ,  66 },
{  0  ,  0   ,  -6  ,  9   ,  -3  ,  -2  ,  160 ,  96 },
{ -1  ,  0   ,  -7  ,  10  ,  -5  ,  -2  ,  144 ,  112 },
{ -1  ,  0   ,  -8  ,  14  ,  -5  ,  1   ,  120 ,  132 },
{  0  ,  1   ,  -8  ,  16  ,  -5  ,  7   ,  96  ,  144 },
{ -1  ,  1   ,  -2  ,  3   ,  -1  ,  -12 ,  144 ,  124 },
{ -3  ,  0   ,  -4  ,  3   ,  -3  ,  -10 ,  112 ,  160 },
{ -3  ,  -1  ,  -6  ,  5   ,  -6  ,  -6  ,  80  ,  192 },
{ -1  ,  0   ,  -4  ,  8   ,  -4  ,  -2  ,  64  ,  192 },
{ -2  ,  -1  ,  -7  ,  9   ,  -7  ,  -3  ,  40  ,  224 },
{ -2  ,  0   ,  -7  ,  14  ,  -7  ,  0   ,  30  ,  224 },
{ -3  ,  -1  ,  -9  ,  14  ,  -9  ,  0   ,  20  ,  240 },
```

```
{ -3 ,   -1 ,    -9 ,   15 ,   -10 ,    2 ,   17 ,   240 },
{ -1 ,    0 ,    -2 ,    3 ,    -1 ,   -2 ,    5 ,   252 },
{ -2 ,    0 ,    -3 ,    5 ,    -2 ,   -2 ,   -6 ,   264 },
{ -3 ,   -1 ,    -5 ,    7 ,    -3 ,   -3 ,  -10 ,   272 },
{ -2 ,    0 ,    -5 ,   10 ,    -4 ,   -4 ,  -14 ,   272 },
{ -3 ,    0 ,    -7 ,   14 ,    -4 ,   -4 ,  -16 ,   272 },
{ -3 ,    1 ,    -8 ,   17 ,    -5 ,   -5 ,  -17 ,   272 },
{ -3 ,    1 ,    -8 ,   18 ,    -7 ,   -5 ,  -17 ,   272 },
{ -3 ,    0 ,    -9 ,   18 ,    -8 ,   -4 ,  -15 ,   272 },
{ -1 ,    0 ,    -2 ,    6 ,     1 ,   -5 ,  -34 ,   288 },
{ -1 ,   -1 ,    -2 ,    7 ,    -1 ,   -5 ,  -32 ,   288 },
{ -2 ,    0 ,    -4 ,   10 ,    -2 ,   -7 ,  -31 ,   288 },
{  0 ,   -1 ,    -5 ,   12 ,    -3 ,   -8 ,  -31 ,   288 },
{ -2 ,    0 ,    -6 ,   15 ,    -4 ,   -9 ,  -30 ,   288 },
{ -3 ,    0 ,    -8 ,   18 ,    -5 ,  -10 ,  -30 ,   288 },
{ -3 ,    1 ,    -9 ,   18 ,    -7 ,  -10 ,  -28 ,   288 },
{ -4 ,    1 ,   -10 ,   18 ,    -8 ,  -12 ,  -24 ,   288 }
},
{
{ 80,  15,   0,  -1, 160,   6,  -1,  -3 },
{ 120,  34,   2,  -1,  96,   9,  -1,  -3 },
{ 112,  72,   9,  -1,  56,   7,   2,  -1 },
{ 72, 120,  24,  -1,  36,   4,   3,  -1 },
{ 40, 120,  72,   0,  24,   1,   2,  -3 },
{ 28,  62, 136,  12,  14,   1,   4,   0 },
{ 20,  14, 144,  68,   8,   1,   3,  -3 },
{ 16,  10,  34, 192,   6,   1,   0,  -2 },
{ 20,   6,   2,   1, 160,  66,   1,   0 },
{ 48,  12,   2,   0, 160,  36,   1,  -2 },
{ 80,  28,   1,   0, 124,  24,   1,  -3 },
{ 96,  48,   5,   0,  96,  14,   2,  -4 },
{ 96,  80,  18,  -1,  62,   6,   1,  -5 },
{ 68,  96,  48,   2,  40,   4,   2,  -4 },
{ 48,  80,  80,  12,  30,   4,   4,  -1 },
{ 40,  48,  96,  48,  20,   3,   3,  -2 },
{  5,   2,   2,   1,  80, 160,   6,  -1 },
{ 16,   2,   1,   1, 124, 112,   4,  -4 },
{ 36,   8,   1,   1, 136,  72,   4,  -2 },
{ 60,  20,   1,   1, 128,  48,   3,  -4 },
{ 80,  36,   3,  -1, 112,  31,   1,  -5 },
{ 80,  62,  12,   2,  80,  20,   3,  -3 },
{ 72,  72,  30,   2,  64,  15,   3,  -3 },
```

```
{ 60,  72,  56,  10,  48,  12,   3,  -5 },
{  1,  -3,  -2,  -1,  17, 192,  60,  -7 },
{  5,   0,   1,   2,  56, 160,  34,  -3 },
{ 12,   1,  -2,   0,  96, 132,  20,  -5 },
{ 28,   4,  -3,  -1, 112, 112,   9,  -6 },
{ 48,  15,   0,   0, 112,  80,   6,  -5 },
{ 60,  30,   1,   0, 112,  56,   3,  -6 },
{ 64,  48,   9,   1,  96,  40,   3,  -5 },
{ 62,  60,  24,   5,  72,  34,   3,  -5 },
{  1,  -2,   1,   0,   6,  96, 160,  -7 },
{  1,  -2,   0,   1,  24, 128, 112,  -6 },
{  3,  -2,   0,   1,  48, 144,  68,  -5 },
{ 10,   0,  -1,   1,  68, 136,  48,  -6 },
{ 20,   5,   1,   3,  80, 124,  28,  -4 },
{ 34,  14,   1,   2,  96,  96,  17,  -5 },
{ 40,  28,   3,   3,  96,  80,  12,  -5 },
{ 48,  40,  10,   5,  80,  68,  10,  -5 },
{  2,   1,   3,   2,   7,  14, 192,  36 },
{ -3,  -2,  -2,  -2,   7,  56, 192,   9 },
{ -3,  -1,   0,   0,  18,  96, 144,   2 },
{  1,  -1,   1,   1,  36, 126,  96,  -3 },
{  6,  -2,   0,   1,  48, 136,  72,  -5 },
{ 15,   2,   0,   2,  68, 128,  48,  -7 },
{ 24,  10,   0,   3,  72, 120,  34,  -6 },
{ 32,  20,   4,   3,  80,  96,  28,  -7 },
{  0,  -1,  -1,  -1,   0,   3,  96, 160 },
{ -2,  -1,  -1,  -1,   2,  17, 144,  96 },
{ -4,  -2,  -1,   0,   7,  48, 160,  48 },
{ -6,  -3,   1,   2,  18,  80, 144,  18 },
{ -3,  -3,   2,   2,  30,  96, 126,   5 },
{  3,  -3,   0,   3,  40, 120,  96,  -3 },
{ 10,   2,  -1,   3,  56, 120,  72,  -5 },
{ 16,  10,   2,   4,  60, 112,  56,  -3 },
{  0,  -2,  -1,   0,   0,  14, -28, 272 },
{  0,   0,   1,   2,   3,  20,  36, 192 },
{ -4,  -2,  -1,   1,   2,  28,  96, 136 },
{ -5,  -3,   0,   1,   8,  48, 128,  80 },
{ -5,  -4,   1,   2,  15,  64, 136,  48 },
{ -2,  -4,   1,   4,  24,  80, 126,  28 },
{  8,   5,   4,   8,  40,  96,  80,  14 },
{  8,   5,   4,   8,  40,  96,  80,  14 }
},
```

```
{
    { 72  ,  16  ,  6   ,  4   ,  136 ,  10  ,  8   ,  4 },
    { 48  ,  80  ,  4   ,  9   ,  68  ,  33  ,  10  ,  4 },
    { -14 ,  144 ,  15  ,  16  ,  36  ,  40  ,  14  ,  5 },
    { -28 ,  96  ,  80  ,  17  ,  18  ,  48  ,  18  ,  7 },
    { -17 ,  24  ,  144 ,  34  ,  2   ,  40  ,  20  ,  8 },
    { -10 ,  -5  ,  96  ,  112 ,  -7  ,  36  ,  28  ,  9 },
    { -10 ,  -3  ,  20  ,  192 ,  -14 ,  28  ,  33  ,  10 },
    { -6  ,  -2  ,  -9  ,  224 ,  -18 ,  12  ,  40  ,  18 },
    { -10 ,  18  ,  8   ,  5   ,  112 ,  120 ,  -4  ,  8 },
    { -12 ,  40  ,  16  ,  17  ,  56  ,  120 ,  9   ,  12 },
    { -24 ,  60  ,  24  ,  28  ,  14  ,  120 ,  20  ,  14 },
    { -24 ,  40  ,  48  ,  40  ,  -10 ,  112 ,  34  ,  17 },
    { -18 ,  12  ,  64  ,  64  ,  -28 ,  96  ,  48  ,  18 },
    { -14 ,  -5  ,  48  ,  112 ,  -33 ,  63  ,  63  ,  24 },
    { -7  ,  -5  ,  12  ,  144 ,  -33 ,  40  ,  72  ,  33 },
    { -3  ,  -5  ,  -2  ,  160 ,  -32 ,  18  ,  72  ,  48 },
    { -8  ,  9   ,  10  ,  12  ,  12  ,  192 ,  10  ,  18 },
    { -10 ,  15  ,  15  ,  24  ,  -4  ,  160 ,  36  ,  20 },
    { -14 ,  14  ,  16  ,  40  ,  -20 ,  136 ,  62  ,  24 },
    { -14 ,  8   ,  18  ,  56  ,  -31 ,  96  ,  96  ,  28 },
    { -12 ,  1   ,  18  ,  72  ,  -36 ,  66  ,  112 ,  36 },
    { -9  ,  -3  ,  12  ,  96  ,  -40 ,  40  ,  112 ,  48 },
    { -5  ,  -4  ,  3   ,  112 ,  -36 ,  18  ,  96  ,  72 },
    { -3  ,  -5  ,  1   ,  120 ,  -36 ,  3   ,  80  ,  96 },
    { -4  ,  -1  ,  6   ,  14  ,  -16 ,  136 ,  112 ,  10 },
    { -5  ,  -2  ,  6   ,  24  ,  -16 ,  96  ,  128 ,  24 },
    { -8  ,  -1  ,  4   ,  36  ,  -20 ,  60  ,  144 ,  40 },
    { -8  ,  -1  ,  2   ,  48  ,  -24 ,  36  ,  144 ,  60 },
    { -5  ,  -2  ,  4   ,  60  ,  -28 ,  20  ,  128 ,  80 },
    { -5  ,  -3  ,  -2  ,  68  ,  -31 ,  6   ,  112 ,  112 },
    { -3  ,  -3  ,  -1  ,  80  ,  -30 ,  -4  ,  80  ,  136 },
    { -3  ,  -5  ,  -2  ,  80  ,  -31 ,  -10 ,  66  ,  160 },
    { 0   ,  -2  ,  2   ,  16  ,  -7  ,  24  ,  192 ,  30 },
    { 0   ,  -3  ,  1   ,  28  ,  -10 ,  16  ,  160 ,  63 },
    { -4  ,  -2  ,  -5  ,  34  ,  -15 ,  7   ,  144 ,  96 },
    { -3  ,  -1  ,  -6  ,  40  ,  -18 ,  2   ,  112 ,  128 },
    { -2  ,  -2  ,  -4  ,  48  ,  -20 ,  -4  ,  80  ,  160 },
    { -3  ,  -3  ,  -6  ,  48  ,  -24 ,  -10 ,  63  ,  192 },
    { 0   ,  -1  ,  -4  ,  56  ,  -24 ,  -12 ,  48  ,  192 },
    { 2   ,  0   ,  -1  ,  60  ,  -24 ,  -12 ,  36  ,  192 },
    { 0   ,  -5  ,  -4  ,  12  ,  -6  ,  -5  ,  144 ,  120 },
```

```
{ -1  ,   -5  ,   -9  ,   20  ,   -12 ,   -8  ,   112 ,   160 },
{ -2  ,   -1  ,   -12 ,   28  ,   -14 ,   -9  ,   72  ,   192 },
{ 0   ,    1  ,   -8  ,   34  ,   -12 ,   -9  ,   56  ,   192 },
{ -1  ,   -1  ,   -6  ,   34  ,   -17 ,   -14 ,   34  ,   224 },
{ -1  ,   -2  ,   -6  ,   36  ,   -20 ,   -15 ,   20  ,   240 },
{ 1   ,   -1  ,   -4  ,   40  ,   -20 ,   -17 ,   14  ,   240 },
{ 1   ,   -2  ,   -2  ,   40  ,   -20 ,   -18 ,   7   ,   248 },
{ 1   ,   -3  ,   -6  ,   10  ,   -4  ,   -6  ,   40  ,   224 },
{ 1   ,   -1  ,   -12 ,   18  ,   -7  ,   -9  ,   24  ,   240 },
{ -1  ,    2  ,   -14 ,   24  ,   -8  ,   -12 ,   12  ,   252 },
{ -2  ,    2  ,   -12 ,   24  ,   -10 ,   -16 ,   4   ,   264 },
{ 0   ,    0  ,   -5  ,   24  ,   -12 ,   -16 ,   -2  ,   264 },
{ 0   ,   -1  ,   -3  ,   24  ,   -14 ,   -18 ,   -9  ,   272 },
{ 1   ,   -1  ,   -2  ,   28  ,   -15 ,   -20 ,   -12 ,   272 },
{ 1   ,   -1  ,   -2  ,   31  ,   -18 ,   -20 ,   -14 ,   272 },
{ 2   ,   -1  ,   -8  ,   9   ,   -2  ,   -6  ,   -12 ,   272 },
{ 3   ,    1  ,   -10 ,   15  ,   -3  ,   -10 ,   -14 ,   272 },
{ -1  ,    2  ,   -12 ,   15  ,   -7  ,   -15 ,   -18 ,   288 },
{ -3  ,    3  ,   -10 ,   17  ,   -7  ,   -16 ,   -20 ,   288 },
{ -1  ,    1  ,   -5  ,   17  ,   -8  ,   -17 ,   -24 ,   288 },
{ -1  ,    0  ,   -3  ,   18  ,   -9  ,   -20 ,   -24 ,   288 },
{ -1  ,    0  ,   -2  ,   20  ,   -12 ,   -20 ,   -24 ,   288 },
{ 0   ,   -2  ,   -3  ,   24  ,   -14 ,   -20 ,   -24 ,   288 }
},
{
{ -20 ,   96  ,   -14 ,   -4  ,   192 ,   14  ,   -6  ,   -1 },
{ -40 ,   160 ,   12  ,   -5  ,   68  ,   80  ,   -20 ,   2 },
{ -17 ,   80  ,   96  ,   -4  ,   5   ,   112 ,   -14 ,   -2 },
{ 2   ,   -3  ,   160 ,   24  ,   -15 ,   80  ,   18  ,   -10 },
{ 6   ,   -12 ,   96  ,   96  ,   -10 ,   40  ,   48  ,   -7 },
{ 4   ,   -2  ,   24  ,   160 ,   -9  ,   12  ,   62  ,   5 },
{ 1   ,    0  ,   -1  ,   192 ,   -7  ,   -12 ,   56  ,   28 },
{ 5   ,    4  ,   2   ,   160 ,   -5  ,   -20 ,   48  ,   60 },
{ -30 ,   48  ,   24  ,   -3  ,   56  ,   192 ,   -40 ,   8 },
{ -4  ,    8  ,   72  ,   4   ,   -7  ,   192 ,   -6  ,   -3 },
{ 5   ,   -17 ,   80  ,   40  ,   -20 ,   120 ,   56  ,   -7 },
{ 5   ,   -14 ,   40  ,   96  ,   -16 ,   48  ,   96  ,   3 },
{ 5   ,   -6  ,   10  ,   124 ,   -10 ,   6   ,   96  ,   32 },
{ 5   ,    0  ,   -6  ,   136 ,   -9  ,   -15 ,   80  ,   64 },
{ 3   ,    5  ,   -10 ,   132 ,   -9  ,   -24 ,   64  ,   96 },
{ 6   ,    6  ,   -5  ,   120 ,   -10 ,   -28 ,   40  ,   126 },
{ 7   ,   -10 ,   33  ,   5   ,   -24 ,   224 ,   24  ,   -3 },
```

```
{ 8  , -20 , 34  , 34  , -18 , 112 , 112 , -6 },
{ 6  , -14 , 10  , 68  , -10 , 34  , 144 , 18 },
{ 4  , -5  , -9  , 96  , -9  , -4  , 124 , 60 },
{ 3  , 1   , -12 , 96  , -7  , -17 , 96  , 96 },
{ 3  , 4   , -12 , 96  , -8  , -24 , 66  , 132 },
{ 5  , 6   , -6  , 80  , -8  , -24 , 40  , 160 },
{ 5  , 8   , 0   , 80  , -8  , -20 , 28  , 160 },
{ 7  , -15 , 10  , 20  , -14 , 68  , 192 , -12 },
{ 2  , -12 , -6  , 48  , -6  , 9   , 192 , 30 },
{ 4  , -2  , -12 , 63  , -1  , -7  , 132 , 80 },
{ 4  , 1   , -15 , 66  , -3  , -14 , 80  , 136 },
{ 4  , 4   , -12 , 64  , -4  , -16 , 56  , 160 },
{ 1  , 4   , -8  , 60  , -7  , -18 , 30  , 192 },
{ 3  , 7   , -2  , 56  , -6  , -17 , 18  , 192 },
{ 4  , 6   , 2   , 56  , -6  , -16 , 14  , 192 },
{ 3  , -5  , -8  , 28  , 0   , -3  , 192 , 48 },
{ 2  , -2  , -16 , 40  , -2  , -10 , 124 , 120 },
{ 1  , 2   , -17 , 48  , -1  , -10 , 72  , 160 },
{ 3  , 3   , -14 , 48  , -3  , -12 , 36  , 192 },
{ 1  , 1   , -10 , 40  , -7  , -12 , 17  , 224 },
{ 3  , 3   , -6  , 40  , -8  , -12 , 9   , 224 },
{ 2  , 5   , -2  , 40  , -9  , -12 , 4   , 224 },
{ 2  , 4   , -1  , 40  , -9  , -12 , 3   , 224 },
{ 1  , 0   , -14 , 20  , -1  , -5  , 96  , 160 },
{ 3  , 2   , -15 , 30  , -2  , -3  , 48  , 192 },
{ 1  , 2   , -16 , 31  , -3  , -5  , 20  , 224 },
{ 0  , 1   , -12 , 30  , -6  , -8  , 7   , 240 },
{ 1  , 2   , -7  , 30  , -7  , -8  , 2   , 240 },
{ 1  , 2   , -4  , 28  , -8  , -8  , -1  , 240 },
{ 1  , 3   , -2  , 28  , -9  , -9  , -2  , 240 },
{ 1  , 3   , 0   , 28  , -10 , -9  , -3  , 240 },
{ -1 , 1   , -14 , 14  , -3  , -2  , 20  , 240 },
{ 0  , 3   , -14 , 18  , -3  , -2  , 4   , 248 },
{ 0  , 3   , -12 , 20  , -5  , -3  , -1  , 252 },
{ 0  , 1   , -8  , 20  , -6  , -5  , -3  , 252 },
{ 1  , 1   , -4  , 18  , -8  , -6  , -3  , 252 },
{ 1  , 1   , -2  , 18  , -10 , -6  , -4  , 252 },
{ 0  , 2   , 0   , 20  , -10 , -7  , -5  , 248 },
{ 1  , 2   , 1   , 20  , -10 , -7  , -1  , 240 },
{ 0  , 3   , -12 , 8   , -1  , -1  , -1  , 256 },
{ 0  , 3   , -12 , 12  , -4  , -1  , -3  , 256 },
{ 0  , 3   , -9  , 12  , -5  , -2  , 0   , 252 },
```

```
{ 0    ,   2   ,   -5  ,   12  ,   -6  ,   -4  ,   -1  ,   252 },
{ 0    ,   1   ,   -3  ,   12  ,   -7  ,   -5  ,   -1  ,   252 },
{ 0    ,   2   ,   -1  ,   14  ,   -9  ,   -5  ,   -1  ,   248 },
{ -1   ,   2   ,   0   ,   15  ,   -9  ,   -5  ,   -3  ,   248 },
{ 1    ,   1   ,   1   ,   17  ,   -9  ,   -5  ,   -2  ,   240 }
},
{
    { -36, 15,   1,   0, 320, -48,   6,  -1 },
    { -34, 17,   6,   6, 288, -40,  10,   2 },
    { -33, 15,   8,   6, 288, -40,  10,   2 },
    { -36, 15,  10,   6, 288, -40,   9,   2 },
    { -40, 20,   7,   9, 288, -40,   9,   2 },
    { -48, 20,  12,  10, 288, -36,   8,   1 },
    { -56, 14,  31,   7, 288, -36,   7,   1 },
    { -60,  9,  28,  28, 272, -31,   7,   2 },
    { -40,  1,  -1,  -1, 224,  96, -24,   2 },
    { -40,  1,  -2,  -1, 224,  96, -24,   2 },
    { -48,  7,  -2,   1, 224,  96, -24,   3 },
    { -48,  6,  -1,   1, 224,  96, -24,   2 },
    { -40, -1,   2,  -2, 224,  96, -24,   1 },
    { -40, -2,   1,   0, 224,  96, -24,   0 },
    { -40,  3,   1,   8, 192, 112, -24,   4 },
    { -40,  3,   1,   7, 192, 112, -24,   4 },
    { -1,  -2,  -1,  -2,   7, 288, -36,   2 },
    { -1,  -2,  -1,  -1,   7, 288, -36,   3 },
    { -2,  -1,   0,  -1,   6, 288, -36,   2 },
    { -2,  -2,   1,   0,   6, 288, -36,   2 },
    { -2,  -3,   1,   0,   6, 288, -36,   2 },
    { -3,  -3,   0,   0,   6, 288, -34,   2 },
    { -4,  -5,   0,   1,   7, 288, -33,   1 },
    { -5,  -3,   2,   4,  10, 272, -28,   3 },
    { 12,  -2,   1,   1, -40, 192, 112, -20 },
    { 10,  -1,   2,   2, -40, 192, 112, -20 },
    { 9,   0,   1,   1, -40, 192, 112, -20 },
    { 9,   0,   2,   2, -40, 192, 112, -20 },
    { 7,  -3,   3,   1, -36, 192, 112, -20 },
    { 7,  -3,   2,   2, -40, 192, 120, -24 },
    { 7,  -3,   0,   0, -36, 192, 120, -24 },
    { 6,  -4,   1,   1, -36, 192, 120, -24 },
    { 3,   0,   1,   1,  -3,   9, 272, -28 },
    { 2,   1,   1,   1,  -3,   9, 272, -28 },
    { 0,   1,   1,   1,  -3,   7, 272, -24 },
```

```
{ 0,    1,    2,    1,    -2,    7, 272, -24 },
{ -1,    1,    2,    2,    -3,    7, 272, -24 },
{ -1,    0,    2,    2,    -3,    7, 272, -24 },
{ -1,   -1,    1,    2,    -4,    7, 272, -20 },
{ -1,   -1,    2,    3,    -3,   10, 264, -17 },
{ 2,    1,    3,    3,     9, -36, 192,  80 },
{ 1,    3,    3,    3,    10, -36, 192,  80 },
{ 0,    3,    3,    3,     9, -34, 192,  80 },
{ 0,    3,    3,    3,     9, -34, 192,  80 },
{ 0,    2,    4,    3,     9, -33, 192,  80 },
{ -2,    0,    2,    0,     5, -36, 192,  96 },
{ -3,    0,    1,    2,     5, -36, 192,  96 },
{ -3,   -1,    1,    1,     4, -34, 192,  96 },
{ 0,    0,    0,    1,     2,   -3,  16, 240 },
{ 0,    0,    0,   -1,     0,   -4,  14, 248 },
{ -1,    1,    0,   -1,     1,   -5,  12, 248 },
{ -2,    1,    1,   -1,     1,   -5,  12, 248 },
{ -2,    0,    2,   -1,     1,   -5,  12, 248 },
{ -2,    0,    2,    0,     0,   -5,  12, 248 },
{ -2,    0,    2,    1,     1,   -6,  12, 248 },
{ -3,    0,    2,    2,     2,   -3,  16, 240 },
{ 1,   -1,   -2,   -1,    -3,    9, -68, 320 },
{ -2,    0,   -1,   -1,    -4,    7, -64, 320 },
{ -2,    1,   -1,   -1,    -3,    8, -66, 320 },
{ -3,    1,    0,   -1,    -3,    8, -66, 320 },
{ -3,    0,    1,   -1,    -4,    8, -66, 320 },
{ -3,   -1,    1,   -1,    -4,    7, -64, 320 },
{ -5,   -2,    0,    1,    -4,    7, -62, 320 },
{ -5,   -2,    0,    1,    -4,    7, -62, 320 }
},
{
{ 60,   20,    8,    2, 160,    1,    3,    2 },
{ 16,   96,    5,    3, 126,    7,    2,    1 },
{ -60, 192,   15,    4,  96,    9,    0,   -1 },
{ -80, 160,   96,   -4,  80,    9,   -3,   -3 },
{ -72,   60, 192,    6,  62,   10,   -1,   -1 },
{ -56,    9, 160,   80,  48,   12,    0,    2 },
{ -48,   10,   48, 192,  40,   12,    0,    1 },
{ -48,   15,  -24, 264,  32,   14,    0,    2 },
{ -36,   36,    6,    2, 160,   96,  -10,    1 },
{ -80,   96,   12,    4, 160,   72,   -6,   -3 },
{ -136, 144,   28,    8, 144,   72,   -2,   -1 },
```

{ -160, 144, 80, 8, 128, 62, -4, -3 },
{ -160, 72, 144, 24, 112, 60, 1, 1 },
{ -136, 32, 132, 80, 96, 56, -2, -2 },
{ -126, 20, 48, 192, 80, 48, -2, -4 },
{ -112, 20, -4, 240, 64, 48, 0, 0 },
{ -32, 28, 8, 4, 34, 224, -12, 2 },
{ -80, 63, 14, 4, 48, 224, -14, -4 },
{ -124, 96, 32, 12, 56, 192, -7, -1 },
{ -160, 96, 72, 24, 64, 160, -2, 2 },
{ -160, 62, 112, 32, 62, 160, -8, -5 },
{ -160, 36, 96, 80, 66, 144, -2, -3 },
{ -160, 28, 48, 160, 66, 120, 0, -4 },
{ -160, 28, 9, 192, 63, 112, 9, 2 },
{ -24, 20, 10, 6, -20, 192, 80, -7 },
{ -63, 40, 15, 8, -20, 224, 60, -9 },
{ -96, 64, 28, 14, -18, 224, 48, -9 },
{ -128, 63, 56, 24, -14, 224, 40, -8 },
{ -144, 40, 80, 40, -9, 224, 34, -10 },
{ -160, 32, 80, 80, 1, 192, 33, -2 },
{ -160, 24, 36, 136, 3, 192, 28, -3 },
{ -160, 20, 10, 192, 6, 160, 28, -2 },
{ -24, 15, 8, 4, -5, 48, 224, -14 },
{ -48, 33, 16, 12, -6, 72, 192, -14 },
{ -80, 40, 24, 16, -15, 96, 192, -17 },
{ -96, 40, 40, 28, -16, 112, 160, -12 },
{ -120, 28, 60, 48, -20, 128, 144, -12 },
{ -128, 20, 48, 80, -20, 136, 128, -9 },
{ -136, 17, 28, 120, -24, 144, 112, -6 },
{ -144, 16, 9, 160, -24, 144, 96, -1 },
{ -20, 10, 7, 4, 3, -28, 224, 56 },
{ -48, 20, 10, 12, 2, -20, 240, 40 },
{ -66, 28, 18, 20, -2, -10, 240, 28 },
{ -80, 24, 32, 31, -4, 4, 224, 24 },
{ -96, 15, 40, 48, -9, 17, 224, 17 },
{ -112, 10, 33, 72, -14, 30, 224, 12 },
{ -112, 8, 15, 112, -18, 48, 192, 10 },
{ -124, 7, 3, 132, -24, 56, 192, 12 },
{ -12, 9, 7, 5, -1, -6, 62, 192 },
{ -32, 14, 6, 10, -5, -10, 80, 192 },
{ -48, 18, 15, 24, -3, -8, 96, 160 },
{ -60, 10, 24, 31, -5, -7, 120, 144 },
{ -72, 4, 28, 48, -9, -7, 136, 128 },

```
{ -80,    3,   18,   72, -12,   -3, 144, 112 },
{ -96,    3,    7,   96, -12,    0, 160,   96 },
{ -96,    2,   -4, 112, -18,    4, 160,   96 },
{ -14,    4,    2,    4,   -7,   14, -68, 320 },
{ -24,  12,    6,   16,   -3,   17, -56, 288 },
{ -36,    9,    8,   20,   -6,   12, -40, 288 },
{ -48,    4,   14,   34,   -8,   12, -24, 272 },
{ -56,   -2,   14,   48, -12,   10, -12, 264 },
{ -66,   -2,    7,   66, -12,    9,    5, 248 },
{ -80,   -3,   -8,   96, -16,    9,   32, 224 },
{ -80,   -3,   -8,   96, -16,    9,   32, 224 }

        }
    }.
```

3. The method of any of the previous claims, wherein the magnitude of the MIP coefficients requires 9 bits for representing, $M \leq 8$.

4. The method of any of the previous claims, wherein the two lines of reconstructed neighboring samples are two top rows of reconstructed neighboring samples; or

   the two lines of reconstructed neighboring samples are two left columns of reconstructed neighboring samples; or the two lines (802) of reconstructed neighboring samples are one left column of reconstructed neighboring samples and one top row of reconstructed neighboring samples.

5. The method of any of the previous claims, wherein said step of determining includes obtaining (S1104) the value of the MIP indication information from a bitstream.

6. The method of any of the previous claims, wherein the MIP intra prediction mode is obtained from a bitstream.

7. The method of any of the previous claims, wherein the value of the MIP indication information and/or the MIP intra prediction mode is signaled in a bitstream.

8. A method of coding implemented by a decoding device (30) for decoding a current block of an image, the method using intra prediction of the current block, the method comprising the steps of providing a predicted block (365) for the encoded current block by performing all steps of a method of any of the previous claims for the current block; and restoring the current block on the basis of the encoded block and the predicted block (365).

9. A method of coding implemented by an encoding device (20) for encoding a current block (203) of an image, the method using intra prediction of the current block (203), the method comprising the steps of

   providing a prediction block (265) for the current block (203) by performing all steps of a method of any of claims 1 to 4 and 7 for the current block (203); and encoding the current block (203) on the basis of the prediction block (265).

10. A computer program product comprising program code which, when the program is executed by a computer, causes the computer to carry out the method according to any one of claims 1 to 9.

11. A decoder, comprising:

    one or more processors (430); and

a non-transitory computer-readable storage medium (460) coupled to the processors (430) and storing programming for execution by the processors (430), wherein the programming, when executed by the processors (430), configures the decoder to carry out the method according to any one of claims 1 to 8.

**12.** An encoder, comprising:

one or more processors (430); and
a non-transitory computer-readable storage medium (460) coupled to the processors (430) and storing programming for execution by the processors (430), wherein the programming, when executed by the processors (430), configures the encoder to carry out the method according to any one of claims 1 to 4, 7 or 9.

**Patentansprüche**

**1.** Verfahren für eine Intraprädiktion eines Blocks, das die Schritte umfasst:

- Bestimmen (S1102) eines Werts einer matrixbasierten Intraprädiktions(MIP)-Anzeigeinformation für einen aktuellen Block (203) basierend auf der Blockgröße (W, H) des aktuellen Blocks (203), wobei die MIP-Anzeigeinformation definiert ist als

$$idx(W, H) = \begin{cases} 0 & \text{für } W = H = 4 \\ 1 & \text{für } \max(W, H) = 8 \\ 2 & \text{für } \max(W, H) > 8. \end{cases}$$

für einen rechteckigen Block mit einer Breite W und einer Höhe H;
- Erhalten (S1100, S1104) von zwei Zeilen (802) rekonstruierter benachbarter Abtastwerte und eines MIP-Intraprädiktionsmodus;
- Ableiten (S700, S1108) eines Satzes von Referenzabtastwerten (804) basierend auf den zwei Zeilen (802) rekonstruierter benachbarter Abtastwerte, dem Wert der MIP-Anzeigeinformationen und dem MIP-Intraprädiktionsmodus;
- Erhalten (S704, S1106) eines Satzes von MIP-Koeffizienten basierend auf dem Wert der MIP-Anzeigeinformationen und dem MIP-Intraprädiktionsmodus;

wobei eine Größe eines beliebigen MIP-Koeffizienten $C_{MIP}$ des Satzes von MIP-Koeffizienten als die folgende Reihe dargestellt wird:

$$C_{MIP} = \sum_{i=0}^{M} a_i \cdot 2^i$$

wobei $a_i$ = {-1, 0, 1} oder $a_i$ = {0, 1} und M eine nicht negative ganze Zahl ist; und

- Erhalten (S702, S706, S1110) eines Prädiktionsblocks (265, 365, 806) basierend auf dem Satz von Referenzabtastwerten (804) und dem Satz von MIP-Koeffizienten, wobei das Erhalten eines Prädiktionsblocks i) das Erhalten eines reduzierten Prädiktionsblocks durch Berechnen einer Matrix-Vektor-Multiplikation basierend auf dem Satz von Referenzabtastwerten und dem Satz von MIP-Koeffizienten und ii) ein Aufwärtstasten des reduzierten Prädiktionsblocks durch Interpolation umfasst, wobei die Matrix-Vektor-Multiplikation durch Additions-/Subtraktions- und Verschiebevorgängen ersetzt wird, wobei ein rekonstruiertes Bild basierend auf dem Prädiktionsblock (265, 365, 806) erhalten wird,

wobei die Anzahl der von Null verschiedenen Bits in dem MIP-Koeffizienten $C_{MIP}$ nicht größer als ein Schwellenwert $N_{THR}$ ist,

$$\sum_{i=0}^{M} abs(a_i) \le N_{THR}$$

das heißt,
mit $N_{THR} \le M$ und
wobei $N_{THR}$ gleich 2 ist und der MIP-Koeffizient $C_{MIP}$ als die folgende Reihe dargestellt wird:

$$C_{MIP} = a_i \bullet 2^i + a_j \bullet 2^j,$$

wobei $i \neq j$.

2. Verfahren nach einem der vorstehenden Ansprüche, wobei die MIP-Koeffizienten ein beliebiges des folgenden Arrays sind:

```
const short mipMatrix4x4round_const[18][16][4] =
{
  {
    {132, -14, 144, -14},
    {160, 68, 5, 24},
    {-32, 272, -9, 30},
    {-66, 248, 9, 10},
    {-5, 17, 192, 60},
    {2, 124, 9, 124},
    {-60, 192, -40, 96},
    {-18, 112, -36, 64},
    {-12, 28, -28, 272},
    {-36, 80, -56, 192},
    {-24, 80, -28, 80},
    {-14, 72, -24, 72},
    {3, 10, -56, 240},
    {-33, 68, -12, 96},
    {-24, 72, -9, 66},
    {-18, 72, -17, 66}
  },
  {
    {32, -10, 224, 6}
    {136, -36, 144, 7},
    {96, 124, 34, -1},
    {-9, 272, -10, -4},
    {-9, 3, 264, -7},
    {-18, -8, 288, -18},
    {-4, -9, 264, -15},
```

{-120, 192, 160, -5},

{4, -6, 96, 160},

{3, -10, 48, 192},

{7, -36, 12, 224},

{-34, -15, -4, 240},

{0, -15, -126, 384},

{0, -24, -126, 384},

{0, -24, -124, 320},

{16, -34, -112, 320}

},

{

{160, 14, 112, -40},

{248, -6, 33, -34},

{224, 40, 16, -28},

{-80, 320, 5, -20},

{-56, 3, 264, 40},

{-6, 14, 192, 24},

{96, 7, 72, 17},

{-56, 224, -24, 12},

{-6, -3, 1, 264},

{-24, 0, 12, 256},

{-15, -7, 16, 240},

{-40, 40, -20, 224},

{-2, 3, 6, 248},

{-4, 4, 6, 248},

{-5, 2, 12, 248},

{-1, -12, 17, 248}

},

{

{40, -6, 248, -28},

{224, -17, 48, -2},

{96, 192, -36, 2},

{-32, 272, 4, 8},

{-9, 9, 192, 64},

{48, -20, 160, 64},

{96, 112, -10, 56},

{-5, 272, -48, 20},

{3, 5, 24, 224},

{3, -8, 36, 224},

{-17, 40, 68, 160},

{-72, 224, 20, -8},

{-3, 0, 4, 252},

{6, 0, 2, 248},

{-15, -9, 40, 224},

{-192, 80, 192, -33}

},

{

{96, -18, 240, -68},

{48, 63, 160, -24},

{-48, 192, 40, 48},

{-20, 192, -72, 120},

{-48, 3, 160, 136},

{-48, 2, 64, 224},

{-28, 1, 14, 248},

{-14, 1, -6, 256},

{3, 1, -17, 264},

{0, 1, -12, 264},

{-5, 5, 2, 248},

{-9, 4, 7, 248},

{-6, 1, 8, 248},

{-7, 2, 7, 248},

{-10, 5, 6, 248},

{-10, 5, 4, 248}

},

{

{68, 1, 192, -3},

{192, -15, 72, 3},

{272, -20, -1, 1},

{160, 96, -3, 2},

{-14, -2, 288, -17},

{2, 3, 264, -15},

{96, -3, 160, -3},

```
        {224, -28, 56, 0},
        {2,0, 144, 112},
        {-1, -5, 240, 20},
        {-15, -1, 288, -18},
        {20, 2, 248, -18},
        {4, -1, -36, 288},
        {3, -7, 20, 240},
        {6, -7, 112, 144},
        {1, -3, 192, 56}
},
{
        {144, -10, 136, -10},
        {112, 80, 80, -16},
        {-6, 240, 40, -20},
        {-20, 264, 9, 0},
        {-72, 12, 288, 24},
        {-96, 63, 224, 60},
        {-132, 160, 96, 132},
        {-72, 192, -48, 160},
        {-15, -4, 36, 240},
        {-24, 20, -40, 288},
        {-30, 48, -62, 240},
        {-34, 62, -40, 160},
        {20, 20, -96, 288},
        {1, 40, -60, 192},
        {-8, 56, -24, 112},
        {-12, 62, -9, 96}
},
{
        {192, 9, 80, -20},
        {272, -10, -12, 1},
        {224, 28, 2, 5},
        {-20, 272, -2, 0},
        {0, 1, 256, -1},
        {144, 7, 120, -20},
        {288, -28, 9, -20},
```

{160, 96, 9, -18},

{-15, -2, 48, 224},

{-15, -5, 80, 192},

{112, -8, 9, 132},

{256, -28, -72, 72},

{5, 2, -16, 264},

{-3, 1, -17, 272},

{-8, -2, -14, 272},

{96, -30, -96, 256}

},

{

{192, -40, 132, -36},

{288, -48, 36, -34},

{68, 192, 10, -28},

{-15, 264, 20, -24},

{-56, 9, 256, 40},

{48, -36, 192, 24},

{68, 40, 66, 20},

{-48, 240, -36, 15},

{-12, 1, 1, 264},

{-20, -1, 8, 256},

{-12, -18, 7, 248},

{-120, 136, -48, 224},

{-3, 3, 7, 248},

{-5, 5, 8, 248},

{0, -2, 9, 252},

{-36, 24, 16, 248}

},

{

{-40, 96, 264, -60},

{-96, 160, 136, 56},

{-60, 96, 56, 160},

{-14, 30, 15, 224},

{-56, 18, 68, 224},

{-3, -15, 8, 264},

{5, -20, 12, 264},

{-2, -7, 20, 252},

{7, -2, -4, 256},

{-2, 3, 14, 248},

{-7, 8, 14, 248},

{-5, 7, 14, 248},

{-4, 3, 15, 248},

{-4, 2, 14, 252},

{-3, 3, 12, 252},

{-2, 3, 16, 248}

},

{

{144, -28, 240, -112},

{240, -112, 224, -112},

{320, -160, 192, -112},

{320, -160, 192, -120},

{-40, -72, 256, 112},

{-17, -96, 256, 112},

{36, -144, 256, 96},

{112, -224, 256, 96},

{14, -12, -16, 272},

{12, -8, -10, 264},

{2, 0, -4, 264},

{1, -6, 9, 264},

{-4, 0, 24, 240},

{2, -6, 28, 240},

{7, -12, 28, 240},

{12, -15, 30, 240}

},

{

{36, -15, 240, 3},

{96, 24, 144, -2},

{36, 224, 18, -24},

{-1, 264, 3, -14},

{-10, 2, 256, 2},

{-28, 1, 252, 28},

{-68, 112, 132, 80},

{-48, 240, -80, 120},

{-3, -10, 48, 224},

{-2, -5, -24, 272},

{-30, 17, -48, 256},

{-48, 80, -68, 160},

{2, 14, -112, 320},

{5, 28, -72, 192},

{16, 28, -33, 96},

{12, 30, -17, 80}

},

{

{24, 2, 224, 7},

{2, 30, 224, 2},

{-20, 80, 192, 1},

{-34, 96, 192, -2},

{-28, 20, 264, -1},

{-34, 28, 264, 1},

{-36, 28, 264, 5},

{-40, 33, 264, 6},

{-15, 15, 240, 24},

{-20, 24, 248, 10},

{-30, 33, 248, 5},

{-36, 40, 240, -10},

{9, -18, -240, 480},

{6, -24, -224, 448},

{-7, -17, -124, 288},

{-17, -6, -72, 192}

},

{

{24, -12, 240, 8},

{80, -30, 192, 15},

{34, 72, 144, 9},

{-96, 256, 96, 1},

{-7, 6, 264, -8},

{-16, 6, 272, -8},

{-1, -14, 272, -2},

```
            {-48, 40, 264, 1},
            {7, 14, 160, 112},
            {10, 9, 192, 72},
            {9, 12, 192, 56},
            {18, -8, 224, 28},
            {-5, -33, -96, 320},
            {-2, -56, -96, 320},
            {0, -56, -80, 288},
            {-5, -48, -63, 264}
        },
        {
            {72, 8, 192, -18},
            {-33, 192, 112, -9},
            {-66, 264, -24, 96},
            {48, 144, -144, 192},
            {-112, 120, 192, 72},
            {-36, 144, -40, 192},
            {96, 24, -192, 272},
            {96, -20, -192, 264},
            {16, 24, -80, 288},
            {62, -40, -160, 288},
            {48, -48, -144, 240},
            {40, -31, -144, 224},
            {33, -40, -112, 272},
            {24, -48, -112, 224},
            {18, -40, -120, 224},
            {24, -36, -128, 224}
        },
        {
            {24, 2, 224, 8},
            {3, 28, 224, 3},
            {-18, 80, 192, 1},
            {-28, 96, 192, -4},
            {-24, 17, 264, -2},
            {-30, 24, 264, 1},
            {-31, 24, 264, 2},
```

```
      {-32, 28, 256, 4},
      {-8, 16, 224, 34},
      {-18, 24, 248, 10},
      {-28, 32, 248, 5},
      {-32, 40, 240, -10},
      {5, -10, -224, 448},
      {-1, -9, -192, 384},
      {-14, -9, -112, 264},
      {-28, -6, -68, 192}
},
{
      {14, -7, 288, -48},
      {9, -17, 320, -62},
      {-14, 14, 288, -40},
      {-192, 192, 264, -17},
      {-15, 12, 160, 96},
      {-14, 8, 128, 132},
      {1, -14, 72, 192},
      {14, -17, 56, 192},
      {3, -1, -12, 264},
      {4, -1, -14, 264},
      {-4, 4, -12, 264},
      {3, -2, -4, 256},
      {-3, 0, 7, 248},
      {-3, -2, 8, 248},
      {-4, -1, 7, 248},
      {-7, 1, 7, 248}
},
{
      {-24, -4, 288, -4},
      {-18, -12, 288, -2},
      {-2, -28, 288, -2},
      {-2, -24, 288, -5},
      {17, 0, 240, 1},
      {14, 3, 240, 1},
      {15, 9, 224, 7},
```

```
                    {18, 1, 224, 12},
                    {2, -2, 8, 248},
                    {2, -1, 7, 248},
                    {1, 1, 2, 252},
                    {-1, 3, 2, 252},
                    {1, 1, -10, 264},
                    {0, 2, -10, 264},
                    {1, 1, -10, 264},
                    {1, 1, -10, 264}
                }
            };
```

oder

wobei die MIP-Koeffizienten ein beliebiges des folgenden Arrays sind:

```
const short mipMatrix8x8round_const[10][16][8] =
{
    {
        {40, -28, 8, -1, 272, -40, 7, -2},
        {192, -32, -4, 1, 132, -40, 12, -4},
        {128, 144, -20, -3, 10, -5, 2, -1},
        {14, 136, 112, 0, -9, 7, -3, -1},
        {-12, 2, -2, 1, 36, 264, -40, 6},
        {-34, 0, 2, 1, 192, 128, -40, 7},
        {48, -40, 8, 1, 256, -14, -2, 0},
        {132, 14, -18, 4, 160, -40, 10, -5},
        {3, -1, 0, 1, -16, 32, 272, -36},
        {10, -1, 0, 2, -48, 192, 132, -30},
        {-14, 5, -4, 2, 12, 272, -12, -4},
        {-14, -5, 4, 4, 136, 160, -34, 5},
        {-4, -1, -2, 1, 4, -15, 24, 248},
        {-3, 2, -1, 4, 17, -56, 192, 96},
        {1, -1, -3, 2, -7, 7, 264, -8},
        {4, -1, -4, 3, -30, 144, 160, -20},
    },
    {
        {5, 192, -40, 5, -48, 80, 72, -8},
        {-9, 8, 240, -14, 9, -36, 18, 40},
```

{3, -4, 7, 248, 0, 1, -18, 20},

{2, 3, -34, 288, 3, -3, -1, 0},

{-24, 56, 96, -20, 14, -66, 126, 72},

{6, -24, 80, 160, 1, 9, -40, 63},

{3, 7, -48, 288, 3, -2, -1, 6},

{2, 4, -33, 288, 3, -4, 0, 0},

{-12, -20, 80, 72, 3, 7, -66, 192},

{-1, -7, -28, 272, 3, 4, -5, 17},

{2, 2, -36, 288, 3, -3, 3, -1},

{1, 4, -32, 288, 4, -4, 1, -1},

{-7, -31, 8, 192, 7, 20, -16, 80},

{-4, -3, -40, 288, 4, 3, -2, 10},

{2, 2, -34, 288, 4, -3, 4, -4},

{3, 7, -28, 272, 7, -2, 2, 1},

},

{

{144, 36, -5, 1, 8, 72, -2, 3},

{-63, 272, 15, -4, -17, 40, 6, 5},

{-4, -48, 288, 4, -24, 24, 8, 8},

{0, 10, -80, 320, -14, 7, 2, -1},

{96, 16, 0, -2, -96, 192, 56, -4},

{-66, 272, -8, 0, -96, 96, 48, 9},

{-18, -24, 288, -12, -60, 31, 32, 14},

{-4, 2, -80, 320, -24, -2, 10, 6},

{72, 6, 4, -1, -72, 8, 192, 48},

{-80, 264, -20, 1, -112, 31, 112, 60},

{-34, -1, 272, -24, -80, 24, 31, 56},

{-7, -5, -68, 288, -36, 4, -16, 40},

{56, 3, 7, -1, -48, 5, -31, 264},

{-80, 240, -24, 0, -96, 7, -16, 224},

{-48, 24, 240, -28, -80, 5, -24, 144},

{-15, -14, -48, 264, -40, -5, -40, 80},

},

{

{224, -48, 10, -1, 384, -72, 15, -2},

{448, 96, -48, 6, 24, -15, 2, -3},

{-2, 480, 80, -36, -6, -3, 0, -4},
{-1, -18, 480, 60, 3, -6, -1, -5},
{-48, 0, -5, -2, 256, 384, -80, 6},
{124, -36, 3, 1, 448, -24, -9, 0},
{384, 56, -36, 7, 124, -31, 4, -4},
{112, 384, 18, -10, 5, -2, 3, -4},
{3, -2, -2, -1, -63, 264, 384, -72},
{-28, 1, -6, -3, 112, 480, -31, -15},
{48, -30, -5, -3, 448, 96, -40, -5},
{288, 20, -12, 7, 224, -17, -2, -5},
{1, -1, 0, 0, 28, -96, 288, 288},
{1, -1, -6, -3, -31, 96, 480, -30},
{-18, -2, -8, -2, 36, 448, 68, -16},
{30, -3, 0, 3, 288, 192, -10, 1},
},
{

{-48, 36, 6, 24, 120, 144, -33, 7},
{-28, 24, 31, 56, -16, 224, -36, 0},
{-4, 8, 3, 132, -112, 224, 12, -10},
{8, 4, -28, 192, -144, 160, 64, -7},
{6, 3, 0, 24, -68, 160, 160, -31},
{-4, 8, -2, 60, -68, 40, 240, -24},
{-7, 16, -24, 96, -72, -36, 240, 33},
{-6, 18, -20, 120, -80, -62, 160, 112},
{-2, 4, -1, 20, -18, -40, 160, 128},
{-8, 9, -8, 48, -40, -17, 36, 224},
{-10, 12, -20, 80, -64, -2, -48, 288},
{-10, 14, -16, 96, -80, 3, -68, 288},
{-5, 1, -5, 20, -17, 8, -80, 320},
{-15, 5, -12, 48, -33, -6, -80, 320},
{-20, 4, -14, 63, -48, -18, -68, 320},
{-20, 7, -12, 80, -56, -20, -56, 288},
},
{

{-12, -16, 6, 0, 288, -10, 0, -1},
{80, -28, -9, 3, 240, -40, 14, -4},

{96, 64, -28, -7, 160, -40, 15, -5},

{96, 72, 72, -40, 80, -28, 9, -7},

{2, 2, 1, 0, -24, 288, -12, -2},

{-24, 4, 1, -1, 60, 256, -48, 5},

{-34, -12, 1, -2, 160, 192, -48, 3},

{-24, -2, -12, 1, 224, 96, -30, -1},

{-4, -1, 1, 1, 5, -24, 288, -12},

{2, -2, 1, -2, -20, 56, 252, -36},

{5, -1, 1, -1, -40, 160, 160, -33},

{2, 0, 4, -4, -36, 224, 80, -18},

{2, -4, 0, -1, -3, 0, -28, 288},

{-1, -3, -1, -2, 5, -30, 62, 224},

{-1, 0, 2, -1, 15, -56, 160, 132},

{-3, 1, 1, -2, 14, -56, 240, 56},

},

{

{-80, 48, -6, 0, 256, 63, -40, 12},

{-192, 160, 28, -10, 224, 80, -48, 12},

{-192, -10, 224, -5, 160, 112, -48, 10},

{-144, 14, -60, 252, 96, 124, -40, 9},

{10, 1, 3, -1, -80, 248, 112, -40},

{3, 6, 4, 1, -68, 192, 160, -48},

{-9, 3, 18, -5, -62, 160, 192, -48},

{-20, -4, -15, 36, -60, 132, 224, -48},

{-3, 2, 1, 1, 20, -72, 224, 80},

{-3, 3, -2, -1, 18, -66, 192, 112},

{-4, 1, -3, -2, 16, -60, 160, 144},

{-3, 2, 1, 3, 15, -48, 120, 160},

{0, -3, -1, -2, -12, 24, -72, 320},

{-3, 1, -3, -2, -14, 20, -68, 320},

{2, 2, 4, 2, -12, 28, -64, 288},

{1, 0, 2, 5, -14, 24, -56, 288},

},

{

{-72, -7, -2, 8, 320, 17, -12, 3},

{-40, -36, -2, 12, 320, 9, -9, 2},

{-48, -7, -28, 17, 320, 5, -6, 2},

{-56, -10, -2, 7, 320, 3, -7, 1},

{20, -2, -2, 3, -96, 320, 31, -17},

{10, 1, -4, 5, -80, 320, 20, -15},

{14, -9, 0, 8, -80, 320, 20, -16},

{15, -5, -4, 18, -68, 288, 20, -10},

{-8, 1, 1, 5, 31, -96, 288, 31},

{-10, -1, -1, 7, 28, -80, 288, 24},

{-9, -4, 0, 12, 28, -80, 288, 20},

{-10, -7, -4, 15, 24, -72, 288, 20},

{1, 0, -2, 2, -14, 28, -80, 320},

{-3, 0, -2, 7, -10, 24, -80, 320},

{-4, -4, -2, 12, -10, 24, -80, 320},

{-6, -6, -7, 17, -10, 20, -72, 320},

},

{

{-96, 20, 10, 6, 224, 264, 72, 24},

{-28, -24, 14, 12, 80, 320, 112, 36},

{-15, 18, -15, 6, 32, 320, 136, 40},

{-10, 12, 30, -18, 4, 320, 144, 40},

{12, -4, 2, 2, -14, 272, 224, 28},

{4, 10, -2, -4, 7, 224, 252, 34},

{-1, 7, 4, -10, 9, 224, 264, 36},

{-3, 9, 2, -9, 14, 224, 256, 36},

{7, 2, 6, -2, 8, 96, 320, 80},

{5, 7, 2, -4, 7, 112, 320, 80},

{2, 14, 2, -8, 6, 124, 320, 72},

{2, 15, 8, -8, 10, 136, 288, 80},

{5, 0, 3, -6, 7, 36, 224, 252},

{2, 8, 0, -8, 8, 56, 320, 144},

{4, 14, 5, -7, 12, 72, 320, 112},

{1, 12, 3, -8, 14, 80, 320, 112},

},

{

{96, 80, -12, 1, 12, 80, -2, 2},

{-28, 224, 40, -5, -24, 34, 9, 5},

```
          {-3, -30, 272, 12, -24, 14, 9, 8},
          {-7, 12, -72, 320, -12, 0, 3, 2},
          {36, 62, -9, -2, -80, 192, 62, -4},
          {-32, 192, 30, -1, -80, 80, 48, 18},
          {-10, -10, 256, 1, -48, 18, 17, 28},
          {-7, 12, -66, 288, -12, -5, -1, 20},
          {14, 56, -4, 1, -48, 3, 160, 72},
          {-48, 160, 28, -2, -80, 28, 72, 96},
          {-24, 3, 240, -4, -72, 20, 3, 80},
          {-16, 6, -60, 288, -30, 4, -28, 40},
          {5, 48, -2, 0, -36, 2, -18, 256},
          {-56, 132, 24, -3, -64, 3, -7, 224},
          {-40, 14, 192, 0, -72, 6, -12, 144},
          {-24, 2, -48, 252, -40, -2, -20, 64}
     }
};
```

oder
wobei die MIP-Koeffizienten ein beliebiges des folgenden Arrays sind:

```
const short mipMatrix16x16round_const[6][64][8] =
{
    {
        {-48, 32, 28, 9, 248, -20, 9, -2},
        {-56, 10, 40, 33, 224, 2, 6, -3},
        {-28, -28, 48, 66, 160, 36, 3, -1},
        {-9, -33, 34, 96, 96, 72, -1, 1},
        {-8, -6, -9, 128, 48, 112, -9, 0},
        {-6, 15, -24, 144, 3, 132, -10, 2},
        {0, 17, -5, 128, -36, 160, -12, 2},
        {8, 16, 12, 120, -60, 160, -7, 5},
        {-14, -17, -1, 24, 112, 160, -12, 2},
        {-6, -16, -12, 36, 72, 192, -12, 3},
        {-7, -8, -24, 40, 40, 224, -12, 2},
        {-6, -4, -24, 40, 17, 240, -10, 2},
        {-2, -4, -17, 40, 0, 240, -4, 2},
        {-1, -3, -12, 40, -16, 240, 4, 2},
        {0, 2, -12, 48, -28, 224, 16, 3},
```

{-3, 3, -15, 48, -36, 224, 28, 4},

{1, 0, -12, 14, -5, 252, 2, 5},

{2, 0, -14, 17, -12, 248, 10, 4},

{1, -2, -15, 17, -14, 240, 28, 1},

{0, -3, -14, 17, -15, 224, 48, -2},

{-1, -2, -14, 17, -14, 192, 80, -5},

{-3, 0, -12, 18, -14, 160, 112, -7},

{-3, 0, -12, 18, -12, 136, 132, -6},

{-2, 0, -10, 20, -12, 112, 144, 1},

{3, 2, -5, 9, -15, 144, 120, -4},

{-1, 0, -7, 7, -14, 120, 160, -9},

{-1, 0, -8, 8, -9, 80, 192, -7},

{0, 1, -7, 10, -5, 66, 192, -4},

{-3, -2, -9, 8, -5, 40, 224, 0},

{-3, -1, -10, 9, -4, 28, 224, 10},

{-4, -2, -10, 10, -5, 16, 224, 24},

{-1, 1, -8, 15, -3, 16, 192, 40},

{-1, 0, -4, 4, -3, 10, 240, 9},

{-1, 0, -5, 3, -2, -1, 240, 20},

{-1, -1, -6, 5, -3, -4, 224, 40},

{-1, 0, -6, 8, -3, -4, 192, 66},

{0, 0, -6, 9, -3, -2, 160, 96},

{-1, 0, -7, 10, -5, -2, 144, 112},

{-1, 0, -8, 14, -5, 1, 120, 132},

{0, 1, -8, 16, -5, 7, 96, 144},

{-1, 1, -2, 3, -1, -12, 144, 124},

{-3, 0, -4, 3, -3, -10, 112, 160},

{-3, -1, -6, 5, -6, -6, 80, 192},

{-1, 0, -4, 8, -4, -2, 64, 192},

{-2, -1, -7, 9, -7, -3, 40, 224},

{-2, 0, -7, 14, -7, 0, 30, 224},

{-3, -1, -9, 14, -9, 0, 20, 240},

{-3, -1, -9, 15, -10, 2, 17, 240},

{-1, 0, -2, 3, -1, -2, 5, 252},

{-2, 0, -3, 5, -2, -2, -6, 264},

{-3, -1, -5, 7, -3, -3, -10, 272},

{-2, 0, -5, 10, -4, -4, -14, 272},

{-3, 0, -7, 14, -4, -4, -16, 272},

{-3, 1, -8, 17, -5, -5, -17, 272},

{-3, 1, -8, 18, -7, -5, -17, 272},

{-3, 0, -9, 18, -8, -4, -15, 272},

{-1, 0, -2, 6, 1, -5, -34, 288},

{-1, -1, -2, 7, -1, -5, -32, 288},

{-2, 0, -4, 10, -2, -7, -31, 288},

{0, -1, -5, 12, -3, -8, -31, 288},

{-2, 0, -6, 15, -4, -9, -30, 288},

{-3, 0, -8, 18, -5, -10, -30, 288},

{-3, 1, -9, 18, -7, -10, -28, 288},

{-4, 1, -10, 18, -8, -12, -24, 288}

},

{

{80, 15, 0, -1, 160, 6, -1, -3},

{120, 34, 2, -1, 96, 9, -1, -3},

{112, 72, 9, -1, 56, 7, 2, -1},

{72, 120, 24, -1, 36, 4, 3, -1},

{40, 120, 72, 0, 24, 1, 2, -3},

{28, 62, 136, 12, 14, 1, 4, 0},

{20, 14, 144, 68, 8, 1, 3, -3},

{16, 10, 34,192, 6, 1, 0, -2},

{20, 6, 2, 1, 160, 66, 1, 0},

{48, 12, 2, 0, 160, 36, 1, -2},

{80, 28, 1, 0, 124, 24, 1, -3},

{96, 48, 5, 0, 96, 14, 2, -4},

{96, 80, 18, -1, 62, 6, 1, -5},

{68, 96, 48, 2, 40, 4, 2, -4},

{48, 80, 80, 12, 30, 4, 4, -1},

{40, 48, 96, 48, 20, 3, 3, -2},

{5, 2, 2, 1, 80, 160, 6, -1},

{16, 2, 1, 1, 124, 112, 4, -4},

{36, 8, 1, 1, 136, 72, 4, -2},

{60, 20, 1, 1, 128, 48, 3, -4},

{80, 36, 3, -1, 112, 31, 1, -5},

{80, 62, 12, 2, 80, 20, 3, -3},

{72, 72, 30, 2, 64, 15, 3, -3},

{60, 72, 56, 10, 48, 12, 3, -5},

{1, -3, -2, -1, 17, 192, 60, -7},

{5, 0, 1, 2, 56, 160, 34, -3},

{12, 1,-2, 0, 96, 132, 20, -5},

{28, 4, -3, -1, 112, 112, 9, -6},

{48, 15, 0, 0, 112, 80, 6, -5},

{60, 30, 1, 0, 112, 56, 3, -6},

{64, 48, 9, 1, 96, 40, 3, -5},

{62, 60, 24, 5, 72, 34, 3, -5},

{1, -2, 1, 0, 6, 96, 160, -7},

{1, -2, 0, 1, 24, 128, 112, -6},

{3, -2, 0, 1, 48, 144, 68, -5},

{10, 0, -1, 1, 68, 136, 48, -6},

{20, 5, 1, 3, 80, 124, 28, -4},

{34, 14, 1, 2, 96, 96, 17, -5},

{40, 28, 3, 3, 96, 80, 12, -5},

{48, 40, 10, 5, 80, 68, 10, -5},

{2, 1, 3, 2, 7, 14, 192, 36},

{-3, -2, -2, -2, 7, 56, 192, 9},

{-3, -1, 0, 0, 18, 96, 144, 2},

{1, -1, 1, 1, 36, 126, 96, -3},

{6, -2, 0, 1, 48, 136, 72, -5},

{15, 2, 0, 2, 68, 128, 48, -7},

{24, 10, 0, 3, 72, 120, 34, -6},

{32, 20, 4, 3, 80, 96, 28, -7},

{0, -1, -1, -1, 0, 3, 96, 160},

{-2, -1, -1, -1, 2, 17, 144, 96},

{-4, -2, -1, 0, 7, 48, 160, 48},

{-6, -3, 1, 2, 18, 80, 144, 18},

{-3, -3, 2, 2, 30, 96, 126, 5},

{3, -3, 0, 3, 40, 120, 96, -3},

{10, 2,-1, 3, 56, 120, 72, -5},

{16, 10, 2, 4, 60, 112, 56, -3},

{0, -2, -1, 0, 0, 14 , -28, 272},

{0, 0, 1, 2, 3, 20, 36, 192},

{-4, -2, -1, 1, 2, 28, 96, 136},

{-5, -3, 0, 1, 8, 48, 128, 80},

{-5, -4, 1, 2, 15, 64, 136, 48},

{-2, -4, 1, 4, 24, 80, 126, 28},

{8, 5, 4, 8, 40, 96, 80, 14},

{8, 5, 4, 8, 40, 96, 80, 14}

},

{

{72, 16, 6, 4, 136, 10, 8, 4},

{48, 80, 4, 9, 68, 33, 10, 4},

{-14, 144, 15, 16, 36, 40, 14, 5},

{-28, 96, 80, 17, 18, 48, 18, 7},

{-17, 24, 144, 34, 2, 40, 20, 8},

{-10, -5, 96, 112, -7, 36, 28, 9},

{-10, -3, 20, 192, -14, 28, 33, 10},

{-6, -2, -9, 224, -18, 12, 40, 18},

{-10, 18, 8, 5, 112, 120, -4, 8},

{-12, 40, 16, 17, 56, 120, 9, 12},

{-24, 60, 24, 28, 14, 120, 20, 14},

{-24, 40, 48, 40, -10, 112, 34, 17},

{-18, 12, 64, 64, -28, 96, 48, 18},

{-14, -5, 48, 112, -33, 63, 63, 24},

{-7, -5, 12, 144, -33, 40, 72, 33},

{-3, -5, -2, 160, -32, 18, 72, 48},

{-8, 9, 10, 12, 12, 192, 10, 18},

{-10, 15, 15, 24, -4, 160, 36, 20},

{-14, 14, 16, 40, -20, 136, 62, 24},

{-14, 8, 18, 56, -31, 96, 96, 28},

{-12, 1, 18, 72, -36, 66, 112, 36},

{-9, -3, 12, 96, -40, 40, 112, 48},

{-5, -4, 3, 112, -36, 18, 96, 72},

{-3, -5, 1, 120, -36, 3, 80, 96},

{-4, -1, 6, 14, -16, 136, 112, 10},

{-5, -2, 6, 24, -16, 96, 128, 24},

{-8, -1, 4, 36, -20, 60, 144, 40},

{-8, -1, 2, 48, -24, 36, 144, 60},

{-5, -2, 4, 60, -28, 20, 128, 80},

{-5, -3, -2, 68, -31, 6, 112, 112},

{-3, -3, -1, 80, -30, -4, 80, 136},

{-3, -5, -2, 80, -31, -10, 66, 160},

{0, -2, 2, 16, -7, 24, 192, 30},

{0, -3, 1, 28, -10, 16, 160, 63},

{-4, -2, -5, 34, -15, 7, 144, 96},

{-3, -1, -6, 40, -18, 2, 112, 128},

{-2, -2, -4, 48, -20, -4, 80, 160},

{-3, -3, -6, 48, -24, -10, 63, 192},

{0, -1, -4, 56, -24, -12, 48, 192},

{2, 0, -1, 60, -24, -12, 36, 192},

{0, -5, -4, 12, -6, -5, 144, 120},

{-1, -5, -9, 20, -12, -8, 112, 160},

{-2, -1, -12, 28, -14, -9, 72, 192},

{0, 1, -8, 34, -12, -9, 56, 192},

{-1, -1, -6, 34, -17, -14, 34, 224},

{-1, -2, -6, 36, -20, -15, 20, 240},

{1, -1, -4, 40, -20, -17, 14, 240},

{1, -2, -2, 40, -20, -18, 7, 248},

{1, -3, -6, 10, -4, -6, 40, 224},

{1, -1, -12, 18, -7, -9, 24, 240},

{-1, 2, -14, 24, -8, -12, 12, 252},

{-2, 2, -12, 24, -10, -16, 4, 264},

{0, 0, -5, 24, -12, -16, -2, 264},

{0, -1, -3, 24, -14, -18, -9, 272},

{1, -1, -2, 28, -15, -20, -12, 272},

{1, -1, -2, 31, -18, -20, -14, 272},

{2, -1, -8, 9, -2, -6, -12, 272},

{3, 1, -10, 15, -3, -10, -14, 272},

{-1, 2, -12, 15, -7, -15, -18, 288},

{-3, 3, -10, 17, -7, -16, -20, 288},

{-1, 1, -5, 17, -8, -17, -24, 288},

{-1, 0, -3, 18, -9, -20, -24, 288},

{-1, 0, -2, 20, -12, -20, -24, 288},

```
            {0, -2, -3, 24, -14, -20, -24, 288}
        },
        {
            {-20, 96, -14, -4, 192, 14, -6, -1},
            {-40, 160, 12, -5, 68, 80, -20, 2},
            {-17, 80, 96, -4, 5, 112, -14, -2},
            {2, -3, 160, 24, -15, 80, 18, -10},
            {6, -12, 96, 96, -10, 40, 48, -7},
            {4, -2, 24, 160, -9, 12, 62, 5},
            {1, 0, -1, 192, -7, -12, 56, 28},
            {5, 4, 2, 160, -5, -20, 48, 60},
            {-30, 48, 24, -3, 56, 192, -40, 8},
            {-4, 8, 72, 4, -7, 192, -6, -3},
            {5, -17, 80, 40, -20, 120, 56, -7},
            {5, -14, 40, 96, -16, 48, 96, 3},
            {5, -6, 10, 124, -10, 6, 96, 32},
            {5, 0, -6, 136, -9, -15, 80, 64},
            {3, 5, -10, 132, -9, -24, 64, 96},
            {6, 6, -5, 120, -10, -28, 40, 126},
            {7, -10, 33, 5, -24, 224, 24, -3},
            {8, -20, 34, 34, -18, 112, 112, -6},
            {6, -14, 10, 68, -10, 34, 144, 18},
            {4, -5, -9, 96, -9, -4, 124, 60},
            {3, 1, -12, 96, -7, -17, 96, 96},
            {3, 4, -12, 96, -8, -24, 66, 132},
            {5, 6, -6, 80, -8, -24, 40, 160},
            {5, 8, 0, 80, -8, -20, 28, 160},
            {7, -15, 10, 20, -14, 68, 192, -12},
            {2, -12, -6, 48, -6, 9, 192, 30},
            {4, -2, -12, 63, -1, -7, 132, 80},
            {4, 1, -15, 66, -3, -14, 80, 136},
            {4, 4, -12, 64, -4, -16, 56, 160},
            {1, 4, -8, 60, -7, -18, 30, 192},
            {3, 7, -2, 56, -6, -17, 18, 192},
            {4, 6, 2, 56, -6, -16, 14, 192},
            {3, -5, -8, 28, 0, -3, 192, 48},
```

{2, -2, -16, 40, -2, -10, 124, 120},

{1, 2, -17, 48, -1, -10, 72, 160},

{3, 3, -14, 48, -3, -12, 36, 192},

{1, 1, -10, 40, -7, -12, 17, 224},

{3, 3, -6, 40, -8, -12, 9, 224},

{2, 5, -2, 40, -9, -12, 4, 224},

{2, 4, -1, 40, -9, -12, 3, 224},

{1, 0, -14, 20, -1, -5, 96, 160},

{3, 2, -15, 30, -2, -3, 48, 192},

{1, 2, -16, 31, -3, -5, 20, 224},

{0, 1, -12, 30, -6, -8, 7, 240},

{1, 2, -7, 30, -7, -8, 2, 240},

{1, 2, -4, 28, -8, -8, -1, 240},

{1, 3, -2, 28, -9, -9, -2, 240},

{1, 3, 0, 28, -10, -9, -3, 240},

{-1, 1, -14, 14, -3, -2, 20, 240},

{0, 3, -14, 18, -3, -2, 4, 248},

{0, 3, -12, 20, -5, -3, -1, 252},

{0, 1, -8, 20, -6, -5, -3, 252},

{1, 1, -4, 18, -8, -6, -3, 252},

{1, 1, -2, 18, -10, -6, -4, 252},

{0, 2, 0, 20, -10, -7, -5, 248},

{1, 2, 1, 20, -10, -7, -1, 240},

{0, 3, -12, 8, -1, -1, -1, 256},

{0, 3, -12, 12, -4, -1, -3, 256},

{0, 3, -9, 12, -5, -2, 0, 252},

{0, 2, -5, 12, -6, -4, -1, 252},

{0, 1, -3, 12, -7, -5, -1, 252},

{0, 2, -1, 14, -9, -5, -1, 248},

{-1, 2, 0, 15, -9, -5, -3, 248},

{1, 1, 1, 17, -9, -5, -2, 240}

},

{

{-36, 15, 1, 0, 320,-48, 6, -1},

{-34, 17, 6, 6, 288,-40, 10, 2},

{-33, 15, 8, 6, 288,-40, 10, 2},

{-36, 15, 10, 6, 288,-40, 9, 2},

{-40, 20, 7, 9, 288,-40, 9, 2},

{-48, 20, 12, 10, 288,-36, 8, 1},

{-56, 14, 31, 7, 288,-36, 7, 1},

{-60, 9, 28, 28, 272,-31, 7, 2},

{-40, 1, -1, -1, 224, 96, -24, 2},

{-40, 1, -2, -1, 224, 96, -24, 2},

{-48, 7, -2, 1, 224, 96, -24, 3},

{-48, 6, -1, 1, 224, 96, -24, 2},

{-40, -1, 2, -2, 224, 96, -24, 1},

{-40, -2, 1, 0, 224, 96, -24, 0},

{-40, 3, 1, 8, 192, 112, -24, 4},

{-40, 3, 1, 7, 192, 112, -24, 4},

{-1, -2, -1, -2, 7, 288, -36, 2},

{-1, -2, -1, -1, 7, 288, -36, 3},

{-2, -1, 0, -1, 6, 288, -36, 2},

{-2, -2, 1, 0, 6, 288, -36, 2},

{-2, -3, 1, 0, 6, 288, -36, 2},

{-3, -3, 0, 0, 6, 288, -34, 2},

{-4, -5, 0, 1, 7, 288, -33, 1},

{-5, -3, 2, 4, 10, 272, -28, 3},

{12, -2, 1, 1, -40,192, 112, -20},

{10, -1, 2, 2, -40, 192, 112, -20},

{9, 0, 1, 1, -40, 192, 112, -20},

{9, 0, 2, 2, -40, 192, 112, -20},

{7, -3, 3, 1, -36, 192, 112, -20},

{7, -3, 2, 2, -40, 192, 120, -24},

{7, -3, 0, 0, -36, 192, 120, -24},

{6, -4, 1, 1, -36, 192, 120, -24},

{3, 0, 1, 1, -3, 9, 272, -28},

{2, 1, 1, 1, -3, 9, 272, -28},

{0, 1, 1, 1, -3, 7, 272, -24},

{0, 1, 2, 1, -2, 7, 272, -24},

{-1, 1, 2, 2, -3, 7, 272, -24},

{-1, 0, 2, 2, -3, 7, 272, -24},

{-1,-1, 1, 2, -4, 7, 272, -20},

{-1, -1, 2, 3, -3, 10, 264, -17},

{2, 1, 3, 3, 9, -36, 192, 80},

{1, 3, 3, 3, 10, -36, 192, 80},

{0, 3, 3, 3, 9, -34, 192, 80},

{0, 3, 3, 3, 9, -34, 192, 80},

{0, 2, 4, 3, 9, -33, 192, 80},

{-2, 0, 2, 0, 5, -36, 192, 96},

{-3, 0, 1, 2, 5, -36, 192, 96},

{-3,-1, 1, 1, 4, -34, 192, 96},

{0, 0, 0, 1, 2, -3, 16, 240},

{0, 0, 0, -1, 0, -4, 14, 248},

{-1, 1, 0,-1, 1, -5, 12, 248},

{-2, 1, 1,-1, 1, -5, 12, 248},

{-2, 0, 2,-1, 1, -5, 12, 248},

{-2, 0, 2, 0, 0, -5, 12, 248},

{-2, 0, 2, 1, 1, -6, 12, 248},

{-3, 0, 2, 2, 2, -3, 16, 240},

{1, -1, -2, -1, -3, 9, -68, 320},

{-2, 0, -1, -1, -4, 7, -64, 320},

{-2, 1, -1, -1, -3, 8, -66, 320},

{-3, 1, 0, -1, -3, 8, -66, 320},

{-3, 0, 1,-1, -4, 8, -66, 320},

{-3, -1, 1, -1, -4, 7, -64, 320},

{-5, -2, 0, 1, -4, 7, -62, 320},

{-5, -2, 0, 1, -4, 7, -62, 320}

},

{

{60, 20, 8, 2,160, 1, 3, 2},

{16, 96, 5, 3, 126, 7, 2, 1},

{-60, 192, 15, 4, 96, 9, 0, -1},

{-80, 160, 96, -4, 80, 9, -3, -3},

{-72, 60, 192, 6, 62, 10, -1, -1},

{-56, 9, 160, 80, 48, 12, 0, 2},

{-48, 10, 48, 192, 40, 12, 0, 1},

{-48, 15, -24, 264, 32, 14, 0, 2},

{-36, 36, 6, 2, 160, 96, -10, 1},

{-80, 96, 12, 4, 160, 72, -6, -3},

{-136, 144, 28, 8, 144, 72, -2, -1},

{-160, 144, 80, 8, 128, 62, -4, -3},

{-160, 72, 144, 24, 112, 60, 1, 1},

{-136, 32, 132, 80, 96, 56, -2, -2},

{-126, 20, 48, 192, 80, 48, -2, -4},

{-112, 20, -4, 240, 64, 48, 0, 0},

{-32, 28, 8, 4, 34, 224, -12, 2},

{-80, 63, 14, 4, 48, 224, -14, -4},

{-124, 96, 32, 12, 56, 192, -7, -1},

{-160, 96, 72, 24, 64, 160, -2, 2},

{-160, 62, 112, 32, 62, 160, -8, -5},

{-160, 36, 96, 80, 66, 144, -2, -3},

{-160, 28, 48, 160, 66, 120, 0, -4},

{-160, 28, 9, 192, 63, 112, 9, 2},

{-24, 20, 10, 6, -20, 192, 80, -7},

{-63, 40, 15, 8, -20, 224, 60, -9},

{-96, 64, 28, 14, -18, 224, 48, -9},

{-128, 63, 56, 24,-14, 224, 40, -8},

{-144, 40, 80, 40, -9, 224, 34,-10},

{-160, 32, 80, 80, 1, 192, 33, -2},

{-160, 24, 36, 136, 3, 192, 28, -3},

{-160, 20, 10, 192, 6, 160, 28, -2},

{-24, 15, 8, 4, -5, 48, 224, -14},

{-48, 33, 16, 12, -6, 72, 192, -14},

{-80, 40, 24, 16, -15, 96, 192, -17},

{-96, 40, 40, 28, -16, 112, 160, -12},

{-120, 28, 60, 48, -20, 128, 144, -12},

{-128, 20, 48, 80, -20, 136, 128, -9},

{-136, 17, 28, 120, -24, 144, 112, -6},

{-144, 16, 9, 160, -24, 144, 96, -1},

{-20, 10, 7, 4, 3, -28, 224, 56},

{-48, 20, 10, 12, 2, -20, 240, 40},

{-66, 28, 18, 20, -2,-10, 240, 28},

{-80, 24, 32, 31, -4, 4, 224, 24},

{-96, 15, 40, 48, -9, 17, 224, 17},

{-112, 10, 33, 72, -14, 30, 224, 12},

{-112, 8, 15, 112,-18, 48, 192, 10},

{-124, 7, 3, 132, -24, 56, 192, 12},

{-12, 9, 7, 5, -1, -6, 62, 192},

{-32, 14, 6, 10, -5,-10, 80, 192},

{-48, 18, 15, 24, -3, -8, 96, 160},

{-60, 10, 24, 31, -5, -7, 120, 144},

{-72, 4, 28, 48, -9, -7, 136, 128},

{-80, 3, 18, 72, -12, -3, 144, 112},

{-96, 3, 7, 96, -12, 0, 160, 96},

{-96, 2, -4, 112, -18, 4, 160, 96},

{-14, 4, 2, 4, -7, 14, -68, 320},

{-24, 12, 6, 16, -3, 17, -56, 288},

{-36, 9, 8, 20, -6, 12, -40, 288},

{-48, 4, 14, 34, -8, 12, -24, 272},

{-56, -2, 14, 48,-12, 10, -12, 264},

{-66, -2, 7, 66, -12, 9, 5, 248},

{-80, -3, -8, 96, -16, 9, 32, 224},

{-80, -3, -8, 96, -16, 9, 32, 224}

}

}.

3. Verfahren nach einem der vorstehenden Ansprüche, wobei die Größe der MIP-Koeffizienten 9 Bits zum Darstellen von $M \leq 8$ erfordert.

4. Verfahren nach einem der vorstehenden Ansprüche, wobei die zwei Zeilen rekonstruierter benachbarter Abtastwerte zwei obere Reihen rekonstruierter benachbarter Abtastwerte sind; oder

die zwei Zeilen rekonstruierter benachbarter Abtastwerte zwei linke Spalten rekonstruierter benachbarter Abtastwerte sind; oder
die zwei Zeilen (802) rekonstruierter benachbarter Abtastwerte eine linke Spalte rekonstruierter benachbarter Abtastwerte und eine obere Zeile rekonstruierter benachbarter Abtastwerte sind.

5. Verfahren nach einem der vorstehenden Ansprüche, wobei der Schritt des Bestimmens das Erhalten (S1104) des Werts der MIP-Anzeigeinformationen aus einem Bitstrom einschließt.

6. Verfahren nach einem der vorstehenden Ansprüche, wobei der MIP-Intraprädiktionsmodus aus einem Bitstrom erhalten wird.

7. Verfahren nach einem der vorstehenden Ansprüche, wobei der Wert der MIP-Anzeigeinformationen und/oder der MIP-Intraprädiktionsmodus in einem Bitstrom signalisiert wird.

8. Codierverfahren, das durch eine Decodiervorrichtung (30) implementiert wird, zum Decodieren eines aktuellen Blocks eines Bildes, wobei das Verfahren eine Intraprädiktion des aktuellen Blocks verwendet, wobei das Verfahren die Schritte umfasst Bereitstellen eines vorhergesagten Blocks (365) für den codierten aktuellen Block durch Durchführen aller Schritte eines Verfahrens nach einem der vorstehenden Ansprüche für den aktuellen Block; und Wiederherstellen des aktuellen Blocks auf der Basis des codierten Blocks und des vorhergesagten Blocks (365).

9. Codierverfahren, das durch eine Codiervorrichtung (20) implementiert wird, zum Codieren eines aktuellen Blocks (203) eines Bildes, wobei das Verfahren die Intraprädiktion des aktuellen Blocks (203) verwendet, wobei das Verfahren die Schritte umfasst Bereitstellen eines Prädiktionsblocks (265) für den aktuellen Block (203) durch Durchführen aller Schritte eines Verfahrens nach einem der Ansprüche 1 bis 4 und 7 für den aktuellen Block (203); und Codieren des aktuellen Blocks (203) auf der Basis des Prädiktionsblocks (265).

10. Computerprogrammprodukt, das Programmcode umfasst, der, wenn das Programm durch einen Computer ausgeführt wird, den Computer veranlasst, das Verfahren nach einem der Ansprüche 1 bis 9 vorzunehmen.

11. Decodierer, der umfasst:

einen oder mehrere Prozessoren (430); und
ein nicht flüchtiges computerlesbares Speichermedium (460), das mit den Prozessoren (430) gekoppelt ist und eine Programmierung für die Ausführung durch die Prozessoren (430) speichert, wobei die Programmierung, wenn sie durch die Prozessoren (430) ausgeführt wird, den Decodierer konfiguriert, um das Verfahren nach einem der Ansprüche 1 bis 8 vorzunehmen.

12. Codierer, der umfasst:

einen oder mehrere Prozessoren (430); und
ein nicht flüchtiges computerlesbares Speichermedium (460), das mit den Prozessoren (430) gekoppelt ist und die Programmierung für die Ausführung durch die Prozessoren (430) speichert, wobei die Programmierung, wenn sie durch die Prozessoren (430) ausgeführt wird, den Codierer konfiguriert, um das Verfahren nach einem der Ansprüche 1 bis 4, 7 oder 9 vorzunehmen.

## Revendications

1. Procédé de prédiction intra d'un bloc, comprenant les étapes suivantes consistant à :

- déterminer (S1102) une valeur d'informations d'indication de prédiction intra matrice, MIP, pour un bloc courant (203) sur la base de la taille de bloc (L, H) du bloc courant (203), dans lequel les informations d'indication MIP sont définies comme suit

$$idx(W, H) = \begin{cases} 0 & \text{pour W = H = 4} \\ 1 & \text{pour max(W, H) = 8} \\ 2 & \text{pour max(W, H) > 8.} \end{cases}$$

pour un bloc rectangulaire de largeur L et de hauteur H ;
- obtenir (S1100, S1104) deux lignes (802) d'échantillons voisins reconstruits et d'un mode de prédiction intra MIP ;
- dériver (S700, S1108) un ensemble d'échantillons de référence (804) sur la base des deux lignes (802) d'échantillons voisins reconstruits, de la valeur des informations d'indication MIP et du mode de prédiction intra MIP ;
- obtenir (S704, S1106) un ensemble de coefficients MIP sur la base de la valeur des informations d'indication MIP et du mode de prédiction intra MIP ;

dans lequel l'ampleur de tout coefficient MIP $C_{MIP}$ de l'ensemble des coefficients MIP est représentée par la série suivante :

$$C_{MIP} = \sum_{i=0}^{M} a_i \cdot 2^i$$

dans lequel $a_i$ = {-1, 0, 1} ou $a_i$ = {0, 1}, et M est un nombre entier non négatif ; et

- obtenir (S702, S706, S1110) un bloc de prédiction (265, 365, 806) sur la base de l'ensemble d'échantillons de référence (804) et de l'ensemble de coefficients MIP, dans lequel l'obtention d'un bloc de prédiction comprend i) l'obtention d'un bloc de prédiction réduit en calculant une multiplication du vecteur matriciel sur la base de l'ensemble d'échantillons de référence et de l'ensemble de coefficients MIP et ii) le suréchantillonnage du bloc de prédiction réduit par interpolation, dans lequel la multiplication du vecteur matriciel est remplacée par des opérations d'addition/soustraction et de décalage, dans lequel une image reconstruite est obtenue sur la base du bloc de prédiction (265, 365, 806),

dans lequel le nombre de bits non nuls dans le coefficient MIP $C_{MIP}$ n'est pas supérieur à un seuil $N_{THR}$,

c'est-à-dire, $$\sum_{i=0}^{M} abs(a_i) \leq N_{THR}$$ ,

avec $N_{THR} \leq M$, et

dans lequel $N_{THR}$ est égal à 2, et le coefficient MIP $C_{MIP}$ est représenté par la série suivante :

$$C_{MIP} = a_i \cdot 2^i + a_j \cdot 2^j,$$

dans lequel $i \neq j$.

2. Procédé selon l'une quelconque des revendications précédentes, dans lequel les coefficients MIP sont l'un quelconque des tableaux suivants :

```
const short mipMatrix4x4round_const[18][16][4] =
{
  {
    {132, -14, 144, -14},
    {160, 68, 5, 24},
    {-32, 272, -9, 30},
    {-66, 248, 9, 10},
    {-5, 17, 192, 60},
    {2, 124, 9, 124},
    {-60, 192, -40, 96},
    {-18, 112, -36, 64},
    {-12, 28, -28, 272},
    {-36, 80, -56, 192},
    {-24, 80, -28, 80},
    {-14, 72, -24, 72},
    {3, 10, -56, 240},
    {-33, 68, -12, 96},
    {-24, 72, -9, 66},
    {-18, 72, -17, 66}
  },
  {
    {32, -10, 224, 6}
    {136, -36, 144, 7},
    {96, 124, 34, -1},
    {-9, 272, -10, -4},
    {-9, 3, 264, -7},
    {-18, -8, 288, -18},
    {-4, -9, 264, -15},
    {-120, 192, 160, -5},
```

{4, -6, 96, 160},

{3,-10, 48, 192},

{7, -36, 12, 224},

{-34, -15, -4, 240},

{0, -15, -126, 384},

{0, -24, -126, 384},

{0, -24, -124, 320},

{16, -34, -112, 320}

},

{

{160, 14, 112, -40},

{248, -6, 33, -34},

{224, 40, 16, -28},

{-80, 320, 5, -20},

{-56, 3, 264, 40},

{-6, 14, 192, 24},

{96, 7, 72, 17},

{-56, 224, -24, 12},

{-6, -3, 1, 264},

{-24, 0, 12, 256},

{-15, -7, 16, 240},

{-40, 40, -20, 224},

{-2, 3, 6, 248},

{-4, 4, 6, 248},

{-5, 2, 12, 248},

{-1, -12, 17, 248}

},

{

{40, -6, 248, -28},

{224, -17, 48, -2},

{96, 192, -36, 2},

{-32, 272, 4, 8},

{-9, 9, 192, 64},

{48, -20, 160, 64},

{96, 112, -10, 56},

{-5, 272, -48, 20},

{3, 5, 24, 224},

{3,-8, 36, 224},

{-17, 40, 68, 160},

{-72, 224, 20, -8},

{-3, 0, 4, 252},

{6, 0, 2, 248},

{-15, -9, 40, 224},

{-192, 80, 192, -33}

},

{

{96, -18, 240, -68},

{48, 63, 160, -24},

{-48, 192, 40, 48},

{-20, 192, -72, 120},

{-48, 3, 160, 136},

{-48, 2, 64, 224},

{-28, 1, 14, 248},

{-14, 1, -6, 256},

{3, 1, -17, 264},

{0, 1, -12, 264},

{-5, 5, 2, 248},

{-9, 4, 7, 248},

{-6, 1, 8, 248},

{-7, 2, 7, 248},

{-10, 5, 6, 248},

{-10, 5, 4, 248}

},

{

{68, 1, 192, -3},

{192, -15, 72, 3},

{272, -20, -1, 1},

{160, 96, -3, 2},

{-14, -2, 288, -17},

{2, 3, 264, -15},

{96, -3, 160, -3},

{224, -28, 56, 0},

```
{2,0, 144, 112},
{-1, -5, 240, 20},
{-15, -1, 288, -18},
{20, 2, 248, -18},
{4, -1, -36, 288},
{3, -7, 20, 240},
{6, -7, 112, 144},
{1, -3, 192, 56}
},
{
{144, -10, 136, -10},
{112, 80, 80, -16},
{-6, 240, 40, -20},
{-20, 264, 9, 0},
{-72, 12, 288, 24},
{-96, 63, 224, 60},
{-132, 160, 96, 132},
{-72, 192, -48, 160},
{-15, -4, 36, 240},
{-24, 20, -40, 288},
{-30, 48, -62, 240},
{-34, 62, -40, 160},
{20, 20, -96, 288},
{1, 40, -60, 192},
{-8, 56, -24, 112},
{-12, 62, -9, 96}
},
{
{192, 9, 80, -20},
{272, -10, -12, 1},
{224, 28, 2, 5},
{-20, 272, -2, 0},
{0, 1, 256, -1},
{144, 7, 120, -20},
{288, -28, 9, -20},
{160, 96, 9, -18},
```

{-15, -2, 48, 224},

{-15, -5, 80, 192},

{112, -8, 9, 132},

{256, -28, -72, 72},

{5, 2, -16, 264},

{-3, 1, -17, 272},

{-8, -2, -14, 272},

{96, -30, -96, 256}

},

{

{192, -40, 132, -36},

{288, -48, 36, -34},

{68, 192, 10, -28},

{-15, 264, 20, -24},

{-56, 9, 256, 40},

{48, -36, 192, 24},

{68, 40, 66, 20},

{-48, 240, -36, 15},

{-12, 1, 1, 264},

{-20, -1, 8, 256},

{-12, -18, 7, 248},

{-120, 136, -48, 224},

{-3, 3, 7, 248},

{-5, 5, 8, 248},

{0,-2, 9, 252},

{-36, 24, 16, 248}

},

{

{-40, 96, 264, -60},

{-96, 160, 136, 56},

{-60, 96, 56, 160},

{-14, 30, 15, 224},

{-56, 18, 68, 224},

{-3, -15, 8, 264},

{5, -20, 12, 264},

{-2, -7, 20, 252},

{7,-2, -4, 256},

{-2, 3, 14, 248},

{-7, 8, 14, 248},

{-5, 7, 14, 248},

{-4, 3, 15, 248},

{-4, 2, 14, 252},

{-3, 3, 12, 252},

{-2, 3, 16, 248}

},

{

{144, -28, 240, -112},

{240, -112, 224, -112},

{320, -160, 192, -112},

{320, -160, 192, -120},

{-40, -72, 256, 112},

{-17, -96, 256, 112},

{36, -144, 256, 96},

{112, -224, 256, 96},

{14, -12, -16, 272},

{12, -8, -10, 264},

{2, 0, -4, 264},

{1, -6, 9, 264},

{-4, 0, 24, 240},

{2, -6, 28, 240},

{7, -12, 28, 240},

{12, -15, 30, 240}

},

{

{36, -15, 240, 3},

{96, 24, 144, -2},

{36, 224, 18, -24},

{-1, 264, 3, -14},

{-10, 2, 256, 2},

{-28, 1, 252, 28},

{-68, 112, 132, 80},

{-48, 240, -80, 120},

{-3, -10, 48, 224},

{-2, -5, -24, 272},

{-30, 17, -48, 256},

{-48, 80, -68, 160},

{2, 14, -112, 320},

{5, 28, -72, 192},

{16, 28, -33, 96},

{12, 30, -17, 80}

},

{

{24, 2, 224, 7},

{2, 30, 224, 2},

{-20, 80, 192, 1},

{-34, 96, 192, -2},

{-28, 20, 264, -1},

{-34, 28, 264, 1},

{-36, 28, 264, 5},

{-40, 33, 264, 6},

{-15, 15, 240, 24},

{-20, 24, 248, 10},

{-30, 33, 248, 5},

{-36, 40, 240, -10},

{9, -18, -240, 480},

{6, -24, -224, 448},

{-7, -17, -124, 288},

{-17, -6, -72, 192}

},

{

{24, -12, 240, 8},

{80, -30, 192, 15},

{34, 72, 144, 9},

{-96, 256, 96, 1},

{-7, 6, 264, -8},

{-16, 6, 272, -8},

{-1, -14, 272, -2},

{-48, 40, 264, 1},

{7, 14, 160, 112},

{10, 9, 192, 72},

{9, 12, 192, 56},

{18, -8, 224, 28},

{-5, -33, -96, 320},

{-2, -56, -96, 320},

{0, -56, -80, 288},

{-5, -48, -63, 264}

},

{

{72, 8, 192, -18},

{-33, 192, 112, -9},

{-66, 264, -24, 96},

{48, 144, -144, 192},

{-112, 120, 192, 72},

{-36, 144, -40, 192},

{96, 24, -192, 272},

{96, -20, -192, 264},

{16, 24, -80, 288},

{62, -40, -160, 288},

{48, -48, -144, 240},

{40, -31, -144, 224},

{33, -40, -112, 272},

{24, -48, -112, 224},

{18, -40, -120, 224},

{24, -36, -128, 224}

},

{

{24, 2, 224, 8},

{3, 28, 224, 3},

{-18, 80, 192, 1},

{-28, 96, 192, -4},

{-24, 17, 264, -2},

{-30, 24, 264, 1},

{-31, 24, 264, 2},

{-32, 28, 256, 4},

{-8, 16, 224, 34},

{-18, 24, 248, 10},

{-28, 32, 248, 5},

{-32, 40, 240, -10},

{5, -10, -224, 448},

{-1, -9, -192, 384},

{-14, -9, -112, 264},

{-28, -6, -68, 192}

},

{

{14, -7, 288, -48},

{9, -17, 320, -62},

{-14, 14, 288, -40},

{-192, 192, 264, -17},

{-15, 12, 160, 96},

{-14, 8, 128, 132},

{1, -14, 72, 192},

{14, -17, 56, 192},

{3,-1, -12, 264},

{4,-1, -14, 264},

{-4, 4, -12, 264},

{3,-2, -4, 256},

{-3, 0, 7, 248},

{-3, -2, 8, 248},

{-4, -1, 7, 248},

{-7, 1, 7, 248}

},

{

{-24, -4, 288, -4},

{-18, -12, 288, -2},

{-2, -28, 288, -2},

{-2, -24, 288, -5},

{17, 0, 240, 1},

{14, 3, 240, 1},

{15, 9, 224, 7},

{18, 1, 224, 12},

{2, -2, 8, 248},

{2, -1, 7, 248},

{1, 1, 2, 252},

{-1, 3, 2, 252},

{1, 1, -10, 264},

{0, 2, -10, 264},

{1, 1, -10, 264},

{1,1, -10, 264}

}

} ;

ou

dans lequel les coefficients MIP sont l'un quelconque des tableaux suivants :

```
const short mipMatrix8x8round_const[10][16][8] =
{
  {
    {40, -28, 8, -1, 272, -40, 7, -2},
    {192, -32, -4, 1, 132, -40, 12, -4},
    {128, 144, -20, -3, 10, -5, 2, -1},
    {14, 136, 112, 0, -9, 7, -3, -1},
    {-12, 2, -2, 1, 36, 264, -40, 6},
    {-34, 0, 2, 1, 192, 128, -40, 7},
    {48, -40, 8, 1, 256, -14, -2, 0},
    {132, 14, -18, 4, 160, -40, 10, -5},
    {3, -1, 0, 1, -16, 32, 272, -36},
    {10, -1, 0, 2, -48, 192, 132, -30},
    {-14, 5, -4, 2, 12, 272, -12, -4},
    {-14, -5, 4, 4, 136, 160, -34, 5},
    {-4, -1, -2, 1, 4, -15, 24, 248},
    {-3, 2, -1, 4, 17, -56, 192, 96},
    {1, -1, -3, 2, -7, 7, 264, -8},
    {4, -1, -4, 3, -30, 144, 160, -20},
  },
  {
    {5, 192, -40, 5, -48, 80, 72, -8},
    {-9, 8, 240, -14, 9, -36, 18, 40},
    {3, -4, 7, 248, 0, 1, -18, 20},
```

{2, 3, -34, 288, 3, -3, -1, 0},

{-24, 56, 96, -20, 14, -66, 126, 72},

{6, -24, 80, 160, 1, 9, -40, 63},

{3, 7, -48, 288, 3, -2, -1, 6},

{2, 4, -33, 288, 3, -4, 0, 0},

{-12, -20, 80, 72, 3, 7, -66, 192},

{-1, -7, -28, 272, 3, 4, -5, 17},

{2, 2, -36, 288, 3, -3, 3, -1},

{1, 4, -32, 288, 4, -4, 1, -1},

{-7, -31, 8, 192, 7, 20, -16, 80},

{-4, -3, -40, 288, 4, 3, -2, 10},

{2, 2, -34, 288, 4, -3, 4, -4},

{3, 7, -28, 272, 7, -2, 2, 1},

},

{

{144, 36, -5, 1, 8, 72, -2, 3},

{-63, 272, 15, -4, -17, 40, 6, 5},

{-4, -48, 288, 4, -24, 24, 8, 8},

{0, 10, -80, 320, -14, 7, 2, -1},

{96, 16, 0, -2, -96, 192, 56, -4},

{-66, 272, -8, 0, -96, 96, 48, 9},

{-18, -24, 288, -12, -60, 31, 32, 14},

{-4, 2, -80, 320, -24, -2, 10, 6},

{72, 6, 4, -1, -72, 8, 192, 48},

{-80, 264, -20, 1, -112, 31, 112, 60},

{-34, -1, 272, -24, -80, 24, 31, 56},

{-7, -5, -68, 288, -36, 4, -16, 40},

{56, 3, 7, -1, -48, 5, -31, 264},

{-80, 240, -24, 0, -96, 7, -16, 224},

{-48, 24, 240, -28, -80, 5, -24, 144},

{-15, -14, -48, 264, -40, -5, -40, 80},

},

{

{224, -48, 10, -1, 384, -72, 15, -2},

{448, 96, -48, 6, 24, -15, 2, -3},

{-2, 480, 80, -36, -6, -3, 0, -4},

{-1, -18, 480, 60, 3, -6, -1, -5},

{-48, 0, -5, -2, 256, 384, -80, 6},

{124, -36, 3, 1, 448, -24, -9, 0},

{384, 56, -36, 7, 124, -31, 4, -4},

{112, 384, 18, -10, 5, -2, 3, -4},

{3, -2, -2, -1, -63, 264, 384, -72},

{-28, 1, -6, -3, 112, 480, -31, -15},

{48, -30, -5, -3, 448, 96, -40, -5},

{288, 20, -12, 7, 224, -17, -2, -5},

{1, -1, 0, 0, 28, -96, 288, 288},

{1, -1, -6, -3, -31, 96, 480, -30},

{-18, -2, -8, -2, 36, 448, 68, -16},

{30, -3, 0, 3, 288, 192, -10, 1},

},

{

{-48, 36, 6, 24, 120, 144, -33, 7},

{-28, 24, 31, 56, -16, 224, -36, 0},

{-4, 8, 3, 132, -112, 224, 12, -10},

{8, 4, -28, 192, -144, 160, 64, -7},

{6, 3, 0, 24, -68, 160, 160, -31},

{-4, 8, -2, 60, -68, 40, 240, -24},

{-7, 16, -24, 96, -72, -36, 240, 33},

{-6, 18, -20, 120, -80, -62, 160, 112},

{-2, 4, -1, 20, -18, -40, 160, 128},

{-8, 9, -8, 48, -40, -17, 36, 224},

{-10, 12, -20, 80, -64, -2, -48, 288},

{-10, 14, -16, 96, -80, 3, -68, 288},

{-5, 1, -5, 20, -17, 8, -80, 320},

{-15, 5, -12, 48, -33, -6, -80, 320},

{-20, 4, -14, 63, -48, -18, -68, 320},

{-20, 7, -12, 80, -56, -20, -56, 288},

},

{

{-12, -16, 6, 0, 288, -10, 0, -1},

{80, -28, -9, 3, 240, -40, 14, -4},

{96, 64, -28, -7, 160, -40, 15, -5},

{96, 72, 72, -40, 80, -28, 9, -7},

{2, 2, 1, 0, -24, 288, -12, -2},

{-24, 4, 1, -1, 60, 256, -48, 5},

{-34, -12, 1, -2, 160, 192, -48, 3},

{-24, -2, -12, 1, 224, 96, -30, -1},

{-4, -1, 1, 1, 5, -24, 288, -12},

{2, -2, 1, -2, -20, 56, 252, -36},

{5, -1, 1, -1, -40, 160, 160, -33},

{2, 0, 4, -4, -36, 224, 80, -18},

{2, -4, 0, -1, -3, 0, -28, 288},

{-1, -3, -1, -2, 5, -30, 62, 224},

{-1, 0, 2, -1, 15, -56, 160, 132},

{-3, 1, 1, -2, 14, -56, 240, 56},

},

{

{-80, 48, -6, 0, 256, 63, -40, 12},

{-192, 160, 28, -10, 224, 80, -48, 12},

{-192, -10, 224, -5, 160, 112, -48, 10},

{-144, 14, -60, 252, 96, 124, -40, 9},

{10, 1, 3, -1, -80, 248, 112, -40},

{3, 6, 4, 1, -68, 192, 160, -48},

{-9, 3, 18, -5, -62, 160, 192, -48},

{-20, -4, -15, 36, -60, 132, 224, -48},

{-3, 2, 1, 1, 20, -72, 224, 80},

{-3, 3, -2, -1, 18, -66, 192, 112},

{-4, 1, -3, -2, 16, -60, 160, 144},

{-3, 2, 1, 3, 15, -48, 120, 160},

{0, -3, -1, -2, -12, 24, -72, 320},

{-3, 1, -3, -2, -14, 20, -68, 320},

{2, 2, 4, 2, -12, 28, -64, 288},

{1, 0, 2, 5, -14, 24, -56, 288},

},

{

{-72, -7, -2, 8, 320, 17, -12, 3},

{-40, -36, -2, 12, 320, 9, -9, 2},

{-48, -7, -28, 17, 320, 5, -6, 2},

{-56, -10, -2, 7, 320, 3, -7, 1},

{20, -2, -2, 3, -96, 320, 31, -17},

{10, 1, -4, 5, -80, 320, 20, -15},

{14, -9, 0, 8, -80, 320, 20, -16},

{15, -5, -4, 18, -68, 288, 20, -10},

{-8, 1, 1, 5, 31, -96, 288, 31},

{-10, -1, -1, 7, 28, -80, 288, 24},

{-9, -4, 0, 12, 28, -80, 288, 20},

{-10, -7, -4, 15, 24, -72, 288, 20},

{1, 0, -2, 2, -14, 28, -80, 320},

{-3, 0, -2, 7, -10, 24, -80, 320},

{-4, -4, -2, 12, -10, 24, -80, 320},

{-6, -6, -7, 17, -10, 20, -72, 320},

},

{

{-96, 20, 10, 6, 224, 264, 72, 24},

{-28, -24, 14, 12, 80, 320, 112, 36},

{-15, 18, -15, 6, 32, 320, 136, 40},

{-10, 12, 30, -18, 4, 320, 144, 40},

{12, -4, 2, 2, -14, 272, 224, 28},

{4, 10, -2, -4, 7, 224, 252, 34},

{-1, 7, 4, -10, 9, 224, 264, 36},

{-3, 9, 2, -9, 14, 224, 256, 36},

{7, 2, 6, -2, 8, 96, 320, 80},

{5, 7, 2, -4, 7, 112, 320, 80},

{2, 14, 2, -8, 6, 124, 320, 72},

{2, 15, 8, -8, 10, 136, 288, 80},

{5, 0, 3, -6, 7, 36, 224, 252},

{2, 8, 0, -8, 8, 56, 320, 144},

{4, 14, 5, -7, 12, 72, 320, 112},

{1, 12, 3, -8, 14, 80, 320, 112},

},

{

{96, 80, -12, 1, 12, 80, -2, 2},

{-28, 224, 40, -5, -24, 34, 9, 5},

{-3, -30, 272, 12, -24, 14, 9, 8},

{-7, 12, -72, 320, -12, 0, 3, 2},

{36, 62, -9, -2, -80, 192, 62, -4},

{-32, 192, 30, -1, -80, 80, 48, 18},

{-10, -10, 256, 1, -48, 18, 17, 28},

{-7, 12, -66, 288, -12, -5, -1, 20},

{14, 56, -4, 1, -48, 3, 160, 72},

{-48, 160, 28, -2, -80, 28, 72, 96},

{-24, 3, 240, -4, -72, 20, 3, 80},

{-16, 6, -60, 288, -30, 4, -28, 40},

{5, 48, -2, 0, -36, 2, -18, 256},

{-56, 132, 24, -3, -64, 3, -7, 224},

{-40, 14, 192, 0, -72, 6, -12, 144},

{-24, 2, -48, 252, -40, -2, -20, 64}

}

} ;

ou

dans lequel les coefficients MIP sont l'un quelconque des tableaux suivants :

```
const short mipMatrix16x16round_const[6][64][8] =
{
    {
        {-48, 32, 28, 9, 248, -20, 9, -2},
        {-56, 10, 40, 33, 224, 2, 6, -3},
        {-28, -28, 48, 66, 160, 36, 3, -1},
        {-9, -33, 34, 96, 96, 72, -1, 1},
        {-8, -6, -9, 128, 48, 112, -9, 0},
        {-6, 15, -24, 144, 3, 132, -10, 2},
        {0, 17, -5, 128, -36, 160, -12, 2},
        {8, 16, 12, 120, -60, 160, -7, 5},
        {-14, -17, -1, 24, 112, 160, -12, 2},
        {-6, -16, -12, 36, 72, 192, -12, 3},
        {-7, -8, -24, 40, 40, 224, -12, 2},
        {-6, -4, -24, 40, 17, 240, -10, 2},
        {-2, -4, -17, 40, 0, 240, -4, 2},
        {-1, -3, -12, 40, -16, 240, 4, 2},
        {0, 2, -12, 48, -28, 224, 16, 3},
        {-3, 3, -15, 48, -36, 224, 28, 4},
```

{1, 0, -12, 14, -5, 252, 2, 5},

{2, 0, -14, 17, -12, 248, 10, 4},

{1, -2, -15, 17, -14, 240, 28, 1},

{0, -3, -14, 17, -15, 224, 48, -2},

{-1, -2, -14, 17, -14, 192, 80, -5},

{-3, 0, -12, 18, -14, 160, 112, -7},

{-3, 0, -12, 18, -12, 136, 132, -6},

{-2, 0, -10, 20, -12, 112, 144, 1},

{3, 2, -5, 9, -15, 144, 120, -4},

{-1, 0, -7, 7, -14, 120, 160, -9},

{-1, 0, -8, 8, -9, 80, 192, -7},

{0, 1, -7, 10, -5, 66, 192, -4},

{-3, -2, -9, 8, -5, 40, 224, 0},

{-3, -1, -10, 9, -4, 28, 224, 10},

{-4, -2, -10, 10, -5, 16, 224, 24},

{-1, 1, -8, 15, -3, 16, 192, 40},

{-1, 0, -4, 4, -3, 10, 240, 9},

{-1, 0, -5, 3, -2, -1, 240, 20},

{-1, -1, -6, 5, -3, -4, 224, 40},

{-1, 0, -6, 8, -3, -4, 192, 66},

{0, 0, -6, 9, -3, -2, 160, 96},

{-1, 0, -7, 10, -5, -2, 144, 112},

{-1, 0, -8, 14, -5, 1, 120, 132},

{0, 1, -8, 16, -5, 7, 96, 144},

{-1, 1, -2, 3, -1, -12, 144, 124},

{-3, 0, -4, 3, -3, -10, 112, 160},

{-3, -1, -6, 5, -6, -6, 80, 192},

{-1, 0, -4, 8, -4, -2, 64, 192},

{-2, -1, -7, 9, -7, -3, 40, 224},

{-2, 0, -7, 14, -7, 0, 30, 224},

{-3, -1, -9, 14, -9, 0, 20, 240},

{-3, -1, -9, 15, -10, 2, 17, 240},

{-1, 0, -2, 3, -1, -2, 5, 252},

{-2, 0, -3, 5, -2, -2, -6, 264},

{-3, -1, -5, 7, -3, -3, -10, 272},

{-2, 0, -5, 10, -4, -4, -14, 272},

{-3, 0, -7, 14, -4, -4, -16, 272},

{-3, 1, -8, 17, -5, -5, -17, 272},

{-3, 1, -8, 18, -7, -5, -17, 272},

{-3, 0, -9, 18, -8, -4, -15, 272},

{-1, 0, -2, 6, 1, -5, -34, 288},

{-1, -1, -2, 7, -1, -5, -32, 288},

{-2, 0, -4, 10, -2, -7, -31, 288},

{0, -1, -5, 12, -3, -8, -31, 288},

{-2, 0, -6, 15, -4, -9, -30, 288},

{-3, 0, -8, 18, -5, -10, -30, 288},

{-3, 1, -9, 18, -7, -10, -28, 288},

{-4, 1, -10, 18, -8, -12, -24, 288}

},

{

{80, 15, 0, -1,160, 6, -1, -3},

{120, 34, 2, -1, 96, 9, -1, -3},

{112, 72, 9, -1, 56, 7, 2, -1},

{72,120, 24, -1, 36, 4, 3, -1},

{40,120, 72, 0, 24, 1, 2, -3},

{28, 62,136, 12, 14, 1, 4, 0},

{20, 14,144, 68, 8, 1, 3, -3},

{16, 10, 34,192, 6, 1, 0, -2},

{20, 6, 2, 1,160, 66, 1, 0},

{48, 12, 2, 0,160, 36, 1, -2},

{80, 28, 1, 0,124, 24, 1, -3},

{96, 48, 5, 0, 96, 14, 2, -4},

{96, 80, 18, -1, 62, 6, 1, -5},

{68, 96, 48, 2, 40, 4, 2, -4},

{48, 80, 80, 12, 30, 4, 4, -1},

{40, 48, 96, 48, 20, 3, 3, -2},

{5, 2, 2, 1, 80,160, 6, -1},

{16, 2, 1, 1,124,112, 4, -4},

{36, 8, 1, 1,136, 72, 4, -2},

{60, 20, 1, 1,128, 48, 3, -4},

{80, 36, 3, -1,112, 31, 1, -5},

{80, 62, 12, 2, 80, 20, 3, -3},

{72, 72, 30, 2, 64, 15, 3, -3},

{60, 72, 56, 10, 48, 12, 3, -5},

{1, -3, -2, -1, 17,192, 60, -7},

{5, 0, 1, 2, 56,160, 34, -3},

{12, 1,-2, 0, 96,132, 20, -5},

{28, 4, -3, -1,112,112, 9, -6},

{48, 15, 0, 0,112, 80, 6, -5},

{60, 30, 1, 0,112, 56, 3, -6},

{64, 48, 9, 1, 96, 40, 3, -5},

{62, 60, 24, 5, 72, 34, 3, -5},

{1, -2, 1, 0, 6, 96,160, -7},

{1,-2, 0, 1, 24,128,112, -6},

{3, -2, 0, 1, 48,144, 68, -5},

{10, 0, -1, 1, 68,136, 48, -6},

{20, 5, 1, 3, 80,124, 28, -4},

{34, 14, 1, 2, 96, 96, 17, -5},

{40, 28, 3, 3, 96, 80, 12, -5},

{48, 40, 10, 5, 80, 68, 10, -5},

{2, 1, 3, 2, 7, 14,192, 36},

{-3, -2, -2, -2, 7, 56,192, 9},

{-3, -1, 0, 0, 18, 96,144, 2},

{1, -1, 1, 1, 36,126, 96, -3},

{6, -2, 0, 1, 48,136, 72, -5},

{15, 2, 0, 2, 68,128, 48, -7},

{24, 10, 0, 3, 72,120, 34, -6},

{32, 20, 4, 3, 80, 96, 28, -7},

{0, -1, -1, -1, 0, 3, 96,160},

{-2, -1, -1, -1, 2, 17,144, 96},

{-4, -2, -1, 0, 7, 48,160, 48},

{-6, -3, 1, 2, 18, 80,144, 18},

{-3, -3, 2, 2, 30, 96,126, 5},

{3, -3, 0, 3, 40,120, 96, -3},

{10, 2,-1, 3, 56,120, 72, -5},

{16, 10, 2, 4, 60,112, 56, -3},

{0, -2, -1, 0, 0, 14,-28,272},

{0, 0, 1, 2, 3, 20, 36,192},

{-4, -2, -1, 1, 2, 28, 96,136},

{-5, -3, 0, 1, 8, 48,128, 80},

{-5, -4, 1, 2, 15, 64,136, 48},

{-2, -4, 1, 4, 24, 80,126, 28},

{8, 5, 4, 8, 40, 96, 80, 14},

{8, 5, 4, 8, 40, 96, 80, 14}

},

{

{72, 16, 6, 4, 136, 10, 8, 4},

{48, 80, 4, 9, 68, 33, 10, 4},

{-14, 144, 15, 16, 36, 40, 14, 5},

{-28, 96, 80, 17, 18, 48, 18, 7},

{-17, 24, 144, 34, 2, 40, 20, 8},

{-10, -5, 96, 112, -7, 36, 28, 9},

{-10, -3, 20, 192, -14, 28, 33, 10},

{-6, -2, -9, 224, -18, 12, 40, 18},

{-10, 18, 8, 5, 112, 120, -4, 8},

{-12, 40, 16, 17, 56, 120, 9, 12},

{-24, 60, 24, 28, 14, 120, 20, 14},

{-24, 40, 48, 40, -10, 112, 34, 17},

{-18, 12, 64, 64, -28, 96, 48, 18},

{-14, -5, 48, 112, -33, 63, 63, 24},

{-7, -5, 12, 144, -33, 40, 72, 33},

{-3, -5, -2, 160, -32, 18, 72, 48},

{-8, 9, 10, 12, 12, 192, 10, 18},

{-10, 15, 15, 24, -4, 160, 36, 20},

{-14, 14, 16, 40, -20, 136, 62, 24},

{-14, 8, 18, 56, -31, 96, 96, 28},

{-12, 1, 18, 72, -36, 66, 112, 36},

{-9, -3, 12, 96, -40, 40, 112, 48},

{-5, -4, 3, 112, -36, 18, 96, 72},

{-3, -5, 1, 120, -36, 3, 80, 96},

{-4, -1, 6, 14, -16, 136, 112, 10},

{-5, -2, 6, 24, -16, 96, 128, 24},

{-8, -1, 4, 36, -20, 60, 144, 40},

{-8, -1, 2, 48, -24, 36, 144, 60},

{-5, -2, 4, 60, -28, 20, 128, 80},

{-5, -3, -2, 68, -31, 6, 112, 112},

{-3, -3, -1, 80, -30, -4, 80, 136},

{-3, -5, -2, 80, -31, -10, 66, 160},

{0, -2, 2, 16, -7, 24, 192, 30},

{0, -3, 1, 28, -10, 16, 160, 63},

{-4, -2, -5, 34, -15, 7, 144, 96},

{-3, -1, -6, 40, -18, 2, 112, 128},

{-2, -2, -4, 48, -20, -4, 80, 160},

{-3, -3, -6, 48, -24, -10, 63, 192},

{0, -1, -4, 56, -24, -12, 48, 192},

{2, 0, -1, 60, -24, -12, 36, 192},

{0, -5, -4, 12, -6, -5, 144, 120},

{-1, -5, -9, 20, -12, -8, 112, 160},

{-2, -1, -12, 28, -14, -9, 72, 192},

{0, 1, -8, 34, -12, -9, 56, 192},

{-1, -1, -6, 34, -17, -14, 34, 224},

{-1, -2, -6, 36, -20, -15, 20, 240},

{1, -1, -4, 40, -20, -17, 14, 240},

{1, -2, -2, 40, -20, -18, 7, 248},

{1, -3, -6, 10, -4, -6, 40, 224},

{1, -1, -12, 18, -7, -9, 24, 240},

{-1, 2, -14, 24, -8, -12, 12, 252},

{-2, 2, -12, 24, -10, -16, 4, 264},

{0, 0, -5, 24, -12, -16, -2, 264},

{0, -1, -3, 24, -14, -18, -9, 272},

{1, -1, -2, 28, -15, -20, -12, 272},

{1, -1, -2, 31, -18, -20, -14, 272},

{2, -1, -8, 9, -2, -6, -12, 272},

{3, 1, -10, 15, -3, -10, -14, 272},

{-1, 2, -12, 15, -7, -15, -18, 288},

{-3, 3, -10, 17, -7, -16, -20, 288},

{-1, 1, -5, 17, -8, -17, -24, 288},

{-1, 0, -3, 18, -9, -20, -24, 288},

{-1, 0, -2, 20, -12, -20, -24, 288},

{0, -2, -3, 24, -14, -20, -24, 288}

```
},
{
        {-20, 96, -14, -4, 192, 14, -6, -1},
        {-40, 160, 12, -5, 68, 80, -20, 2},
        {-17, 80, 96, -4, 5, 112, -14, -2},
        {2, -3, 160, 24, -15, 80, 18, -10},
        {6, -12, 96, 96, -10, 40, 48, -7},
        {4, -2, 24, 160, -9, 12, 62, 5},
        {1, 0, -1, 192, -7, -12, 56, 28},
        {5, 4, 2, 160, -5, -20, 48, 60},
        {-30, 48, 24, -3, 56, 192, -40, 8},
        {-4, 8, 72, 4, -7, 192, -6, -3},
        {5, -17, 80, 40, -20, 120, 56, -7},
        {5, -14, 40, 96, -16, 48, 96, 3},
        {5, -6, 10, 124, -10, 6, 96, 32},
        {5, 0, -6, 136, -9, -15, 80, 64},
        {3, 5, -10, 132, -9, -24, 64, 96},
        {6, 6, -5, 120, -10, -28, 40, 126},
        {7, -10, 33, 5, -24, 224, 24, -3},
        {8, -20, 34, 34, -18, 112, 112, -6},
        {6, -14, 10, 68, -10, 34, 144, 18},
        {4, -5, -9, 96, -9, -4, 124, 60},
        {3, 1, -12, 96, -7, -17, 96, 96},
        {3, 4, -12, 96, -8, -24, 66, 132},
        {5, 6, -6, 80, -8, -24, 40, 160},
        {5, 8, 0, 80, -8, -20, 28, 160},
        {7, -15, 10, 20, -14, 68, 192, -12},
        {2, -12, -6, 48, -6, 9, 192, 30},
        {4, -2, -12, 63, -1, -7, 132, 80},
        {4, 1, -15, 66, -3, -14, 80, 136},
        {4, 4, -12, 64, -4, -16, 56, 160},
        {1, 4, -8, 60, -7, -18, 30, 192},
        {3, 7, -2, 56, -6, -17, 18, 192},
        {4, 6, 2, 56, -6, -16, 14, 192},
        {3, -5, -8, 28, 0, -3, 192, 48},
        {2, -2, -16, 40, -2, -10, 124, 120},
```

{1, 2, -17, 48, -1, -10, 72, 160},

{3, 3, -14, 48, -3, -12, 36, 192},

{1, 1, -10, 40, -7, -12, 17, 224},

{3, 3, -6, 40, -8, -12, 9, 224},

{2, 5, -2, 40, -9, -12, 4, 224},

{2, 4, -1, 40, -9, -12, 3, 224},

{1, 0, -14, 20, -1, -5, 96, 160},

{3, 2, -15, 30, -2, -3, 48, 192},

{1, 2, -16, 31, -3, -5, 20, 224},

{0, 1, -12, 30, -6, -8, 7, 240},

{1, 2, -7, 30, -7, -8, 2, 240},

{1, 2, -4, 28, -8, -8, -1, 240},

{1, 3, -2, 28, -9, -9, -2, 240},

{1, 3, 0, 28, -10, -9, -3, 240},

{-1, 1, -14, 14, -3, -2, 20, 240},

{0, 3, -14, 18, -3, -2, 4, 248},

{0, 3, -12, 20, -5, -3, -1, 252},

{0, 1, -8, 20, -6, -5, -3, 252},

{1, 1, -4, 18, -8, -6, -3, 252},

{1, 1, -2, 18, -10, -6, -4, 252},

{0, 2, 0, 20, -10, -7, -5, 248},

{1, 2, 1, 20, -10, -7, -1, 240},

{0, 3, -12, 8, -1, -1, -1, 256},

{0, 3, -12, 12, -4, -1, -3, 256},

{0, 3, -9, 12, -5, -2, 0, 252},

{0, 2, -5, 12, -6, -4, -1, 252},

{0, 1, -3, 12, -7, -5, -1, 252},

{0, 2, -1, 14, -9, -5, -1, 248},

{-1, 2, 0, 15, -9, -5, -3, 248},

{1, 1, 1, 17, -9, -5, -2, 240}

},

{

{-36, 15, 1, 0, 320, -48, 6, -1},

{-34, 17, 6, 6, 288, -40, 10, 2},

{-33, 15, 8, 6, 288, -40, 10, 2},

{-36, 15, 10, 6, 288, -40, 9, 2},

{-40, 20, 7, 9, 288,-40, 9, 2},

{-48, 20, 12, 10, 288,-36, 8, 1},

{-56, 14, 31, 7, 288,-36, 7, 1},

{-60, 9, 28, 28, 272,-31, 7, 2},

{-40, 1, -1, -1, 224, 96,-24, 2},

{-40, 1, -2, -1, 224, 96,-24, 2},

{-48, 7, -2, 1, 224, 96,-24, 3},

{-48, 6, -1, 1, 224, 96,-24, 2},

{-40, -1, 2, -2, 224, 96,-24, 1},

{-40, -2, 1, 0, 224, 96,-24, 0},

{-40, 3, 1, 8, 192, 112,-24, 4},

{-40, 3, 1, 7, 192, 112,-24, 4},

{-1, -2, -1, -2, 7, 288,-36, 2},

{-1, -2, -1, -1, 7, 288,-36, 3},

{-2, -1, 0, -1, 6, 288,-36, 2},

{-2, -2, 1, 0, 6, 288,-36, 2},

{-2, -3, 1, 0, 6, 288,-36, 2},

{-3, -3, 0, 0, 6, 288,-34, 2},

{-4, -5, 0, 1, 7, 288,-33, 1},

{-5, -3, 2, 4, 10, 272,-28, 3},

{12, -2, 1, 1,-40,192, 112,-20},

{10, -1, 2, 2,-40,192, 112,-20},

{9, 0, 1, 1,-40,192, 112,-20},

{9, 0, 2, 2,-40,192, 112,-20},

{7, -3, 3, 1,-36,192, 112,-20},

{7, -3, 2, 2,-40,192, 120,-24},

{7, -3, 0, 0,-36,192, 120,-24},

{6, -4, 1, 1,-36,192, 120,-24},

{3, 0, 1, 1,-3, 9, 272,-28},

{2, 1, 1, 1, -3, 9, 272,-28},

{0, 1, 1, 1, -3, 7, 272,-24},

{0, 1, 2, 1,-2, 7, 272,-24},

{-1, 1, 2, 2, -3, 7, 272,-24},

{-1, 0, 2, 2, -3, 7, 272,-24},

{-1,-1, 1, 2, -4, 7, 272,-20},

{-1, -1, 2, 3, -3, 10, 264,-17},

{2, 1, 3, 3, 9,-36,192, 80},

{1, 3, 3, 3, 10,-36,192, 80},

{0, 3, 3, 3, 9,-34,192, 80},

{0, 3, 3, 3, 9,-34,192, 80},

{0, 2, 4, 3, 9,-33,192, 80},

{-2, 0, 2, 0, 5,-36,192, 96},

{-3, 0, 1, 2, 5,-36,192, 96},

{-3,-1, 1, 1, 4,-34,192, 96},

{0, 0, 0, 1, 2, -3, 16,240},

{0, 0, 0, -1, 0, -4, 14, 248},

{-1, 1, 0,-1, 1,-5, 12,248},

{-2, 1, 1,-1, 1,-5, 12,248},

{-2, 0, 2,-1, 1, -5, 12,248},

{-2, 0, 2, 0, 0, -5, 12,248},

{-2, 0, 2, 1, 1, -6, 12,248},

{-3, 0, 2, 2, 2, -3, 16,240},

{1, -1, -2, -1, -3, 9,-68,320},

{-2, 0, -1, -1, -4, 7,-64,320},

{-2, 1, -1, -1, -3, 8,-66, 320},

{-3, 1, 0, -1, -3, 8,-66, 320},

{-3, 0, 1,-1, -4, 8,-66, 320},

{-3, -1, 1, -1, -4, 7,-64, 320},

{-5, -2, 0, 1, -4, 7,-62, 320},

{-5, -2, 0, 1, -4, 7,-62, 320}

},

{

{60, 20, 8, 2,160, 1, 3, 2},

{16, 96, 5, 3, 126, 7, 2, 1},

{-60,192, 15, 4, 96, 9, 0, -1},

{-80,160, 96, -4, 80, 9, -3, -3},

{-72, 60,192, 6, 62, 10, -1, -1},

{-56, 9,160, 80, 48, 12, 0, 2},

{-48, 10, 48,192, 40, 12, 0, 1},

{-48, 15,-24,264, 32, 14, 0, 2},

{-36, 36, 6, 2,160, 96,-10, 1},

{-80, 96, 12, 4,160, 72, -6, -3},

{-136,144, 28, 8,144, 72, -2, -1},

{-160,144, 80, 8,128, 62, -4, -3},

{-160, 72,144, 24,112, 60, 1, 1},

{-136, 32,132, 80, 96, 56, -2, -2},

{-126, 20, 48,192, 80, 48, -2, -4},

{-112, 20, -4,240, 64, 48, 0, 0},

{-32, 28, 8, 4, 34, 224,-12, 2},

{-80, 63, 14, 4, 48, 224,-14, -4},

{-124, 96, 32, 12, 56,192, -7, -1},

{-160, 96, 72, 24, 64,160, -2, 2},

{-160, 62,112, 32, 62,160, -8, -5},

{-160, 36, 96, 80, 66,144, -2, -3},

{-160, 28, 48,160, 66,120, 0, -4},

{-160, 28, 9,192, 63,112, 9, 2},

{-24, 20, 10, 6,-20,192, 80, -7},

{-63, 40, 15, 8,-20,224, 60, -9},

{-96, 64, 28, 14,-18,224, 48, -9},

{-128, 63, 56, 24,-14,224, 40, -8},

{-144, 40, 80, 40, -9,224, 34,-10},

{-160, 32, 80, 80, 1,192, 33, -2},

{-160, 24, 36,136, 3,192, 28, -3},

{-160, 20, 10,192, 6,160, 28, -2},

{-24, 15, 8, 4, -5, 48, 224,-14},

{-48, 33, 16, 12, -6, 72, 192,-14},

{-80, 40, 24, 16,-15, 96, 192,-17},

{-96, 40, 40, 28,-16,112, 160,-12},

{-120, 28, 60, 48,-20,128, 144,-12},

{-128, 20, 48, 80,-20,136,128, -9},

{-136, 17, 28, 120,-24,144,112, -6},

{-144, 16, 9, 160,-24,144, 96, -1},

{-20, 10, 7, 4, 3,-28,224, 56},

{-48, 20, 10, 12, 2,-20,240, 40},

{-66, 28, 18, 20, -2,-10,240, 28},

{-80, 24, 32, 31, -4, 4,224, 24},

{-96, 15, 40, 48, -9, 17,224, 17},

{-112, 10, 33, 72,-14, 30,224, 12},

{-112, 8, 15, 112,-18, 48,192, 10},

{-124, 7, 3, 132,-24, 56,192, 12},

{-12, 9, 7, 5, -1, -6, 62,192},

{-32, 14, 6, 10, -5,-10, 80,192},

{-48, 18, 15, 24, -3, -8, 96,160},

{-60, 10, 24, 31, -5, -7,120,144},

{-72, 4, 28, 48, -9, -7,136,128},

{-80, 3, 18, 72,-12, -3,144,112},

{-96, 3, 7, 96,-12, 0,160, 96},

{-96, 2, -4, 112,-18, 4,160, 96},

{-14, 4, 2, 4, -7, 14,-68,320},

{-24, 12, 6, 16, -3, 17,-56,288},

{-36, 9, 8, 20, -6, 12,-40,288},

{-48, 4, 14, 34, -8, 12,-24,272},

{-56, -2, 14, 48,-12, 10,-12,264},

{-66, -2, 7, 66,-12, 9, 5,248},

{-80, -3, -8, 96,-16, 9, 32, 224},

{-80, -3, -8, 96,-16, 9, 32, 224}

}

}.

**3.** Procédé selon l'une quelconque des revendications précédentes, dans lequel la magnitude des coefficients MIP nécessite 9 bits pour représenter, M ≤ 8.

**4.** Procédé selon l'une quelconque des revendications précédentes, dans lequel les deux lignes d'échantillons voisins reconstruits sont deux rangées supérieures d'échantillons voisins reconstruits ; ou

les deux lignes d'échantillons voisins reconstruits sont deux colonnes gauches d'échantillons voisins reconstruits ; ou

les deux lignes (802) d'échantillons voisins reconstruits sont une colonne gauche d'échantillons voisins reconstruits et une ligne supérieure d'échantillons voisins reconstruits.

**5.** Procédé selon l'une quelconque des revendications précédentes, dans lequel l'étape consistant à déterminer comporte l'obtention (S1104) de la valeur des informations d'indication MIP à partir d'un flux binaire.

**6.** Procédé selon l'une quelconque des revendications précédentes, dans lequel le mode de prédiction intra MIP est obtenu à partir d'un flux binaire.

**7.** Procédé selon l'une quelconque des revendications précédentes, dans lequel la valeur des informations d'indication MIP et/ou le mode de prédiction intra MIP sont signalés dans un flux binaire.

**8.** Procédé de codage mise en œuvre par un dispositif de décodage (30) pour décoder un bloc courant d'une image, le procédé utilisant la prédiction intra du bloc courant, le procédé comprenant les étapes consistant à fournir un bloc prédit (365) pour le bloc courant codé en effectuant toutes les étapes d'un procédé selon l'une quelconque des revendications précédentes pour le bloc courant ; et

restaurer le bloc actuel sur la base du bloc codé et du bloc prédit (365).

**9.** Procédé de codage mis en œuvre par un dispositif de codage (20) pour coder un bloc courant (203) d'une image, le procédé utilisant la prédiction intra du bloc courant (203), le procédé comprenant les étapes consistant à fournir un bloc de prédiction (265) pour le bloc courant (203) en effectuant toutes les étapes d'un procédé selon l'une quelconque des revendications 1 à 4 et 7 pour le bloc courant (203) ; et coder le bloc actuel (203) sur la base du bloc de prédiction (265).

**10.** Produit-programme informatique comprenant du code de programme qui, lorsque le programme est exécuté par un ordinateur, amène l'ordinateur à mettre en œuvre le procédé selon l'une quelconque des revendications 1 à 9.

**11.** Décodeur, comprenant :

un ou plusieurs processeurs (430) ; et
un support de stockage non transitoire lisible par ordinateur (460) couplé aux processeurs (430) et stockant une programmation pour exécution par les processeurs (430), dans lequel la programmation, lorsqu'elle est exécutée par les processeurs (430), configure le décodeur pour mettre en œuvre le procédé selon l'une quelconque des revendications 1 à 8.

**12.** Codeur, comprenant :

un ou plusieurs processeurs (430) ; et
un support de stockage non transitoire lisible par ordinateur (460) couplé aux processeurs (430) et stockant une programmation pour exécution par les processeurs (430), dans lequel la programmation, lorsqu'elle est exécutée par les processeurs (430), configure le codeur pour mettre en œuvre le procédé selon l'une quelconque des revendications 1 à 4, 7 ou 9.

Fig. 1A

Fig. 1B

Fig. 2

Fig. 3

Video Coding Device

400

410

420

Tx/Rx

430

Processor

Coding
Module

470

440

Tx/Rx

450

460

Memory

Downstream
Ports

Upstream
Ports

Fig. 4

EP 3 970 365 B1

Fig. 5

EP 3 970 365 B1

FIG. 6

0: Planar
1: DC

FIG. 7

EP 3 970 365 B1

1. Averaging    2. Matrix-Vector-Multiplication    3. Interpolation

$bdry_{top}$

802

802

$W$

804

804

$bdry_{red}^{top}$

$H$

$bdry_{left}$

$bdry_{red}$

$A_k \cdot bdry_{red} + b_k$

mode k

$bdry_{red}^{left}$

pred

806

FIG. 8

Sign     9-bit magnitude

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PFAFF**. *CE3: Affine linear weighted intra prediction (CE3-4.1, CE3-4.2)*